# EUROPEAN PATENT APPLICATION

(11) **EP 4 596 188 A1**
(43) Date of publication of application: **06.08.2025**
(21) Application number: 22960946.6
(22) Date of filing: 29.09.2022
(51) Int. Cl.: B25J 19/04, B25J 13/00, B25J 13/08, G06T 1/00, G06T 7/00

(54) **CALCULATION DEVICE, CALCULATION SYSTEM, ROBOT SYSTEM, CALCULATION METHOD AND COMPUTER PROGRAM**

(71) Applicant: NIKON CORPORATION, Tokyo 140-8601 (JP)
(72) Inventor: KOYANAGI, Daisuke, Tokyo 140-8601 (JP); KINOSHITA, Shinichiro, Tokyo 113-0034 (JP)
(74) Representative: Hoffmann Eitle
(86) International application number: PCT/JP2022/036535
(87) International publication number: WO 2024/069886

(57) **Abstract**

An arithmetic apparatus includes: a control part that outputs a control signal for controlling an imaging part and a robot equipped with the imaging part; and a learning part that generates a model for determining a parameter of arithmetic processing in the control part, by learning using an imaging result of a learning target object by the imaging part. The control part outputs a first control signal. The learning part generates the model, by learning using learning image data generated by the imaging part imaging the learning target object in the predetermined positional relation, by control based on the first control signal. The control part performs the arithmetic processing, by using the parameter determined by the model and processing target image data generated by the imaging part imaging a processing target object, and calculates at least one of a position and posture of the processing target object.

## Description

### Technical Field

The present invention relates to technical fields of an arithmetic apparatus, an arithmetic system, a robot system, an arithmetic method, and a computer program.

### Background Art

For example, there is proposed a method of calibrating a coordinate system of a robot system based on an observation result of a vision sensor observing one mark from a plurality of observation positions, in a hand-eye robot system in which the vision sensor is fixed on a hand-tip part of a robot, (see Patent Literature 1). Patent Literature 2 is cited as another related technique/technology.

### Citation List

### Patent Literature

Patent Literature 1: JP2012-91280A
Patent Literature 2: JP2010-188439A

### Summary of Invention

A first aspect provides an arithmetic apparatus including:
a control part that outputs a control signal for controlling an imaging part and a robot equipped with the imaging part; and
a learning part that generates a model for determining a parameter of arithmetic processing in the control part, by learning using an imaging result of a learning target object by the imaging part, wherein
the control part outputs a first control signal for driving the robot such that the imaging part has a predetermined positional relation with the learning target object, and for allowing the imaging part to image the learning target object in the predetermined positional relation,
the learning part generates the model, by learning using learning image data generated by the imaging part imaging the learning target object in the predetermined positional relation, by control based on the first control signal, and
the control part performs the arithmetic processing, by using the parameter determined by the model and processing target image data generated by the imaging part imaging a processing target object having substantially a same shape as that of the learning target object, and calculates at least one of a position and posture of the processing target object.

A second aspect provides an arithmetic apparatus calculating a position and posture of an object, and comprising an arithmetic part that calculates at least one of an object position and an object posture of the object, based on image data generated by an imaging part imaging the object and at least one marker, wherein the object is disposed on a stage provided with the at least one marker.

A third aspect provides an arithmetic system comprising: the arithmetic apparatus provided by the first aspect; and the imaging unit.

A fourth aspect provides a robot system comprising: the arithmetic apparatus provided by the first aspect; the imaging unit; and the robot.

A fifth aspect provides an arithmetic method including:
outputting a first control signal for driving a robot equipped with an imaging part such that the imaging part has a predetermined positional relation with a learning target object, and for allowing the imaging part to image the learning target object in the predetermined positional relation;
generating a model for determining a parameter of arithmetic processing, by learning using learning image data generated by the imaging part imaging the learning target object in the predetermined positional relation, by control based on the first control signal; and
performing the arithmetic processing, by using the parameter determined by the model and processing target image data generated by the imaging part imaging a processing target object having substantially a same shape as that of the learning target object, and calculating at least one of a position and posture of the processing target object.

A sixth aspect provides a computer program that allows a computer to execute the arithmetic method provided by the fifth aspect.

A seventh aspect provides an arithmetic apparatus comprising a recording medium on which the computer program provided by the sixth aspect is recorded, and being configured to execute the computer program.

### Brief Description of Drawings

[FIG. 1] FIG. 1 is a block diagram illustrating a configuration of a robot system according to a first example embodiment.
[FIG. 2] FIG. 2 is a side view illustrating an external appearance of a robot according to the first example embodiment.
[FIG. 3] FIG. 3 is a block diagram illustrating a configuration of an imaging unit according to the first example embodiment.
[FIG. 4] FIG. 4 is a block diagram illustrating a configuration of a control apparatus according to the first example embodiment.
[FIG. 5] FIG. 5 is a diagram illustrating an outline of operation of a determination part and a processing object recognition part according to the first example embodiment.
[FIG. 6] FIG. 6 is a diagram illustrating an example of a method of constructing a parameter determination model according to the first example embodiment
[FIG. 7] FIG. 7 is a diagram illustrating an example of a positional relation between the imaging unit and a learning target object according to the first example embodiment.
[FIG. 8] FIG. 8 is a diagram illustrating an example of an input screen displayed on an output apparatus of the control apparatus according to the first example embodiment.
[FIG. 9] FIG. 9 is a diagram illustrating an outline of a robot system according to a first modification of the first example embodiment.
[FIG. 10] FIG. 10 is a block diagram illustrating a configuration of a control apparatus according to the first modification of the first example embodiment.
[FIG. 11] FIG. 11 is a block diagram illustrating a configuration of another apparatus according to the first modification of the first example embodiment.
[FIG. 12] FIG. 12 is a block diagram illustrating a configuration of a control apparatus according to a second modification of the first example embodiment.
[FIG. 13] FIG. 13 is a block diagram illustrating a configuration of another apparatus according to the second modification of the first example embodiment.
[FIG. 14] FIG. 14 is a conceptual diagram of a robot system according to a second example embodiment.
[FIG. 15] FIG. 15 is a diagram illustrating an example of a window displayed as a user interface.
[FIG. 16] FIG. 16 is a diagram illustrating another example of the window displayed as the user interface.
[FIG. 17] FIG. 17 is a diagram illustrating another example of the window displayed as the user interface.
[FIG. 18] FIG. 18 is a diagram illustrating another example of the window displayed as the user interface.
[FIG. 19] FIG. 19 is a diagram illustrating another example of the window displayed as the user interface.

### Example Embodiments

An arithmetic apparatus, an arithmetic system, a robot system, an arithmetic method, and a computer program according to example embodiments will be described.

### <First Example Embodiment>

In a first example embodiment, an arithmetic apparatus, an arithmetic system, a robot system, an arithmetic method, and a computer program are applied to a robot system 1.

### (1) Outline of Robot System

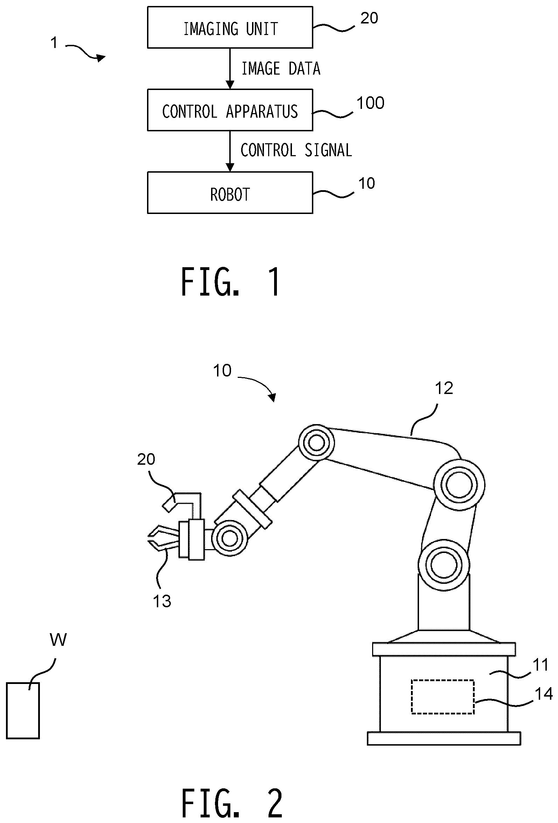

An outline of the robot system 1 will be described with reference to FIG. 1 and FIG. 2. FIG. 1 is a block diagram illustrating a configuration of the robot system 1. FIG. 2 is a side view illustrating an external appearance of a robot 10.

In FIG. 1, the robot system 1 includes the robot 10, an imaging unit 20, and a control apparatus 100. The robot 10 is an apparatus configured to perform predetermined processing on a workpiece W serving as an example of an object. For example, as illustrated in FIG. 2, the robot 10 may include a base 11, a robot arm 12, and a robot control apparatus 14.

The base 11 is a member serving as a base of the robot 10. The base 11 is disposed on a support surface such as a floor surface. The base 11 may be fixed on the support surface. The base 11 may be movable relative to the support surface. In a case where the base 11 is movable relative to the support surface, the base 11 may be self-propelled on the support surface. In this instance, the base 11 may be mounted on an automated/automatic guided vehicle (AGV). That is, the robot 10 may be mounted on the automated guided vehicle.

The robot arm 12 is attached to/mounted on the base 11. The robot arm 12 is an apparatus in which a plurality of links are coupled via joints. An actuator is built in the joint. The link may be rotatable around an axis defined by the joint, by means of the actuator built in the joint. At least one link may be extendable and retractable along a direction in which the link extends. An apparatus including the base 11 and the apparatus in which the plurality of links are coupled via the joints, may be referred to as the robot arm 12.

To the robot arm 12, an end effector 13 is attached. That is, the end effector 13 is attached to the robot 10. In the example illustrated in FIG. 2, the end effector 13 is attached to a tip of the robot arm 12. The end effector 13 is movable by movement of the robot arm 12. That is, the robot arm 12 moves the end effector 13. In other words, the robot 10 moves the end effector 13. The robot 10 may include the end effector 13 as a part of the robot 10. In other words, the end effector 13 may constitute a part of the robot 10.

The end effector 13 is an apparatus that performs predetermined processing (in other words, a predetermined operation) on the workpiece W. The end effector 13 may be referred to as a processing apparatus as it performs the predetermined processing on the workpiece W.

The end effector 13 may perform grasp processing for grasping the workpiece W. The end effector 13 may perform disposition processing for disposing the workpiece W grasped by the end effector 13 in a desired position. The end effector 13 may perform insertion processing for inserting the workpiece W (a first object) grasped by the end effector 13, into another object (a second object) differing from the workpiece W serving as the first object. In this case, the second object into which the workpiece W serving as the first object is to be inserted, may also be referred to as the workpiece W.

An example of the end effector 13 that performs at least one of the grasp processing, the disposition processing, and the insertion processing, includes a hand gripper configured to grasp the workpiece W by physically holding the workpiece W between finger-like or claw-like parts, and a vacuum gripper configured to grasp the workpiece W by vacuum suction of the workpiece W. FIG. 2 illustrates an example in which the end effector 13 is a hand gripper. The number of the fingers or claws of the hand gripper is not limited to two, but may be three or more (e.g., three, six, etc.).

The desired position in which the workpiece W (the first object) is disposed, may be a desired position of another object (the second object) differing from the workpiece W. In this instance, the other object (the second object) may be an object-disposed apparatus in which the workpiece W serving as the first object is disposed. An example of the object-disposed apparatus is a pallet. The object-disposed apparatus may be disposed on a support surface such as a floor surface. The object-disposed apparatus may be fixed on the support surface. Alternatively, the object-disposed apparatus may be movable relative to the support surface. As an example, the object-disposed apparatus may be self-propelled on the support surface. In this instance, the object-disposed apparatus may be referred to as an automated guided vehicle (AGV). In a case where the object-disposed apparatus is movable relative to the support surface, the workpiece W disposed in the object-disposed apparatus also moves relative to the support surface, as the object-disposed apparatus moves. Therefore, the movable object-disposed apparatus may function as a moving apparatus for moving the workpiece W. A belt conveyor may be used as the object-disposed apparatus. The object-disposed apparatus serving as the second object in which the workpiece W serving as the first object is disposed, may also be referred to as the workpiece W. The workpiece W serving as the first object before being grasped by the end effector 13, may be disposed in the object-disposed apparatus.

The grasp processing for grasping the workpiece W by the end effector 13 may be referred to as holding processing for holding the workpiece W. The disposition processing for the end effector 13 disposing the workpiece W grasped by the end effector 13 in the desired position, may be referred to as release processing (in other words, a release operation) for releasing (i.e., letting go) the workpiece W grasped by the end effector 13 to the desired position. Not only the object grasped by the end effector 13, but also at least one of the object held by the end effector 13 and the object disposed (in other words, released) by the end effector 13, may be a target (i.e., the workpiece W) on which the end effector 13 performs the predetermined processing. In a case where the first object that serves as the workpiece W and that is grasped by the end effector 13, is inserted into the second object differing from the first object, the second object can be said to be a target on which the end effector 13 performs the predetermined processing, as the end effector 13 inserts the first object into the second object. That is, in this case, the second object into which the first object is inserted, may also be referred to as the workpiece W. **In** a case where the first object that serves as the workpiece W and that is grasped by the end effector 13, is disposed in the second object differing from the first object, the second object can be said to be a target on which the end effector 13 performs the predetermined processing, as the end effector 13 disposes the first object in the second object. That is, in this case, the second object in which the first object is disposed, may also be referred to as the workpiece W.

The end effector 13 is not limited to the hand gripper or the vacuum gripper, but may be a processing apparatus for processing the workpiece W. The processing apparatus may perform at least one of additive processing for adding a new build object to the workpiece W, removal processing for removing a part of the workpiece W, welding processing for joining the two workpieces W (the first object and the second object), and cutting processing for cutting the workpiece W. The processing apparatus may process the workpiece W by using a tool. **In** this instance, the processing apparatus including the tool may be attached to the robot arm 12. Alternatively, the processing apparatus may process the workpiece W by irradiating the workpiece W with an energy beam (e.g., light, electromagnetic waves, and a charged-particle beam). **In** this instance, the processing apparatus including an irradiation apparatus that irradiates the workpiece W with the energy beam, may be attached to the robot arm 12. The processing apparatus serving as an example of the end effector 13 may perform soldering processing for soldering components to the workpiece W. The processing apparatus may solder components to the workpiece W by using a soldering iron. **In** this instance, the processing apparatus including the soldering iron may be attached to the robot arm 12. Alternatively, the processing apparatus may solder components to the workpiece W by irradiating the solder with an energy beam (e.g., light, electromagnetic waves, and a charged-particle beam). **In** this instance, the processing apparatus including an irradiation apparatus that irradiates the workpiece W with the energy beam, may be attached to the robot arm 12. The energy beam applied to process the workpiece W may be referred to as processing light.

As another example, a measurement apparatus for measuring the workpiece W serving as an example of the end effector 13, may be attached to the robot arm 12. The measurement apparatus may be configured to measure properties of the workpiece W. An example of the properties of the workpiece W includes at least one of a shape of the workpiece W, a size of the workpiece W, and temperature of the workpiece W. The measurement apparatus may measure the workpiece W by using a touch probe. In this instance, the measurement apparatus including the touch probe, may be attached to the robot arm 12. Alternatively, the measurement apparatus may measure the workpiece W by irradiating the workpiece W with an energy beam (e.g., light, electromagnetic waves, and a charged-particle beam). In this instance, the measurement apparatus including an irradiation apparatus that irradiates the workpiece W with the energy beam, may be attached to the robot arm 12.

FIG. 2 illustrates an example in which the robot 10 is a robot including the robot arm 12 (i.e., a vertical articulated robot). The robot 10, however, may be a robot differing from the vertical articulated robot. The robot 10 may be a scalar robot (i.e., a horizontal articulated robot). The robot 10 may be a parallel link robot. The robot 10 may be a dual-arm robot including two robot arms 12. The robot 10 may be a Cartesian coordinate robot. The robot 10 may be a cylindrical coordinate robot. The robot 10 may be referred to as a movable apparatus. The movable apparatus may include at least one of an automated guided vehicle and an unmanned aerial vehicle, in addition to or in place of the robot 10. The robot 10 may be disposed in at least one of the automated guided vehicle and the unmanned aerial vehicle. The robot system 1 includes the robot 10 that may be referred to as a movable apparatus. Therefore, the robot system 1 may be referred to as a movable system. The movable system may include, for example, at least one of the automated guided vehicle and the unmanned aerial vehicle, in addition to or in place of the robot 10. The movable system may include the robot 10 disposed in at least one of the automated guided vehicle and the unmanned aerial vehicle.

The robot control apparatus 14 controls operation of the robot 10. As an example, the robot control apparatus 14 may control operation of the robot arm 12. The robot control apparatus 14 may control the operation of the robot arm 12 such that a desired link rotates around an axis defined by a desired joint. The robot control apparatus 14 may control the operation of the robot arm 12 such that the end effector 13 attached to the robot arm 12 is located (in other words, moved) in a desired position. As another example, the robot control apparatus 14 may control operation of the end effector 13. The robot control apparatus 14 may control the operation of the end effector 13 such that the end effector 13 grasps the workpiece W in desired timing. That is, the robot control apparatus 14 may control the operation of the end effector 13 such that the end effector 13 performs the grasp processing in desired timing. The robot control apparatus 14 may control the operation of the end effector 13 so as to dispose the workpiece W grasped in desired timing by the end effector 13 (i.e., release the grasped workpiece W) in a desired position. That is, the robot control apparatus 14 may control the operation of the end effector 13 such that the end effector 13 performs the disposition processing in desired timing. The robot control apparatus 14 may control the operation of the end effector 13 so that the end effector 13 performs the insertion processing in desired timing. In a case where the end effector 13 is a hand gripper, the robot control apparatus 14 may control open/close timing of the hand gripper. In a case where the end effector 13 is a vacuum gripper, the robot control apparatus 14 may control on/off timing of a vacuum of the vacuum gripper.

The imaging unit 20 is an apparatus that images or that captures an image of the object (e.g., the workpiece W). The imaging unit 20 may be attached to the robot arm 12. The imaging unit 20 may be attached to a tip of the robot arm 12, for example, as illustrated in FIG. 2. In this case, the imaging unit 20 attached to the robot arm 12 is movable by the movement of the robot arm 12. That is, the robot arm 12 is configured to move the imaging unit 20. The imaging unit 20 may not be attached to the robot arm 12. For example, the imaging unit 20 may be attached to a scaffold built above the robot 10.

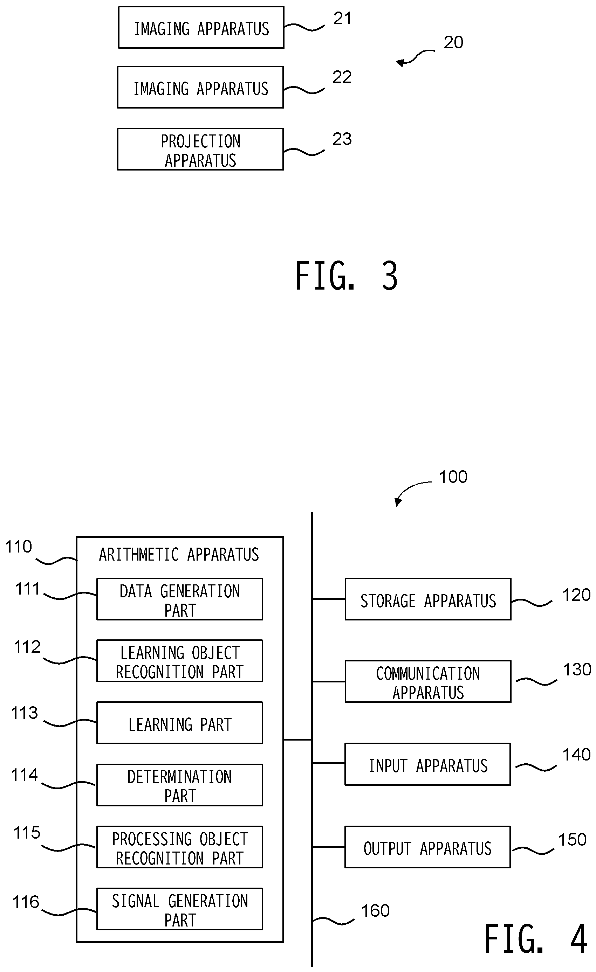

An example of the imaging unit 20 will now be described with reference to FIG. 3. FIG. 3 is a block diagram illustrating a configuration of the imaging unit 20. The imaging unit 20 may include an imaging apparatus 21, an imaging apparatus 22, and a projection apparatus 23, as illustrated in FIG. 3. The imaging apparatus 21 is a single monocular camera. In other words, the imaging apparatus 21 includes one image sensor element. The imaging apparatus 22 is a stereo camera having two monocular cameras. In other words, the imaging apparatus 22 includes two image sensor elements. At least one of the imaging apparatuses 21 and 22 may include three or more monocular cameras. At least one of the imaging apparatuses 21 and 22 may be at least one of a light field camera, a plenoptic camera, and a multispectral camera. The imaging unit 20 may not include the projection apparatus 23. The imaging unit 20 may not include the imaging apparatus 21 or the imaging apparatus 22.

The imaging apparatus 21 generates image data IMG_2D by imaging the object (e.g., the workpiece W). The generated the image data IMG_2D are outputted from the imaging apparatus 21 to the control apparatus 100. The imaging apparatus 22 generates image data IMG_3D by imaging the object (e.g., the workpiece W). Here, the image data IMG_3D include two pieces of image data respectively generated by two monocular cameras of the stereo camera serving as the imaging apparatus 22. The image data IMG_3D are outputted from the imaging apparatus 22 to the control apparatus 100.

The projection apparatus 23 is an apparatus configured to irradiate the object (e.g., the workpiece W) with projection light. The projection apparatus 23 may be an apparatus configured to project a desired projection pattern on the workpiece W by irradiating the workpiece W with the projection light. The projection apparatus 23 may be a projector. The desired projection pattern may include a random pattern. The random pattern may be a projection pattern having a different pattern for each unit irradiation area. The random pattern may include a random dot pattern. The desired projection pattern is not limited to the random pattern, but may include a one-dimensional or two-dimensional grating pattern, or may include a pattern differing from the grating pattern. The projection light emitted from the projection apparatus 23 to the object, may be referred to as patterned light or as structured light, as it allows the projection pattern to be projected on the workpiece W. The projection apparatus 23 may be referred to as an optical projection apparatus, as it allows the desired projection pattern to be projected.

The projection apparatus 23 may be configured to irradiate the object (e.g., the workpiece W) with projection light differing from the projection light that allows projection of the desired projection pattern. The projection light differing from the projection light that allows the projection of the desired projection pattern, may be referred to as illumination light. In a case where the projection apparatus 23 applies the illumination light as the projection light, the projection apparatus 23 may be referred to as an illumination apparatus.

At least one of the imaging apparatus 21, the imaging apparatus 22, and the projection apparatus 23 of the imaging unit 20 may be attached to the robot arm 12, and at least another one of the imaging apparatus 21, the imaging apparatus 22, and the projection apparatus 23 of the imaging unit 20 may be attached to a different location from that of the robot arm 12.

The imaging apparatuses 21 and 22 may image the object (e.g., the workpiece W) while synchronizing with each other. The imaging apparatuses 21 and 22 may simultaneously image the object. That is, the imaging apparatuses 21 and 22 may image the object such that a time at which the imaging apparatus 21 images the object is the same as a time at which the imaging apparatus 22 images the object. The imaging apparatuses 21 and 22, however, may not simultaneously image the object. That is, the imaging apparatuses 21 and 22 may image the object such that the time at which the imaging apparatus 21 images the object is different from the time at which the imaging apparatus 22 images the object.

Here, a state in which "the imaging apparatuses 21 and 22 simultaneously image the object" may include a state in which, literally, "an imaging time of the imaging apparatus 21 is completely the same as an imaging time of the imaging apparatus 22". The state in which "the imaging apparatuses 21 and 22 simultaneously image the object" may include a state in which "although the imaging time of the imaging apparatus 21 is not completely the same as the imaging time of the imaging apparatus 22, a time deviation between the imaging time of the imaging apparatus 21 and the imaging time of the imaging apparatus 22 is less than an allowable upper limit, and the imaging time of the imaging apparatus 21 may be considered substantially the same as the imaging time of the imaging apparatus 22". Here, the time deviation between the imaging time of the imaging apparatus 21 and the imaging time of the imaging apparatus 22, causes an error in the control of the robot arm 12. The "allowable upper limit" may be an allowable upper limit set based on a control error of the robot arm 12 caused by the time deviation between the imaging time of the imaging apparatus 21 and the imaging time of the imaging apparatus 22.

The imaging apparatus 22 may image the object on which the desired projection pattern is projected. That is, the imaging apparatus 22 may image the object when the projection apparatus 23 irradiates the object with the projection light that allows the projection of the desired projection pattern. In such a case, the object on which the desired projection pattern is projected, may be captured in an image indicated by the image data IMG_3D generated by the imaging apparatus 22. On the other hand, the imaging apparatus 21 may not image the object on which the desired projection pattern is projected. That is, the imaging apparatus 21 may not image the object when the projection apparatus 23 irradiates the object with the projection light that allows the projection of the desired projection pattern. In such a case, an object on which the desired projection pattern is not projected, may be captured in an image indicated by the image data IMG_2D generated by the imaging apparatus 21.

When the projection apparatus 23 irradiates the object with the projection light that allows the projection of the desired projection pattern, the imaging apparatuses 21 and 22 may simultaneously image the object on which the desired projection pattern is projected. In this instance, the projection apparatus 23 may irradiate the object with projection light including a light component of a first wavelength band (e.g., a wavelength band of blue light). The imaging apparatus 21 may have a filter capable of attenuating the light component of the first wavelength band. Here, the imaging apparatus 21 may image the object, by receiving light from the object via the filter, with the image sensor element. As described above, in a case where the projection light from the projection apparatus 23 includes the light component of the first wavelength band, the filter of the imaging apparatus 21 attenuates the projection light. Therefore, return light (e.g., at least one of reflected light and scattered light of the projection light) from the object that is irradiated with the projection light (i.e., on which the projection pattern is projected), is attenuated by the filter of the imaging apparatus 21. Consequently, even when the projection apparatus 23 irradiates the object with the projection light, the imaging apparatus 21 is allowed to image the object without being affected by the projection light emitted from the projection apparatus 23. On the other hand, the imaging apparatus 22 does not have the filter capable of attenuating the light component of the first wavelength band. Therefore, the imaging apparatus 22 is allowed to image the object that is irradiated the projection light (i.e., on which the projection pattern is projected).

The imaging unit 20 may include only the imaging apparatus 21. The imaging unit 20 may include only the imaging apparatus 22. The imaging unit 20 may include the imaging apparatus 22 and the projection apparatus 23 (in other words, the imaging unit 20 may not include the imaging apparatus 21). As described above, the imaging unit 20 images the object (e.g., the workpiece W). Therefore, the imaging unit 20 may be referred to as an imaging part.

Returning to FIG. 2, the control apparatus 100 performs robot control processing. The robot control processing is processing of generating a robot control signal for controlling the robot 10. Specifically, the control apparatus 100 generates the robot control signal, based on at least one of the image data IMG_2D and the image data IMG_3D outputted from the imaging unit 20. The control apparatus 100 calculates at least one of a position and posture/attitude/ orientation of the object (e.g., the workpiece W) in a global coordinate system of the robot system 1, based on at least one of the image data IMG_2D and the image data IMG_3D, for example. The control apparatus 100 generates the robot control signal, based on the calculated at least one of the position and posture of the object. The generated robot control signal is outputted to the robot control apparatus 14 of the robot 10. The robot control signal may include a signal for controlling the operation of the robot 10.

In addition to performing the robot control processing, the control apparatus 100 may perform end effector control processing. The end effector control processing may include processing of generating an end effector control signal for controlling the end effector 13. Specifically, the control apparatus 100 may generate the end effector control signal, based on the calculated at least one of the position and posture of the object. The end effector control processing may or may not be included in the robot control processing. That is, the end effector control signal generated by the control apparatus 100 may or may not be included in the robot control signal.

The following describes, for convenience of explanation, an example in which the end effector control processing is included in the robot control processing (i.e., the end effector control signal is included in the robot control signal). Therefore, in the following explanation, the robot control processing may mean processing of generating at least one of the robot control signal and the end effector control signal. Furthermore, in the following explanation, the robot control signal may mean at least one of a signal for controlling the robot 10 and a signal for controlling the end effector 13. At least one of the robot control signal and the end effector control signal may be referred to as a second control signal.

The robot control apparatus 14 may control driving of the actuator built in the joint of the robot arm 12, based on robot control signal. As described above, the robot control signal may include the signal for controlling the end effector 13 (i.e., the end effector control signal). That is, the end effector 13 may be controlled by the robot control signal. In this instance, the robot control apparatus 14 may control the driving of the actuator built in the end effector 13, based on the robot control signal. At this time, the robot control apparatus 14 may convert the robot control signal to a control signal represented by a language specific to the robot 10. In this instance, it can be said that the control apparatus 100 indirectly controls the robot 10 via the robot control apparatus 14. The control apparatus 100 may control the robot 10 without using the robot control apparatus 14. In this case, the robot control signal may be represented by the language specific to the robot 10. In this instance, the robot 10 may not include the robot control apparatus 14.

The above "global coordinate system" can be said to be a coordinate system based on the robot 10. The control apparatus 100 may calculate at least one of a position and posture of the object in a coordinate system differing from the global coordinate system, based on the image data IMG_2D and the image data IMG_3D, thereby generating the robot control signal. The coordinate system differing from the global coordinate system, may be at least one of a coordinate system based on the imaging apparatus 21 (a 2D imaging coordinate system described later) and a coordinate system based on the imaging apparatus 22 (a 3D imaging coordinate system described later).

As described above, the control apparatus 100 and the imaging unit 20 are used to control the robot 10. Therefore, the system including the control apparatus 100 and the imaging unit 20 may be referred to as a robot control system or a control system.

The control apparatus 100 will now be described with reference to FIG. 4. FIG. 4 is a block diagram illustrating a configuration of the control apparatus 100. In FIG. 4, the control apparatus 100 includes an arithmetic apparatus 110, a storage apparatus 120, and a communication apparatus 130. The control apparatus 100 may include an input apparatus 140 and an output apparatus 150. The control apparatus 100, however, may not include at least one of the input apparatus 140 and the output apparatus 150. The arithmetic apparatus 110, the storage apparatus 120, the communication apparatus 130, the input apparatus 140, and the output apparatus 150 may be connected via a data bus 160.

The arithmetic apparatus 110 may include at least one of a CPU (Central Processing Unit), a GPU (Graphics Processing Unit), and a FPGA (Field Programmable Gate Array), for example.

The storage apparatus 120 may include at least one of a RAM (Random Access Memory), a ROM (Read Only Memory), a hard disk apparatus, a magneto-optical disk apparatus, an SSD (Solid State Drive), and a disk array apparatus, for example. That is, the storage apparatus 120 may include a non-transitory storage medium.

The communications apparatus 130 is configured to communicate with each of the robot 10 and the imaging unit 20. The communications apparatus 130 may be configured to communicate with another apparatus that differs from the robot 10 and the imaging unit 20 via a not-illustrated network.

The input apparatus 140 may include at least one of a keyboard, a mouse, and a touch panel. The input apparatus 140 may include a recording medium reading apparatus that is configured to read information recorded on a removable recording medium such as, for example, a USB (Universal Serial Bus) memory. In a case where information is inputted to the control apparatus 100 via the communication apparatus 130 (in other words, in a case where the control apparatus 100 acquires information via the communication apparatus 130), the communication apparatus 130 may function as an input apparatus.

The output apparatus 150 may include at least one of a display, a speaker, and a printer. The output apparatus 150 may be configured to output information to a removable storage medium such as, for example, a USB memory. In a case where information is outputted from the control apparatus 100 via the communication apparatus 130, the communication apparatus 130 may function as an output apparatus.

The arithmetic apparatus 110 may include, as logically realize functional blocks, a data generation part 111, a learning object recognition part 112, a learning part 113, a determination part 114, a processing object recognition part 115, and a signal generation part 116. Such functional blocks may be realized by the arithmetic apparatus 110 executing a computer program. Since each of the data generation part 111, the learning object recognition part 112, the learning part 113, the determination part 114, the processing object recognition part 115, and the signal generation part 116 will be described in details later, a description thereof will be omitted.

The arithmetic apparatus 110 may read a computer program stored in the storage apparatus 120. The arithmetic apparatus 110 may read a computer program stored in a computer-readable, non-transitory recording medium, by using a not-illustrated recording medium reading apparatus provided in the control apparatus 100. The arithmetic apparatus 110 may acquire (i.e., may download or may read) a computer program from a not-illustrated apparatus disposed outside the control apparatus 100 via the communication apparatus 130 (or another communication apparatus). The arithmetic apparatus 110 may execute the read computer program. Consequently, a logical functional block for performing processing to be performed by the control apparatus 100 (e.g., the robot control processing described above), may be realized in the arithmetic apparatus 110. That is, the arithmetic apparatus 110 may function as a controller for realizing the logical functional block for performing the processing to be performed by the control apparatus 100.

As the recording medium on which the computer program to be executed by the arithmetic apparatus 110 is recorded, at least one of an optical disk such as a CD-ROM, a CD-R, a CD-RW, a flexible disk, a MO, a DVD-ROM, a DVD-RAM, a DVD-R, a DVD+R, a DVD-RW, a DVD+RW, and a Blu-ray(registered trademark), a magnetic medium such as a magnetic tape, a semiconductor memory such as an optical disk and a USB memory, and an arbitrary medium configured to store thereon a program, may be used. The recording medium may include a device configured to record thereon a computer program (e.g., a general-purpose or dedicated device in which a computer program is implemented in a state of being executable in at least one form of software and firmware, or the like). In addition, each processing and function included in the computer program may be realized by a logical processing block realized in the arithmetic apparatus 110 by the arithmetic apparatus 110 (i.e., a computer) executing the computer program, may be realized by hardware such as a predetermined gate array(a FPGA (Field Programmable Gate Array), an ASIC (Application Specific Integrated Circuit)) provided in the arithmetic apparatus 110, or may be realized by in a mixed form of a logical processing block and a partial hardware module that realizes a partial element of hardware.

### (2) Robot Control Processing

The robot control processing described above will now be described. Here, processing performed by each of the processing object recognition part 115 and the signal generation part 116 realized in the arithmetic apparatus 110 of the control apparatus 100, will be mainly described. Furthermore, the end effector 13 attached to the robot 10 is assumed to perform the predetermined processing on the workpiece W serving as an example of the object. Since the end effector 13 performs the predetermined processing on the workpiece W, the workpiece W may be referred to as a processing target object (or a processing object).

The processing target object may be substantially the same as a learning target object described later. That is, the processing target object is not limited to an object having the same shape as that of the learning target object, but may be an object similar to the learning target object to an extent that the object is considered the same as the learning target object. A state in which "the processing target object is an object similar to the learning target object to an extent that the object is considered the same as the learning target object" may include at least one of (i) a state in which a difference between a shape of the processing target object and a shape of the learning target object is to an extent of a manufacturing error, (ii) a state in which the difference between the shape of the processing target object and the shape of the learning target object is to an extent that the shapes on an image captured by the imaging unit 20 are considered the same, (iii) a state in which the difference between the shape of the processing target object and the shape of the learning target object is to an extent of slight deformation caused by a contact of the processing target object with another object (e.g., another processing target object), (iv) a state in which the difference between the shape of the processing target object and the shape of the learning target object is to an extent of slight deformation caused by placement and holding on a stage or the like, and (v) a state in which a part of the processing target object and a part of the learning target object, which are not imaged or not allowed to be imaged by the imaging unit 20, have different shapes.

The workpiece W, which may be referred to as the processing target object, may be captured in the image indicated by the image data (e.g., the image data IMG_2D and the image data IMG_3D) generated by the imaging unit 20 imaging the workpiece W. Therefore, the image data generated by the imaging unit 20 imaging the workpiece W, for example, may be referred to as processing target image data.

The processing target image data may include the image data (e.g., the image data IMG_2D) generated by the single monocular camera serving as the imaging apparatus 21 provided in the imaging unit 20, imaging the workpiece W. The processing target image data may include the image data (e.g., the image data IMG_3D) generated by the stereo camera serving as the imaging apparatus 22 provided in the imaging unit 20, imaging the workpiece W. In a case where the stereo camera serving as the imaging apparatus 22 images the workpiece W, the desired projection pattern (e.g., random dots) from the projection apparatus 23 provided in the imaging unit 20 may be projected on the workpiece W. In a case where the stereo camera serving as the imaging apparatus 22 images the workpiece W, the desired projection pattern may not be projected on the workpiece W.

The control apparatus 100 further acquires the image data IMG_2D from the imaging apparatus 21 by using the communication apparatus 130. Specifically, the imaging apparatus 21 images the workpiece W at a predetermined 2D imaging rate. The imaging apparatus 21 may image the workpiece W at a 2D imaging rate of imaging the workpiece W several tens to several hundreds of times per second (as an example, 500 times). Consequently, the imaging apparatus 21 generates the image data IMG_2D at a cycle corresponding to the predetermined 2D imaging rate. The imaging apparatus 21 may generate several tens to several hundreds of pieces (e.g., 500 pieces) of the image data IMG_2D per second. The control apparatus 100 acquires the image data IMG_2D at each time when the imaging apparatus 21 generates the image data IMG_2D. That is, the control apparatus 100 may acquire several tens to several hundreds of pieces (e.g., 500 pieces) of the image data IMG_2D per second.

The control apparatus 100 further acquires the image data IMG_3D from the imaging apparatus 22 by using the communication apparatus 130. Specifically, the imaging apparatus 22 image the workpiece W at a predetermined 3D imaging rate. The 3D imaging rate may be the same as the 2D imaging rate. The 3D imaging rate, however, may be different from the 2D imaging rate. The imaging apparatus 22 may image the workpiece W at a 3D imaging rate of imaging the workpiece W several tens to several hundreds of times per second (as an example, 500 times). Consequently, the imaging apparatus 22 generates the image data IMG3D at a cycle corresponding to the predetermined 3D imaging rate. For example, the imaging apparatus 22 may generate several tens to several hundreds of pieces (e.g., 500 pieces) of the image data IMG_3D per second. The control apparatus 100 acquires the image data IMG_3D at each time when the imaging apparatus 22 generates the image data IMG_3D. That is, the control apparatus 100 may acquire several tens to several hundreds of pieces (e.g., 500 pieces) of the image data IMG_3D per second.

At each time when the control apparatus 100 acquires the image data IMG_3D, the processing object recognition part 115 generates three-dimensional position data WSD indicating a position in a three-dimensional space of a point corresponding to each part of the workpiece W, based on the acquired the image data IMG_3D. The "position in the three-dimensional space of the point corresponding to each part of the workpiece W " will be hereinafter referred to as a "three-dimensional position of each of a plurality of points of the workpiece W", as appropriate.

In the image indicated by the image data IMG_3D, for example, the workpiece W with the projection pattern projected thereon is captured. In this case, a three-dimensional shape of the workpiece W on which the projection pattern is projected, is reflected in the projection pattern captured in the image indicated by the image data IMG_3D. Therefore, the processing object recognition part 115 generates the three-dimensional position data WSD, based on the projection pattern captured in the image indicated by the image data IMG_3D.

The processing object recognition part 115 may calculate a parallax by performing association/matching between parts (e.g., pixels) of images respectively indicated by the two pieces of image data included in the image data IMG_3D. Specifically, in this association, the processing object recognition part 115 may calculate the parallax by performing association between parts of the projection pattern captured in the images respectively indicated by the two pieces of image data (i.e., between parts of the projection patterns captured in the respective images). The processing object recognition part 115 may generate the three-dimensional position data WSD by a well-known method based on the principle of triangulation using the calculated parallax (i.e., may calculate the three-dimensional position of each of the plurality of points of the workpiece W). As described above, in a case where association is performed between the parts of the images in which the projection pattern is reflected (i.e., between the parts of the reflected projection patterns), calculation accuracy of the parallax is higher than that in a case where association is performed between parts of images in which the projection pattern is not reflected. Therefore, accuracy of the generated three-dimensional position data WSD (i.e., calculation accuracy of the three-dimensional position of each of the plurality of points of the workpiece W) becomes higher. Note that at least one of well-known methods, which are, for example, SGBM (Semi-Global Block Matching) and SAD (Sum of Absolute Difference), may be used for an association method (i.e., matching method) between the parts of the images respectively indicated by two pieces of image data included in the image data IMG_3D. The parallax may be calculated by performing association/matching between the parts of the images in which the projection pattern is not reflected, and the three-dimensional position data WSD may be generated by the well-known method based on the principle of triangulation using the calculated parallax. The three-dimensional position data WSD may be referred to as three-dimensional shape data, as it represents the three-dimensional shape of the workpiece W. The three-dimensional position data WSD may be referred to as distance data, as it represents a distance from the imaging unit 20 (e.g., the imaging apparatus 22) to the workpiece W.

The three-dimensional position data WSD may be any data, as long as it is allowed to indicate the three-dimensional position of each of the plurality of points of the workpiece W. An example of the three-dimensional position data WSD is depth image data. The depth image data indicate an image, and brightness information and depth information are associated with each of pixels of a depth image indicated by the depth image data. The depth information is information indicating a distance (i.e., depth) between each part of the object captured in each pixel and the imaging apparatus 22. The depth image data may be an image in which the brightness information in each pixel indicates a depth of each part of the object (the distance between each part of the object and the imaging apparatus 22). The processing object recognition part 115 may generate the depth image by calculating the distance between the imaging apparatus 22 and each part of the object captured in the image indicated by the image data IMG_3D, based on the projection pattern captured in the image indicated by the image data IMG_3D, and by associating the calculated distance, as the depth information, with each pixel of the image data IMG_3D. Another example of the three-dimensional position data WSD is point cloud data. The point cloud data are data indicating the position in the three-dimensional space of the point corresponding to each part of the object (e.g., the workpiece W) captured in the image indicated by the image data IMG_3D. The processing object recognition part 115 may generate the point cloud data, based on the depth image data and a camera parameter of the imaging apparatus 22. The three-dimensional position data WSD indicating the three-dimensional position of each of the plurality of points of the workpiece W may also be referred to as data indicating a position of the workpiece W. It can be said that the processing object recognition part 115 calculates the position of the workpiece W by using the image data IMG_3D, as it generates the three-dimensional position data WSD by using the image data IMG_3D. Thus, processing of calculating the position in the three-dimensional space of the point corresponding to each part of the object (e.g., the workpiece W) (in other words, the three-dimensional position of each of the plurality of points of the object) using the image data IMG_3D, may be referred to as "position calculation processing".

Thereafter, the processing object recognition part 115 calculates at least one of the position and posture of the workpiece W, based on the image data IMG_2D and the three-dimensional position data WSD. For example, the processing object recognition part 115 may calculate at least one of the position and posture of a representative point of the workpiece W. An example of the representative point of the workpiece W may be at least one of a center of the workpiece W, a center of gravity of the workpiece W, an apex of the workpiece W, a center of a surface of the workpiece W, and a center of gravity of a surface of the workpiece W. The representative point of the workpiece W may be referred to as a feature point of the workpiece W.

At this time, the processing object recognition part 115 may calculate at least one of the position and posture of the workpiece W in the global coordinate system. As described above, the global coordinate system is a coordinate system serving as a reference of the robot system 1. Specifically, the global coordinate system is a coordinate system used to control the robot 10. The robot control apparatus 14 may control the robot arm 12 such that the end effector 13 is located in the desired position in the global coordinate system. The global coordinate system may be a coordinate system defined by an X-axis (GL), a Y-axis (GL) and a Z-axis (GL) that are perpendicular to each other. Incidentally, "GL" is a reference numeral indicating the global coordinate system.

The processing object recognition part 115 may calculate, as the position of the workpiece W in the global coordinate system, at least one of a position Tx (GL) of the workpiece W in an X-axis direction (GL) parallel to the X-axis (GL), a position Ty (GL) of the workpiece W in a Y-axis direction (GL) parallel to the Y-axis (GL), and a position Tz (GL) of the workpiece W in a Z-axis direction (GL) parallel to the Z-axis (GL). The processing object recognition part 115 may calculate, as the posture of the workpiece W in the global coordinate system, at least one of a rotation amount Rx (GL) of the workpiece W around the X-axis (GL), a rotation amount Ry (GL) of the workpiece W around the Y-axis (GL), and a rotation amount Rz (GL) of the workpiece W around the Z-axis (GL). The rotation amount Rx (GL) of the workpiece W around the X-axis (GL), the rotation amount Ry (GL) of the workpiece W around the Y-axis (GL), and the rotation amount Rz (GL) of the workpiece W around the Z-axis (GL) are respectively equivalent to a parameter representing the posture of the workpiece W around the X-axis (GL), a parameter representing the posture of the workpiece W around the Y-axis (GL), and a parameter representing the posture of the workpiece W around the Z-axis (GL). Therefore, in the following explanation, the rotation amount Rx (GL) of the workpiece W around the X-axis (GL), the rotation amount Ry (GL) of the workpiece W around the Y-axis (GL), and the rotation amount Rz (GL) of the workpiece W around the Z-axis (GL) will be respectively referred to as a posture Rx (GL) of the workpiece W around the X-axis (GL), a posture Ry (GL) of the workpiece W around the Y-axis (GL), and a posture Rz (GL) of the workpiece W around the Z-axis (GL).

The posture Rx (GL) of the workpiece W around the X-axis (GL), the posture Ry (GL) of the workpiece W around the Y-axis (GL), and the posture Rz (GL) of the workpiece W around the Z-axis (GL) may be respectively regarded as indicating a position of the workpiece W in a rotational direction around the X-axis (GL), a position of the workpiece W in a rotational direction around the Y-axis (GL) and a position of the workpiece W in a rotational direction around the Z-axis (GL). That is, the posture Rx (GL) of the workpiece W around the X-axis (GL), the posture Ry (GL) of the workpiece W around the Y-axis (GL), and the posture Rz (GL) of the workpiece W around the Z-axis (GL) may all be regarded as the parameters representing the position of the workpiece W. Therefore, the postures Rx (GL), Ry (GL), and Rz (GL) may be respectively referred to as positions Rx (GL), Ry (GL), and Rz (GL).

The processing object recognition part 115 may calculate the position or posture of the workpiece W in the global coordinate system. That is, the processing object recognition part 115 may not calculate the position and posture of the workpiece W in the global coordinate system. In this instance, the processing object recognition part 115 may calculate at least one of the positions Tx (GL), Ty (GL), and Tz (GL), as the position of the workpiece W in the global coordinate system. That is, the position of the workpiece W in the global coordinate system may be represented by at least one of the positions Tx (GL), Ty (GL), and Tz (GL). Furthermore, the processing object recognition part 115 may calculate at least one of the postures Rx (GL), Ry (GL), and Rz (GL), as the posture of the workpiece W in the global coordinate system. That is, the posture of the workpiece W in the global coordinate system may be represented by at least one of the postures Rx (GL), Ry (GL), and Rz (GL).

Thereafter, the signal generation part 116 generates the robot control signal, based on at least one of the position and posture of the workpiece W calculated as described above. The signal generation part 116 may generate the robot control signal (in other words, the end effector control signal) such that the end effector 13 attached to the robot 10 performs the predetermined processing on the workpiece W. The signal generation part 116 may generate the robot control signal such that a positional relation between the end effector 13 attached to the robot 10 and the workpiece W is a desired positional relation. The signal generation part 116 may generate a robot control signal for controlling the operation of the robot arm 12 such that the positional relation between the end effector 13 attached to the robot 10 and the workpiece W is a desired positional relation. The signal generation part 116 may generate the robot control signal (in other words, the end effector control signal) such that the end effector 13 performs the predetermined processing on the workpiece W when the positional relation between the end effector 13 attached to the robot 10 and the workpiece W becomes a desired positional relation. The signal generation part 116 may generate the robot control signal for controlling the operation of the end effector 13 (i.e., the end effector control signal) so as to perform the predetermined processing on the workpiece W when the positional relation between the end effector 13 attached to the robot 10 and the workpiece W becomes a desired positional relation.

The robot control signal may include a signal that is usable, as it is, for the robot control apparatus 14 to control the operation of the robot 10. The robot control signal may include a signal that is usable, as it is, as a robot drive signal used by the robot control apparatus 14 to control the operation of the robot 10. In this instance, the robot control signal may include a signal that is usable, as it is, as a robot drive signal used by the robot control apparatus 14 to control the operation of the robot 10. In this instance, the robot control apparatus 14 may control the operation of the robot 10 by using the robot control signal as it is. For example, the control apparatus 100 may generate a drive signal of the actuator built in the joint of the robot arm 12 as the robot control signal, and the robot control apparatus 14 may control the actuator built in the joint of the robot arm 12 by using the robot control signal generated by the control apparatus 100 as it is. The robot control signal may include a signal that is usable, as it is, for the robot control apparatus 14 to control the operation of the end effector 13. The robot control signal may include a signal that is usable, as it is, as an end effector drive signal used by the robot control apparatus 14 to control the operation of the end effector 13. In this instance, for example, the control apparatus 100 may generate a drive signal of the actuator moving the hand gripper that constitutes the end effector 13 (the end effector drive signal) as the robot control signal, and the robot control apparatus 14 may control the actuator of the end effector 13 by using the robot control signal generated by the control apparatus 100 as it is. For example, the control apparatus 100 may generate a drive signal for driving the vacuum apparatus of the vacuum gripper that constitutes the end effector 13 (the end effector drive signal) as the robot control signal, and the robot control apparatus 14 may control the vacuum apparatus of the vacuum the end effector 13 by using the robot control signal generated by the control apparatus 100 as it is.

As described above, in a case where the robot control signal includes the signal that is usable, as it is, for the robot control apparatus 14 to control the operation of the robot 10 and the signal that is usable, as it is, for the robot control apparatus 14 to control the operation of the end effector 13, the robot 10 may not include the robot control apparatus 14.

The robot control signal may include a signal that is usable to generate a robot drive signal for the robot control apparatus 14 controlling the operation of the robot 10. The signal that is usable to generate the robot drive signal for the robot control apparatus 14 controlling the operation of the robot 10 can be said to be a signal based on which the robot control apparatus 14 controls the operation of the robot 10. The signal that is usable to generate the signal for the robot control apparatus 14 controlling the operation of the robot 10 may be a signal representing at least one of the position and posture of the workpiece W in the global coordinate system. The signal that is usable to generate the signal for the robot control apparatus 14 controlling the operation of the robot 10 may be a signal representing a desired positional relation between the robot 10 and the workpiece W in the global coordinate system. The signal that is usable to generate the signal for the robot control apparatus 14 controlling the operation of the robot 10 may include a signal representing at least one of a desired position and posture of the end effector 13 in the global coordinate system. The signal that is usable to generate the signal for the robot control apparatus 14 controlling the operation of the robot 10 may be, for example, a signal representing at least one of a position and posture of a desired tip of the robot arm 12 in the global coordinate system, or a signal representing at least one of a desired position and posture of the imaging unit 20 in the global coordinate system.

The signal generation unit 116 outputs the generated robot control signal to the robot 10 (e.g., the robot control apparatus 14) by using the communication apparatus 130. Consequently, the robot control apparatus 14 controls the operation of the robot 10 (e.g., at least one of the operation of the robot arm 12 and the operation of the end effector 13), based on the robot control signal.

Thereafter, the control apparatus 100 may repeat a series of processing described above until it is determined to end the robot control processing. That is, the control apparatus 100 may continue to acquire the image data IMG_2D and the image data IMG_3D from the imaging apparatuses 21 and 22, respectively, even while the operation of the robot 10 is controlled based on the robot control signal. Since the operation of the robot 10 is controlled based on the robot control signal, the workpiece W and the imaging apparatuses 21 and 22 are relatively moved (in other words, at least one of the imaging apparatuses 21 and 22 and the workpiece W is moved). At this time, each of the imaging apparatuses 21 and 22 may image the workpiece W while the workpiece W and the imaging apparatuses 21 and 22 are relatively moved. In other words, the control apparatus 100 may continue to perform the robot control processing while the workpiece W and the imaging apparatuses 21 and 22 are relatively moved. As a result, the control apparatus 100 is allowed to newly calculate (i.e., update) at least one of the position and posture of the workpiece W, based on the newly acquired image data IMG_2D and image data IMG_3D, even while the operation of the robot 10 is controlled based on the robot control signal. Each of the imaging apparatuses 21 and 22, however, may image the workpiece W, while the workpiece W is stationary and the imaging apparatuses 21 and 22 is stationary. In other words, the control apparatus 100 may perform the robot control processing, while the imaging apparatuses 21 and 22 and the workpiece W are stationary.

The processing object recognition part 115 may not calculate at least one of the position and posture of the workpiece W, as at least one of the position and posture of the workpiece W in the global coordinate system. The processing object recognition part 115 may calculate at least one of the position and posture of the workpiece W, as at least one of a position and posture of the workpiece W in a coordinate system differing from the global coordinate system. In this case, the signal generation part 116 may generate the robot control signal, based on at least one of the position and posture of the workpiece W in the coordinate system differing from the global coordinate system calculated by the processing object recognition part 115.

### (2-1) Processing of Calculating Position and Posture of Object

A description will be given to processing of the processing object recognition part 115 calculating at least one of the position and posture of the object (e.g., the workpiece W). In the following, for convenience of explanation, processing for calculating at least one of the position and posture of the workpiece W serving as an example of the object, will be described. The processing object recognition part 115, however, may calculate at least one of a position and posture of an arbitrary object by performing an operation that is the same as or similar to the processing for calculating at least one of the position and posture of the workpiece W. That is, the following explanation of the processing for calculating at least one of the position and posture of the workpiece W, may be usable as a description of processing for calculating at least one of the position and posture of the object, by replacing a word "workpiece W" with a word "object".

The processing object recognition part 115 may calculate at least one of the position and posture of the workpiece W, by performing matching processing using the image data IMG_2D, the image data IMG_3D, and the three-dimensional position data WSD, and tracking processing using the image data IMG_2D, the image data IMG_3D, and the three-dimensional position data WSD.

### (2-2) 2D Matching Processing

The matching processing using the image data IMG_2D may be referred to as 2D matching processing. Note that the matching processing itself may be the same as the existing matching processing. Therefore, a detailed description of the matching processing will be omitted, but an outline thereof will be described below.

For example, the processing object recognition part 115 may perform, on the image data IMG_2D, matching processing using the workpiece W captured in a two-dimensional image indicated by two-dimensional model data IMG_2M as a template. Here, the two-dimensional model data IMG_2M are data indicating a two-dimensional model of the workpiece W. The two-dimensional model data IMG_2M are data indicating a two-dimensional model having a two-dimensional shape as a reference of the workpiece W. In the present example embodiment, the two-dimensional model data IMG_2M are image data indicating a two-dimensional image serving as a reference of the workpiece W. More specifically, the two-dimensional model data IMG_2M are image data indicating a two-dimensional image including a two-dimensional model of the workpiece W. The two-dimensional model data IMG_2M are image data indicating a two-dimensional image including a two-dimensional model having a two-dimensional shape serving as a reference of the workpiece W. The two-dimensional model data IMG_2M may be, for example, two-dimensional image data indicating two-dimensional models of a plurality of workpieces W generated by virtually projecting a three-dimensional model of the workpiece W (e.g., a CAD model created by CAD (Computer Aided Design)) from a plurality of different directions on a virtual plane that is perpendicular to the plurality of different directions. The two-dimensional model data IMG_2M may be image data indicating a two-dimensional image obtained by imaging an actual workpiece W in advance. In this instance, the two-dimensional model data IMG_2M may be image data indicating a plurality of two-dimensional images generated by imaging the actual workpiece W from a plurality of different imaging directions. The three-dimensional model of the workpiece W may be a three-dimensional model having the same shape as the three-dimensional shape of the workpiece W obtained by measuring the actual workpiece W in advance. The actual workpiece W whose shape is measured in advance, may be a reference or non-defective workpiece W. The two-dimensional model data IMG_2M may be image data indicating a two-dimensional image generated by imaging the actual workpiece W in advance. In this instance, the two-dimensional model data IMG_2M may be image data indicating a plurality of two-dimensional images generated by imaging the actual workpiece W from a plurality of different imaging directions. The workpiece W captured in the two-dimensional image indicated by the image data IMG_2D serving as the two-dimensional model data IMG_2M, may be referred to as a two-dimensional model of the workpiece W. The actual workpiece W imaged in advance, may be a reference or non-defective workpiece W.

For example, the processing object recognition part 115 may translate, enlarge, reduce, and/or rotate the workpiece W (the two-dimensional model of the workpiece W) captured in the two-dimensional image indicated by the two-dimensional model data IMG_2M such that a feature portion (e.g., at least one of a feature point and an edge) of a whole part of the workpiece W (the two-dimensional model of the workpiece W) captured in the two-dimensional image indicated by the two-dimensional model data IMG_2M approaches (typically, matches) a feature portion of a whole part of the workpiece W captured in the image indicated by the image data IMG_2D. That is, the processing object recognition part 115 may change a positional relation between a coordinate system of the two-dimensional model data IMG_2M (e.g., a coordinate system of the CAD model) and a 2D imaging coordinate system based on the imaging apparatus 21 imaging the workpiece W, such that the feature portion of a whole part of the workpiece W (the two-dimensional model of the workpiece W) captured in the two-dimensional image indicated by the two-dimensional model data IMG_2M approaches (typically, matches) the feature portion of a whole part of the workpiece W captured in the image indicated by the image data IMG_2D.

Consequently, the processing object recognition part 115 is allowed to identify the positional relation between the coordinate system of the two-dimensional model data IMG_2M and the 2D imaging coordinate system. Thereafter, the processing object recognition part 115 may calculate at least one of a position and posture of the workpiece W in the 2D imaging coordinate system, from at least one of a position and posture of the workpiece W in the coordinate system of the two-dimensional model data IMG_2M, based on the positional relation between the coordinate system of the two-dimensional model data IMG_2M and the 2D imaging coordinate system. Here, the 2D imaging coordinate system is a coordinate system defined by an X-axis (2D), a Y-axis (2D), and a Z-axis (2D) that are perpendicular to each other. At least one of the X-axis (2D), the Y-axis (2D) and the Z-axis (2D) may be an axis along an optical axis of an optical system of the imaging apparatus 21 (in particular, a termination optical element such as an objective lens). The optical axis of the optical system of the imaging apparatus 21 may be regarded as an optical axis of the imaging apparatus 21. Incidentally, "2D" is a reference numeral indicating the 2D imaging coordinate system.

The processing object recognition part 115 may calculate, as the position of the workpiece W in the 2D imaging coordinate system, at least one of a position Tx (2D) of the workpiece W in an X-axis direction (2D), a position Ty (2D) of the workpiece W in a Y-axis direction (2D), and a position Tz (2D) of the workpiece W in a Z-axis direction (2D). The processing object recognition part 115 may calculate, as the posture of the workpiece W in the 2D imaging coordinate system, at least one of a posture Rx (2D) of the workpiece W around the X-axis (2D), a posture Ry (2D) of the workpiece W around the TY-axis (2D), and a posture Rz (2D) of the workpiece W around the Z-axis (2D). The processing object recognition part 115 may calculate the position or posture of the workpiece W in the 2D imaging coordinate system. That is, the processing object recognition part 115 may calculate at least one of the position and posture of the workpiece W in the 2D imaging coordinate system.

The processing object recognition part 115 may change the positional relation between the coordinate system of the two-dimensional model data IMG_2M (e.g., the coordinate system of the CAD model) and the 2D imaging coordinate system based on the imaging apparatus 21 imaging the workpiece W, such that a feature portion of a part of the workpiece W (the two-dimensional model of the workpiece W) captured in the two-dimensional image indicated by the two-dimensional model data IMG_2M approaches (typically, matches) a feature portion of a part of the workpiece W captured in the image indicated by the image data IMG_2D.

The method of calculating at least one of the position and posture of the workpiece W is not limited to the above method, but may be another well-known method of calculating at least one of the position and posture of the workpiece W based on the image data IMG_2D. At least one of well-known methods, which are SIFT (Scale-Invariant Feature Transform) and SURF (Speed-Upped Robust Feature), may be used as the matching processing using the image data IMG_2D.

The processing object recognition part 115 may calculate at least one of the position and posture of the workpiece W without using the two-dimensional model data IMG_2M. The processing object recognition part 115 may calculate at least one of the position and posture of the workpiece W, based on the feature portion (at least one of the feature point, the edge, and a marker on the workpiece) of the workpiece W captured in the image indicated by the image data IMG_2D. The processing object recognition part 115 may calculate at least one of the position and posture of the workpiece W, based on a plurality of feature portions (at least one of a plurality of feature points, a plurality of edges, and a plurality of markers on the workpiece) of the workpiece W captured in the image indicated by the image data IMG_2D.

### (2-3) 3D Matching Processing

The matching processing using three-dimensional position data WSD may be referred to as 3D matching processing. Note that the matching processing itself may be the same as the existing matching processing. Therefore, a detailed description of the matching processing will be omitted, but an outline thereof will be described below.

The processing object recognition part 115 may perform, on the three-dimensional position data WSD, matching processing using the workpiece W indicated by three-dimensional model data WMD as a template. Here, the three-dimensional model data WMD are data indicating the three-dimensional model of the workpiece W. That is, the three-dimensional model data WMD are data indicating the three-dimensional shape serving as a reference of the workpiece W. The three-dimensional model may be a CAD model of the workpiece W serving as an example of the three-dimensional model of the workpiece W. The three-dimensional model may be a three-dimensional model having a shape that is the same as or similar to the three-dimensional shape of the workpiece W obtained by measuring the three-dimensional shape of the actual workpiece W in advance. In this instance, the three-dimensional model data WMD may be generated in advance, based on the image data IMG_3D generated by the imaging apparatus 22 imaging the workpiece W on which the projection pattern from the projection apparatus 23 is projected. Alternatively, the three-dimensional model data WMD may be generated in advance, by shape measurement using a well-known three-dimensional shape measurement apparatus differing from the robot system 1. In this instance, the three-dimensional model data WMD may be depth image data indicating the three-dimensional model of the workpiece W. The three-dimensional model data WMD may be point cloud data indicating the three-dimensional model of the workpiece W. The actual workpiece W imaged or measured in advance to generate the three-dimensional model data WMD, may be a reference or non-defective workpiece W.

For example, the processing object recognition part 115 may translate, enlarge, reduce, and/or rotate the workpiece W indicated by the three-dimensional model data WMD such that a feature portion of a whole part of the workpiece W indicated by the three-dimensional model data WMD approaches (typically, matches) a feature portion of a whole part of the workpiece W indicated by the three-dimensional position data WSD. That is, the processing object recognition part 115 may change a positional relation between a coordinate system of the three-dimensional model data WMD (e.g., a coordinate system of the CAD model) and a 3D imaging coordinate system based on the imaging apparatus 22 imaging the workpiece W, such that the feature portion of a whole part of the workpiece W indicated by the three-dimensional position data WSD approaches (typically, matches) the feature portion of a whole part of the workpiece W indicated by the three-dimensional model data WMD.

Consequently, the processing object recognition part 115 is allowed to identify the positional relation between the coordinate system of the three-dimensional model data WMD and the 3D imaging coordinate system. Thereafter, the processing object recognition part 115 may calculate at least one of a position and posture of the workpiece W in the 3D imaging coordinate system, from at least one of a position and posture of the workpiece W in the three-dimensional model data WMD, based on the positional relation between the coordinate system of the three-dimensional model data WMD and the 3D imaging coordinate system. Here, the 3D imaging coordinate system is a coordinate system defined by an X-axis (3D), a Y-axis (3D), and a Z-axis (3D) that are perpendicular to each other. At least one of the X-axis (3D), the Y-axis (3D), and the Z-axis (3D) may be an axis along an optical axis of an optical system of the imaging apparatus 22 (in particular, a termination optical element such as an objective lens). The optical axis of the optical system of the imaging apparatus 22 may be regarded as an optical axis of the imaging apparatus 22. In a case where the imaging apparatus 22 is the stereo camera having two monocular cameras, the optical axis may be an optical axis of an optical system provided in one of the two monocular cameras. That is, the optical axis may be an optical axis of one of the two monocular cameras. Incidentally, "3D" is a reference numeral indicating that 3D imaging coordinate system.

The processing object recognition part 115 may calculate, as the position of the workpiece W in the 3D imaging coordinate system, at least one of a position Tx (3D) of the workpiece W in an X-axis direction (3D), a position Ty(3D) of the workpiece W in a Y-axis direction (3D), and a position Tz (3D) of the workpiece W in a Z-axis direction (3D). The processing object recognition part 115 may calculate, as the posture of the workpiece W in the 3D imaging coordinate system, at least one of a posture Rx (3D) of the workpiece W around the X-axis (3D), a posture Ry (3D) of the workpiece W around the Y-axis (3D), and a posture Rz (3D) of the workpiece W around the Z-axis (3D). The processing object recognition part 115 may calculate the position or posture of the workpiece W in the 3D imaging coordinate system. That is, the processing object recognition part 115 may calculate at least one of the position and posture of the workpiece W in the 3D imaging coordinate system.

The processing object recognition part 115 may change the positional relation between the coordinate system of the three-dimensional model data WMD (e.g., the coordinate system of the CAD model) and the 3D imaging coordinate system based on the imaging apparatus 22 imaging the workpiece W, such that the feature portion of a part of the workpiece W indicated by the three-dimensional position data WSD approaches (typically, matches) the feature portion of a part of the workpiece W indicated by the three-dimensional model data WMD.

The method of calculating the position of the workpiece W is not limited to the above method, but may be another well-known method of calculating the position of the workpiece W based on the three-dimensional position data WSD. At least one of well-known methods, which are, for example, RANSAC (Random Sample Consensus), SIFT (Scale-Invariant Feature Transform), ICP (Iterative Closest Point), and DSO (Direct Sparse Odometry), may be used as the matching processing using the three-dimensional position data WSD.

The processing object recognition part 115 may calculate at least one of the position and posture of the workpiece W without using the three-dimensional model data WMD. For example, the processing object recognition part 115 may calculate at least one of the position and posture of the workpiece W, based on the feature portion (at least one of the feature point, the edge, and the marker on the workpiece W) of the workpiece W indicated by the three-dimensional position data WSD. The processing object recognition part 115 may calculate at least one of the position and posture of the workpiece W, based on a plurality of feature portions (a plurality of feature points, a plurality of edges, at least one of a plurality of markers on the workpiece W) of the workpiece W indicated by the three-dimensional position data WSD.

### (2-4) 2D Tracking Processing

The tracking processing using two pieces of image data IMG_2D#t1 and IMG_2D#t2 generated by the imaging apparatus 21 imaging the workpiece W at different times t1 and t2, may be referred to as 2D tracking processing. The time t2 is assumed to be a time after the time t1. The 2D tracking processing itself may be the same as the existing tracking processing. Therefore, a detailed description of the tracking processing will be omitted, but an outline thereof will be described below.

The processing object recognition part 115 may track, in the image data IMG_2D#t2, at least one feature portion that is the same as at least one feature portion (e.g., at least one of a feature point and an edge) of the workpiece W captured in the image data IMG_2D#t1. That is, the processing object recognition part 115 may calculate a change amount of at least one of the position and posture of at least one feature portion in the 2D imaging coordinate system between the time t1 and the time t2. Thereafter, the processing object recognition part 115 may calculate a change amount of at least one of the position and posture of the workpiece W in the 2D imaging coordinate system between the time t1 and the time t2, based on the change amount of at least one of the position and posture of at least one feature portion in the 2D imaging coordinate system.

The processing object recognition part 115 may calculate, as the change amount of the position of the workpiece W in the 2D imaging coordinate system, at least one of a change amount ΔTx of the position Tx (2D) of the workpiece W in the X-axis direction (2D), a change amount ΔTy of the position Ty (2D) of the workpiece W in the Y-axis direction (2D), and a change amount ΔTz(2D) of the position Tz (2D) of the workpiece W in the Z-axis direction (2D). The processing object recognition part 115 may calculate, as the change amount of the posture of the workpiece W in the 2D imaging coordinate system, at least one of a change amount ΔRx (2D) of the posture Rx (2D) of the workpiece W around the X-axis (2D), a change amount ΔRy (2D) of the posture Ry (2D) of the workpiece W around the Y-axis (2D), and a change amount ΔRz (2D) of the posture Rz (2D) of the workpiece W around the Z-axis (2D).

The method of calculating the change amount of at least one of the position and posture of the workpiece W is not limited to the above method, but may be another well-known method of calculating the change amount of at least one of the position and posture of the workpiece W by using the two pieces of image data IMG_2D#t1 and IMG_2D#t2.

### (2-5) 3D Tracking Processing

The tracking processing using two pieces of three-dimensional position data WSDPD#s1 and WSDPD#s2 respectively corresponding to different times s1 and s2, may be referred to as 3D tracking processing. Here, the two pieces of three-dimensional position data WSDPD#s1 and WSDPD#s2 are generated respectively from two pieces of image data IMG_3D#s1 and IMG_3D#s2 generated by the imaging apparatus 22 imaging the workpiece W at different times s1 and s2. The time s2 is assumed to be a time after the time s1. Note that the tracking processing itself may be the same as the existing tracking processing. Therefore, a detailed description of the tracking processing will be omitted, but an outline thereof will be described below.

The processing object recognition part 115 may track, in the three-dimensional position data WSDPD#s2, at least one feature portion that is the same as at least one feature portion (e.g., at least one of a feature point and an edge) of the workpiece W indicated by the three-dimensional position data WSDPD#s1. That is, the processing object recognition part 115 may calculate a change amount of at least one of the position and posture of at least one feature portion in the 3D imaging coordinate system between the time s1 and the time s2. Thereafter, the processing object recognition part 115 may calculate a change amount of at least one of the position and posture of the workpiece W in the 3D imaging coordinate system between the time s1 and the time s2, based on the change amount of at least one of the position and posture of at least one feature portion in the 3D imaging coordinate system.

The processing object recognition part 115 may calculate, as the change amount of the position of the workpiece W in the 3D imaging coordinate system, at least one of a change amount ΔTx (3D) of the position Tx (3D) of the workpiece W in the X-axis direction (3D), a change amount ΔTy (3D) of the position Ty (3D) of the workpiece W in the Y-axis direction (3D), and a change amount ΔTz (3D) of the position Tz (3D) of the workpiece W in the Z-axis direction (3D). The processing object recognition part 115 may calculate, as the change amount of the posture of the workpiece W in the 3D imaging coordinate system, at least one of a change amount ΔRx (3D) of the posture Rx (3D) of the workpiece W around the X-axis (3D), a change amount ΔRy (3D) of the posture Ry (3D) of the workpiece W around the Y-axis (3D), and a change amount ΔRz (3D) of the posture Rz (3D) of the workpiece W around the Z-axis (3D).

The method of calculating the change amount of at least one of the position and posture of the workpiece W is not limited to the above method, but may be another well-known method of calculating the change amount if at least one of the position and posture of the workpiece W by using the two pieces of three-dimensional position data WSDPD#s1 and WSDPD#s2.

The method of calculating the change amount of at least one of the position and posture of the workpiece W is not limited to the above method, but may be another well-known method of calculating the change amount if at least one of the position and posture of the workpiece W by using the two pieces of three-dimensional position data WSDPD#s1 and WSDPD#s2. At least one of well-known methods, which are RANSAC (Random Sample Consensus), SIFT (Scale-Invariant Feature Transform), ICP (Iterative Closest Point), and DSO (Direct Sparse Odometry), may be used as the tracking processing using the two pieces of three-dimensional position data WSDPD#s1 and WSDPD#s2.

### (2-6) Operation of Processing Object Recognition Part

The processing object recognition part 115 calculates at least one of the position and posture of the workpiece W in the global coordinate system, based on a result of the 2D matching processing, a result of the 3D matching processing, a result of the 2D tracking processing, and a result of the 3D tracking processing, as an example. The processing object recognition part 115 may calculate, as the position and posture of the workpiece W in the global coordinate system, the position Tx (GL), the position Ty (GL), and the position Tz (GL), as well as the posture Rx (GL), the posture Ry (GL), and the posture Rz (GL), for example. That is, the processing object recognition part 115 may calculate, as the position and posture of the workpiece W, all the positions and postures with 6DoF (Degree of Freedom) of the workpiece W in the global coordinate system.

The processing object recognition part 115 may not perform all of the 2D matching processing, the 3D matching processing, the 2D tracking processing, and the 3D tracking processing. The processing object recognition part 115 may calculate at least one of the position and posture of the workpiece W, for example, based on the result of the 2D matching processing and the result of the 2D tracking processing. The processing object recognition part 115 may calculate at least one of the position and posture of the workpiece W, for example, based on the result of the 3D matching processing and the result of the 3D tracking processing. The processing object recognition part 115 may calculate at least one of the position and posture of the workpiece W, for example, based on the result of the 2D matching processing or the result of the 3D matching processing. The processing object recognition part 115 may calculate at least one of the position and posture of the workpiece W, for example, based on the result of the 2D matching processing and the result of the 3D matching processing.

The processing object recognition part 115 may not calculate all the positions and postures with 6DoF of the workpiece W in the global coordinate system. That is, the processing object recognition part 115 may calculate at least one of all the positions and postures with 6DoF of the workpiece W in the global coordinate system. The processing object recognition part 115 may calculate, as the position of the workpiece W in the global coordinate system, at least one of the positions Tx (GL), Ty (GL), and Tz (GL). The processing object recognition part 115 may calculate, as the posture of the workpiece W in the global coordinate system, at least one of the postures Rx (GL), Ry (GL), and Rz (GL).

The position Tx (GL) is a position of the workpiece W in the X-axis direction parallel to the X-axis of the global coordinate system. The position Ty (GL) is a position of the workpiece W in the Y-axis direction parallel to the Y-axis of the global coordinate system. The position Tz (GL) is a position of the workpiece W in the Z-axis direction parallel to the Z-axis of the global coordinate system. The posture Rx is a posture of the workpiece W around the X-axis of the global coordinate system. The posture Ry is a posture of the workpiece W around the Y-axis of the global coordinate system. The posture Rz is a posture of the workpiece W around the Z-axis of the global coordinate system.

In order to calculate at least one of the position and posture of the workpiece W in the global coordinate system, the processing object recognition part 115 may correct the result of the 2D matching processing, based on the result of the 2D tracking processing. Similarly, the processing object recognition part 115 may correct the result of the 3D matching processing, based on the result of the 3D tracking processing.

Specifically, the processing object recognition part 115 may calculate the change amount ΔTx (2D), the change amount ΔTy (2D), and the change amount ΔRz (2D) in the 2D tracking processing. The processing object recognition part 115 may generate information about the change amount ΔTx (2D), the change amount ΔTy (2D), and the change amount ΔRz (2D), as an example of the result of the 2D tracking processing.

The processing object recognition part 115 may calculate the position Tx (2D), the position Ty (2D), and the result Rz (2D) in the result of the 2D matching processing. The processing object recognition part 115 may generate information about the position Tx (2D), the position Ty (2D), and the result Rz (2D), as an example of the result of the 2D matching processing.

The processing object recognition part 115 may calculate a position Tx' (2D) of the workpiece W in the X-axis direction parallel to the X-axis of the 2D imaging coordinate system, by correcting the position Tx (2D) based on the change amount ΔTx (2D). The processing object recognition part 115 may calculate a position Ty' (2D) of the workpiece W in the Y-axis direction parallel to the Y-axis of the 2D imaging coordinate system, by correcting the position Ty (2D) based on the change amount ΔTy (2D). The processing object recognition part 115 may calculate a posture Rz' (2D) of the workpiece W around the Z-axis of the 2D imaging coordinate system, by correcting the posture Rz (2D) based on the change amount ΔRz (2D). Incidentally, processing of correcting the result of the 2D matching processing based on the result of the 2D tracking processing, may include processing of adding the result of the 2D tracking processing to the result of the 2D matching processing.

The processing object recognition part 115 may calculate the change amount ΔTz (3D), the change amount ΔRx (3D), and the change amount ΔRy (3D) in the 3D tracking processing. The processing object recognition part 115 may generate information about the change amount ΔTz (3D), the change amount ΔRx (3D), and the change amount ΔRy (3D), as an example of the result of the 3D matching processing.

The processing object recognition part 115 may calculate the position Tz (3D), the posture Rx (3D), and the posture Ry (3D) in the 3D matching processing. The processing object recognition part 115 may generate information about the position Tz (3D), the posture Rx (3D), and the posture Ry (3D), as an example of the result of the 3D matching processing.

The processing object recognition part 115 may calculate a position Tz' (3D) of the workpiece W in the Z-axis direction parallel to the Z-axis of the 3D imaging coordinate system, by correcting the position Tz (3D) based on the change amount ΔTz (3D). The processing object recognition part 115 may calculate a posture Rx' (3D) of the workpiece W around the X-axis of the 3D imaging coordinate system, by correcting the posture Rx (3D) based on the change amount ΔRx (3D). The processing object recognition part 115 may calculate a posture Ry' (3D) of the workpiece W around the Y-axis of the 3D imaging coordinate system, by correcting the posture Ry (3D) based on the change amount ΔRy (3D). Incidentally, processing of correcting the result of the 3D matching processing based on the result of processing tracking processing, may include processing of adding the result of the 3D tracking processing to the result of the 3D matching processing.

The processing object recognition part 115 may calculate the position Tx (GL), the position Ty (GL), the position Tz (GL), the posture Rx (GL), the posture Ry (GL), and the posture Rz (GL) of the workpiece W in the global coordinate system, based on the position Tx' (2D), the posture Ty' (2D), the posture Rz' (2D), the position Tz' (3D), the posture Rx' (3D), and the posture Ry' (3D). Specifically, first, the processing object recognition part 115 transforms the position Tx' (2D), the posture Ty' (2D), the posture Rz' (2D), the position Tz' (3D), the posture Rx' (3D), and the posture Ry' (3D), into the positions in a common coordinate system that is one of the 2D imaging coordinate system and the 3D imaging coordinate system. An arbitrary coordinate system differing from the 2D imaging coordinate system and the 3D imaging coordinate system may be used as the common coordinate system.

As an example, in a case where the 2D imaging coordinate system is used as the common coordinate system, the position Tx' (2D), the position Ty' (2D), and the posture Rz' (2D) indicate the positions and posture in the 2D imaging coordinate system. Accordingly, the processing object recognition part 115 may not transform the position Tx' (2D), the position Ty' (2D), and the posture Rz' (2D). On the other hand, the processing object recognition part 115 transforms the position Tz' (3D), the posture Rx' (3D), and the posture Ry' (3D), into a position Tz' (2D) in the Z-axis direction of the 2D imaging coordinate system, a posture Rx' (2D) of the 2D imaging coordinate system around the X-axis, and a posture Ry' (2D) of the 2D imaging coordinate system around the Y-axis. The processing object recognition part 115 may transform the position Tz' (3D), the posture Rx' (3D), and the posture Ry' (3D), into the position Tz' (3D), the posture Rx' (3D), and the posture Ry' (3D), by using a transformation matrix M₃₂ for transforming the position and posture in the 3D imaging coordinate system into the position and posture in the 2D imaging coordinate system. The transformation matrix M₃₂ may be calculated by a mathematical method, from an external parameter indicating a positional relation between the imaging apparatus 21 and the imaging apparatus 22.

In the above example, the position Tx (2D), the position Ty (2D), and the posture Rz (2D) are calculated by the 2D matching processing, and the change amount ΔTx (2D) of the position Tx (2D), the change amount ΔTy (2D) of the position Ty (2D), and the change amount ΔRz (2D) of the posture Rz (2D) are calculated by the 2D tracking processing. In the 2D matching processing, however, not only the position Tx (2D), the position Ty (2D), and the posture Rz (2D), but also at least one of the position Tx (2D), the position Ty (2D), the position Tz (2D), the posture Rx (2D), the posture Ry (2D), and the posture Rz (2D) may be calculated. In the 2D tracking processing, not only the change amount ΔTx (2D), the change amount ΔTy (2D), and the change amount ΔRz (2D), but also at least one of the change amount ΔTx of the position Tx (2D), the change amount ΔTy of the position Ty (2D), the change amount ΔTz of the position Tz (2D), the change amount ΔRx of the posture Rx (2D), the change amount ΔRy of the posture Ry (2D) and the change amount ΔRz of the posture Rz (2D) may be calculated.

In the above example, the position Tz (3D), the posture Rx (3D), and the posture Ry (3D) are calculated by the 3D matching processing, and the change amount ΔTz (3D) of the position Tz (3D), the change amount ΔRx (3D) of the posture Rx (3D), and the change amount ΔRy (3D) of the posture Ry (3D) are calculated by the 3D tracking processing. In the 3D matching processing, not only the position Tz (3D), the posture Rx (3D), and the posture Ry (3D), but also at least one of the position Tx (3D), the position Ty (3D), the position Tz (3D), the posture Rx (3D), the posture Ry (3D), and the posture Rz (3D) may be calculated. In the 3D tracking processing, not only the change amount ΔTz (3D), the change amount ΔRx (3D), and the change amount ΔRy (3D), at least one of the change amount ΔTx of the position Tx (3D), the change amount ΔTy of the position Ty (3D), the change amount ΔTz of the position Tz (3D), the change amount ΔRx of the posture Rx (3D), the change amount ΔRy of the posture Ry (3D), and the change amount ΔRz of the posture Rz (3D) may be calculated.

The processing object recognition part 115 may calculate the positions and postures with 6DoF of the workpiece W in the global coordinate system, based on the positions and postures with 6DoF of the workpiece W in the 2D imaging coordinate system serving as the common coordinate system. That is, the processing object recognition part 115 may calculate the position Tx (GL), the position Ty (GL), the position Tz (GL), the posture Rx (GL), the posture Ry (GL), and the posture Rz (GL) of the workpiece W in the global coordinate system, based on the positions and postures with 6DoF of the workpiece W in the 2D imaging coordinate system.

The processing object recognition part 115 may transform the positions and postures with 6DoF of the workpiece W in the 2D imaging coordinate system into the positions and postures with 6DoF of the workpiece W in the global coordinate system, using a transformation matrix M_{2G} for transforming the position and posture in the 2D imaging coordinate system into the position and posture in the global coordinate system. The processing object recognition part 115 may calculate the position Tx (GL) in the global coordinate system, from an equation of "Tx (GL) = M_{2G} • Tx' (2D), by using the position Tx' (2D) in the 2D imaging coordinate system and the transformation matrix M_{2G}.

The transformation matrix M_{2G} may include, for example, a product of transformation matrices that reflect a change in position coordinates of the imaging apparatus 21 or 22 due to the rotation of the link around the axis defined by each joint of the robot arm 12. The transformation matrix may be a so-called rotation matrix, may be a matrix including a translational component in the rotation matrix, or may be a matrix based on the Eulerian angle. Since an existing transformation method may be used for the coordinate transformation itself of the robot arm using the transformation matrix, a detailed description thereof will be omitted.

The processing object recognition part 115 may perform transformation into a reference coordinate system (e.g., the 2D imaging coordinate system). The processing object recognition part 115 may transform the position Tx' (2D), the position Ty' (2D), and the posture Rz' (2D), into the position Tx (GL), the position Ty (GL), and the posture Rz (GL) of the workpiece W in the global coordinate system, by using the transformation matrix M_{2G}. The processing object recognition part 115 may transform the position Tz' (3D), the posture Rx' (3D), and the posture Ry' (3D), into the position Tz (GL), the posture Rx (GL), and the posture Ry (GL) of the workpiece W in the global coordinate system, by using a transformation matrix M_{3G} for transforming the position and posture in the 3D imaging coordinate system into the position and posture in the global coordinate system, for example.

The 2D imaging coordinate system, the 3D imaging coordinate system, and the common coordinate system correspond to an example of the "coordinate system differing from the global coordinate system" described above.

The processing object recognition part 115 may not perform the 3D matching processing and the 3D tracking processing (i.e., the processing object recognition part 115 may perform the 2D matching processing and the 2D tracking processing).

Specifically, the processing object recognition part 115 may calculate the position Tx (2D), the position Ty (2D), the position Tz (2D), the posture Rx (2D), the posture Ry (2D), and the posture Rz (2D) in the result of the 2D matching processing. The processing object recognition part 115 may generate information about the position Tx (2D), the position Ty (2D), the position Tz (2D), the posture Rx (2D), the posture Ry (2D), and the posture Rz (2D), as an example of the result of the 2D matching processing.

The processing object recognition part 115 may calculate, in the 2D tracking processing, the change amount ΔTx (2D) of the position Tx (2D), the change amount ΔTy (2D) of the position Ty (2D), the change amount ΔTz of the position Tz (2D), the change amount ΔRx (2D) of the posture Rx (2D), the change amount ΔRy (2D) of the posture Ry (2D), and the change amount ΔRz (2D) of the posture Rz (2D). The processing object recognition part 115 may generate information about the change amount ΔTx (2D), the change amount ΔTy (2D), the change amount ΔTz (2D), the change amount ΔRx (2D), the change amount ΔRy (2D), and the change amount ΔRz (2D), as an example of the result of the 2D tracking processing.

The processing object recognition part 115 may calculate the position Tx' (2D) of the workpiece W in the X-axis direction parallel to the X-axis of the 2D imaging coordinate system, by correcting the position Tx (2D) based on the change amount ΔTx (2D). The processing object recognition part 115 may calculate the position Ty' (2D) of the workpiece W in the Y-axis direction parallel to the Y-axis of the 2D imaging coordinate system, by correcting the position Ty (2D) based on the change amount ΔTy (2D). The processing object recognition part 115 may calculate the position Tz' (2D) of the workpiece W in the Z-axis parallel to the Z-axis of the 2D imaging coordinate system, by correcting the position Tz (2D) based on the change amount ΔTz (2D). The processing object recognition part 115 may calculate the posture Rx' (2D) of the workpiece W around the X-axis of the 2D imaging coordinate system, by correcting the posture Rx (2D) based on the change amount ΔRx (2D). The processing object recognition part 115 may calculate the posture Ry' (2D) of the workpiece W around the Y-axis of the 2D imaging coordinate system, by correcting the posture Ry (2D) based on the change amount ΔRy (2D). The processing object recognition part 115 may calculate the posture Rz' (2D) of the workpiece W around the Z-axis of the 2D imaging coordinate system, by correcting the posture Rz (2D) based on the change amount ΔRz (2D).

The processing object recognition part 115 may transform, for example, the position Tx' (2D), the position Ty' (2D), the position Tz' (2D), the posture Rx' (2D), the posture Ry' (2D), and the posture Rz' (2D), into the position Tx (GL), the position Ty (GL), the position Tz (GL), the posture Rx (GL), the posture Ry (GL), and the posture Rz (GL), by using the transformation matrix M_{2G} (i.e., the transformation matrix for transforming the position and posture in the 2D imaging coordinate system into the position and posture in the global coordinate system).

The processing object recognition part 115 may calculate at least one of the position Tx (GL), the position Ty (GL), the position Tz (GL), the posture Rx (GL), the posture Ry (GL), and the posture Rz (GL) of the workpiece W in the global coordinate system, based on the result of each of the 2D matching processing and the 2D tracking processing.

As described above, the processing object recognition part 115 may calculate at least one of the position and posture of the workpiece W in the global coordinate system, based on the result of each of the 2D matching processing and the 2D tracking processing.

Furthermore, the processing object recognition part 115 may not perform the 2D tracking processing, in addition to the 3D matching processing and the 3D tracking processing (i.e., the processing object recognition part 115 may perform the 2D matching processing).

Specifically, the processing object recognition part 115 may calculate the position Tx (2D), the position Ty (2D), the position Tz (2D), the posture Rx (2D), the posture Ry (2D), and the posture Rz (2D) in the result of the 2D matching processing. The processing object recognition part 115 may generate information about the position Tx (2D), the position Ty (2D), the position Tz (2D), the posture Rx (2D), the posture Ry (2D), and the posture Rz (2D), as an example of the result of the 2D matching processing.

The processing object recognition part 115 may transform the position Tx (2D), the position Ty (2D), the position Tz (2D), the posture Rx (2D), the posture Ry (2D), and the posture Rz (2D), into the position Tx (GL), the position Ty (GL), the position Tz (GL), the posture Rx (GL), the posture Ry (GL), and the posture Rz (GL) of the workpiece W in the global coordinate system, by using the transformation matrix M_{2G}. The processing object recognition part 115 may calculate at least one of the position Tx (GL), the position Ty (GL), the position Tz (GL), the posture Rx (GL), the posture Ry (GL), and the posture Rz (GL) of the workpiece W in the global coordinate system, based on the result of the 2D matching processing. As described above, the processing object recognition part 115 may calculate at least one of the position and posture of the workpiece W in the global coordinate system, based on the 2D matching processing. In this instance, the imaging unit 20 may not include the imaging apparatus 22.

The processing object recognition part 115 may not perform the 2D matching processing and the 2D tracking processing (i.e., the processing object recognition part 115 may perform the 3D matching processing and the 3D tracking processing).

Specifically, the processing object recognition part 115 may calculate the position Tx (3D), the position Ty (3D), the position Tz (3D), the posture Rx (3D), the posture Ry (3D), and the posture Rz (3D) in the 3D matching processing. The processing object recognition part 115 may generate information about the position Tx (3D), the position Ty (3D), the position Tz (3D), the posture Rx (3D), the posture Ry (3D), and the posture Rz (3D), as an example of the result of the 3D matching processing.

The processing object recognition part 115 may calculate, in the 3D tracking processing, the change amount ΔTx (3D) of the position Tx (3D), the change amount ΔTy (3D) of the position Ty (3D), the change amount ΔTz (3D) of the position Tz (3D), the change amount ΔRx (3D) of the posture Rx (3D), the change amount ΔRy (3D) of the posture Ry (3D), and the change amount ΔRz (3D) of the posture Rz (3D). The processing object recognition part 115 may generate information about the change amount ΔTx (3D), the change amount ΔTy (3D), the change amount ΔTz (3D), the change amount ΔRx (3D), the change amount ΔRy (3D), and the posture Rz (3D), as an example of the result of the 3D tracking processing.

The processing object recognition part 115 may calculate a position Tx' (3D) of the workpiece W in the X-axis direction parallel to the X-axis of the 3D imaging coordinate system, by correcting the position Tx (3D) based on the change amount ΔTx (3D). The processing object recognition part 115 may calculate a position Ty' (3D) of the workpiece W in the Y-axis direction parallel to the Y-axis of the 3D imaging coordinate system, by correcting the position Ty (3D) based on the change amount ΔTy (3D). The processing object recognition part 115 may calculate the position Tz' (3D) of the workpiece W in the Z-axis parallel to the Z-axis of the 3D imaging coordinate system, by correcting the position Tz (3D) based on the change amount ΔTz (3D). The processing object recognition part 115 may calculate the posture Rx' (3D) of the workpiece W around the X-axis of the 3D imaging coordinate system, by correcting the posture Rx (3D) based on the change amount ΔRx (3D). The processing object recognition part 115 may calculate the posture Ry' (3D) of the workpiece W around the Y-axis of the 3D imaging coordinate system, by correcting the posture Ry (3D) based on the change amount ΔRy (3D). The processing object recognition part 115 may calculate a posture Rz' (3D) of the workpiece W around the Z-axis of the 3D imaging coordinate system, by correcting the posture Rz (3D) based on the change amount ΔRz (3D).

The processing object recognition part 115 may transform the position Tx' (3D), the position Ty' (3D), the position Tz' (3D), the posture Rx' (3D), the posture Ry' (3D)m and the posture Rz' (3D), into the position Tx (GL), the position Ty (GL), the position Tz (GL), the posture Rx (GL), the posture Ry (GL), and the posture Rz (GL) of the workpiece W in the global coordinate system, by using the transformation matrix M_{3G} (i.e., the transformation matrix for transforming the position and posture in the 3D imaging coordinate system into the position and posture in the global coordinate system).

The processing object recognition part 115 may calculate at least one of the position Tx (GL), the position Ty (GL), the position Tz (GL), the posture Rx (GL), the posture Ry (GL), and the posture Rz (GL) of the workpiece W in the global coordinate system, based on the result of each of the 3D matching processing and the 3D tracking processing.

As described above, the processing object recognition part 115 may calculate at least one of the position and posture of the workpiece W in the global coordinate system, based on the result of each of the 3D matching processing and the 3D tracking processing.

Furthermore, the processing object recognition part 115 may not perform the 3D tracking processing, in addition to the 2D matching processing and the 2D tracking processing (i.e., the processing object processing unit 115 may perform the 3D matching processing).

Specifically, the processing object recognition part 115 may calculate the position Tx (3D), the position Ty (3D), the position Tz (3D), the posture Rx (3D), the posture Ry (3D), and the posture Rz (3D) in the 3D matching processing. The processing object recognition part 115 may generate information about the position Tx (3D), the position Ty (3D), the position Tz (3D), the posture Rx (3D), the posture Ry (3D), and the posture Rz (3D), as an example of the result of the 3D matching processing.

The processing object recognition part 115 may transform the position Tx (3D), the position Ty (3D), the position Tz (3D), the posture Rx (3D), the posture Ry (3D), and the posture Rz (3D), into the position Tx (GL), the position Ty (GL), the position Tz (GL), the posture Rx (GL), the posture Ry (GL), and the posture Rz (GL) of the workpiece W in the global coordinate system, by using the transformation matrix M_{3G}. The processing object recognition part 115 may calculate at least one of the position Tx (GL), the position Ty (GL), the position Tz (GL), the posture Rx (GL), the posture Ry (GL), and the posture Rz (GL) of the workpiece W in the global coordinate system, based on the result of the 3D matching processing. As described above, the processing object recognition part 115 may calculate at least one of the position and posture of the workpiece W in the global coordinate system, based on the result of the 3D matching processing.

Furthermore, the processing object recognition part 115 may not perform the 3D matching OOI processing, in addition to the 2D matching processing, the 2D tracking processing, and 3 the D tracking processing. In this instance, the processing object recognition part 115 may generate the three-dimensional position data WSD, based on the image data IMG_3D. As described above, the three-dimensional position data WSD may be referred to as data indicating the position of the workpiece W. Therefore, the processing object recognition part 115 generating the three-dimensional position data WSD based on the image data IMG_3D, can be said to be the processing object recognition part 115 calculating the position of the workpiece W based on the image data IMG_3D. That is, the processing object recognition part 115 may calculate the position of the workpiece W, by generating the three-dimensional position data WSD based on the image data IMG_3D. In this instance, the imaging unit 20 may not include the imaging apparatus 21.

The processing object recognition part 115 may perform, for example, at least one of AE (Automatic Exposure) processing, γ correction processing, HDR (High Dynamic Range) processing, and filtering (e.g., smoothing filtering, sharpening filtering, differential filtering, median filtering, expansion filtering, edge-hance filtering, band-pass filtering, etc.), as preprocessing, for example, on the image indicated by at least one of the image data IMG_2D and the image data IMG_3D, before performing the matching processing and the tracking processing described above. As for the filtering, only one type of filtering may be performed, or a plurality of types of filtering may be performed.

The AE processing is processing of automatically adjusting exposure of at least one of the imaging apparatus 21 and the imaging apparatus 22. The processing object recognition part 115 may adjust the exposure of the imaging apparatus 22, based on a luminance value of the image (e.g., a luminance value of each of a plurality of pixels, or a mean value of the luminance values of the plurality of pixels) indicated by the image data IMG_3D acquired by the imaging apparatus 22. The processing object recognition part 115 may adjust the exposure of the imaging apparatus 22, based on the luminance value of each of the images (e.g., the luminance value of each of the plurality of pixels, or the mean value of the luminance values of the plurality of pixels) indicated by respective pieces of image data IMG_3D acquired with different exposures, by using the imaging apparatus 22. The processing object recognition part 115 may not adjust the exposure of the imaging apparatus 22 based on the luminance value of the image indicated by the image data IMG_3D acquired by the imaging apparatus 22. The processing object recognition part 115 may adjust the exposure of the imaging apparatus 22, based on a measurement result of a not-illustrated photometric apparatus configured to measure not-illustrated brightness. In this instance, the photometric apparatus may be included in the imaging unit 20. The above description for a case where the processing object recognition part 115 adjusts the exposure of the imaging apparatus 22, is also applicable to a case where the processing object recognition part 115 adjusts the exposure of the imaging apparatus 21, and therefore, a description thereof will be omitted. The γ correction processing is processing of adjusting a color tone and a color of the image indicated by at least one of the image data IMG_2D and the image data IMG_3D. The γ correction processing is expressed as "Vout = A•Vinγ", wherein a pixel value before the γ correction processing is Vin and a pixel value after the γ correction processing is Vout. Note that "A" is a constant. When γ is less than 1, the image after the γ correction processing is darker than the image before the γ correction processing. When γ is greater than 1, the image after they correction processing is brighter than the image before the γ correction processing. The γ correction processing may be processing of adjusting a contrast of at least one of the image data IMG_2D and the image data IMG_3D. The γ correction processing may be processing of emphasizing the edge of the object such as the workpiece W captured in at least one of the image data IMG_2D and the image data IMG_3D. The HDR processing is processing of generating one HDR image by combining a plurality of images (e.g., two images) obtained by imaging the workpieces W with different exposures.

As described above, the arithmetic apparatus 110 and the imaging unit 20 including the processing object recognition part 115 are used to calculate at least one of the position and posture of the workpiece W, for example. Therefore, the system including the arithmetic apparatus 110 and the imaging unit 20 may be referred to as an arithmetic system.

### (3) Processing Parameter Determination

In order to improve accuracy of at least one of the position and posture (e.g., 6DoF) of the object (e.g., the workpiece W) calculated based on the image data outputted from the imaging unit 20, such as the image data IMG_2D and the image data IMG_3D, a plurality of types of parameters in at least one of the matching processing and the tracking processing described above, may be changed. There may be one or more types of variable parameters in the 2D matching processing. There may be one or more types of variable parameters in the 3D matching processing. There may be one or more types of variable parameters in the 2D tracking processing. There may be one or more types of variable parameters in the 3D tracking processing. There may be variable one or more types of parameters in the position calculation processing.

As described above, in the matching processing (e.g., at least one of the 2D matching processing and the 3D matching processing), at least one of the position and posture of the object (e.g., the workpiece W) is calculated. In the tracking processing (e.g., at least one of the 2D tracking processing and the 3D tracking processing), the change amount of at least one of the position and posture of the object (e.g., the workpiece W) is calculated. In the position calculation processing, the three-dimensional position of each of the plurality of points of the object (e.g., the workpiece W) is calculated. Therefore, at least one of the matching processing, the tracking processing, and the position calculation processing may be referred to as arithmetic processing. Therefore, a plurality of types of parameters in at least one of the matching processing, the tracking processing, and the position calculation processing can be said to be a plurality of types of parameters in the arithmetic processing. The parameter (i.e., the parameter of the arithmetic processing) will be hereafter referred to as a "processing parameter".

The arithmetic processing may conceptually include the 2D matching processing, the 2D tracking processing, the 3D matching processing, the 3D tracking processing, and the position calculation processing. The arithmetic processing may conceptually include at least one of the 2D matching processing, the 2D tracking processing, the 3D matching processing, the 3D tracking processing, and the position calculation processing. That is, the arithmetic processing may conceptually include the 2D matching processing and the 2D tracking processing, but may not conceptually include the position calculation processing, the 3D matching processing, and the 3D tracking processing. The arithmetic processing may conceptually include the 2D matching processing, but may not conceptually include the 2D tracking processing, the position calculation processing, the 3D matching processing, and the 3D tracking processing. The arithmetic processing may conceptually include the position calculation processing, the 3D matching processing, and the 3D tracking processing, but may not conceptually include the 2D matching processing and the 2D tracking processing. The arithmetic processing may conceptually include the position calculation processing and the 3D matching processing, but may not conceptually include the 3D tracking processing, the 2D matching processing, and the 2D tracking processing.

In addition, the arithmetic processing may conceptually include at least one of the AE processing, the γ correction processing, the HDR processing, and the filtering, which are performed as the preprocessing described above. That is, the arithmetic processing is not limited to processing of calculating (arithmetically operating) at least one of the position and posture of the object, the three-dimensional position of each of the plurality of points of the object (e.g., the three-dimensional position indicated by the three-dimensional position data WSD), and the change amount of the position and posture of the object, but may conceptually include processing (e.g., preprocessing) performed on data (e.g., at least one of the image data IMG_2D and the image data IMG_3D) used to calculate at least one of the change amount of the position and the posture of the object.

The processing parameter may be a value for determining the content of the arithmetic processing. The content of the arithmetic processing changes when the processing parameter changes. Accordingly, depending on the processing parameter, it is determined whether or not the arithmetic processing is properly performed, and the calculation accuracy of at least one of the position and posture of the object (e.g., the workpiece W) calculated by the arithmetic processing is affected. As described above, since the robot control signal is generated based on at least one of the position and posture of the object (e.g., the workpiece W) to be calculated, the calculation accuracy of at least one of the position and posture of the object (e.g., the workpiece W) affects a control error of at least one of the robot 10 and the end effector 13. Specifically, the control error of at least one of the robot 10 and the end effector 13 becomes smaller with increasing calculation accuracy of at least one of the position and posture of the object (e.g., the workpiece W).

Here, it is extremely hard for a user of the robot system 1 to individually change (adjust) and properly set (determine) each of many types of parameters (many types of processing parameters) of the arithmetic processing, in order that the calculation accuracy of at least one of the position and posture of the object (e.g., the workpiece W) achieves the desired accuracy.

The processing parameter may be a value of at least one of a threshold or a target value of the arithmetic processing. The processing parameter may be an argument of a program to be executed. The processing parameter may be a function type of a program that allows the arithmetic processing to be executed. The processing parameter may be information for determining whether or not to perform/execute the arithmetic processing itself (the program that allows the arithmetic processing to be executed). The processing parameter may be information for enabling or disabling the function of the program that allows the arithmetic processing to be executed.

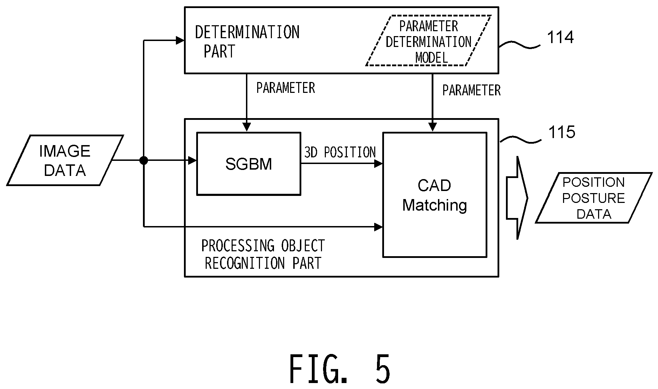

Referring now to FIG. 5, a method of determining one or more types of processing parameters in the arithmetic processing will be described. The arithmetic apparatus 110 of the control apparatus 100 includes the determination part 114. When the image data (e.g., the image data IMG_2D, the image data IMG_3D) about the image including the object (e.g., the workpiece W) are inputted, the determination part 114 is capable of determining one or more types of processing parameters, by using a parameter determination model for determining one or more types of processing parameters in the arithmetic processing (e.g., at least one of the matching processing and the tracking processing). That is, the determination part 114 is configured to automatically determine one or more types of processing parameters (in other words, automatically change one or more types of processing parameters), by inputting the image data (e.g., at least one of the image data IMG_2D and the image data IMG_3D) about the image including the object, to the parameter determination model.

The determination part 114 may read (in other words, acquire) the parameter determination model from the storage apparatus 120. The determination part 114 may not read the parameter determination model from the storage apparatus 120. The determination part 114 may store the parameter determination model. The determination part 114 may read the parameter determination model from the storage apparatus 120 at each time when one or more types of processing parameters are determined.

As described above, the workpiece W may be referred to as the processing target object. The image data generated by the imaging unit 20 imaging workpiece W may be referred to as the processing target image data.

Therefore, it can be said that the determination part 114 may determine one or more types of processing parameters in the arithmetic processing using the processing target image data, by using the processing target image data and the parameter determination model. Specifically, the determination part 114 may input the image data IMG_3D serving as an example of the processing target image data to the parameter determination model, and may determine one or more types of processing parameters in the position calculation processing using the inputted image data IMG_3D. The determination part 114 may input the image data IMG_2D serving as an example of the processing target image data to the parameter determination model, and may determine one or more types of processing parameters in the 2D matching processing using the inputted image data IMG_2D. The determination part 114 may input the image data IMG_3D serving as an example of the processing target image data to the parameter determination model, and may determine one or more types of processing parameters in the 3D matching processing using the inputted image data IMG_3D. The determination part 114 may input the image data IMG_2D serving as an example of the processing target image data to the parameter determination model, and may determine one or more types of processing parameters in the 2D tracking processing using the inputted image data IMG_2D. The determination part 114 may inputting the image data IMG_3D serving as an example of the processing target image data to the parameter determination model, and may determine one or more types of processing parameters in the 3D tracking processing using the inputted image data IMG_3D.

The determination part 114 may determine one type of processing parameter by using the parameter determination model. In other words, the determination part 114 may not determine each of a plurality of types of processing parameters by using the parameter determination model. Even in this case, it is possible to obtain a technical effect described later. The determination part 114 may be referred to as an inference part, as it can be said to infer each of one or more types of processing parameters in the arithmetic processing by using the parameter determination model.

The processing object recognition part 115 of the arithmetic apparatus 110 may perform at least one of the matching processing and the tracking processing, based on one or more types of processing parameters determined by the determination part 114 (in other words, determined by the parameter determination model) and may calculate at least one of the position and posture of the object (e.g., the workpiece W).

Specifically, the processing object recognition part 115 may perform the 2D matching processing using image data IMG_2D#1 serving as an example of the processing target image data, by using one or more types of processing parameters in the 2D matching processing determined by the determination part 114. Consequently, the processing object recognition part 115 may calculate at least one of the position and posture in the 2D imaging coordinate system of the object (e.g., the workpiece W) captured in an image indicated by the image data IMG_2D#1. In addition to or in place of one or more types of processing parameters in the 2D matching processing, The determination part 114 may determine one or more types of processing parameters in the preprocessing performed on the image data IMG_2D#1 used in the 2D matching processing. Here, one or more types of processing parameters in the preprocessing may include a processing parameter for determining whether or not to perform at least a part of the preprocessing, such as ON/OFF of the filtering.

The processing object recognition part 115 may use one or more types of processing parameters in the 2D matching processing determined by the determination part 114, thereby changing at least one of the one or more types of processing parameters in the 2D matching processing. In this instance, the processing object recognition part 115 may perform the 2D matching processing by using the changed one or more types of processing parameters in the 2D matching processing, and may calculate at least one of the position and posture in the 2D imaging coordinate system of the object (e.g., the workpiece W) captured in the image indicated by the image data IMG_2D#1.

The processing object recognition part 115 may perform the position calculation processing using image data IMG_3D#1 serving as an example of the processing target image data, by using one or more types of processing parameters in the position calculation processing determined by the determination part 114. Consequently, the processing object recognition part 115 may calculate the three-dimensional position of each of the plurality of points of the object (e.g., the workpiece W) captured in an image indicated by the image data IMG_3D#1. In addition to or in place of one or more types of processing parameters in the position calculation processing, the determination part 114 may determine one or more types of processing parameters in the preprocessing performed on the image data IMG_3D#1 used in the position calculation processing. Here, one or more types of processing parameters in the preprocessing may include a processing parameter for determining whether or not to perform at least a part of the preprocessing, such as ON/OFF of the filtering.

The processing object recognition part 115 may use one or more types of processing parameters in the position calculation processing determined by the determination part 114, thereby changing at least one of the one or more types of processing parameters in the position calculation processing. In this instance, the processing object recognition part 115 may perform the position calculation processing by using the changed one or more types of processing parameters in the position calculation processing, and may calculate the three-dimensional position of each of the plurality of points of the object (e.g., the workpiece W) captured in the image indicated by the image data IMG_3D#1. The processing object recognition part 115 may generate three-dimensional position data (e.g., the three-dimensional position data WSD) indicating the calculated three-dimensional position of each of the plurality of points of the object.

The processing object recognition part 115 may perform the 3D matching processing using the image data IMG_3D#1 serving as an example of the processing target image data and the three-dimensional position data (e.g., the three-dimensional position data WSD) generated by the position calculation processing, by using one or more types of processing parameters in the 3D matching processing determined by the determination part 114. Consequently, the processing object recognition part 115 may calculate at least one of the position and posture in the 3D imaging coordinate system of the object (e.g., the workpiece W) captured in the image indicated by the image data IMG_3D#1. In addition to or in place of one or more types of processing parameters in the 3D matching processing, the determination part 114 may determine one or more types of processing parameters in the preprocessing performed on the image data IMG_3D#1 used in the 3D matching processing. Here, one or more types of processing parameters in the preprocessing may include a processing parameter for determining whether or not to perform at least a part of the preprocessing, such as ON/OFF of the filtering.

The processing object recognition part 115 may use one or more types of processing parameters in the 3D matching processing determined by the determination part 114, thereby changing at least one of the one or more types of processing parameters in the 3D matching processing. In this instance, the processing object recognition part 115 may perform the 3D matching processing by using the changed one or more types of processing parameters in the 3D matching processing, and may calculate at least one of the position and posture in the 3D imaging coordinate system of the object (e.g., the workpiece W) captured in the image indicated by the image data IMG_3D#1.

The processing object recognition part 115 may perform the 2D tracking processing using the image data IMG_2D#1 and image data IMG_2D#2 serving as an example of the processing target image data, by using one or more types of processing parameters in the 2D tracking processing determined by the determination part 114. Consequently, the processing object recognition part 115 may calculate a change amount between at least one of the position and posture in the 2D imaging coordinate system of the object (e.g., the workpiece W) captured in the image indicated by the image data IMG_2D#1 and at least one of the position and posture in the 2D imaging coordinate system of the object (e.g., the workpiece W) captured in an image indicated by the image data IMG_2D#2. In addition to or in place of one or more types of processing parameters in the 2D tracking processing, the determination part 114 may determine one or more types of processing parameters in the preprocessing performed on the image data IMG_2D#1 and the image data IMG_2D#2 used in the 2D tracking processing. Here, one or more types of processing parameters in the preprocessing may include a processing parameter for determining whether or not to perform at least a part of the preprocessing, such as ON/OFF of the filtering.

The processing object recognition part 115 may use one or more types of processing parameters in the 2D tracking processing determined by the determination part 114, thereby changing at least one of the one or more types of processing parameters in the 2D tracking processing. In this instance, the processing object recognition part 115 may perform the 2D tracking processing by using the changed one or more types of processing parameters in the 2D tracking processing, and may calculate the change amount between at least one of the position and posture in the 2D imaging coordinate system of the object (e.g., the workpiece W) captured in the image indicated by the image data IMG_2D#1 and at least one of the position and posture in the 2D imaging coordinate system of the object (e.g., the workpiece W) captured in an image indicated by the image data IMG_2D#2.

The processing object recognition part 115 may perform the 3D tracking processing using the image data IMG_3D#1 and image data IMG_3D#2 serving as an example of the processing target image data, by using one or more types of processing parameters in the 3D tracking processing determined by the determination part 114. Consequently, the processing object recognition part 115 may calculate a change amount between at least one of the position and posture in the 3D imaging coordinate system of the object (e.g., the workpiece W) captured in the image indicated by the image data IMG_3D#1 and at least one of the position and posture in the 3D imaging coordinate system of the object (e.g., the workpiece W) captured in an image indicated by the image data IMG_3D#2. In addition to or in place of one or more types of processing parameters in the 3D tracking processing, the determination part 114 may determine one or more types of processing parameters in the preprocessing performed on the image data IMG_3D#1 and the image data IMG_3D#2 used in the 3D tracking processing. Here, one or more types of processing parameters in the preprocessing may include a processing parameter for determining whether or not to perform at least a part of the preprocessing, such as ON/OFF of the filtering.

The processing object recognition part 115 may use one or more types of processing parameters in the 3D tracking processing determined by the determination part 114, thereby changing at least one of the one or more types of processing parameters in the 3D tracking processing. In this case, the processing object recognition part 115 may perform the 3D tracking processing by using the changed one or more processing parameters in the 3D tracking processing, and may calculate the change amount between at least one of the position and posture in the 3D imaging coordinate system of the object (e.g., the workpiece W) captured in the image indicated by the image data IMG_3D#1 and at least one of the position and posture in the 3D imaging coordinate system of the object (e.g., the workpiece W) captured in an image indicated by the image data IMG_3D#2.

The image data IMG_3D, IMG_3D#1, and IMG_3D#2 may be generated, by the object (e.g., the workpiece W) on which the desired projection pattern (e.g., random dots) is projected by the projection apparatus 23 provided in the imaging unit 20, being imaged by the stereo camera serving as the imaging apparatus 22 provided in the imaging unit 20. The image data IMG_3D, IMG_3D#1, and IMG_3D#2 may be generated, by the object (e.g., the workpiece W) on which the desired projection pattern is not projected, being imaged by the stereo camera serving as the imaging apparatus 22 provided in the imaging unit 20.

The parameter determination model may be generated by learning using teacher data (i.e., by so-called supervised learning), as described later. The parameter determination model may be generated, not only by the learning using the teacher data, but also by learning without using the teacher data (i.e., by so-called unsupervised learning). The learning for generating the parameter determination model may be machine learning or deep learning.

The parameter determination model outputs one or more types of processing parameters from the image data (e.g., at least one of the image data IMG_2D and the image data IMG_3D) in which the object captured. In other words, the parameter determination model is a mechanism of deriving one or more types of processing parameters from the image data about the image including the object. That is, the parameter determination model is a mechanism of performing at least one of some evaluation and determination on the image data about the image including the object, and outputting one or more types of processing parameters as a result of at least one of the evaluation and determination. The parameter determination model may be, for example, a mathematical model using decision tree, random forest, support vector machine, or naive Bayes. The parameter determination model may be generated by deep learning. The parameter determination model generated by deep learning may be a mathematical model constructed by learning using a neural network of a multilayer structure having multiple intermediate layers (which may be referred to as hidden layers). The neural network may be, for example, a convolutional neural network. The parameter determination model may be referred to as an arithmetic model, as one or more types of processing parameters are calculated from at least one of the image data IMG_2D and the image data IMG_3D. The parameter determination model may be referred to as an inference model or an inference unit, as one or more types of processing parameters are inferred/estimated from at least one of the image data IMG_2D and the image data IMG_3D.

An example of the processing parameter includes the followings.
An example of the processing parameter in the 2D matching processing, may be at least one of a threshold for determining the edge of the object (e.g., the workpiece W) captured in the image (e.g., a threshold of a difference between luminance values of adjacent pixels), and a range for translating, enlarging, reducing, and/or rotating model data (e.g., two-dimensional model data IMG_2M). The processing parameter in the 2D matching processing is not limited to at least one of the threshold for determining the edge of the object captured in the image, and the range for translating, enlarging, reducing, and/or rotating the model data, but may be a parameter of another known 2D matching processing. An example of the processing parameter in the 3D matching processing, may be at least one of a data thinning rate of the three-dimensional position data (e.g., three-dimensional position data WSD), and a ratio of calculating a feature quantity (e.g., a normal vector) among the three-dimensional positions of the plurality of points indicated by the three-dimensional position data (e.g., three-dimensional position data WSD). In this instance, the data thinning rate of the three-dimensional position data includes at least one of a thinning rate of a point cloud indicated by point cloud data, and a thinning rate of pixels of a depth image indicated by the depth image data. The ratio of calculating the feature quantity among the three-dimensional positions of the plurality of points indicated by the three-dimensional position data, includes at least one of a ratio of a point cloud for calculating the feature quantity among the point clouds indicated by the point cloud data, and a ratio of pixel(s) for calculating the feature quantity among the plurality of pixels of the depth image indicated by the depth image data. At least one of the point cloud and the pixel(s) for which the feature quantity is calculated, may be referred to as the feature portion. The processing parameter in the 3D matching processing is not limited to at least one of the data thinning rate of the three-dimensional position data, and the ratio of calculating the feature quantity among the three-dimensional positions of the plurality of points indicated by the three-dimensional position data, but may be a parameter of another known 3D matching processing. An example of the processing parameter in the 2D or 3D tracking processing, may be at least one of the number of feature portions (at least one of the number of feature points and the number of edges), and a threshold for determining whether or not it is the feature portion. For example, in a case of the 2D tracking processing, the threshold for determining whether or not it is the feature portion, may be a threshold of the luminance value of the image indicated by the image data IMG_2D (e.g., two pieces of image data IMG_2D#t1 and IMG_2D#t2). For example, in a case of the 3D tracking processing, the threshold for determining whether or not it is the feature portion, may be a threshold of the three-dimensional position indicated by the three-dimensional position data WSD (e.g., two pieces of three-dimensional position data WSDPD#s1 and WSDPD#s2). The processing parameter in the 2D or 3D tracking processing, is not limited to at least one of the number of feature portions and the threshold for determining whether or not it is the feature portion, but may be a parameter of another known 2D or 3D tracking processing. An example of the processing parameter in the position calculation processing, may be at least one of a threshold for determining whether the parallax is an error (e.g., a difference in parallax between lines of sight adjacent to each other), a threshold for determining whether or not it is a noise (e.g., at least one of a parallax and luminance values of pixels of images indicated by the two pieces of image data included in the image data IMG_3D), a size of an area of adjacent pixels in which the luminance values of pixels of the images indicated by the two pieces of image data included in the image data IMG_3D exceed a predetermined threshold, and a size of an area in which the parallax exceeds a predetermined threshold. The processing parameter in the position calculation processing is not limited to the above one example, but may be a parameter of another known position calculation processing. An example of the processing parameter in the AE processing, may be at least one of ON/OFF (in other words, whether or not to apply a corresponding device), and a target value such as brightness. The processing parameter in the AE processing is not limited to at least one of ON/OFF and the target value such as brightness, but may be a parameter of another known AE processing. An example of the processing parameter in the γ correction processing, may be at least one of ON/OFF and a γ-value. The processing parameter in the γ correction processing is not limited to at least one of ON/OFF and the γ value, but may be a parameter of another known γ correction processing. An example of the processing parameter in the HDR processing, may be at least one of ON/OFF, exposure, and the number of images acquired. The processing parameter in the γ correction processing is not limited to at least one of ON/OFF, the exposure, and the number of images acquired, but may be a parameter of another known HDR processing. An example of the processing parameter in the filtering, may be at least one of ON/OFF, a combination of filters to be used, a value of a filter, and a threshold of the filter. The processing parameter in the filtering is not limited to at least one of ON/OFF, the combination of filters to be used, the value of the filter, and the threshold of the filter, but may be a parameter of another known filtering.

The arithmetic apparatus 110 of the control apparatus 100 may not include the determination part 114. In this instance, the above-described processing parameter may be determined by another apparatus that differs from the control apparatus 100 and that has a function that is the same as or similar to that of the determination part 114 (e.g., another control apparatus that differs from the control apparatus 100, or another arithmetic apparatus that differs from the arithmetic apparatus 110). The control apparatus 100 may transmit, to another apparatus, the image data outputted from the imaging unit 20, such as the image data IMG_2D and the image data IMG_3D. The other apparatus may determine one or more types of processing parameters, by inputting the image data transmitted from the control apparatus 100 to a model corresponding to the parameter determination model. The other apparatus may transmit the determined one or more types of processing parameters to the control apparatus 100. The processing object recognition part 115 may not use one or more types of processing parameters determined by the determination part 114. In this instance, the processing object recognition part 115 may determine the above-described processing parameter. In this case, the processing object recognition part 115 may determine one or more types of processing parameters, by inputting the image data to a model corresponding to the parameter determination model.

As described above, the signal generation part 116 may generate the robot control signal for controlling the operation of the robot 10 and the end effector control signal for controlling the operation of the end effector 13 such that the end effector 13 performs the predetermined processing on the object (e.g., the workpiece W). The processing object recognition part 115 may calculate at least one of the position and posture of the object (e.g., the workpiece W), for the signal generation unit 116 to generate the robot control signal and the end effector control signal. The determination part 114 determines one or more types of processing parameters in the arithmetic processing performed by the processing object recognition part 115, by using the parameter determination model. As described above, the determination part 114, the processing object recognition part 115, and the signal generation part 116 are elements relating to the predetermined processing for the object (e.g., the workpiece W). Therefore, the determination part 114, the processing object recognition part 115, and the signal generation part 116 may be referred to as a control part. The arithmetic apparatus 110 including the determination part 114, the processing object recognition part 115, and the signal generation part 116 may also be referred to as the control part.

One or more types of processing parameters determined by the determination part 114 by using the parameter determination model, are for generation of the robot control signal for controlling the operation of the robot 10 and the end effector control signal for controlling the operation of the end effector 13 such that the end effector 13 performs the predetermined processing on the workpiece W, for example.

Therefore, one or more types of processing parameters in the 2D matching processing determined by the determination part 114 may be referred to as a "two-dimensional matching parameter for processing." In addition to or in place of one or more types of processing parameters in the 2D matching processing, the "two-dimensional matching parameter for processing" may include one or more types of processing parameters in the preprocessing performed on the image data used in the 2D matching processing.

One or more types of processing parameters in the 3D matching processing determined by the determination part 114 may be referred to as a " three-dimensional matching parameter for processing." In addition to or in place of one or more types of processing parameters in the 3D matching processing, the "three-dimensional matching parameter for processing" may include one or more types of processing parameters in the preprocessing performed on the image data used in the 3D matching processing.

One or more types of processing parameters in the position calculation processing determined by the determination part 114 may be referred to as a "position calculation parameter for processing." In addition to or in place of one or more types of processing parameters in the position calculation processing, the "position calculation parameter for processing" may include one or more types of processing parameters in the preprocessing performed on the image data used in the position calculation processing.

One or more types of processing parameters in the 2D tracking processing determined by the determination part 114 may be referred to as a " two-dimensional tracking parameter for processing." In addition to or in place of one or more types of processing parameters in the 2D tracking processing, the "two-dimensional tracking parameter for processing" may include one or more types of processing parameters in the preprocessing performed on the image data used in the 2D tracking processing.

One or more types of processing parameters in the 3D tracking processing determined by the determination part 114 may be referred to as a "three-dimensional tracking parameter for processing." In addition to or in place of one or more types of processing parameters in the 3D tracking processing, the "three-dimensional tracking parameter for processing" may include one or more types of processing parameters in the preprocessing performed on the image data used in the 3D tracking processing.

One or more types of processing parameters in the preprocessing performed on the image data (e.g., at least one of the image data IMG_2D and the image data IMG_3D) determined by the determination part 114 may be referred to as a "preprocessing parameter."

### (4) Method of Generating Parameter Determination Model

### (4-1) Outline

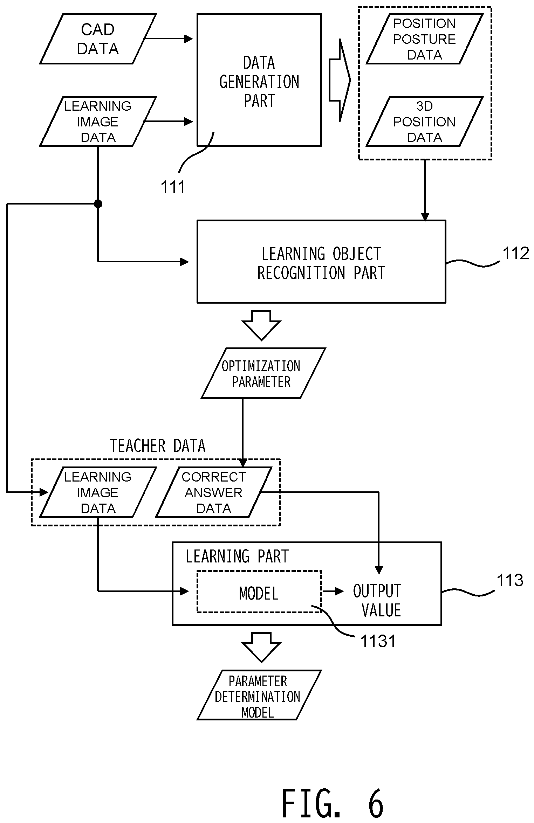

Here, an outline of a method of generating the parameter determination model will be described with reference to FIG. 6. FIG. 6 is a diagram illustrating an example of the method of generating the parameter determination model.

In FIG. 6, based on learning image data serving as image data about a learning target object and based on model data corresponding to the learning target object, the data generation part 111 of the arithmetic apparatus 110 (see FIG. 4) calculates at least one of a position and posture in the imaging coordinate system (e.g., at least one of the 2D imaging coordinate system and the 3D imaging coordinate system) of the learning target object captured in an image indicated by the learning image data. The data generation part 111 generates position posture data indicating the calculated at least one of the position and posture of the learning target object. The data generation part 111 calculates a three-dimensional position of each of a plurality of points of the learning target object (i.e., a three-dimensional shape of the learning target object) captured in the image indicated by the learning image data, based on the learning image data and the model data corresponding to the learning target object. The data generation part 111 generates three-dimensional (3D) position data indicating the calculated three-dimensional position of each of the plurality of points of the learning target object.

Here, the three-dimensional position data may be point cloud data indicating the three-dimensional position of each of the plurality of points of the learning target object, or may be depth image data indicating the three-dimensional position of each of the plurality of points of the learning target object. The three-dimensional position data may be referred to as three-dimensional shape data, as it represents the three-dimensional shape of the workpiece W. The three-dimensional position data may be referred to as distance data, as it represents a distance from the imaging unit 20 (e.g., the imaging apparatus 22) to the workpiece W.

The position of the learning target object indicated by the position posture data may be a position of a representative point of the learning target object. An example of the representative point of the learning target object may be at least one of a center of the learning target object, a center of gravity of the learning target object, an apex of the learning target object, a center of a surface of the learning target object, and a center of gravity of a surface of the learning target object. The representative point of the learning target object may be referred to as a feature point of the learning target object.

The data generation part 111 may calculate at least one of the position and posture in the imaging coordinate system of the learning target object captured in the image indicated by the learning image data, based on the learning image data. That is, the data generation part 111 may calculate at least one of the position and posture in the imaging coordinate system of the learning target object captured in the image indicated by the learning image data, based on the learning image data, without using the model data corresponding to the learning target object. Similarly, the data generation part 111 may calculate the three-dimensional position of each of the plurality of points of the learning target object captured in the image indicated by the learning image data, based on the learning image data. That is, the data generation part 111 may calculate the three-dimensional position of each of the plurality of points of the learning target object captured in the image indicated by the learning image data, based on the learning image data, without using the model data corresponding to the learning target object.

The data generation part 111 may not calculate one of the at least one of the position and posture of the learning target object in the imaging coordinate system, and the three-dimensional position of each of the plurality of points of the learning target object. That is, the data generation part 111 may calculate at least one of the position and posture of the learning target object in the imaging coordinate system, but may not calculate the three-dimensional position of each of the plurality of points of the learning target object. In this instance, the data generation part 111 may generate the position posture data indicating the calculated at least one of the position and posture of the imaging coordinate system of the learning target object, but may not generate the three-dimensional position data. Alternatively, the data generation part 111 may calculate the three-dimensional position of each of the plurality of points of the learning target object, but may not calculate the position and posture of the learning target object in the imaging coordinate system. In this instance, the data generation part 111 may generate the three-dimensional position data indicating the calculated three-dimensional position of each of the plurality of points of the learning target object, but may not generate the position posture data.

The data generation part 111 may include the three-dimensional position of the plurality of points of the learning target object (i.e., the three-dimensional shape of the learning target object), in the position posture data. The data generation part 111 may calculate the three-dimensional position of each of the plurality of points of the learning target object, as the position of the learning target object captured in the image indicated by the learning image data. The data generation part 111 may generate the position posture data indicating the calculated three-dimensional position of each of the plurality of points of the learning target object. This is because both the position of the learning target object indicated by the position posture data and the three-dimensional position of each of the plural points of the learning target object, are expressible as the same position.

The data generation part 111, however, may not calculate the three-dimensional position of each of the plurality of points of the learning target object, as the position of the learning target object captured in the image indicated by the learning image data. In this situation, the position of the learning target object may mean the position of the representative point of the learning target object. That is, the data generation part 111 may calculate at least one of the position and posture of the representative point of the learning target object captured in the image indicated by the learning image data, based on the learning image data and the model data corresponding to the learning target object.

The three-dimensional position of each of the plurality of points of the learning target object can be said to be the three-dimensional position of each of an unspecified number of points of the learning target object. Therefore, it can also be said that the position of the representative point of the learning target object differs from the three-dimensional position of each of the plurality of points of the learning target object.

The learning image data may be generated by the learning target object being imaged by the imaging unit 20. The learning image data may be generated by the learning target object being imaged by an imaging apparatus differing from the imaging unit 20. As described later, the learning image data may be generated as virtual data.

The learning target object is an object used in the learning for generating the parameter determination model described later. The learning target object can be said to be an object captured in the image indicated by the learning image data. The learning target object is an object substantially the same as the object (e.g., the workpiece W) serving as a target on which the end effector 13 performs the predetermined processing. Here, the "object serving as a target on which the end effector 13 performs the predetermined processing" is a target on which the end effector 13 performs the predetermined processing, and may be referred to as a processing target object. Therefore, the learning target object can be said to be an object substantially the same as the processing target object. That is, the learning target object is not limited to an object having the same shape as that of the processing target object, but may be an object similar to the processing target object to an extent that the object is considered the same as the processing target object. A state in which "the learning target object is an object similar to the processing target object to an extent that the object is considered the same as the processing target object" may include at least one of (i) a state in which a difference between a shape of the learning target object and a shape of the processing target object is to an extent of a manufacturing error, (ii) a state in which the difference between the shape of the learning target object and the shape of the processing target object is to an extent that the shapes on an image captured by the imaging unit 20 are considered the same, (iii) a state in which the difference between the shape of the learning target object and the shape of the processing target object is to an extent of slight deformation caused by a contact of the learning target object with another object (e.g., another learning target object), (iv) a state in which the difference between the shape of the learning target object and the shape of the processing target object is to an extent of slight deformation caused by placement and holding on a stage or the like, and (v) a state in which a part of the learning target object and a part of the processing target object, which are not imaged or not allowed to be imaged by the imaging unit 20, have different shapes.

The model data corresponding to the learning target object may be two-dimensional model data indicating a two-dimensional model of the learning target object. In this case, the model data corresponding to the learning target object may be two-dimensional image data indicating two-dimensional models of a plurality of learning target objects generated by virtually projecting a three-dimensional model of the learning target object (e.g., a CAD model) from a plurality of different directions on a virtual plane that is perpendicular to the plurality of different directions. Furthermore, the model data corresponding to the learning target object may be image data indicating a two-dimensional image obtained by imaging an actual learning target object in advance. The model data corresponding to the learning target object may be image data indicating a plurality of two-dimensional images generated by imaging the actual learning target object from a plurality of different imaging directions. The two-dimensional model data corresponding to the learning target object may be the two-dimensional model data IMG_2M described above. In this instance, the model data corresponding to the learning target object may be the same as the model data corresponding to the workpiece W described above. The model data corresponding to the learning target object may be different from the model data corresponding to the workpiece W described above.

The model data corresponding to the learning target object may be three-dimensional model data indicating the three-dimensional model of the learning target object. In this instance, the model data corresponding to the learning target object may be CAD data about the learning target object, or may be three-dimensional model data having a shape that is the same as or similar to the three-dimensional shape of the learning target object obtained by measuring the three-dimensional shape of the actual learning target object in advance. The three-dimensional model data corresponding to the learning target object may be the three-dimensional model data WMD described above. In this instance, the model data corresponding to the learning target object may be the same as the model data corresponding to the workpiece W described above. The model data corresponding to the learning target object may be different from the model data corresponding to the workpiece W described above.

The learning image data, and at least one of the position posture data and three-dimensional position data generated by the data generation part 111 based on the learning image data, may be stored in association with each other in the storage apparatus 120 of the control apparatus 100. That is, the learning image data and both the position posture data and three-dimensional position data generated based on the learning image data, may be stored in the storage apparatus 120 in association with each other. The learning image data and the position posture data generated based on the learning image data may be stored in the storage apparatus 120 in association with each other, whereas the three-dimensional position data generated based on the learning image data may not be associated with the learning image data. The learning image data and the three-dimensional position data generated based on the learning image data may be stored in the storage apparatus 120 in association with each other, whereas the position posture data generated based on the learning image data may not be associated with the learning image data.

The position posture data and the three-dimensional position data may be generated based on the virtual data serving as the learning image data, in addition to or in place of the learning image data generated by the learning target object being imaged the imaging unit 20. The virtual data serving as the learning image data may be generated as follows. The three-dimensional model of the learning target object (e.g., a three-dimensional model of the learning target object indicated by the CAD data about the learning target object) is disposed in a virtual space, and then, the three-dimensional model is then virtually imaged by a virtual imaging unit (e.g., a virtual imaging unit 20), by which the virtual data serving as the learning image data may be generated. At this time, since a positional relation between the virtual imaging unit (e.g., the virtual imaging unit 20) and the three-dimensional model in the virtual space is known, at least one of the position and posture of a representative point of the three-dimensional model (i.e., the learning target object) captured in an image indicated by the virtual data and the three-dimensional position of each of a plurality of points of the three-dimensional model (i.e., the learning target object) are also known.

The virtual data may be generated by the data generation part 111. In this case, the data generation part 111 may generate at least one of the position posture data and the three-dimensional position data from the virtual data. As described above, since at least one of the position and posture of the representative point of the three-dimensional model captured in the image indicated by the virtual data is known, the data generation part 111 is allowed to generate the position posture data, based on the known at least one of the position and posture of the representative point of the three-dimensional model. Furthermore, since the three-dimensional position of each of the plurality of points of the three-dimensional model is also known, the data generation part 111 is allowed to generate the three-dimensional position data, based on the known three-dimensional position of each of the plurality of points of the three-dimensional model. The data generation part 111 may generate the virtual data, based on an input from a user via the input apparatus 140 (e.g., an input indicating at least one of an instruction to dispose the three-dimensional model in the virtual space and an instruction to dispose the virtual imaging unit in the virtual space). The data generation part 111 may not generate the virtual data. In this instance, the virtual data may be generated by another apparatus (e.g., at least one of another control apparatus and another arithmetic apparatus) that differs from the control apparatus 100. The virtual data generated by another apparatus may be stored in the storage apparatus 120 of the control apparatus 100. In this case, the data generation part 111 may read the virtual data stored in the storage apparatus 120 and may generate at least one of the position posture data and the three-dimensional position data from the read virtual data. Alternatively, the data generation part 111 may acquire, from another apparatus, the virtual data generated by the other apparatus, via the communication apparatus 130. The data generation part 111 may generate at least one of the position posture data and the three-dimensional position data from the acquired virtual data. Another apparatus that differs from the control apparatus 100 may generate the virtual data and may generate at least one of the position posture data and the three-dimensional position data from the generated virtual data. In this instance, the control apparatus 100 may acquire the virtual data generated by another apparatus, and at least one of the position posture data and the three-dimensional position data, via the communication apparatus 120.

The virtual imaging unit may be a single virtual monocular camera, or a virtual stereo camera having two virtual monocular cameras. The virtual imaging unit may include a single virtual monocular camera and a virtual stereo camera. On the three-dimensional model in the virtual space, a projection pattern that is the same as or similar to the projection pattern (e.g., random dots) that is projectable by the projection apparatus 23 provided in the imaging unit 20, may be virtually projected. In this case, a three-dimensional model on which the projection pattern is projected, may be captured in the image indicated by the virtual data. The projection pattern may not be virtually projected on the three-dimensional model in the virtual space. In this case, a three-dimensional model in which the projection pattern is not projected, may be captured in the image indicated by the virtual data.

The data generation part 111 may generate displacement data about the tracking processing (e.g., at least one of the 2D tracking processing and the 3D tracking processing), by using a plurality of pieces of learning image data obtained at different times (see "(4-3-3) Others" described later). The plurality of pieces of learning image data and the displacement data about the tracking processing generated by the data generation part 111 based on the plurality of pieces of learning image data may be stored in the storage apparatus 120 in association with each other.

The learning object recognition part 112 of the arithmetic apparatus 110 may perform the matching processing (e.g., at least one of the 2D matching processing and the 3D matching processing) such as 2D matching by using the learning image data, and may calculate at least one of the position and posture in the imaging coordinate system (e.g., at least one of the 2D imaging coordinate system and the 3D imaging coordinate system) of the learning target object captured in the image indicated by the learning image data.

At this time, the learning object recognition part 112 may change one or more types of processing parameters in the matching processing such that at least one of the position and posture in the imaging coordinate system of the learning target object (at least one of the position and posture calculated by the learning object recognition part 112) approaches (typically, matches) at least one of the position and posture in the imaging coordinate system of the learning target object indicated by the position posture data associated with the learning image data used in the matching processing of the learning object recognition part 112 (the position posture data generated by the data generation part 111). In addition to or in place of one or more types of processing parameters in the matching processing, the learning object recognition part 112 may change one or more types of processing parameters in the preprocessing performed on the learning image data used in the matching processing such that at least one of the position and posture in the imaging coordinate system of the learning target object (at least one of the position and posture calculated by the learning object recognition part 112) approaches (typically, matches) at least one of the position and posture in the imaging coordinate system of the learning target object indicated by the position posture data associated with the learning image data used in the matching processing (the position posture data generated by the data generation part 111). At least one of the position and posture of the learning target object may not be at least one of the position and posture in the imaging coordinate system. At least one of the position and posture of the learning target object may be at least one of the position and posture in the global coordinate system, or at least one of a position and posture in a coordinate system differing from the imaging coordinate system and the global coordinate system.

The learning object recognition part 112 may perform the position calculation processing using a well-known association method such as SGBM and SAD by using the learning image data, and may calculate the three-dimensional position of each of the plurality of points of the learning target object captured in the image indicated by the learning image data. The learning object recognition part 112 may change one or more types of processing parameters in the position calculation processing such that the calculated three-dimensional position of each of the plurality of points of the learning target object (the three-dimensional position of the plurality of points calculated by the learning object recognition part 112) approaches (typically, matches) the three-dimensional position of each of the plurality of points of the learning target object indicated by the three-dimensional position data associated with the learning image data used in the position calculation processing of the learning object recognition part 112 (the three-dimensional position data generated by the data generation part 111). In addition to or in place of one or more types of processing parameters in the position calculation processing, the learning object recognition part 112 may change one or more types of processing parameters in the preprocessing performed on the learning image data used in the position calculation processing.

The learning object recognition part 112 may perform only one of the matching processing and the position calculation processing, by using the learning image data. That is, the learning object recognition part 112 may perform at least one of the matching processing and the position calculation processing.

The learning object recognition part 112 may perform the tracking processing (e.g., at least one of the 2D tracking processing and the 3D tracking processing) by using the plurality of pieces of learning image data (e.g., one piece of learning image data and another piece of learning image data obtained at different times) (see "(4-4-4) Others" described later). The learning object recognition part 112 may track at least one feature portion that is the same as at least one feature portion (e.g., at least one of a feature point and an edge) of the learning target object captured in an image indicated by one piece of learning image data, in another piece of learning image data. That is, the learning object recognition part 112 may calculate a change amount of at least one of the position and posture of the learning target object in the imaging coordinate system (e.g., the 2D imaging coordinate system or the 3D imaging coordinate system) between one piece of learning image data and another piece of learning image data.

The learning object recognition part 112 may change one or more types of processing parameters in the tracking processing such that the calculated change amount of at least one of the position and posture of the learning target object in the imaging coordinate system (the change amount calculated by the learning object recognition part 112) approaches (typically, matches) the change amount of at least one of the position and posture of the learning target object in the imaging coordinate system indicated by the displacement data about the tracking processing associated with one piece of learning image data and another piece of learning image data (the displacement data generated by the data generation part 111). In addition to or in place of one or more types of processing parameters in the tracking processing, the learning object recognition part 112 may change one or more types of processing parameters in the preprocessing performed on the learning image data used in the tracking processing. The change amount of at least one of the position and posture of the learning target object may not be the change amount of at least one of the position and posture of the learning target object in the imaging coordinate system. The change amount of at least one of the position and posture of the learning target object may be a change amount of at least one of the position and posture of the learning target object in the global coordinate system, or may be a change amount of at least one of the position and posture of the learning target object in the coordinate system differing from the imaging coordinate system and the global coordinate system.

Incidentally, in the case of the matching processing (e.g., at least one of the 2D matching processing and the 3D matching processing) using the learning image data, the learning object recognition part 112 changing at least one of: the one or more types of processing parameters in the preprocessing performed on the learning image data used in the matching processing; and the one or more types of processing parameters in the matching processing, may be referred to as the learning object recognition part 112 optimizing at least one of: the one or more types of processing parameters in the preprocessing performed on the learning image data used in the matching processing; and the one or more types of processing parameter in the matching processing such that the calculated at least one of the position and posture in the imaging coordinate system of the learning target object (at least one of the position and posture calculated by the learning object recognition part 112) approaches (typically, matches) at least one of the position and posture in the imaging coordinate system of the learning target object indicated by the position posture data associated with the learning image data (the position posture data generated by the generation part 111).

At least one of the position and posture of the learning target object may not be at least one of the position and posture in the imaging coordinate system. At least one of the position and posture of the learning target object may be at least one of the position and posture in the global coordinate system, or at least one of the position and posture in the coordinate system differing from the imaging coordinate system and the global coordinate system.

Incidentally, in the case of the position calculation processing using the learning image data, the learning object recognition part 112 changing at least one of: the one or more types of processing parameters in the preprocessing performed on the learning image data used in the position calculation processing; and the one or more types of processing parameters in the position calculation processing, may be referred to as the learning object recognition part 112 optimizing at least one of: the one or more types of processing parameters in the preprocessing performed on the learning image data used in the position calculation processing; and the one or more types of processing parameter in the position calculation processing such that the calculated three-dimensional position of each of the plurality of points of the learning target object (the three-dimensional position of each of the plurality of points calculated by the learning object recognition part 112) approaches (typically, matches) the three-dimensional position of each of the plurality of points of the learning target object indicated by the three-dimensional position data associated with the learning image data (the three-dimensional position data generated by the generation part 111).

Incidentally, in the case of the tracking processing (e.g., at least one of the 2D tracking processing and the 3D tracking processing) using the plurality of pieces of learning image data obtained at different times, the learning object recognition part 112 changing at least one of: the one or more types of processing parameters in the preprocessing performed on the learning image data used in the tracking processing; and the one or more types of processing parameters in the tracking processing, may be referred to as the learning object recognition part 112 optimizing at least one of: the one or more types of processing parameters in the preprocessing performed on the learning image data used in the tracking processing; and the one or more types of processing parameters in the tracking processing such that the calculated change amount of at least one of the position and posture of the learning target object (the change amount calculated by the learning object recognition part 112) approaches (typically, matches) the change amount of at least one of the position and posture of the learning target object indicated by the displacement data about the tracking processing associated with the plurality of pieces of learning image data (the displacement data generated by the generation part 111).

Therefore, "changing the processing parameter" may be referred to as "optimizing the processing parameter."

The learning object recognition part 112 may output, as a result of the matching processing performed by using the learning image data, output data indicating at least one of: the optimized one or more types of processing parameters in the matching processing; and a matching degree relating to the matching processing, which is an index indicating a degree of matching between at least one of the position and posture in the imaging coordinate system of the learning target object calculated by the learning object recognition part 112 and at least one of the position and posture in the imaging coordinate system of the learning target object indicated by the position posture data generated by the data generation part 111. In addition to the matching degree relating to the matching processing and one or more types of processing parameters in the matching processing, the output data may include a time required for the matching processing using one or more types of processing parameters. In addition to or in place of one or more types of processing parameters in the matching processing, the output data may include one or more types of processing parameters in the preprocessing performed on the learning image data used in the matching processing.

At least one of the position and posture of the learning target object may not be at least one of the position and posture in the imaging coordinate system. At least one of the position and posture of the learning target object may be at least one of the position and posture in the global coordinate system, or at least one of the position and posture in the coordinate system differing from the imaging coordinate system and the global coordinate system.

In this case, the learning image data and the output data outputted as a result of the matching processing performed by the learning object recognition part 112 using the learning image data, may be stored in the storage apparatus 120 of the control apparatus 100 in association with each other. The learning object recognition part 112 may perform the matching processing once by using one piece of learning image data and may output one piece of output data. In such a case, one piece of output data may be associated with one piece of learning image data. The learning object recognition part 112 may perform the matching processing more than once, i.e., a plurality of times, by using one piece of learning image data and may output a plurality of pieces of output data. In such a case, the plurality of pieces of output data may be associated with one piece of learning image data.

The "matching degree relating to the matching processing" may be an index changing depending on at least one of: a difference between at least one of the position and posture in the imaging coordinate system of the learning target object calculated by the learning object recognition part 112 and at least one of the position and posture in the imaging coordinate system of the learning target object indicated by the position posture data generated by the data generation part 111; and a ratio between at least one of the position and posture in the imaging coordinate system of the learning target object calculated by the learning object recognition part 112 and at least one of the position and posture in the imaging coordinate system of the learning target object indicated by the position posture data generated by the data generation part 111. In a case where the matching degree relating to the matching processing changes depending on the difference between at least one of the position and posture in the imaging coordinate system of the learning target object calculated by the learning object recognition part 112 and at least one of the position and posture in the imaging coordinate system of the learning target object indicated by the position posture data, the matching degree relating to the matching processing may increase as the difference decreases (in other words, as it approaches 0). In a case where the matching degree relating to the matching processing changes depending on the ratio between at least one of the position and posture in the imaging coordinate system of the learning target object calculated by the learning object recognition part 112 and at least one of the position and posture in the imaging coordinate system of the learning target object indicated by the position posture data, the matching degree relating to the matching processing may increase as the ratio approaches 1.

The learning object recognition part 112 may output, as a result of the position calculation processing using the learning image data, output data indicating at least one of: the optimized one or more types of processing parameters in the position calculation processing; and a matching degree relating to the position calculation processing, which is an index indicating a degree of matching between the three-dimensional position of each of the plurality of points of the learning target object calculated by the learning object recognition part 112 and the three-dimensional position of each of the plurality of points of the learning target object indicated by the three-dimensional position data generated by the data generation part 111. In addition to the matching degree relating to the position calculation processing and one or more types of processing parameters in the position calculation processing, the output data may include a time required for the position calculation processing using one or more types of processing parameters. In addition to or in place of one or more types of processing parameters in the position calculation processing, the output data may include one or more types of processing parameters in the preprocessing performed on the learning image data used in the position calculation processing.

In this case, the learning image data and the output data outputted as a result of the position calculation processing performed by the learning object recognition part 112 using the learning image data, may be stored in the storage apparatus 120 of the control apparatus 100 in association with each other. The learning object recognition part 112 may perform the position calculation processing once by using one piece of learning image data and may output one piece of output data. In such a case, one piece of output data may be associated with one piece of learning image data. The learning object recognition part 112 may perform the position calculation processing more than once, i.e., a plurality of times, by using one piece of learning image data and may output a plurality of pieces of output data. In such a case, the plurality of pieces of output data may be associated with one piece of learning image data.

The "matching degree relating to the position calculation processing" may be an index changing depending on at least one of: a difference between the three-dimensional position of each of the plurality of points of the learning target object calculated by the learning object recognition part 112 and the three-dimensional position of each of the plurality of points of the learning target object indicated by the three-dimensional position data generated by the data generation part 111; and a ratio between the three-dimensional position of each of the plurality of points of the learning target object calculated by the learning object recognition part 112 and the three-dimensional position of each of the plurality of points of the learning target object indicated by the three-dimensional position data generated by the data generation part 111. In a case where the matching degree relating to the position calculation processing changes depending on the difference between the three-dimensional position of each of the plurality of points of the learning target object calculated by the learning object recognition part 112 and the three-dimensional position of each of the plurality of points of the learning target object indicated by the three-dimensional position data generated by the data generation part 111, the matching degree relating to the position calculation processing may increase as the difference decreases (in other words, as it approaches 0). In a case where the matching degree relating to the position calculation processing changes depending on the ratio between the three-dimensional position of each of the plurality of points of the learning target object calculated by the learning object recognition part 112 and the three-dimensional position of each of the plurality of points of the learning target object indicated by the three-dimensional position data generated by the data generation part 111, the matching degree relating to the position calculation processing may increase as the ratio approaches 1.

In a case where the learning object recognition part 112 performs the tracking processing by using the plurality of pieces of learning image data obtained at different times, the learning object recognition part 112 may output output data indicating: the optimized one or more types of processing parameters in the tracking processing; and a matching degree relating to the tracking processing, which is an index indicating a degree of matching between the change amount of at least one of the position and posture of the learning target object calculated based on a result of the tracking processing by the learning object recognition part 112 (the change amount calculated by the learning object recognition part 112) and the change amount of at least one of the position and posture of the learning target object indicated by the displacement data about the tracking processing associated with the plurality of pieces of learning image data (the displacement data generated by the data generation part 111). In addition to the matching degree relating to the tracking processing and one or more types of processing parameters in the tracking processing, the output data may include a time required for the tracking processing using one or more types of processing parameters. In addition to or in place of one or more types of processing parameters in the tracking processing, the output data may include one or more types of processing parameters in the preprocessing performed on at least one of the plurality of pieces of learning image data used in the tracking processing.

In this case, the plurality of pieces of learning image data and the output data outputted as a result of the tracking processing by the learning object recognition part 112 using the plurality of pieces of learning image data, may be stored in the storage apparatus 120 of the control apparatus 100 in association with each other. The learning object recognition part 112 may perform the tracking processing once by using the plurality of pieces of learning image data and may output one piece of output data. In such a case, one piece of output data may be associated with the plurality of pieces of learning image data. The learning object recognition part 112 may perform the tracking processing more than once, i.e., a plurality of times, by using the plurality of pieces of learning image data and may output a plurality of pieces of output data. In such a case, the plurality of pieces of output data may be associated with the plurality of pieces of learning image data.

The "matching degree relating to the tracking processing" may be an index changing depending on at least one of: a difference between the change amount of at least one of the position and posture of the learning target object calculated based on the result of the tracking processing by the learning object recognition part 112 (the change amount calculated by the learning object recognition part 112) and the change amount of at least one of the position and posture of the learning target object indicated by the displacement data about the tracking processing associated with the plurality of pieces of learning image data (the displacement data generated by the data generation part 111); and a ratio between the change amount of at least one of the position and posture of the learning target object calculated based on the result of the tracking processing by the learning object recognition part 112 (the change amount calculated by the learning object recognition part 112) and the change amount of at least one of the position and posture of the learning target object indicated by the displacement data about the tracking processing associated with the plurality of pieces of learning image data (the displacement data generated by the data generation part 111). In a case where the matching degree relating to the tracking processing changes depending on the difference between the change amount of at least one of the position and posture of the learning target object calculated based on the result of the tracking processing by the learning object recognition part 112 (the change amount calculated by the learning object recognition part 112) and the change amount of at least one of the position and posture of the learning target object indicated by the displacement data about the tracking processing associated with the plurality of pieces of learning image data (the displacement data generated by the data generation part 111), the matching degree relating to the tracking processing may increase as the difference decreases (in other words, as it approaches 0). In a case where the matching degree relating to the tracking processing changes depending on the ratio between the change amount of at least one of the position and posture of the learning target object calculated based on the result of the tracking processing by the learning object recognition part 112 (the change amount calculated by the learning object recognition part 112) and the change amount of at least one of the position and posture of the learning target object indicated by the displacement data about the tracking processing associated with the plurality of pieces of learning image data (the displacement data generated by the data generation part 111), the matching degree relating to the tracking processing may increase as the ratio approaches 1.

The teacher data may be generated from the learning image data and one or more types of processing parameters indicated by the output data associated with the learning image data. That is, the teacher data may be generated such that the learning image data are used as input data (which may be referred to as a "case") and such that one or more types of processing parameters included in the output data associated with the learning image data are used as correct answer data.

Here, at least one of the position and posture in the imaging coordinate system of the learning target object indicated by the position posture data generated by the data generation part 111, is as close to a true value as possible (see "(4-3-1) Processing of Generating Position Posture Data"), as described later. For example, one or more types of processing parameters in the matching processing, included in the output data associated with the learning image data, are processing parameters generated by changing one or more types of processing parameters in the matching processing, such that at least one of the position and posture in the imaging coordinate system of the learning target object captured in the image indicated by the learning image data, which is calculated by the learning object recognition part 112 approaches (typically, matches) at least one of the position and posture that is as close to a true value as possible, in the imaging coordinate system of the learning target object indicated by the position posture data associated with the learning image data (the position posture data generated by the data generation part 111), as described above. Therefore, in a case where the learning object recognition part 112 performs the matching processing by using the generated processing parameters (i.e., one or more types of processing parameters in the matching processing), the learning object recognition part 112 is allowed to calculate at least one of the position and posture that is as close to a true value as possible, in the imaging coordinate system of the learning target object captured in the image indicated by the learning image data. Therefore, it can be said that one or more types of processing parameters relating to the matching processing included in the output data are processing parameters that are or are as close as possible to a true value.

In a case where, in addition to or in place of one or more types of processing parameters in the matching processing, the output data include one or more types of processing parameters in the preprocessing performed on the learning image data used in the matching processing, the same may apply to one or more types of processing parameters in the preprocessing.

The three-dimensional position of each of the plurality of points of the learning target object indicated by the three-dimensional position data generated by the data generation part 111, is as close to a true value as possible (see "(4-3-2) Processing of Generating Three-Dimensional Position Data"), as described later. One or more types of processing parameters in the position calculation processing, included in the output data associated with the learning image data, are processing parameters generated by changing one or more types of processing parameters in the position calculation processing, such that the three-dimensional position of each of the plurality of points of the learning target object captured in the image indicated by the learning image data, which is calculated by the learning object recognition part 112 approaches (typically, matches) the three-dimensional position that is as close to a true value as possible, of each of the plurality of points of the learning target object indicated by the three-dimensional position data associated with the learning image data (the three-dimensional position data generated by the data generation part 111), as described above. Therefore, in a case where the learning object recognition part 112 performs the position calculation processing by using the generated processing parameters (i.e., one or more types of processing parameters in the position calculation processing), the learning object recognition part 112 is allowed to calculate the three-dimensional position that is as close to a true value as possible of each of the plurality of points of the learning target object captured in the image indicated by the learning image data. Therefore, it can be said that one or more types of processing parameters relating to the position calculation processing included in the output data are processing parameters that are or are as close as possible to a true value.

In a case where, in addition to or in place of one or more types of processing parameters in the position calculation processing, the output data include one or more types of processing parameters in the preprocessing performed on the learning image data used in the position calculation processing, the same may apply to one or more types of processing parameters in the preprocessing.

The change amount of at least one of the position and posture of the learning target object indicated by the displacement data about the tracking processing (at least one of the 2D tracking processing and the 3D tracking processing) generated by the data generation part 111, is as close to a true value as possible (see "(4-3-3) Others"), as described later. For example, one or more types of processing parameters in the tracking processing, included in the output data associated with the plurality of pieces of learning image data obtained at different times, are processing parameters generated by changing one or more types of processing parameters in the tracking processing, such that the change amount of at least one of the position and posture of the learning target object calculated based on the result of the tracking processing approaches (typically, matches) the change amount of at least one of the position and posture of the learning target object indicated by the displacement data about the tracking processing associated with the plurality of pieces of learning image data (the displacement data generated by the data generation part 111). Therefore, in a case where the learning object recognition part 112 performs the tracking processing by using the generated processing parameters (i.e., one or more types of processing parameters in the tracking processing), the learning object recognition part 112 is allowed to calculate the change amount that is as close to a true value as possible, of at least one of the position and posture of the learning target object captured in the images indicated by the plurality of pieces of learning image data. Therefore, it can be said that one or more types of processing parameters relating to the tracking processing included in the output data are processing parameters that are or are as close as possible to a true value.

In a case where, in addition to or in place of one or more types of processing parameters in the tracking processing, the output data include one or more types of processing parameters in the preprocessing performed on at least one of the plurality of pieces of learning image data used in the tracking processing, the same may apply to one or more types of processing parameters in the preprocessing.

Therefore, one or more types of processing parameters included in the output data associated with the learning image data may be referred to as the correct answer data. As described above, changing the processing parameter may be referred to as optimizing the processing parameter. Therefore, one or more types of processing parameters included in the output data associated with the learning image data, may be referred to as a optimization parameter. Therefore, it can be said that the teacher data may be generated from the learning image data and the optimization parameter.

In a case where the learning object recognition part 112 performs the matching processing and the position calculation processing by using one piece of learning image data, one or more types of processing parameters in the matching processing and one or more types of processing parameters in the position calculation processing may be included in the output data associated with one piece of learning image data. In a case where the learning object recognition part 112 performs the matching image by using one piece of learning image data, but does not perform the position calculation processing, one or more types of processing parameters in the matching processing may be included in the output data associated with one piece of learning image data. In a case where the learning object recognition part 112 performs the position calculation processing, but does not perform the matching processing, one or more types of processing parameters in the position calculation processing may be included in the output data associated with one piece of learning image data. In any one of the above cases, the output data may include one or more types of processing parameters in the processing performed on one piece of learning image data.

In a case where the plurality of pieces of output data are associated with one piece of learning image data, the teacher data may be generated such that one or more types of processing parameters included in one of the plurality of pieces of output data are the correct answer data. An example of a method of selecting one of the plurality of pieces of output data may be (i) a method of selecting one piece of output data indicating the highest matching degree, of matching degrees indicated by the plurality of pieces of output data, (ii) a method of selecting one piece of output data indicating the shortest one of times required for processing indicated by the plurality of pieces of output data, (iii) a method of selecting one piece of output data indicating the matching degree that is greater than or equal to a matching degree threshold, of matching degrees indicated by the plurality of pieces of output data, (iv) a method of selecting one piece of output data indicating a time required for processing that is less than or equal to a time threshold, of the times required for processing indicated by the plurality of pieces of output data, and (v) a method of selecting one piece of output data in which a product of the matching degree and an inverse number of the time required for processing is maximal, based on the matching degree and the time required for processing indicated by the plurality of pieces of output data. In a case where the plurality of pieces of output data are associated with one piece of learning image data, a plurality of sets of teacher data in which one piece of learning image data is used as input data, may be generated.

In addition, the teacher data may be generated such that one piece of learning image data and another piece of learning image data captured at different times are used as input data and such that one or more types of processing parameters (e.g., one or more types of processing parameters in at least one of the 2D tracking processing and the 3D tracking processing) indicated by the output data associated with the one piece of learning image data and the other piece of learning image data, are used as the correct answer data. One or more types of processing parameters indicated by the output data associated with one piece of learning image data and another piece of learning image data, may include one or more types of processing parameters in the preprocessing or the like performed on at least one of the one piece of learning image data and the other piece of learning image data, in addition to one or more types of in at least one of the 2D tracking processing and the 3D tracking processing.

In a case where there are the virtual data as the learning image data, the learning object recognition part 112 may perform the matching processing by using the virtual data and may calculate at least one of the position and posture of the learning target object captured in the image indicated by the virtual data. At this time, the learning object recognition part 112 may change one or more types of processing parameters in at least one of the matching processing and the preprocessing performed on the virtual data used in the matching processing, such that the calculated at least one of the position and posture of the learning target object (i.e., an output value of the learning object recognition part 112) approaches (typically, matches) at least one of the position and posture of the learning target object indicated by the position posture data associated with the virtual data used in the matching processing (the position posture data generated by the data generation part 111).

In this case, the virtual data and the output data outputted as a result of the matching processing performed by the learning object recognition part 112 using the virtual data, may be stored in the storage apparatus 120 of the control apparatus 100 in association with each other. The output data outputted as a result of the matching processing using the virtual data, may be data indicating at least one of a matching degree corresponding to the matching degree described above, a time required for the matching processing, and a value of each of one or more processing parameters when the learning object recognition part 112 calculates at least one of the position and posture of the learning target object.

The learning object recognition part 112 may perform the position calculation processing by using the virtual data and may generate the three-dimensional position data. At this time, the learning object recognition part 112 may change one or more types of processing parameters in at least one of the position calculation processing and the preprocessing performed on the virtual data used in the position calculation processing, such that the three-dimensional position of each of the plurality of points of the learning target object indicated by the generated three-dimensional position data (i.e., an output value of the learning object recognition part 112) approaches (typically, matches) the three-dimensional position of each of the plurality of points of the learning target object indicated by the three-dimensional position data associated with the virtual data used in the position calculation processing (the three-dimensional position data generated by the data generation part 111).

In this case, the virtual data and the output data outputted as a result of the position calculation processing performed by the learning object recognition part 112 using the virtual data, may be stored in the storage apparatus 120 of the control apparatus 100 in association with each other. The output data outputted as a result of the position calculation processing using the virtual data, may be data indicating at least one of a matching degree corresponding to the matching degree described above, a time required for the position calculation processing, and a value of each of one or more processing parameters when the learning object recognition part 112 calculates the three-dimensional position of each of the plurality of points of the learning target object.

In a case where there are the virtual data as the learning image data, the teacher data may be generated from the virtual data and values of one or more types of processing parameters indicated by the output data associated with the virtual data. That is, the teacher data may be generated such that the virtual data serving as the learning image data are used as input data and such that values of one or more types of processing parameters indicated by the output data associated with the virtual data are used as the correct answer data.

The learning part 113 of the arithmetic apparatus 110 generates (constructs) the parameter determination model by performing the learning using the teacher data. The learning part 113 may generate the parameter determination model by performing machine learning using the teacher data. In this case, as an example, a regression model for outputting (calculating) one or more types of processing parameters that are or are close to a correct answer, may be generated as the parameter determination model, from the image data (the processing target image data) inputted after being generated by imaging the processing target object in the imaging unit 20, later (i.e., in an actual operation after the learning), by learning a relation between the learning image data included in the teacher data and one or more types of processing parameters serving as the correct answer data. The learning part 113 may generate the parameter determination model by performing not only the machine learning, but also deep learning using the teacher data. Incidentally, "in the actual operation" indicates a time when the control apparatus 100 performs the robot control processing for controlling at least one of the robot 10 and the end effector 13 such that the end effector 13 performs the predetermined processing on the processing target object (e.g., the workpiece W).

In the learning performed by the learning part 113 using the teacher data, a model 1131 that is later used as the parameter determination model, may determine the value of each of one or more types of processing parameters in at least one of the matching processing, the position calculation processing, the tracking processing, and the preprocessing, for the learning image data serving as the input data. The learning part 113 may perform learning of the model 1131 that is later used as the parameter determination model, such that the value of each of one or more types of processing parameters outputted from the model 1131 that is later used as the parameter determination model approaches (typically, matches) the value of the optimization parameter included in the teacher data (i.e., the processing parameter serving as the correct answer data).

The learning object recognition part 112 may perform at least one of the matching processing and the position calculation processing, according to a first algorithm. The parameter determination model generated by the learning performed by the learning part 113 may have a structure according to a second algorithm. The first algorithm and the second algorithm may be algorithms relating to machine learning such as differential evolution (DE), nearest neighbor algorithm, Naive Bayes algorithm, decision tree, and support vector machine, or may be algorithms relating to deep learning that generates a feature quantity and a connection weighting factor on its own by using a neural network. As a model for deep learning, a CNN (Convolutional Neural Network) model may be used. The first algorithm and the second algorithm may be the same or may be different.

### (4-2) Processing of Acquiring Learning Image Data

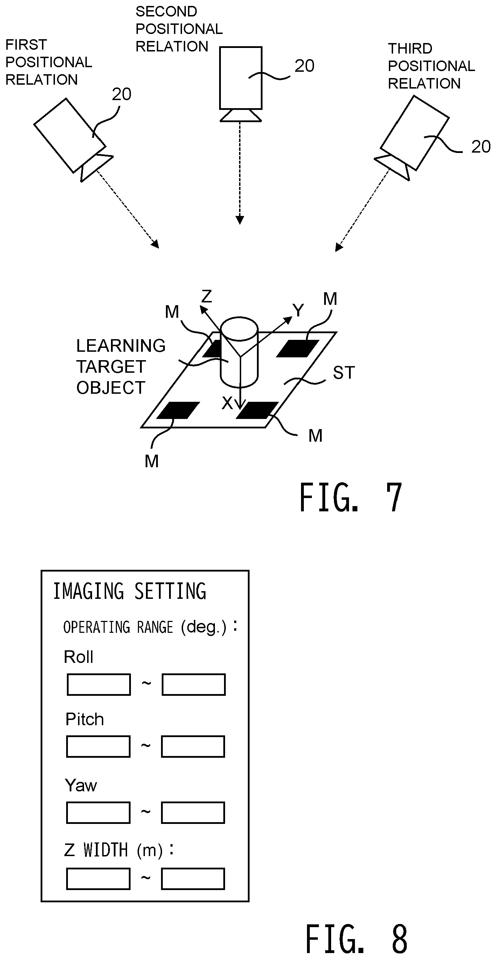

An example of processing of acquiring the learning image data will be described with reference to FIG. 7. FIG. 7 is a diagram illustrating an example of a positional relation between the imaging unit 20 and the learning target object. The imaging unit 20 may include the imaging apparatuses 21 and 22 and the projection apparatus 23, may include only the imaging apparatus 21, may include only the imaging apparatus 22, and may include the imaging apparatus 22 and the projection apparatus 23. In the following, for convenience of explanation, all the components are referred to as the "imaging unit 20". By replacing the "imaging unit 20" with at least one of the "the imaging apparatus 21" and the "the imaging apparatus 22", the following may be usable as at least one of a description of processing for acquiring the learning image data in the "the imaging apparatus 21", and a description of processing for acquiring the learning image data in the "the imaging apparatus 22".

In FIG. 7, the learning target object is disposed on a stage ST that is provided with markers M. In FIG. 7, there are four markers M on the stage ST. The stage ST may be provided with only one the marker M. The stage ST may be provided with two or more markers M. That is, the stage ST may be provided with at least one marker M.

The marker M may be a marker indicating information about the stage ST such as a position and posture of the stage ST. The marker M may be an AR (Augmented Reality) marker (which may be referred to as an AR tag). The marker M may not be the AR marker, and may be another two-dimensional bar code. The marker M may be one or more markers used to calculate the position and posture of the stage ST. The marker M may be a plurality of markers (e.g., three markers) that allows the position and posture of the stage ST to be calculated (e.g., at least one of a cross mark and a hash-tag (#) mark). The marker M may be separate from the stage ST, or may be formed on the stage ST by the existing processing methods such as cutting processing (i.e., the marker M may be configured/constructed integrally with the stage ST).

The position and posture of the stage ST may be a position and posture of the stage ST in the global coordinate system, may be a position and posture of the stage ST in the 2D imaging coordinate system, or may be a position and posture of the stage ST in the 3D imaging coordinate system. The position and posture of the stage ST may be a position and posture of the stage ST in a coordinate system differing from the global coordinate system, the 2D imaging coordinate system, and the 3D imaging coordinate system.

When the learning target object is imaged by the imaging unit 20, the signal generation part 116 of the control apparatus 100 may generate a robot control signal for driving the robot 10 such that the imaging unit 20 has a predetermined positional relation with the learning target object. The signal generation part 116 may generate an imaging control signal for allowing the imaging unit 20 to image the learning target object in the predetermined positional relation. The learning target object may be imaged by the imaging apparatus 21, the imaging apparatus 22, or both of the imaging apparatuses 21 and 22.

An example of the predetermined positional relation is a first positional relation, a second positional relation, and a third positional relation in FIG. 7. A dotted arrow in FIG. 7 illustrates the optical axis of the imaging unit 20 (e.g., at least one of the imaging apparatus 21 and the imaging apparatus 22). Each of the first positional relation, the second positional relation, and the third positional relation may be defined by a learning coordinate system having, as the origin, one point on the optical axis of the imaging unit 20 (see FIG. 7). The origin of the learning coordinate system may be one point on the learning target object, may be one point on the stage ST, or may be one point on a space. The following explanation is based on the assumption that the origin of the learning coordinate system is on the learning target object. The learning coordinate system may be a coordinate system defined by the X-axis, the Y-axis, and the Z-axis that are perpendicular to each other, as illustrated in FIG. 7. One axis of the learning coordinate system (e.g., the Z-axis) may be an axis along the optical axis of the imaging unit 20 in the first positional relation. One axis of the learning coordinate system (e.g., the Z-axis) may not be the axis along the optical axis of the imaging unit 20 in the first positional relation, but may be an axis along the optical axis of the imaging unit 20 in another positional relation such as the second positional relation. One axis of the learning coordinate system (e.g., the Z-axis) may not be the axis along the optical axis of the imaging unit 20 as long as it is possible to define a positional relation of the imaging unit 20 to the learning target object. One axis of the learning coordinate system may be an axis in a vertically upward direction. Incidentally, a relation between the learning coordinate system and the global coordinate system is assumed to be known. That is, the predetermined positional relation defined in the learning coordinate system may be transformed into a predetermined positional relation in the global coordinate system, by using a transformation matrix for transforming the position and posture in the learning coordinate system into the position and posture in the global coordinate system. The above transformation matrix may be calculated from the relation between the learning coordinate system and the global coordinate system.

In the learning coordinate system, the first positional relation may be defined as a posture of the imaging unit 20 around the X-axis (in other words, a rotation amount of the imaging unit 20 around the X-axis), a posture of the imaging unit 20 around the Y-axis (in other words, a rotation amount of the imaging unit 20 around the Y-axis), and a position of the imaging unit 20 in the Z-axis direction parallel to the Z-axis. The posture of the imaging unit 20 around the X-axis and the posture of the imaging unit 20 around the Y-axis may be regarded as a parameter representing the position of the imaging unit 20. Therefore, the posture of the imaging unit 20 around the X-axis and the posture of the imaging unit 20 around the Y-axis may be referred to as a position of the imaging unit 20 in a rotational direction around the X-axis, and a position of the imaging unit 20 in a rotational direction around the Y-axis, respectively. The position of the imaging unit 20 in the Z-axis direction may be referred to as a distance from the learning target object to the imaging unit 20.

In a case where at least one of the imaging unit 20 and the learning target object moves, the first positional relation may be defined as a relative posture of the imaging unit 20 and the learning target object around the X-axis, a relative posture of the imaging unit 20 and the learning target object around the Y-axis, and a relative position of the imaging unit 20 and the learning target object in the Z-axis direction parallel to the Z-axis. In a case where the imaging unit 20 is stationary (i.e., the imaging unit 20 does not move), but the learning target object moves, the first positional relation may be defined as a posture of the learning target object around the X-axis, a posture of the learning target object around the Y-axis, and a position of the learning target object in the Z-axis direction parallel to the Z-axis. In this instance, the position of the learning target object in the Z-axis direction may be referred to as a distance from the imaging unit 20 to the learning target object.

As described above, the learning coordinate system may be a coordinate system defined by the X-axis, the Y-axis, and the Z-axis that are perpendicular to each other. The Z-axis of the learning coordinate system may be an axis along the optical axis of the imaging unit 20 in the first positional relation. When the Z-axis is referred to as a first axis, the X-axis is referred to as a second axis, and the Y-axis is referred to as a third axis, it can be said that the posture of the imaging unit 20 may be the posture around at least one of the first axis, the second axis, and the third axis in the learning coordinate system that is the coordinate system of the learning target object and that is defined by the first axis along the optical axis of the imaging unit 20, the second axis perpendicular to the first axis, and the third axis perpendicular to the first and second axes.

In the learning coordinate system, the second positional relation may be defined as the posture of the imaging unit 20 around the X-axis, the posture of the imaging unit 20 around the Y-axis, and the position of the imaging unit 20 in the Z-axis direction parallel to the Z-axis. A positional relation between the imaging unit 20 and the learning target object in the learning coordinate system in the second positional relation differs from those in the first positional relation and the third positional relation. In a case where one axis of the learning coordinate system (e.g., the Z-axis) is the axis along the optical axis of the imaging unit 20 in the first positional relation, the one axis (e.g., the Z-axis) may not be along the optical axis of the imaging unit 20 in the second positional relation. In the first positional relation, the second positional relation, and the third positional relation, one axis (e.g., the Z-axis) of the X-axis, the Y-axis, and the Z-axis that are perpendicular to each other may be defined in the learning coordinate system along the optical axis of the imaging unit 20 in the second positional relation.

In the learning coordinate system, the third positional relation may be defined as the posture of the imaging unit 20 around the X-axis, the posture of the imaging unit 20 around the Y-axis, and the position of the imaging unit 20 in the Z-axis direction parallel to the Z-axis. A positional relation between the imaging unit 20 and the learning target object in the learning coordinate system in the third positional relation differs from the those in the first positional relation and the second positional relation. In a case where one axis of the learning coordinate system (e.g., the Z-axis) is the axis along the optical axis of the imaging unit 20 in the first positional relation, the one axis (e.g., the Z-axis) may not be along the optical axis of the imaging unit 20 in the third positional relation. In the first positional relation, the second positional relation, and the third positional relation, one axis (e.g., the Z-axis) of the X-axis, the Y-axis, and the Z-axis that are perpendicular to each other may be defined in the learning coordinate system along the optical axis of the imaging unit 20 in the third positional relation.

For example, in a case where the imaging unit 20 images the learning target object in the first positional relation, the signal generation part 116 may transform the first positional relation defined in the learning object coordinate system into a first positional relation in the global coordinate system, by using the transformation matrix for transforming the position and posture in the learning coordinate system into the position and posture in the global coordinate system. The signal generation part 116 may generate a robot control signal for controlling the operation of the robot 10 (the robot arm 12) such that the positional relation of the imaging unit 20 to the learning target object is the first positional relation in the global coordinate system. The signal generation unit 116 may output the generated robot control signal to the robot 10 (e.g., the robot control apparatus 14) by using the communication apparatus 130. Consequently, the robot control apparatus 14 may control the operation of the robot 10 (e.g., the operation of the robot arm 12), based on the robot control signal, and may set the positional relation of the imaging unit 20 to the learning target object to be the first positional relation.

The predetermined positional relation is not limited to the positional relation of the imaging unit 20 to the learning target object, but may mean a positional relation of the learning target object to the imaging unit 20. That is, the predetermined positional relation may mean a relative positional relation between the learning target object and the imaging unit 20. The predetermined positional relation may include the first positional relation, the second positional relation, and the third positional relation. Therefore, the predetermined positional relation may mean a plurality of mutually different positional relations between the learning target object and the imaging unit 20.

For example, a description will be given to the operation of the control apparatus 100 when the imaging unit 20 images the learning target object in the first positional relation, the second positional relation, and the third positional relation. The imaging unit 20 may image the learning target object in at least one of the first positional relation, the second positional relation, and the third positional relation. The imaging unit 20 may image the learning target object in a positional relation differing from the first positional relation, the second positional relation, and the third positional relation. In this instance, the imaging unit 20 may image the learning target object in the above-described different positional relation, in addition to the first positional relation, the second positional relation, and the third positional relation, or may image the learning target object in the above-described different positional relation, in place of the first positional relation, the second positional relation, and the third positional relation. The different positional relation may be a single positional relation, or may be a plurality of positional relations.

The signal generation part 116 may generate an imaging control signal for allowing the imaging unit 20 to image the learning target object in the first positional relation. In this case, the signal generation part 116 may first transform the first positional relation defined in the learning coordinate system into the first positional relation in the global coordinate system, by using the transformation matrix for transforming the position and posture in the learning coordinate system into the position and posture in the global coordinate system. The signal generation part 116 may generate a robot control signal representing the first positional relation between the imaging unit 20 and the learning target object, based on the first positional relation in the global coordinate system. The signal generation unit 116 may output the generated robot control signal to the robot 10 by using the communication apparatus 130. The signal generation part 116 may generate the imaging control signal for allowing the imaging unit 20 to image the learning target object in the first positional relation. The signal generation unit 116 may output the generated imaging control signal to the imaging unit 20 by using the communication apparatus 130.

Consequently, after the relation between the imaging unit 20 and the learning target object becomes the first positional relation, the imaging unit 20 (e.g., at least one of the imaging apparatuses 21 and 22) may image the learning target object, thereby generating the learning image data. The signal generation part 116 may generate the imaging control signal such that, at the same time as the positional relation of the imaging unit 20 to the learning target object becoming the first positional relation, the imaging unit 20 images the learning target object, thereby generating the learning image data.

Similarly, the signal generation part 116 may generate an imaging control signal for allowing the imaging unit 20 to image the learning target object in the second positional relation. In this case, the signal generation part 116 may transform the second positional relation defined in the learning coordinate system into the second positional relation in the global coordinate system, by using the transformation matrix for transforming the position and posture in the learning coordinate system into the position and posture in the global coordinate system. The transformation matrix may be different from the transformation matrix for transforming the first positional relation defined in the learning coordinate system into the first positional relation in the global coordinate system. The signal generation part 116 may generate a robot control signal representing the second positional relation between the imaging unit 20 and the learning target object, based on the second positional relation in the global coordinate system. The signal generation unit 116 may output the generated robot control signal to the robot 10 by using the communication apparatus 130. The signal generation part 116 may generate an imaging control signal for allowing the imaging unit 20 to image the learning target object in the second positional relation. The signal generation unit 116 may output the generated imaging control signal to the imaging unit 20 by using the communication apparatus 130.

Consequently, after the relation between the imaging unit 20 and the learning target object becomes the second positional relation, the imaging unit 20 (e.g., at least one of the imaging apparatuses 21 and 22) may image the learning target object, thereby generating the learning image data. The signal generation part 116 may generate the imaging control signal such that, at the same time as the positional relation of the imaging unit 20 to the learning target object becomes the second positional relation, the imaging unit 20 images the learning target object, thereby generating the learning image data.

Similarly, the signal generation part 116 may generate an imaging control signal for allowing the imaging unit 20 to image the learning target object in the third positional relation. In this case, the signal generation part 116 may transform the third positional relation defined in the learning coordinate system into the third positional relation in the global coordinate system, by using the transformation matrix for transforming the position in the learning coordinate system into the position in the global coordinate system. The transformation matrix may be different from the transformation matrix for transforming the first positional relation defined in the learning coordinate system into the first positional relation in the global coordinate system, and the transformation matrix for transforming the second positional relation defined in the learning coordinate system into the second positional relation in the global coordinate system. The signal generation part 116 may generate a robot control signal representing the third positional relation between the imaging unit 20 and the learning target object, based on the third positional relation in the global coordinate system. The signal generation unit 116 may output the generated robot control signal to the robot 10 by using the communication apparatus 130. The signal generation part 116 may generate an imaging control signal for allowing the imaging unit 20 to image the learning target object in the third positional relation. The signal generation unit 116 may output the generated imaging control signal to the imaging unit 20 by using the communication apparatus 130.

Consequently, after the relation between the imaging unit 20 and the learning target object becomes the third positional relation, the imaging unit 20 (e.g., at least one of the imaging apparatuses 21 and 22) may image the learning target object, thereby generating the learning image data. The signal generation part 116 may generate the imaging control signal such that, at the same time as the positional relation of the imaging unit 20 to the learning target object becomes the third positional relation, the imaging unit 20 images the learning target object, thereby generating the learning image data.

Through such a series of operations, the learning image data may be generated (acquired) by the imaging unit 20 imaging the learning target object in the first positional relation, the second positional relation, and the third positional relation. Note that the positional relation in which the imaging unit 20 images the learning target object, is not limited to the first positional relation, the second positional relation, and the third positional relation, as described above. The predetermined positional relation may include a plurality of mutually different positional relations, such as the first positional relation, the second positional relation, and the third positional relation. Therefore, it can be said that the predetermined positional relation may be a plurality of mutually different positional relations, of the imaging unit 20 to the learning target object.

As described above, the signal generation part 116 may generate the robot control signal for controlling the robot 10, and may generate the imaging control signal for controlling the imaging unit 20. Thus, the signal generation part 116 that may generate the robot control signal for controlling the robot 10 and the imaging control signal for controlling the imaging unit 20, may be referred to as the control part. The signal generation unit 116 may output the robot control signal to the robot 10 by using the communication apparatus 130. The signal generation part 116 may output the imaging control signal to the imaging unit 20 by using the communication apparatus 130. Therefore, it can be said that the signal generation part 116 may output a control signal for controlling the imaging unit 20 and the robot 10 equipped with the imaging unit 20 (e.g., the imaging control signal and the robot control signal). The signal generation part 116 may output two types of control signals, which are the imaging control signal for controlling the imaging unit 20, and the robot control signal for controlling the robot 10. The signal generation part 116 may output a control signal common to the imaging unit 20 and the robot 10.

As described above, the signal generation part 116 may generate the robot control signal representing the predetermined positional relation (e.g., at least one of the first positional relation, the second positional relation, and the third positional relation) between the imaging unit 20 and the learning target object. The signal generation unit 116 may output the robot control signal to the robot 10 by using the communication apparatus 130. The signal generation part 116 may generate the imaging control signal for allowing the imaging unit 20 to image the learning target object in the predetermined positional relation. The signal generation unit 116 may output the imaging control signal to the imaging unit 20 by using the communication apparatus 130. Here, considering that the operation of the robot 10 is controlled based on the robot control signal, the robot control signal can be said to be a control signal for driving the robot 10. Therefore, it can be said that the signal generation part 116 may output the control signal for driving the robot 10 such that the imaging unit 20 has the predetermined positional relation with the learning target object, and for allowing the imaging unit 20 to image the learning target object in the predetermined positional relation (e.g., the robot control signal and the imaging control signal).

The control signal for driving the robot 10 such that the imaging unit 20 has the predetermined positional relation with the learning target object, and for allowing the imaging unit 20 to image the learning target object in the predetermined positional relation, may be referred to as a first control signal, as it is intended to control the robot 10 and the imaging unit 20. As such, the first control signal may be the control signal for driving the robotic device 10 such that the imaging unit 20 has the predetermined positional relation with the learning target object, and for allowing the imaging unit 20 to image the learning target in the predetermined positional relation. Therefore, it can be said that the first control signal (e.g., at least one of the robot control signal and the imaging control signal) may be a signal for driving the robot 10 such that the predetermined positional relation is changed to each of the plurality of positional relations, and for allowing the imaging unit 20 to image the learning target object at each time of a change to each of the plurality of positional relations.

As described above, the learning image data are generated by the imaging unit 20 (e.g., at least one of the imaging apparatuses 21 and 22) imaging the learning target object. That is, the learning image data can be said to be data indicating an image in which the learning target object imaged by the imaging unit 20 is captured. The learning image data may conceptually include the image data IMG_2D generated by the imaging apparatus 21 and the image data IMG_3D generated by the imaging apparatus 22. That is, the learning image data may include, for example, image data generated by the single monocular camera serving as the imaging apparatus 21 and two pieces of image data generated respectively by two monocular cameras of the stereo camera serving as the imaging apparatus 22. The learning image data may conceptually include the image data IMG_2D, but may not conceptually include the image data IMG_3D. The learning image data may conceptually include the image data IMG_3D, but may not conceptually include the image data IMG_2D.

The image data IMG_3D serving as the learning image data may be generated by the imaging apparatus 22 imaging the learning target object on which the desired projection pattern is projected from the projection apparatus 23 of the imaging unit 20. The image data IMG_3D serving as the learning image data may be generated by the imaging apparatus 22 imaging the learning target object on which the desired projection pattern is not projected.

That is, in a case where the imaging unit 20 includes the stereo camera serving as the imaging apparatus 22 and the projection apparatus 23, the stereo camera serving as the imaging apparatus 22 may image, in the first positional relation, the learning target object on which a desired patterned light (e.g., a random dot pattern) is projected from the projection apparatus 23, thereby generating the image data IMG_3D as the learning image data. The stereo camera serving as the imaging apparatus 22 may image, in the second positional relation, the learning target object on which the patterned light is projected from the projection apparatus 23, thereby generating the image data IMG_3D as the learning image data. The stereo camera serving as the imaging apparatus 22 may image, in the third positional relation, the learning target object on which the patterned light is projected from the projection apparatus 23, thereby generating the image data IMG_3D as the learning image data.

On the other hand, in a case where the imaging unit 20 includes the stereo camera serving as the imaging apparatus 22 and the projection apparatus 23, the stereo camera serving as the imaging apparatus 22 may image, in the first positional relation, the learning target object on which the desired patterned light is not projected from the projection apparatus 23, thereby generating the image data IMG_3D as the learning image data. The stereo camera serving as the imaging apparatus 22 may image, in the second positional relation, the learning target object on which the patterned light is not projected from the projection apparatus 23, thereby generating the image data IMG_3D as the learning image data. The stereo camera serving as the imaging apparatus 22 may image, in the third positional relation, the learning target object on which the patterned light is not projected from the projection apparatus 23, thereby generating the image data IMG_3D as the learning image data. In this instance, the imaging unit 20 may not include the projection apparatus 23.

The signal generation part 116 may generate the robot control signal and the imaging control signal such that the imaging unit 20 images the learning target object in the order of the first positional relation, the second positional relation, and the third positional relation. Needless to say, the imaging order is not limited to the above.

As described above, the predetermined positional relation is not limited to the first positional relation, the second positional relation, and the third positional relation. The predetermined positional relation may be four or more types of mutually different positional relations, or may be one type of positional relation. Here, the predetermined positional relation may be automatically set by the control apparatus 100 (e.g., the signal generation part 116). Specifically, the control apparatus 100 (e.g., the signal generation part 116) may automatically set one or more predetermined positional relations, based on three-dimensional model data indicating the three-dimensional model of the learning target object (e.g., a CAD model of the learning target object) indicated by the CAD data corresponding to the learning target object. The control apparatus 100 may automatically set one or more predetermined positional relations, based on image data in which an entire learning target object is captured by the imaging unit 20 (so-called image data obtained from a distance).

The control apparatus 100 (e.g., the signal generation part 116) may display an input screen as illustrated in FIG. 8, on a display serving as the output apparatus 150, in order to set the predetermined positional relation. The user of the robot system 1 may input, via the input apparatus 140, a range of the posture of the imaging unit 20 around the X-axis in the learning coordinate system (corresponding to "Roll" in FIG. 8), a range of the posture of the imaging unit 20 around the Y-axis in the learning coordinate system (corresponding to "Pitch" in FIG. 8), a range of the posture of the imaging unit 20 around the Z-axis in the learning coordinate system (corresponding to "Yaw" in FIG. 8), and a range of the distance from the learning target object to the imaging unit 20 (corresponding to "Z-width" in FIG. 8). As illustrated in FIG. 8, even when there are input columns relating to "Roll", "Pitch", "Yaw" and "Z width" on the input screen, the user of the robot system 1 may input at least one of "Roll", "Pitch", "Yaw" and "Z width" (in other words, there may be items that are not inputted). The item that may be inputted by the user, may be one of the posture and distance in the learning coordinate system. The posture in the learning-coordinate system that may be inputted by the user, is not limited to "Roll", "Pitch" and "Yaw", but may be at least one of "Roll", "Pitch" and "Yaw".

The control apparatus 100 (e.g., the signal generation part 116) may automatically set one or more predetermined positional relations in a range in which the inputted positional relation is changed. The control apparatus 100 (e.g., the signal generation part 116) may set the positional relation at predetermined intervals in the range in which the inputted positional relation is changed (e.g., at least one of a range in which the posture is changed and a range in which the distance is changed). In this case, if the predetermined interval is narrow, the type (number) of the predetermined positional relations to be set is increased, and if the predetermined interval is wide, the type (number) of the predetermined positional relations to be set is reduced. The predetermined interval may be inputted by the user via the input apparatus 140, or may be set in advance.

As described above, the control apparatus 100 (e.g., the signal generation part 116) may automatically generate one or more positional relations by the user inputting the range in which the positional relation is changed via the input apparatus 140. Therefore, the user inputting the range in which the positional relation is changed via the input apparatus 140 can be rephrased as the control apparatus 100 (e.g., the signal generation part 116) receiving an input of the range in which the positional relation is changed. Furthermore, it can be said that the control apparatus 100 (e.g., the signal generation part 116) may determine (set) the predetermined positional relation in the range in which the positional relation is changed, based on the inputted (in other words, received) range in which the positional relation is changed.

Here, the "range in which the positional relation is changed" is a range in which the positional relation between the imaging unit 20 and the learning target object is changed when the learning target object is imaged by the imaging unit 20. The "range in which the positional relation is changed" may be rephrased as a range that can be taken by the positional relation between the imaging unit 20 and the learning target object when the learning target object is imaged by the imaging unit 20. The positional relation between the imaging unit 20 and the learning target object may be represented by at least one of the posture and distance of the imaging unit 20 in the learning coordinate system, may be represented by at least one of the posture and distance of the learning target object in the learning coordinate system, or may be represented by at least one of the posture and distance of one of the imaging unit 20 and the learning target object to the other of the imaging unit 20 and the learning target object, in the learning coordinate system. The "posture" is not limited to "Roll", "Pitch" and "Yaw", but may be at least one of "Roll", "Pitch" and "Yaw"

The meaning of "based on the inputted (in other words, received) range in which the positional relation is changed " is not limited to a meaning of "based only on the inputted range in which the positional relation is changed," but may include a meaning of "based on at least the inputted range in which the positional relation is changed (i.e., based on another piece of information in addition to the inputted range in which the positional relation is changed)" and a meaning of "based on at least a part of the inputted range in which the positional relation is changed."

As described above, the learning image data are used in the learning for generating the parameter determination model. The parameter determination model outputs (calculates) one or more types of processing parameters that are or are close to a correct answer, from the image data (the processing target image data described later) generated by the imaging unit 20 imaging the processing target object (e.g., the workpiece W) in the actual operation after the learning. Here, the predetermined positional relation between the imaging unit 20 and the learning target object when the imaging unit 20 images the learning target object, may be set independently of a positional relation between the imaging unit 20 and the processing target object in which the imaging unit 20 may image the processing target object in the actual operation. When the parameter determination model is generated by the learning using the learning image data generated by the imaging unit 20 imaging the learning target object in the positional relation between the imaging unit 20 and the learning target object such that the imaging unit 20 does not image the processing target object in the actual operation, one or more types of processing parameters outputted by the parameter determination model from the image data generated by the imaging unit 20 imaging the processing target object in the actual operation, may deviate from the correct answer. That is, the learning image data generated by the imaging unit 20 imaging the learning target object in the positional relation between the imaging unit 20 and the learning target object such that the imaging unit 20 does not image the processing target object in the actual operation, may be a factor (e.g., a noise) that prevents improvement of accuracy of the parameter determination model, in the learning for generating the parameter determination model.

As described above, in a case where the range in which the positional relation is changed, is limited by the user inputting the range in which the positional relation is changed, it is possible to remove the positional relation between the imaging unit 20 and the learning target object such that the imaging unit 20 does not image the processing target object in the actual operation. That is, by limiting the range in which the positional relation is change, it is possible to prevent acquisition of the learning image data that become a noise of the learning for generating the parameter determination model. In addition, it is possible to reduce a time required for the acquisition of the learning image data (in other words, the imaging of the learning target object). The range in which the positional relation is changed and which is inputted by the user via the input apparatus 140, is not limited to the range in the learned coordinate system, but may be a range in another coordinate system. The range in which the positional relation is changed may be a range in the global coordinate system. That is, the range to be changed may be a range of the posture of the imaging unit 20 around the X-axis (GL), a range of the posture of the imaging unit 20 around the Y-axis (GL), a range of the posture of the imaging unit 20 around the Z-axis (GL), and a range of the distance from the learning target object to the imaging unit 20. In this instance, in a case where the imaging unit 20 images the learning target object in one or more positional relations, the transformation of the coordinate system by the signal generation part 116 (e.g., the transformation from the learning coordinate system to the global coordinate system described above) is not required.

The input screen as illustrated in FIG. 8 may not be displayed on the display serving as the output apparatus 150. In this instance, the input screen as illustrated in FIG. 8 may be displayed on a display provided by another apparatus that differs from the control apparatus 100. That is, the user may input the above-described range in which the positional relation is changed, via another apparatus that differs from the control apparatus 100. Another apparatus may automatically set one or more predetermined positional relations in the inputted range e in which the positional relation is changed. Another apparatus may transmit a signal indicating the set one or more predetermined positional relations, to the control apparatus 100.

The stage ST may be configured to change its position and posture. That is, the stage ST may have a mechanism (not illustrated) configured to change its position and posture. In this instance, the predetermined positional relation of the imaging unit 20 to the learning target object may be realized by the operation of at least one of the robot 10 (e.g., the robot arm 12) and the stage ST. That is, the predetermined positional relation may be realized by operating only the robot 10, may be realized by operating only the stage ST, or may be realized by operating both the robot 10 and the stage ST.

In this instance, the signal generation part 116 may generate a stage control signal representing the predetermined positional relation between the imaging unit 20 and the learning target object, in addition to or in place of the robot control signal representing the predetermined positional relation between the imaging unit 20 and the learning target object. The signal generation part 116 may output the stage control signal to the mechanism configured to change the position and posture of the stage ST by using the communication apparatus 130. Therefore, it can be said that the signal generation unit 116 may output the control signal for driving at least one of the robot 10 in which the imaging unit 20 is provided and the stage ST in which the learning target object is disposed, such that the imaging unit 20 and the learning target object have the predetermined positional relation, and for allowing the imaging unit 20 to image the learning target object in the predetermined positional relation (e.g., the robot control signal, the stage control signal, and the imaging control signal).

The predetermined positional relation, as described above, may include the first positional relation, the second positional relation and the third positional relation. In this instance, the signal generation part 116 may generate the imaging control signal and at least one of the robot control signal and the stage control signal such that the imaging unit 20 images the learning target object in each of the first positional relation, the second positional relation, and the third positional relation. The imaging control signal and at least one of the robot control signal and the stage control signal, as described above, can be said to be signals for driving at least one of the robot 10 and the stage ST such that the predetermined positional relation is changed to each of the plurality of positional relations, and for allowing the imaging unit 20 to image the learning target object at each time of a change to each of the plurality of positional relations.

The control signal for driving at least one of the robot 10 and the stage ST such that the imaging unit 20 and the learning target object have the predetermined positional relation and for allowing the imaging unit 20 to image the learning target object in the predetermined positional relation, may be referred to as the first control signal, as it is intended to control the imaging unit 20 and at least one of the robot 10 and the mechanism configured to change the position and posture of the stage ST.

### (4-3) Processing of Generating Target Data

As described above, the learning object recognition part 112 may change one or more types of processing parameters in the matching processing using the learning image data, such that at least one of the position and posture of the learning target object captured in the image indicated by the learning image data (at least one of the position and posture calculated by the learning object recognition part 112) approaches (typically, matches) at least one of the position and posture of the learning target object indicated by the position posture data (the position posture data generated by the data generation part 111). Therefore, at least one of the position and posture of the learning target object indicated by the position posture data generated by the data generation part 111 can be said to be a target/goal to be approached by at least one of the position and posture of the learning target object calculated by the learning object recognition part 112, in the matching processing using the learning image data. Therefore, the position posture data generated by the data generation part 111 may be rephrased as target data indicating a target/goal in the matching processing using the learning image data.

In addition, the learning object recognition part 112 may change one or more types of processing parameters in the position calculation processing using the learning image data, such that the three-dimensional position of each of the plurality of points of the learning target object captured in the image indicated by the learning image data (the three-dimensional position of each of the plurality of points calculated by the learning object recognition part 112) approaches (typically, matches) the three-dimensional position of each of the plurality of points of the learning target object indicated by the three-dimensional position data (the three-dimensional position data generated by the data generation part 111). Therefore, the three-dimensional position of each of the plurality of points of the learning target object indicated by the three-dimensional position data generated by the data generation part 111 can be said to be a target/goal to be approached by the three-dimensional position of each of the plurality of points of the learning target object calculated by the learning object recognition part 112, in the position calculation processing using the learning image data. Therefore, the three-dimensional position data generated by the data generation part 111 may be rephrased as target data indicating a target/goal in the position calculation processing using the learning image data.

That is, the position posture data and the three-dimensional position data generated by the data generation part 111 may be referred to as the target data. The target data may conceptually include one of the position posture data and the three-dimensional position data. That is, the target data may not conceptually include the other of the position posture data and the three-dimensional position data. Therefore, at least one of the position posture data and the three-dimensional position data may not be referred to as the target data.

Since the position posture data generated by the data generation part 111 may be referred to as the target data, the position posture data generated by the data generation part 111 will be hereinafter referred to as "target position posture data" as appropriate. Since the three-dimensional position data generated by the data generation part 111 may be referred to as the target data, the three-dimensional position data generated by the data generation part 111 will be hereinafter referred to as "target three-dimensional position data" as appropriate.

In a case where the imaging unit 20 images the learning target object in the predetermined position relation between the imaging unit 20 and the learning target object described above, the imaging unit 20 images the learning target object such that the stage ST (especially, at least one marker M provided on the stage ST) and the learning target object disposed on the stage ST are captured in the image indicated by the learning image data generated after the imaging of the learning target object. That is, it can be said that the predetermined positional relation between the imaging unit 20 and the learning target object is set such that the stage ST (especially, at least one marker M provided on the stage ST) and the learning target object disposed on the stage ST are captured when the imaging unit 20 images the learning target object.

The learning image data generated when the imaging unit 20 images the learning target object in the first positional relation illustrated in FIG. 7 will be referred to as first learning image data. In this instance, it can be said that the first learning image data may be generated by the imaging unit 20 imaging the learning target object in the first positional relation. As described above, the learning target object is disposed on the stage ST. The stage ST is provided with at least one marker M. Therefore, it can be said that the first learning image data may be generated by the imaging unit 20 imaging at least one marker M together with the learning target object in the first positional relation. The stage ST may be provided with a plurality of markers M. Therefore, it can be said that the first learning image data may be generated by the imaging unit 20 imaging at least one of the plurality of markers M together with the learning target object in the first positional relation.

The learning image data generated when the imaging unit 20 images the learning target object in the second positional relation illustrated in FIG. 7 will be referred to as second learning image data. In this instance, it can be said that the second learning image data may be generated by the imaging unit 20 imaging the learning target object in the second positional relation. As described above, the learning target object is disposed on the stage ST. The stage ST is provided with at least one marker M. Therefore, it can be said that the second learning image data may be generated by the imaging unit 20 imaging at least one marker M together with the learning target object in the second positional relation. The stage ST may be provided with a plurality of markers M. Therefore, it can be said that the second learning image data may be generated by the imaging unit 20 imaging at least another one of the plurality of markers M together with the learning target object in the second positional relation.

The expression "at least another one of the plurality of markers M" means that at least one marker M imaged by the imaging unit 20 together with the learning target object in the second positional relation may be different from at least one marker M imaged by the imaging unit 20 together with the learning target object in the first positional relation. Specifically, in a case where the imaging unit 20 images one marker M together with the learning target object in the second positional relation, the one marker M may not be included in at least one marker M imaged by the imaging unit 20 together with the learning target object in the first positional relation. In a case where the imaging unit 20 images the plurality of markers M together with the learning target object in the second positional relation, at least a part of the plurality of markers M may not be included in at least one marker M imaged by the imaging unit 20 together with the learning target object in the first positional relation.

In a case where the stage ST is provided with only one marker M, the first learning image data may be generated by the imaging unit 20 imaging the one marker M together with the learning target object in the first positional relation, and the second learning image data may be generated by the imaging unit 20 imaging the one marker M together with the learning target object in the second positional relation. In this instance, the same marker M may be captured together with the learning target object, in an image indicated by the first learning image data and an image indicated by the second learning image data. Here, the first learning image data and the second learning image data are described in order to explain the marker M captured in the plurality of images respectively indicated by the plurality of pieces of learning image data, however, the imaging unit 20 may generate three or more pieces of learning image data, or may generate one piece of learning image data. The first positional relation and the second positional relation described above may be different from the first positional relation and the second positional relation illustrated in FIG. 7.

The image data (e.g., the learning image data) generated by the imaging unit 20 (e.g., at least one of the imaging apparatuses 21 and 22) may be provided with camera parameter information indicating a camera parameter at the time of imaging. The camera parameter conceptually includes at least one of a camera parameter for the single monocular camera serving as the imaging apparatus 21 and a camera parameter for the stereo camera serving as the imaging apparatus 22. That is, the camera parameter information may include at least one of information indicating the camera parameter for the single monocular camera serving as the imaging apparatus 21 and information indicating the camera parameter for the stereo camera serving as the imaging apparatus 22.

The camera parameter may include at least one of an internal parameter, an external parameter, and a distortion factor. The internal parameter may include at least one of a focal length, an optical center, and a shear coefficient/modulus. The external parameter may be determined by a rotation matrix and a translation vector.

Hereinafter, an example of a method in which the data generation part 111 of the arithmetic apparatus 110 generates the target position posture data and the target three-dimensional position data by using the learning image data will be described.

### (4-3-1) Processing of Generating Position Posture Data

The data generation part 111 detects at least one marker M provided on the stage ST captured in the image indicated by the learning image data. The data generation part 111 may calculate the position and posture of the stage ST, based on the detected at least one marker M. The data generation part 111 may calculate the position and posture of the stage ST, based on at least one marker M detected from the image indicated by the learning image data and the camera parameter information provided for the learning image data. A method of calculating the position and posture of the stage ST may be the same as the existing method. Therefore, a detailed description of the calculation method will be omitted. The calculated position and posture of the stage ST may be, for example, the position and posture of the stage ST in the global coordinate system, may be the position and posture of the stage ST in the 2D imaging coordinate system, and may be the position and posture of the stage ST in the 3D imaging coordinate system. The data generation part 111 may calculate only one of the position and posture of the stage ST. That is, the data generation part 111 may calculate at least one of the position and posture of the stage ST. At least one of the position and posture of the stage ST may be at least one of a position and posture of a representative point of the stage ST. The representative point of the stage ST includes at least one of a center of the stage ST, a center of gravity of the stage ST, an apex of the stage ST, a center of a surface of the stage ST, and a center of gravity of the surface of the stage ST. The representative point of the stage ST may be referred to as a feature point of the stage ST. The data generation part 111 may use such a constraint condition that the stage ST is a plane, when calculating at least one of the position and posture of the stage ST.

As described above, the data generation part 111 may calculate at least one of the position and posture of the stage ST, based on at least one marker M detected from the image indicated by the learning image data. Here, the stage ST may be provided with a plurality of markers M. In a case where the plurality of markers M are provided on the stage ST, at least one marker M is expectedly included in a field of view of the imaging unit 20 (i.e., at least one marker M is captured in the image indicated by the learning image data), regardless of the positional relation between the imaging unit 20 and the learning target object, when the learning target object disposed on the stage ST is imaged by the imaging unit 20. Furthermore, in a case where the plurality of markers M are provided on the stage ST, two or more markers M may be captured in the image indicated by the learned image. For example, at least one of the position and posture of the stage ST calculated based on two or more markers M, expectedly has higher accuracy than that of at least one of the position and posture of the stage ST calculated based on only one marker M. The calculated position of the stage ST may conceptually include a three-dimensional position of each of a plurality of points of the stage ST. Data indicating the three-dimensional position of each of the plurality of points of the stage ST may be, for example, depth image data, point cloud data, or the like.

As described above, the plurality of markers M may be provided on the stage ST such that at least one marker M is included in the field of view of the imaging unit 20 (i.e., at least one marker M is captured in the image indicated by the learning image data), regardless of the positional relation between the imaging unit 20 and the learning target object. Furthermore, the plurality of markers M may be provided on the stage ST in order to calculate at least one of the position and posture of the representative point (e.g., the center of gravity) of the stage ST, and at least one of the three-dimensional positions of the plurality of points of the stage ST (e.g., depth image, point cloud), with high precision.

The data generation part 111 may calculate a relative position and posture of the stage ST and the learning target object, by the matching processing using the learning image data. In addition to the image indicated by the learning image data, the data generation part 111 may perform the matching processing by using the camera parameter information provided for the learning image data, thereby calculating the relative position and posture of the stage ST and the learning target object. The data generation part 111 may calculate only one of the relative position and posture of the stage ST and the learning target object. That is, the data generation part 111 may calculate at least one of the relative position and posture of the stage ST and the learning target object.

The following processing may be performed when the 2D matching processing is performed as the matching processing. In this instance, the learning image data used in the 2D matching processing may be image data generated by the single monocular camera serving as the imaging apparatus 21 provided in the imaging unit 20, imaging the learning target object in the predetermined positional relation. Here, the image data are referred to as "image data IMG_2D#p1".

Typically, the desired projection pattern (e.g., the random dot pattern) is not projected on the learning target object captured in an image indicated by the image data IMG_2D#p1. That is, the image data IMG_2D#p1 are typically image data generated by the single monocular camera imaging, in the predetermined positional relation, the learning target object on which the desired projection pattern is not projected.

If the desired projection pattern is projected on the learning target object, the desired projection pattern is also projected on at least a part of the stage ST on which the learning target object is disposed. Then, the desired projection pattern may be superimposed on the marker M captured in the image indicated by the image data generated by the single monocular camera imaging the learning target object on which the desired projection pattern is projected. As a result, there is a possibility that the data generation part 111 is not allowed to detect the marker M captured in the image. In contrast, in a case of the image data generated by the single monocular camera imaging the learning target object on which the desired projection pattern is not projected, it is possible to properly detect the marker M captured in the image indicated by the image data. The image data IMG_2D#p1 may be image data generated by the single monocular camera imaging, in the predetermined positional relation, the learning target object on which the desired projection pattern is projected.

The data generation part 111 generates reference image data IMG_2M by using the CAD data corresponding to the learning target object. The reference image data IMG_2M may be two-dimensional image data indicating two-dimensional models of a plurality of learning target objects generated by virtually projecting the three-dimensional model of the learning target object indicated by the CAD data corresponding to the learning target object, from a plurality of different directions on a virtual plane that is perpendicular to the plurality of different directions. Therefore, the reference image data IMG_2M may be referred to as model data about the learning target object. The reference image data IMG_2M may be the same as the above-described two-dimensional model data IMG_2M (see "(2-2) 2D Matching Processing"). The data generation part 111 may perform, on the image data IMG_2D#p1, the matching processing using the learning target object captured in a two-dimensional image indicated by the reference image data IMG_2M as a template. The data generation part 111 may not generate the reference image data IMG_2M. The data generation part 111 may read out the reference image data IMG_2M stored in the storage apparatus 120 and use them as described later.

The data generation part 111 may translate, enlarge, reduce, and/or rotate the learning target object captured in the two-dimensional image indicated by the reference image data IMG_2M such that a feature portion (e.g., at least one of a feature point and an edge) of the learning target object captured in the two-dimensional image indicated by the reference image data IMG_2M approaches (typically, matches) a feature portion of the learning target object captured in the image indicated by the image data IMG_2D#p1. That is, the data generation part 111 may change a positional relation between a coordinate system of the reference image data IMG_2M (e.g., a coordinate system of the CAD model) and a 2D imaging coordinate system based on the imaging apparatus 21 imaging the learning target object, such that the feature portion of the learning target object captured in the two-dimensional image indicated by the reference image data IMG_2M approaches (typically, matches) the feature portion of the learning target object captured in the image indicated by the image data IMG_2D#p1.

The data generation part 111 may not translate, enlarge, reduce, and/or rotate the learning target object captured in the two-dimensional image indicated by the reference image data IMG_2M such that the feature portion of the learning target object captured in the two-dimensional image indicated by the reference image data IMG_2M approaches the feature portion of the learning target object that is captured in the image indicated by the image data IMG_2D#p1. The user may translate, enlarge, reduce, and/or rotate, via the input apparatus 140, the learning target object captured in the two-dimensional image indicated by the reference image data IMG_2M displayed on a display, such that it approaches (typically, matches) the learning target object in the image indicated by the image data IMG_2D#p1 displayed on a display serving as the output apparatus 150. In this case, after the user translates, enlarges, reduces, and/or rotates the learning target object captured in the two-dimensional image indicated by the reference image data IMG_2M such that it approaches (typically, matches) the learning target object captured in the image indicated by the image data IMG_2D#p1, the data generation part 111 may further perform the matching processing described above. In this case, the data generation part 111 may minutely and repeatedly translate, enlarge, reduce, and/or rotate, by differential evolution, the learning target object captured in the two-dimensional image indicated by the reference image data IMG_2M such that the feature portion of the learning target object captured in the two-dimensional image indicated by the reference image data IMG_2M approaches (typically, matches) the feature portion of the learning target object captured in the image indicated by the image data IMG_2D#p1.

Even in a case where the user does not translate, enlarge, reduce, and/or rotate the learning target object captured in the two-dimensional image indicated by the reference image data IMG_2M such that it approaches (typically, matches) the learning target object in the image indicated by the image data IMG_2D#p1, the data generation part 111 may minutely and repeatedly translate, enlarge, reduce, and/or rotate, by differential evolution, the learning target object captured in the two-dimensional image indicated by the reference image data IMG_2M such that the feature portion of the learning target object captured in the two-dimensional image indicated by the reference image data IMG_2M approaches (typically, matches) the feature portion of the learning target object captured in the image indicated by the image data IMG_2D#p1.

As a result of the above-described 2D matching processing, the data generation part 111 is allowed to identify the positional relation between the coordinate system of the reference image data IMG_2M and the 2D imaging coordinate system. Thereafter, the data generation part 111 may calculate the position and posture of the learning target object in the 2D imaging coordinate system, from the position and posture of the learning target object in the coordinate system of the reference image data IMG_2M, based on the positional relation between the coordinate system of the reference image data IMG_2M and the 2D imaging coordinate system. The calculated position and posture of the learning target object in the 2D imaging coordinate system may be a position and posture of the center of gravity of the learning target object in the 2D imaging coordinate system. The data generation part 111 may generate data indicating the calculated position and posture of the learning target object in the 2D imaging coordinate system (e.g., the position and posture of the center of gravity of the learning target object in the 2D imaging coordinate system), as target position posture data about the 2D matching processing.

Here, the target position posture data about the 2D matching processing means position posture data indicating at least one of the position and posture in the 2D imaging coordinate system of the learning target object, which serve as a target/goal that the learning object recognition part 112 allows at least one of the position and posture in the 2D imaging coordinate system of the learning target object captured in the image indicated by the learning image data, to approach (typically, match) in the 2D matching processing using the learning image data.

The differential evolution allows the feature portion of the learning target object captured in the two-dimensional image indicated by the reference image data IMG_2M to approach (typically, match) the feature portion of the learning target object captured in the image indicated by the image data IMG_2D#p1 with high precision. Therefore, in a case where the positional relation between the coordinate system of the reference image data IMG_2M and the 2D imaging coordinate system is identified by the differential evolution in the above-described 2D matching processing, the position and posture of the learning target object in the 2D imaging coordinate system calculated based on the identified positional relation, is expectedly a position and posture that are as close to a true value as possible.

As described above, in the 2D matching processing performed by the data generation part 111, it is possible to calculate the position and posture that are as close to a true value as possible, of the learning target object in the 2D imaging coordinate system. That is, it can be said that the 2D matching processing performed by the data generation part 111 is the 2D matching processing that allows at least one of the position and posture of the learning target object in the 2D imaging coordinate system to be calculated with high precision. Therefore, the 2D matching processing performed by the data generation part 111 may be referred to as high-precision matching processing. Therefore, the 2D matching processing performed by the data generation part 111 will be hereafter referred to as "high-precision matching processing" as appropriate.

In the 2D matching processing described above, not only the differential evolution, but also a method (algorithm) differing from the differential evolution may be used. The data generation part 111 may calculate only one of the position and posture of the learning target object in the 2D imaging coordinate system, based on the identified positional relation between the coordinate system of the reference image data IMG_2M and the 2D imaging coordinate system. That is, the data generation part 111 may calculate at least one of the position and posture of the learning target object in the 2D imaging coordinate system, based on the identified positional relation between the coordinate system of the reference image data IMG_2M and the 2D imaging coordinate system.

The high-precision matching processing is suitable for calculation (generation) of the target position posture data, as it is allowed to calculate at least one of the position and posture of the learning target object in the 2D imaging coordinate system with high precision. On the other hand, the high-precision matching processing requires a relatively long time. Therefore, from the viewpoint of a processing speed of the robot, it is not realistic for the processing object recognition part 115 to perform the 2D matching processing that is the same as or similar to the high-precision matching processing. The same applies to the learning object recognition part 112 that performs the 2D matching processing that is the same as or similar to the 2D matching processing performed by the processing object recognition part 115. Therefore, the 2D matching processing performed by the processing object recognition part 115 and the learning object recognition part 112 differs from the high-precision matching processing in that the processing speed is higher than that of the high-precision matching processing. The 2D matching processing performed by the processing object recognition part 115 and the learning object recognition part 112 differs from the high-precision matching processing in that the accuracy is lower than that of the high-precision matching processing.

As described above, in the image indicated by the image data IMG_2D#p1 serving as the learning image data, the learning target object disposed in the stage ST is captured together with at least one marker M disposed on the stage ST. The data generation part 111 may calculate at least one of the position and posture of the stage ST in the 2D imaging coordinate system (e.g., the position and posture of the center of the stage ST in the 2D imaging coordinate system), based on at least one marker M detected from the image indicated by the image data IMG_2D#p1. Consequently, the data generation part 111 may calculate at least one of a relative position and posture in the 2D imaging coordinate system of the stage ST and the learning target object, from at least one of the position and posture of the learning target object in the 2D imaging coordinate system described above and from at least one of the position and posture of the stage ST in the 2D imaging coordinate system.

At least one of the position and posture of the stage ST calculated by the data generation part 111 based on the at least one marker M detected from the image indicated by the learning image data (e.g., the image data IMG_2D#p1), may be at least one of the position and posture of the stage ST in the global coordinate system, for example. In this instance, the data generation part 111 may transform at least one of the position and posture of the stage ST in the global coordinate system into at least one of the position and posture of the stage ST in the 2D imaging coordinate system, by using the transformation matrix for transforming the position and posture in the global coordinate system into the position and posture in the 2D imaging coordinate system.

Then, in a case where the data generation part 111 calculates at least one of the position and posture of the learning target object captured in an image indicated by image data IMG_2D#p2 differing from the image data IMG_2D#p1, the following processing may be performed. Here, the relative position and posture of the stage ST and the learning target object captured in the image indicated by the image data IMG_2D#p1 are assumed to be the same as a relative position and posture of the stage ST and the learning target object captured in the image indicated by the image data IMG_2D#p2. That is, the image data IMG_2D#p1 and the image data IMG_2D#p2 are image data generated by the single monocular camera serving as the imaging apparatus 21 provided in the imaging unit 20, imaging the learning target object, without changing the relative position and posture of the stage ST and the learning target object, but with changing the positional relation between the imaging unit 20 and the learning target object.

In this instance, the data generation part 111 may calculate at least one of the position and posture of the stage ST in the 2D imaging coordinate system, based on at least one marker M detected from the image indicated by the image data IMG_2D#p2. The data generation part 111 may calculate at least one of the position and posture in the 2D imaging coordinate system of the learning target object captured in the image indicated by the image data IMG_2D#p2, based on (i) at least one of the position and posture of the stage ST in the 2D imaging coordinate system calculated based on the image data IMG_2D#p2, and (ii) at least one of the relative position and posture in the 2D imaging coordinate system of the stage ST and the learning target object calculated based on the image data IMG_2D#p1.

As an example, the data generation part 111 may calculate a transformation matrix for transforming at least one of the position and posture of the stage ST in the 2D imaging coordinate system calculated based on the image data IMG_2D#p1, into at least one of the position and posture of the stage ST in the 2D imaging coordinate system calculated based on the image data IMG_2D#p2, from at least one of the position and posture of the stage ST in the 2D imaging coordinate system calculated based on the image data IMG_2D#p2, and from at least one of the position and posture of the stage ST in the 2D imaging coordinate system calculated based on the image data IMG_2D#p1. Using the calculated transformation matrix, the data generation part 111 may transform at least one of the relative position and posture in the 2D imaging coordinate system of the stage ST and the learning target object calculated based on the image data IMG_2D#p1, into at least one of the relative position and posture in the 2D imaging coordinate system of the stage ST and the learning target object captured in the image indicated by the image data IMG_2D#p2. The data generation part 111 may calculate at least one of the position and posture in the 2D imaging coordinate system of the learning target object captured in the image indicated by the image data IMG_2D#p2, based on at least one of the position and posture of the stage ST in the 2D imaging coordinate system calculated based on the image data IMG_2D#p2 and based on the transformed at least one of the relative position and posture in the 2D imaging coordinate system of the stage ST and the learning target object.

Of the plurality of pieces of learning image data generated by the single monocular camera serving as the imaging apparatus 21 provided in the imaging unit 20, imaging the learning target object, without changing the relative position and posture of the stage ST and the learning target object, but with changing the positional relation between the imaging unit 20 and the learning target object, one piece of learning image data may be used to perform the above-described high-precision matching processing and to calculate at least one of the position and posture in the 2D imaging coordinate system of the learning target object captured in an image indicated by the one piece of learning image data. At least one of the position and posture in the 2D imaging coordinate system of the learning target object captured in an image(s) indicated by remaining pieces of learning image data of the plurality of pieces of learning image data, may be calculated based on at least one of the relative position and posture in the 2D imaging coordinate system of the stage ST and the learning target object captured in the image indicated by the one piece of learning image data, and based on at least one of the position and posture in the 2D imaging coordinate system of the stage ST captured in the image(s) indicated by the remaining pieces of learning image data. That is, the above-described high-precision matching processing may not be performed on the remaining pieces of the plurality of pieces of learning image data.

Here, the above-described high-precision matching processing requires a relatively long time. If it is possible to avoid the high-precision matching processing in the calculation of at least one of the position and posture in the 2D imaging coordinate system of the learning target object captured in the image(s) indicated by remaining pieces of the plurality of pieces of learning image data, it is possible to reduce a time required for the calculation of at least one of the position and posture in the 2D image imaging coordinate system of the learning target object captured in the image(s) indicated by remaining pieces of learning image data.

In addition, the high-precision matching processing using each of the plurality of pieces of learning image data may be performed, in order to calculate at least one of the position and posture in the 2D image imaging coordinate system of the learning target object captured in each of the plurality of images respectively indicated by the plurality of pieces of learning image data.

The image data IMG_2D#p1 serving as the learning image data may be generated by the single monocular camera serving as the imaging apparatus 21, imaging the learning target object, as described above. Therefore, the image data IMG_2D#p1 may be referred to as the first learning image data and/or first monocular image data. The image data IMG_2D#p2 serving as the learning image data may also be generated by the single monocular camera serving as the imaging apparatus 21, imaging the learning target object, as described above. Therefore, the image data IMG_2D#p2 may be referred to as the second learning image data and/or second monocular image data.

That is, the learning image data may conceptually include the first monocular image data and the second monocular image data. The learning image data may conceptually include another piece of monocular image data, in addition to the first monocular image data and the second monocular image data. The learning image data may conceptually include only one of the first monocular image data and the second monocular image data. That is, the learning image data may conceptually include at least one of the first monocular image data and the second monocular image data.

The position in the 2D imaging coordinate system of the learning target object captured in the image indicated by the image data IMG_2D#p1, which is calculated by the data generation part 111 performing the 2D matching processing using the image data IMG_2D#p1 and the reference image data IMG_2M, may be referred to as a first learning object position, as the image data IMG_2D#p1 may be referred to as the first learning image data and/or first monocular image data. Similarly, the posture in the 2D imaging coordinate system of the learning target object captured in the image indicated by the image data IMG_2D#p1, which is calculated by the data generation part 111 performing the 2D matching processing using the image data IMG_2D#p1 and the reference image data IMG_2M, may be referred to as a first learning object posture.

The position in the 2D imaging coordinate system of the stage ST, which is calculated by the data generation part 111 based on at least one marker M provided on the stage ST captured in the image indicated by the image data IMG_2D#p1, may be referred to as a first stage position, as the image data IMG_2D#p1 may be referred to as the first learning image data and/or first monocular image data. Similarly, the posture in the 2D imaging coordinate system of the stage ST, which is calculated by the data generation part 111 based on at least one marker M provided on the stage ST captured in the image indicated by the image data IMG_2D#p1, may be referred to as a first stage posture.

The position in the 2D imaging coordinate system of the stage ST, which is calculated by the data generation part 111 based on at least one marker M provided on the stage ST captured in the image indicated by the image data IMG_2D#p2, may be referred to as a second stage position, as the image data IMG_2D#p2 may be referred to as the second learning image data and/or second monocular image data. Similarly, the posture in the 2D imaging coordinate system of the stage ST, which is calculated by the data generation part 111 based on at least one marker M provided on the stage ST captured in the image indicated by the image data IMG_2D#p2, may be referred to as a second stage posture.

In a case where the imaging unit 20 includes the single monocular camera serving as the imaging apparatus 21 and the stereo camera serving as the imaging apparatus 22, the data generation part 111 may generate target position posture data about the 3D matching processing, based on the position posture data about the 2D matching processing (e.g., the position posture data indicating at least one of the position and posture of the learning target object captured in the image indicated by #p1 data IMG_2D#p1).

Here, the target position posture data about the 3D matching processing means position posture data indicating at least one of the position and posture in the 3D imaging coordinate system of the learning target object, which serve as a target/goal that the learning object recognition part 112 allows at least one of the position and posture in the 3D imaging coordinate system of the learning target object captured in the image indicated by the learning image data, to approach (typically, match) in the 3D matching processing using the learning image data.

Specifically, the data generation part 111 may transform at least one of the position and posture in the 2D imaging coordinate system of the learning target object indicated by the position posture data about the 2D matching processing, into at least one of the position and posture in the 3D imaging coordinate system of the learning target object, by using a transformation matrix M₂₃ for transforming the position and posture in the 2D imaging coordinate system into the position and posture in the 3D imaging coordinate system. At this time, if at least one of the position and posture of the learning target object in the 2D imaging coordinate system is as close to a true value as possible, at least one of the position and posture in the 3D imaging coordinate system of the learning target object transformed by using the transformation matrix M₂₃, is also as close to a true value as possible.

The data generation part 111 may generate data indicating at least one of the position and posture in the 3D imaging coordinate system of the learning target object transformed by using the transformation matrix M₂₃, as the target position posture data about the 3D matching processing. The transformation matrix M₂₃ may be calculated by a mathematical method, from an external parameter indicating the positional relation between the imaging apparatus 21 and the imaging apparatus 22.

In a case where the imaging unit 20 does not include the single monocular camera serving as the imaging apparatus 21, but includes the stereo camera serving as the imaging apparatus 22, the data generation part 111 may calculate at least one of the position and posture of the learning target object, by using the image data (i.e., the two-dimensional image data) generated by one of two monocular cameras provided in the stereo camera serving as the imaging apparatus 22, imaging the learning target object on which the patterned light is not projected from the projection apparatus 23 provided in the imaging unit 20, in the predetermined positional relation, for example. In this case, at least one of the position and posture of the learning target object calculated by the data generation part 111, may be at least one of the position and posture of the learning target object in the 3D imaging coordinate system based on the imaging apparatus 22. At least one of the position and posture of the learning target object may be calculated by a method that is the same as or similar to the above-described high-precision matching processing. The data generation part 111 may generate data indicating at least one of the position and posture in the 3D imaging coordinate system of the learning target object, as the target position posture data about the 3D matching processing.

In this case, upon generation of target three-dimensional position data described later, it is not necessary to transform the position and posture of the learning target object into the position and posture of the learning target object in the 3D imaging coordinate system. That is, there is no need to change a viewpoint of the single monocular camera serving as the imaging apparatus 21 to a viewpoint of one of the two monocular cameras of the stereo camera serving as the imaging apparatus 22.

### (4-3-2) Processing of Generating Three-Dimensional Position Data

In a case where the imaging unit 20 includes the single monocular camera serving as the imaging apparatus 21 and the stereo camera serving as the imaging apparatus 22, the data generation part 111 may generate the three-dimensional position data, by using the image data generated by the single monocular camera serving as the imaging apparatus 21 imaging the learning target object. Here, an example of the image data generated by the single monocular camera serving as the imaging apparatus 21 imaging the learning target object, is the image data IMG_2D#p1 described above.

The data generation part 111 may perform, on the image data IMG_2D#p1, viewpoint change processing for changing the viewpoint of the single monocular camera serving as the imaging apparatus 21 to the viewpoint of one of the two monocular cameras of the stereo camera serving as the imaging apparatus 22. The viewpoint change processing may be performed by using the transformation matrix M₂₃. Since various existing targets are applicable to the viewpoint change processing, a detailed explanation thereof is omitted.

The data generation part 111 may detect at least one marker M provided on the stage ST (as an example, each of a plurality of markers M provided on the stage ST) captured in the image indicated by the image data IMG_2D#p1 subjected to the viewpoint change processing. The data generation part 111 may calculate at least one of a three-dimensional position and posture in the 3D imaging coordinate system of the detected at least one marker M (as an example, each of the plurality of markers M provided on the stage-stage ST). Since the image indicated by the image data IMG_2D#p1 subjected to the viewpoint change processing, is an image from the viewpoint of one of the two monocular cameras of the stereo camera serving as the imaging apparatus 22, the calculated at least one of the position and posture of at least one marker M is at least one of the position and posture in the 3D imaging coordinate system based on the imaging apparatus 22.

The data generation part 111 may calculate the three-dimensional position of each of the plurality of points of the stage ST, based on at least one of the position and posture in the 3D imaging coordinate system of at least one marker M (as an example, each of the plurality of markers M provided on the stage ST) and based on such a constraint condition that the stage ST is a plane. The data generation part 111 may not use the constraint condition that the stage ST is a plane.

The data generation part 111 may transform at least one of the position and posture in the 2D imaging coordinate system of the stage ST captured in the image indicated by the image data IMG_2D#p1 (i.e., the image indicated by the image data before the viewpoint change processing is performed), into at least one of the position and posture in the 3D imaging coordinate system of the stage ST, by using the transformation matrix M₂₃. Then, the data generation part 111 may use the transformed at least one of the position and posture in the 3D imaging coordinate system of the stage ST, when calculating the three-dimensional position of each of the plurality of points of the stage ST. In this way, it is possible to calculate a more accurate three-dimensional position of each of the plurality of points of the stage ST.

The data generation part 111 may transform at least one of the position and posture in the 2D imaging coordinate system of the learning target object captured in the image indicated by the image data IMG_2D#p1 calculated by the high-precision matching processing (see "(4-3-1) Processing of Generating Position Posture Data"), into at least one of the position and posture in the 3D imaging coordinate system of the learning target object, by using the transformation matrix M₂₃. Here, at least one of the position and posture in the 2D imaging coordinate system of the learning target object calculated by the high-precision matching processing, is as close to a true value as possible (see "(4-3-1) Processing of Generating Position Posture Data"). Therefore, it can be said that at least one of the position and posture in the 3D imaging coordinate system of the learning target object transformed by using the transformation matrix M₂₃, is as close to a true value as possible.

The data generation part 111 may change a positional relation between the learning target object captured in the image indicated by the image data IMG_2D#p1 subjected to the viewpoint change processing and the two-dimensional model of the learning target object, such that the two-dimensional model of the learning target object captured in the two-dimensional image indicated by the reference image data IMG_2M approaches (typically, matches) the learning target object captured in the image indicated by the image data IMG_2D#p1 subjected to the viewpoint change processing, based on the transformed at least one of the position and posture in the 3D imaging coordinate system of the learning target object. That is, the data generation part 111 may position the two-dimensional model of the learning target object.

The data generation part 111 may calculate the three-dimensional position of each of the plurality of points of the learning target object, from the two-dimensional model of the learning target object, based on a result of positioning of the two-dimensional model of the learning target object. The data generation part 111 may generate data indicating the calculated three-dimensional position of each of the plurality of points of the stage ST and the calculated three-dimensional position of each of the plurality of points of the learning target object, as target three-dimensional position data. The target three-dimensional position data may be depth image data, or may be point cloud data, for example.

The data generation part 111 may position the two-dimensional model of the learning target object, based on the transformed at least one of the position and posture in the 3D imaging coordinate system of the learning target object (i.e., based on at least one of the position and posture that are as close to a true value as possible, in the 3D imaging coordinate system of the learning target object). Therefore, the data generation part 111 is allowed to position the two-dimensional model of the learning target object, on the learning target object captured in the image indicated by the image data IMG_2D#p1 subjected to the viewpoint change processing, with high precision. Therefore, the three-dimensional position of each of the plurality of points of the learning target object calculated based on the result of the positioning of the two-dimensional model of the learning target object, is expectedly as close to a true value as possible.

The data generation part 111 may generate the target three-dimensional position data by the following method, in addition to or in place of the above-described method of generating the three-dimensional position data.

As a prerequisite, the image data IMG_2D#p1 are assumed to be generated by the single monocular camera serving as the imaging apparatus 21 provided in the imaging unit 20, imaging the learning target object on which the projection pattern is not projected, in the predetermined positional relation. Furthermore, image data IMG_3D#p1 are assumed to be generated by the stereo camera serving as the imaging apparatus 22 provided in the imaging unit 20, imaging the learning target object on which the projection pattern is not projected, in the predetermined positional relation. In addition, image data IMG_3D#p2 are assumed to be generated by the stereo camera serving as the imaging apparatus 22 provided in the imaging unit 20, imaging the learning target object on which the projection pattern is projected, in the predetermined positional relation.

The data generation part 111 may calculate at least one of the position and posture in the 2D imaging coordinate system of the learning target object indicated by the image data IMG_2D#p1, by performing the high-precision matching processing using the image data IMG_2D#p1 (see "(4-3-1) Processing of Generating Position Posture Data").

The data generation part 111 may detect at least one marker M captured in an image indicated by one of two pieces of image data included in the image data IMG_3D#p1 (i.e., two pieces of image data respectively captured by the two monocular cameras of the stereo camera). The data generation part 111 may calculate at least one of the position and posture in the 3D imaging coordinate system of the stage ST, based on the detected at least one marker M. The above one of the pieces of image data corresponds to, for example, the image data IMG_2D#p1 subjected to the viewpoint change processing.

The data generation part 111 may transform the calculated at least one of the position and posture in the 2D imaging coordinate system of the learning target object, into at least one of the position and posture in the 3D imaging coordinate system, by using the transformation matrix M₂₃. The transformed at least one of the position and posture in the 3D imaging coordinate system of the learning target object, corresponds to at least one of the position and posture in the 3D imaging coordinate system of the learning target object captured in the image indicated by the one of the pieces of image data. At least one of the position and posture in the 2D imaging coordinate system of the learning target object calculated by the high-precision matching processing, is as close to a true value as possible (see "(4-3-1) Processing of Generating Position Posture Data"). Therefore, it can be said that at least one of the position and posture in the 3D imaging coordinate system of the learning target object transformed by using the transformation matrix M₂₃, is also as close to a true value as possible.

The data generation part 111 may perform association, by a well-known method such as SGBM and SAD, between parts (e.g., pixels) of images respectively indicated by two pieces of image data included in the image data IMG_3D#p2. Consequently, the data generation part 111 may calculate the three-dimensional position of each of the plurality of points of the object (e.g., the learning target object, or the learning target object and the stage ST) captured in the images indicated by the two pieces of image data included in the image data IMG_3D#p2.

The data generation part 111 may calculate the three-dimensional position of each of the plurality of points of the learning target object and the stage ST, based on at least one of the position and posture in the 3D imaging coordinate system of the stage ST, based on at least one of the position and posture in the 3D imaging coordinate system of the learning target object, and based on the three-dimensional position of each of the plurality of points of the object.

Specifically, the data generation part 111 may calculate the three-dimensional position of each of the plurality of points of the learning target object and the stage ST, for example, by changing the three-dimensional position of each of the object such that at least one of the position and posture in the 3D imaging coordinate system of the stage 3D calculated based on the three-dimensional position of each of the plurality of points of the object approaches (typically, matches) at least one of the position and posture in the 3D imaging coordinate system of the stage 3D calculated based on one of the two pieces of image data included in the image data IMG_3D#p1, and such that at least one of the position and posture in the 3D imaging coordinate system of the learning target object calculated based on the three-dimensional position of each of the plurality of points of the object approaches (typically, matches) at least one of the position and posture in the 3D imaging coordinate system of the learning target object transformed by using the transformation matrix M₂₃.

The data generation part 111 may generate data indicating the three-dimensional position of each of the plurality of points of the learning target object and the stage ST, as the target three-dimensional position data. The data generation part 111 may calculate the three-dimensional position of each of the plurality of points of the learning target object, by changing the three-dimensional position of each of the plurality of points of the object such that at least one of the position and posture in the 3D imaging coordinate system of the learning target object calculated based on the three-dimensional position of each of the plurality of points of the object approaches (typically, matches) at least one of the position and posture in the 3D imaging coordinate system of the learning target object transformed by using the transformation matrix M₂₃ (i.e., at least one of the position and posture that are as close to a true value as possible, in the 3D imaging coordinate system of the learning target object). Therefore, the three-dimensional position of each of the plurality of points of the learning target object is expectedly as close to a true value as possible. In a case where the imaging unit 20 does not include the stereo camera serving as the imaging apparatus 22, but includes the single monocular camera serving as the imaging apparatus 21, the data generation part 111 may not generate the three-dimensional position data.

### (4-3-3) Others

The data generation part 111 may generate at least one of displacement data about the 2D tracking processing and displacement data about the 3D tracking processing. Here, the displacement data about the 2D tracking processing means displacement data indicating a displacement of at least one of the position and posture in the 2D imaging coordinate system of the learning target object, which serve as a target/goal that the learning object recognition part 112 allows a displacement of at least one of the position and posture in the 2D imaging coordinate system of the learning target object captured in the plurality of images respectively indicated by the plurality of pieces of learning image data, to approach (typically, match) in the 2D tracking processing using the plurality of pieces of learning image data obtained at different times. Therefore, the displaced data about the 2D tracking processing generated by the data generation part 111 may be rephrased as target data indicating a target/goal in the 2D tracking processing using the plurality of pieces of learning image data. Therefore, the displacement data about the 2D tracking processing generated by the data generation part 111 will be hereafter referred to as "target displacement data about the 2D tracking processing" as appropriate.

The displacement data about the 3D tracking processing means displacement data indicating a displacement of at least one of the position and posture in 3D imaging coordinate system of the learning target object, which serve as a target/goal that the learning object recognition part 112 allows a displacement of at least one of the position and posture in the 3D imaging coordinate system of the learning target object captured in the plurality of images respectively indicated by the plurality of pieces of learning image data, to approach (typically, match) in the 3D tracking processing using the plurality of pieces of learning image data obtained at different times. Therefore, the displaced data about the 3D tracking processing generated by the data generation part 111 may be rephrased as target data indicating a target/goal in the 3D tracking processing using the plurality of pieces of learning image data. Therefore, the displacement data about the 3D tracking processing generated by the data generation part 111 will be hereafter referred to as "target displacement data about the 3D tracking processing" as appropriate. In addition, the target displacement data about the 2D tracking processing and the target displacement data about the 3D tracking processing are collectively referred to as "target displacement data" as appropriate.

In a case where the relative positional relation between the imaging unit 20 and the learning target object is the first positional relation, the single monocular camera serving as the imaging apparatus 21 provided in the imaging unit 20, images the learning target object and generates the learning image data that are assumed to be image data IMG_2D#p3. After the image data IMG_2D#p3 are generated, for example, the single monocular camera serving as the imaging apparatus 21 provided in the imaging unit 20, images the learning target object in the second positional relation in which the learning target object is displaced with respect to the imaging unit 20, and generates the learning image data that are assumed to be image data IMG_2D#p4.

The data generation part 111 may perform the high-precision matching processing (see "(4-3-1) Processing of Generating Position Posture Data") by using the image data IMG_2D#p3 and the image data IMG_2D#p4 and may calculate at least one of the position and posture in the 2D imaging coordinate system of the learning target object captured in an image indicated by the image data IMG_2D#p3 and at least one of the position and posture in the 2D imaging coordinate system of the learning target object captured in an image indicated by the image data IMG_2D#p4. The data generation part 111 may generate the target displacement data about the 2D tracking processing, by calculating a difference between at least one of the position and posture in the 2D imaging coordinate system of the learning target object captured in the image indicated by the image data IMG_2D#p3 and at least one of the position and posture in the 2D imaging coordinate system of the learning target object captured in the image indicated by the image data IMG_2D#p4.

At least one of the position and posture in the 2D imaging coordinate system of the learning target object calculated by the high-precision matching processing, is as close to a true value as possible (see "(4-3-1) Processing of Generating Position Posture Data"). Therefore, it can be said that the change amount (corresponding to the above difference) of at least one of the position and posture indicated by the target displacement data about the 2D tracking processing, which is generated by calculating the difference between at least one of the position and posture in the 2D imaging coordinate system of the learning target object captured in the image indicated by the image data IMG_2D#p and at least one of the position and posture in the 2D imaging coordinate system of the learning target object captured in the image indicated by the image data IMG_2D#p4, is also as close to a true value as possible.

The data generation part 111 may transform at least one of the position and posture in the 2D imaging coordinate system of the learning target object captured in the image indicated by the image data IMG_2D#p3, into at least one of the position and posture in the 3D imaging coordinate system of the learning target object, by using the transformation matrix M₂₃. The data generation part 111 may transform at least one of the position and posture in the 2D imaging coordinate system of the learning target object captured in the image indicated by the image data IMG_2D#p4, into at least one of the position and posture in the 3D imaging coordinate system of the learning target object, by using the transformation matrix M₂₃.

The data generation part 111 may generate the target displacement data about the 3D tracking processing, by calculating a difference between the transformed at least one of the position and posture in the 3D imaging coordinate system of the learning target object relating to the image data IMG_2D#p3 and the transformed at least one of the position and posture in the 3D imaging coordinate system of the learning target object relating to the image data IMG_2D#p4.

As described above, at least one of the position and posture in the 2D imaging coordinate system of the learning target object calculated by the high-precision matching processing, is as close to a true value as possible (see "(4-3-1) Processing of Generating Position Posture Data"). Therefore, it can be said that at least one of the position and posture in the 3D imaging coordinate system of the learning target object transformed by using the transformation matrix M₂₃, is as close to a true value as possible. Therefore, it can be said that the change amount (corresponding to the above difference) of at least one of the position and posture indicated by the target displacement data about the 3D tracking processing, which is generated by calculating the difference between the transformed at least one of the position and posture in the 3D imaging coordinate system of the learning target object relating to the image data IMG_2D#p3 and the transformed at least one of the position and posture in the 3D imaging coordinate system of the learning target object relating to the image data IMG_2D#p4, is also as close as possible to a true value.

At least one of the target position posture data and the target three-dimensional position data generated by the data generation part 111 of the arithmetic apparatus 110, may be stored in the storage apparatus 120 in association with the learning image data used to generate the target position posture data and the target three-dimensional position data (e.g., the image data generated by the imaging unit 20 imaging the learning target object in the predetermined positional relation).

In a case where the imaging unit 20 images the learning target object in the first positional relation, the learning image data generated by the imaging unit 20 imaging the learning target object are assumed to be the first learning image data. Furthermore, in a case where the imaging unit 20 images the learning target object in the second relation differing from the first positional relation, the learning image data generated by the imaging unit 20 imaging the learning target object are assumed to be the second learning image data. The first positional relation and the second positional relation may be the same as or different from the first positional relation and the second positional relation illustrated in FIG. 7, respectively.

The first learning image data may include the first monocular image data indicating an image generated by the single monocular camera serving as the imaging apparatus 21 provided in the imaging unit 20, imaging the learning target object. The first learning image data may include first stereo image data indicating an image generated by the stereo camera serving as the imaging apparatus 22 provided in the imaging unit 20, imaging the learning target object.

The second learning image data may include the second monocular image data indicating an image generated by the single monocular camera serving as the imaging apparatus 21 provided in the imaging unit 20, imaging the learning target object. The second learning image data may include second stereo image data indicating an image generated by the stereo camera serving as the imaging apparatus 22 provided in the imaging unit 20, imaging the learning target object.

The data generation part 111 may generate first target position posture data serving as the target position posture data indicating at least one of the position and posture in the 2D imaging coordinate system of the learning target object captured in the image indicated by the first monocular image data, based on the first monocular image data included in the first learning image data. The data generation part 111 may generate first target three-dimensional position data serving as the target three-dimensional position data indicating the three-dimensional position of each of the plurality of points of the object (e.g., at least one of the learning target object and the stage ST) captured in the image indicated by the first stereo image data, based on the first target position posture data and the first stereo image data.

The first learning image data including the first monocular image data and the first stereo image data may be associated with the first target position posture data and the first target three-dimensional position data.

The data generation part 111 may generate second target position posture data serving as the target position posture data indicating at least one of the position and posture in the 2D imaging coordinate system of the learning target object captured in the image indicated by the second monocular image data, based on the second monocular image data included in the second learning image data. The data generation part 111 may generate second target three-dimensional position data serving as the target three-dimensional position data indicating the three-dimensional position of each of the plurality of points of the object (e.g., at least one of the learning target object and the stage ST) captured in the image indicated by the second stereo image data, based on the second target position posture data and the second stereo image data.

The second learning image data including the second monocular image data and the second stereo image data may be associated with the second target position posture data and the second target three-dimensional position data.

The first learning image data generated when the imaging unit 20 images the learning target object in the first positional relation, may be associated with the first target position posture data and the first target three-dimensional position data. Furthermore, the second learning image data generated when the imaging unit 20 images the learning target object in the second positional relation, may be associated with the second target position posture data and the second target three-dimensional position data. Thus, the number of pieces of learning image data corresponds to the number of positional relations in which the imaging unit 20 images the learning target object. Therefore, each of the number of pieces of target position posture data and the number of pieces of target three-dimensional position data, corresponds to the number of the positional relations in which the imaging unit 20 images the learning target object.

As described in "(4-1) Outline", the learning object recognition part 112 may change at least one of: one or more types of processing parameters in the matching processing; and one or more types of processing parameters in the preprocessing performed on the first learning image data, such that at least one of the position and posture of the learning target object calculated by performing the matching processing using the first learning image data (at least one of the position and posture calculated by the learning object recognition part 112) approaches (typically, matches) at least one of the position and posture of the learning target object indicated by the first target position posture data associated with the first learning image data.

**In** addition, the learning object recognition part 112 may change at least one of: one or more types of processing parameters in the position calculation processing; and one or more types of processing parameters in the preprocessing performed on the first learning image data, such that the three-dimensional position of each of the plurality of points of the learning target object calculated by performing the position calculation processing using the first learning image data (the three-dimensional position of each of the plurality of points calculated by the learning object recognition part 112) approaches (typically, matches) the three-dimensional position of each of the plurality of points of the learning target object indicated by the first target three-dimensional position data associated with the first learning image data.

The learning object recognition part 112 may output first output data including at least one of: one or more types of processing parameters in the matching processing; one or more types of processing parameters in the position calculation processing; and one or more types of processing parameters in the preprocessing performed on the first learning image data, as a result of performing at least one of the matching processing and the position calculation processing. The first learning image data may be associated with the first output data.

The learning object recognition part 112 may change at least one of: one or more types of processing parameters in the matching processing; and one or more types of processing parameters in the preprocessing performed on the second learning image data, such that at least one of the position and posture of the learning target object calculated by performing the matching processing using the second learning image data (at least one of the position and posture calculated by the learning object recognition part 112) approaches (typically, matches) at least one of the position and posture of the learning target object indicated by the second target position posture data associated with the second learning image data.

**In** addition, the learning object recognition part 112 may change at least one of: one or more types of processing parameters in the position calculation processing; and one or more types of processing parameters in the preprocessing performed on the second learning image data, such that the three-dimensional position of each of the plurality of points of the learning target object calculated by performing the position calculation processing using the second learning image data (the three-dimensional position of each of the plurality of points calculated by the learning object recognition part 112) approaches (typically, matches) the three-dimensional position of each of the plurality of points of the learning target object indicated by the second target three-dimensional position data associated with the second learning image data.

The learning object recognition part 112 may output second output data including at least one of: one or more types of processing parameters in the matching processing; one or more types of processing parameters in the position calculation processing; and one or more types of processing parameters in the preprocessing performed on the second learning image data, as a result of performing at least one of the matching processing and the position calculation processing. The second learning image data may be associated with the second output data.

At least one processing parameter included in the first output data may be used as the correct answer data for the teacher data used in the learning in the learning part 113. **In** this case, first teacher data may be generated from the first learning image data and from at least one processing parameter included in the first output data, serving as the correct answer data. At least one processing parameter included in the second output data may be also used as the correct answer data for the teacher data used in the learning part 113. **In** this case, second teacher data may be generated from the second learning image data and from at least one processing parameter included in the second output data, serving as the correct answer data.

The first teacher data may be generated from the first learning image data generated when the imaging unit 20 images the learning target object in the first positional relation, and from at least one processing parameter included in the first output data associated with the first learning image data. The second teacher data may be generated from the second learning image data generated when the imaging unit 20 images the learning target object in the second positional relation, and from at least one processing parameter included in the second output data associated with the second learning image data. Thus, the number of pieces of teacher data corresponds to the number of the positional relations in which the imaging unit 20 images the learning target object.

Here, the first positional relation and the second positional relation are mentioned, but there may be three or more positional relations, or only one positional relation.

As described above, the number of pieces of learning image data (i.e., the number of the positional relations in which the imaging unit 20 images the learning target object) affects the number of pieces of teacher data used in the learning in the learning part 113. In other words, if the number of pieces of target position posture data and the number of pieces of target three-dimensional position data generated by the data generation part 111 is relatively small, the number of pieces of teacher data used in the learning in the learning part 113 is also relatively small. Therefore, in order to increase the number of pieces of teacher data, at least one of the position posture data and the three-dimensional position data may be generated based on the virtual data serving as the learning image data. In a case where the number of pieces of teacher data is sufficient, at least one of the position posture data and the three-dimensional position data may not be generated based on the virtual data.

The data generation part 111 may generate the target displacement data about the tracking processing (e.g., at least one of the 2D tracking processing and the 3D tracking processing), based on the plurality of pieces of learning image data (e.g., two pieces of learning image data) generated by the imaging unit 20 imaging the learning target object at different times (see "(4-3-3) Others" for a specific method of generating the target displacement data). For example, the data generation part 111 may generate one piece of target displacement data, based on the two pieces of learning image data. In this situation, the number of pieces of learning image data and the number of pieces of target displacement data are not one-to-one correspondence, but the number of pieces of learning image data and the number of pieces of target displacement data are in direct proportion. Therefore, if the number of pieces of target displacement data generated by the data generation part 111 is relatively small, the number of pieces of teacher data used in the learning in the learning part 113 is also relatively small. Therefore, in order to increase the number of pieces of teacher data, the target displacement data may be generated based on the virtual data serving as the learning image data. In a case where the number of pieces of teacher data is sufficient, the target displacement data may not be generated based on the virtual data.

The virtual data may be generated as follows. The three-dimensional model of the learning target object is disposed in a virtual space, and then, the three-dimensional model is then virtually imaged by a virtual imaging unit (e.g., a virtual imaging unit 20), by which the virtual data serving as the learning image data may be generated. In addition to the three-dimensional model of the learning target object, a three-dimensional model of the stage ST on which the learning target object is disposed, may be disposed in the virtual space. The three-dimensional model of the learning target object may be a three-dimensional model of the learning target object indicated by the CAD data about the learning target object. The three-dimensional model of the stage ST may be a three-dimensional model of the stage ST indicated by the CAD data about the stage ST.

After that, while at least one of: a posture of the virtual imaging unit to the three-dimensional model of the learning target object; and a distance from the three-dimensional model of the learning target object to the virtual imaging unit is virtually changed, the three-dimensional model of the learning target object or the like may be virtually imaged by the virtual imaging unit, by which the virtual data serving as the learning image data may be generated. While at least one of: a posture of the three-dimensional model of the learning target object to the virtual imaging unit; and a distance from the virtual imaging unit to the three-dimensional model of the learning target object is virtually changed, the three-dimensional model of the learning target object or the like may be virtually imaged by the virtual imaging unit, by which the virtual data serving as the learning image data may be generated. That is, while at least one of: a relative posture of the three-dimensional model of the learning target object and the virtual imaging unit; and a relative distance of the three-dimensional model of the learning target object and the virtual imaging unit is virtually changed, the three-dimensional model of the learning target or the like object may be virtually imaged by the virtual imaging unit, by which the virtual data serving as the learning image data may be generated.

Since the positional relation between the virtual imaging unit and the three-dimensional model in the virtual space is known, at least one of the position and posture of the representative point of the three-dimensional model (i.e., the learning target object) captured in the image indicated by the virtual data and the three-dimensional position of each of the plurality of points of the three-dimensional model (i.e., the learning target object) are also known.

The virtual data may be generated by the data generation part 111. In this case, the data generation part 111 may generate, from the virtual data, at least one of the position posture data corresponding to the target position posture data and the three-dimensional position data corresponding to the target three-dimensional position data. As described above, since at least one of the position and posture of the representative point of the three-dimensional model captured in the image indicated by the virtual data is known, the data generation part 111 is allowed to generate the position posture data, based on the known at least one of the position and posture of the representative point of the three-dimensional model. Furthermore, since the three-dimensional position of each of the plurality of points of the three-dimensional model is also known, the data generation part 111 is allowed to generate the three-dimensional position data, based on the known three-dimensional position of each of the plurality of points of the three-dimensional model. The data generation part 111 may generate the virtual data, for example, based on the input from the user via the input apparatus 140 (e.g., an input indicating an instruction to dispose the three-dimensional model in the virtual space or an instruction to dispose the virtual imaging unit in the virtual space).

The data generation part 111 may generate only one of the position posture data and the three-dimensional position data, based on the virtual data. That is, the data generation part 111 may generate at least one of the position posture data and the three-dimensional position data, based on the virtual data. For example, the position posture data and the three-dimensional position data generated based on one piece of virtual data may be stored, for example, in the storage apparatus 120 in association with the one piece of virtual data.

For example, in a case where the virtual imaging unit is a single virtual monocular camera (e.g., corresponding to the imaging apparatus 21), the single virtual monocular camera may virtually image the three-dimensional model of the learning target object, thereby generating virtual monocular image data. Here, the virtual monocular image data are data corresponding to the image data generated by the single virtual monocular camera serving as the imaging apparatus 21, imaging the learning target object.

As described above, since a positional relation between the three-dimensional model of the learning target object and the single virtual monocular camera in the virtual space is known, the position and posture in the 2D imaging coordinate system of the three-dimensional model of the learning target object captured in an image indicated by the virtual monocular image data, are also known. The data generation part 111 may generate the position posture data about the 2D matching processing, based on at least one of the position and posture in the 2D imaging coordinate system of the three-dimensional model of the learning target object captured in the image indicated by the virtual monocular image data.

For example, in a case where the virtual imaging unit is a virtual stereo camera (e.g., corresponding to the imaging apparatus 22) including two virtual monocular cameras, the virtual stereo camera may virtually image the three-dimensional model of the learning target object, thereby generating virtual stereo image data. Here, the virtual stereo image data are data corresponding to the image data generated by the stereo camera serving as the imaging apparatus 22, imaging the learning target object.

On the three-dimensional model in the virtual space (e.g., the three-dimensional model of the learning target object, the three-dimensional model of the stage ST), a projection pattern that is the same as or similar to the projection pattern (e.g., random dots) that is projectable by the projection apparatus 23 provided in the imaging unit 20, may be virtually projected. In this case, the three-dimensional model of the learning target object on which the projection pattern is projected, may be captured in an image indicated by the virtual stereo image data. The projection pattern may not be virtually projected on the three-dimensional model in the virtual space. In this case, the three-dimensional model of the learning target object on which the projection pattern is not projected, may be captured in the image indicated by the virtual stereo image data.

As described above, since a positional relation between the three-dimensional model of the learning target object and the virtual stereo camera in the virtual space is known, the position and posture in the 3D imaging coordinate system of the three-dimensional model of the learning target object captured in the image indicated by the virtual stereo image data, are also known. The data generation part 111 may generate the position posture data about the 3D matching processing, based on at least one of the position and posture in the 3D imaging coordinate system of the three-dimensional model of the learning target object captured in the image indicated by the virtual stereo image data.

In addition, the three-dimensional position of each of the plurality of points of the three-dimensional model of the learning target object in the virtual space is also known. The data generation part 111 may generate the three-dimensional position data, based on the three-dimensional position of each of the plurality of points of the three-dimensional model of the learning target object in the virtual space. The virtual stereo camera may virtually image the three-dimensional model of the learning target object and the three-dimensional model of the stage ST, thereby generating the virtual stereo image data. The three-dimensional position of each of the plurality of points of the three-dimensional model of the learning target object in the virtual space, and the three-dimensional position of each of the plurality of points of the three-dimensional model of the stage ST in the virtual space, are known. The three-dimensional position data including the three-dimensional position of each of the plurality of points of the three-dimensional model of the learning target object in the virtual space and the three-dimensional position of each of the plurality of points of the three-dimensional model of the stage ST in the virtual space, may be generated.

The data generation part 111 may generate at least one of the displacement data about the 2D tracking processing and the displacement data about the 3D tracking processing, based on the virtual data, for example.

For example, in a case where the virtual imaging unit is a single virtual monocular camera (e.g., corresponding to the imaging apparatus 21) and in a case where a relative positional relation between the single virtual monocular camera and the three-dimensional model of the learning target object is the first positional relation, the single virtual monocular camera may virtually image the three-dimensional model of the learning target object, and then, the single virtual monocular camera may virtually image the three-dimensional model of the learning target object in the second positional relation in which the three-dimensional model of the learning target object is displaced with respect to the single virtual monocular camera, by which a plurality of pieces of virtual monocular image data may be generated. The relative positional relation is not limited to the first positional relation and the second positional relation, but may be three or more positional relations. That is, three or more pieces of virtual monocular image data may be generated.

As described above, the position and posture in the 2D imaging coordinate system of the three-dimensional model of the learning target object captured in a plurality of images respectively indicated by the plurality of pieces of virtual monocular image data, are known. The data generation part 111 may generate the displacement data about the 2D tracking processing, by calculating a difference between at least one of the position and posture in the 2D imaging coordinate system of the three-dimensional model of the learning target object captured in an image indicated by one of the plurality of pieces of virtual monocular image data and at least one of the position and posture in the 2D imaging coordinate system of the three-dimensional model of the learning target object captured in an image indicated by another of the plurality of pieces of virtual monocular image data.

For example, in a case where the virtual imaging unit is a virtual stereo camera (e.g., corresponding to the imaging apparatus 22) including two virtual monocular cameras and in a case where a relative positional relation between the virtual stereo camera and the three-dimensional model of the learning target object is the first positional relation, the virtual stereo camera may virtually image the three-dimensional model of the learning target object, and then, the virtual stereo camera may virtually image the three-dimensional model of the learning target object in the second positional relation in which the three-dimensional model of the learning target object is displaced with respect to the virtual stereo camera, by which a plurality of pieces of virtual stereo image data may be generated. The relative positional relation is not limited to the first positional relation and the second positional relation, but may be three or more positional relations. That is, three or more pieces of virtual stereo image data may be generated.

On the three-dimensional model of the learning target object in the virtual space, a projection pattern that is the same as or similar to the projection pattern that is projectable by the projection apparatus 23 provided in the imaging unit 20, may be virtually projected. In this case, for example, the three-dimensional model of the learning target object on which the projection pattern is projected, may be captured in the image indicated by the virtual stereo image data. The projection pattern may not be virtually projected on the three-dimensional model of the learning target object in the virtual space. In this case, for example, the three-dimensional model of the learning target object on which the projection pattern is not projected, may be captured in the image indicated by the virtual stereo image data.

As described above, the position and posture in the 3D imaging coordinate system of the three-dimensional model of the learning target object captured in each of a plurality of images respectively indicated by the plurality of pieces of virtual stereo image data, are known. The data generation part 111 may generate the displacement data about the 3D tracking processing, by calculating a difference between at least one of the position and posture in the 3D imaging coordinate system of the three-dimensional model of the three-dimensional model captured in an image indicated by one of the plurality of pieces of virtual stereo image data and at least one of the position and posture in the 3D imaging coordinate system of the three-dimensional model of the three-dimensional model captured in an image indicated by another of the plurality of pieces of virtual stereo image data.

Here, a posture of the virtual camera with respect to the three-dimensional model of the learning target object, and a distance from the three-dimensional model of the learning target object to the virtual camera, can be said to be a positional relation of the virtual camera to the three-dimensional model of the learning target object. The positional relation may be, for example, a positional relation for interpolating between the first positional relation and the second positional relation illustrated in FIG. 7, and may be, for example, a positional relation for interpolating between the second positional relation and the third positional relation illustrated in FIG. 7. That is, the positional relation may be a positional relation differing from the predetermined positional relation in which the imaging unit 20 images the learning target object.

For example, how many divisions to be made between the first positional relation and the second positional relation (in other words, how many pieces of virtual data for interpolating between the first positional relation and the second positional relation, to be generated between the first positional relation and the second positional relation), may be determined in advance as a fixed value, or may be inputted by the user of the robot system 1 via the input apparatus 140, for example. In a case where the position relation that can be taken by the imaging unit 20 with respect to the learning target object is limited (e.g., in a case where data in the range of each item of the input screen as illustrated in FIG. 8 are inputted by the user of the robot system 1), the position relation of the virtual camera to the three-dimensional model of the learning target object, may be set in the limited position relation.

### (4-4) Processing of Learning Object Recognition Part

The learning object recognition part 112 may perform at least one of the matching processing and the position calculation processing by using the learning image data. The learning image data may include not only the learning image data generated by the imaging unit 20 imaging the learning target object, but also the virtual data serving as the learning image data described above.

The learning image data may include at least one of monocular image data and stereo image data. Here, the monocular image data may mean the image data generated by the single monocular camera serving as the imaging apparatus 21 provided in the imaging unit 20, imaging the learning target object. The monocular image data may conceptually include the virtual data generated by the single virtual monocular camera corresponding to the imaging apparatus 21 virtually imaging the three-dimensional model of the learning target object disposed in the virtual space. The stereo image data may mean the image data generated by the stereo camera having two monocular cameras serving as the imaging apparatus 22 provided in the imaging unit 20, imaging the learning target object. The stereo image data may conceptually include the virtual data generated by the virtual stereo camera corresponding to the imaging apparatus 22 virtually imaging the three-dimensional model of the learning target object disposed in the virtual space.

In a case where the learning image data include the monocular image data, the learning image data (e.g., the monocular image data) may be associated with the target position posture data about the 2D matching processing (the position posture data generated by the data generation part 111), for example. In a case where the learning image data include the stereo image data, the learning image data (e.g., the stereo image data) may be associated with at least one of the target position posture data (the position posture data generated by the data generation part 111) and the target three-dimensional position data (the three-dimensional position data generated by the data generation part 111) about the 3D matching processing, for example. In a case where the learning image data include the monocular image data and the stereo image data, the learning image data may be associated with the target position posture data about the 2D matching processing, and at least one of the target position posture data and the target three-dimensional position data about the 3D matching processing, for example. For example, at least one of the target displacement data about the 2D tracking processing (the displacement data generated by the data generation part 111) and the target displacement data about the 3D tracking processing (the displacement data generated by the data generation part 111) may be associated with the learning image data.

For example, the learning image data generated by the imaging unit 20 imaging the learning target object when the positional relation between the imaging unit 20 and the learning target object is the first positional relation, may be referred to as the first learning image data. In this instance, the monocular image data and the stereo image data included in the first learning image data, may be referred to as the first monocular image data and the first stereo image data, respectively. The first learning image data may mean the first monocular image data. That is, the first monocular image data may be synonymous with the first learning image data. In this instance, considering that the second monocular image data described later may be synonymous with the second learning image data, the first stereo image data may be referred to as third learning image data. The target position posture data and the target three-dimensional position data associated with the first learning image data may be referred to as first position posture data and first three-dimensional position data, respectively. The first position posture data may include at least one of the target position posture data about the 2D matching processing and the target position posture data about the 3D matching processing.

In a case where the first position posture data include the target position posture data about the 2D matching processing, the first position posture data may indicate at least one of the position and posture in the 2D imaging coordinate system of the learning target object. In a case where the first position posture data include the target position posture data about the 3D matching processing, the first position posture data may indicate at least one of the position and posture in the 3D imaging coordinate system of the learning target object. In a case where the first position posture data include the target position posture data about the 2D matching processing and the target position posture data about the 3D matching processing, the first position posture data may indicate at least one of the position and posture in the 2D imaging coordinate system of the learning target object and at least one of the position and posture in the 3D imaging coordinate system of the learning target object.

At least one of the position in the 2D imaging coordinate system of the learning target object and the position in the 3D imaging coordinate system of the learning target object indicated by the first position posture data, may be referred to as the first learning object position. At least one of the posture in the 2D imaging coordinate system of the learning target object and the posture in the 3D imaging coordinate system of the learning target object indicated by the first position posture data, may be referred to as the first learning object posture.

The three-dimensional position of each of the plurality of points of the learning target object indicated by the first three-dimensional position data, may also be referred to as the first learning object position. That is because, in terms of being the position of the learning target object, the three-dimensional position of each of the plurality of points of the learning target object indicated by the first three-dimensional position data is also the same as the position in the 2D imaging coordinate system of the learning target object and the position in the 3D imaging coordinate system of the learning target object, for example. It is, however, different from the three-dimensional position of each of the plurality of points of the learning target object, in that the position in the 2D imaging coordinate system of the learning target object is the position in the 2D imaging coordinate system of the representative point (e.g., the center of gravity) of the learning target object, and that the position in the 3D imaging coordinate system of the learning target object is the position in the 3D imaging coordinate system of the representative point (e.g., the center of gravity) of the learning target object.

For example, the learning image data generated by the imaging unit 20 imaging the learning target object when the positional relation between the imaging unit 20 and the learning target object is the second positional relation, may be referred to as the second learning image data. In this instance, the monocular image data and the stereo image data included in the second learning image data may be referred to as the second monocular image data and the second stereo image data, respectively. The second learning image data may mean the second monocular image data. That is, the second monocular image data may be synonymous with the second learning image data. In this case, considering that the first stereo image data may be referred to as the third learning image data, the second stereo image data may be referred to as fourth learning image data. The target position posture data and the target three-dimensional position data associated with the second learning image data may be referred to as second position posture data and second three-dimensional position data, respectively. The second position posture data may include at least one of the target position posture data about the 2D matching processing and the target position posture data about the 3D matching processing.

In a case where the second position posture data include the target position posture data about the 2D matching processing, the second position posture data may indicate at least one of the position and posture in the 2D imaging coordinate system of the learning target object. In a case where the second position posture data include the target position posture data about the 3D matching processing, the second position posture data may indicate at least one of the position and posture in the 3D imaging coordinate system of the learning target object. In a case where the second position posture data include the target position posture data about the 2D matching processing and the target position posture data about the 3D matching processing, the second position posture data may indicate at least one of the position and posture in the 2D imaging coordinate system of the learning target object and at least one of the position and posture in the 3D imaging coordinate system of the learning target object.

At least one of the position in the 2D imaging coordinate system of the learning target object and the position in the 3D imaging coordinate system of the learning target object indicated by the second position posture data, may be referred to as a second learning object position. At least one of the posture in the 2D imaging coordinate system of the learning target object and the posture in the 3D imaging coordinate system of the learning target object indicated by the second position posture data, may be referred to as a second learning object posture. The three-dimensional position of each of the plurality of points of the learning target object indicated by the second three-dimensional position data, may also be referred to as the second learning object position.

The first positional relation and the second positional relation are mentioned above, but there may be three or more positional relations, or only one positional relation.

### (4-4-1) 2D Matching Processing and Processing Parameter Optimization

A case where the learning object recognition part 112 performs the 2D matching processing by using the learning image data, will be described. The 2D matching processing performed by the learning object recognition part 112 may be the same as the 2D matching processing performed by the processing object recognition part 115 (see "(2-2) 2D Matching Processing"). The 2D matching processing itself may be the same as the existing matching processing. Therefore, a detailed description of the 2D matching processing will be omitted, but an outline thereof will be described below. In the following explanation, the position and posture in the 2D imaging coordinate system will be described as an example of the position and posture of the learning target object. The position and posture of the learning target object, however, may be a position and posture in the 3D imaging coordinate system, may be a position and posture in the global coordinate system, or may be a position and posture in a coordinate system differing from the 2D imaging coordinate system, the 3D imaging coordinate system, and the global coordinate system.

For example, the learning object recognition part 112 may perform the 2D matching processing using the monocular image data included in the learning image data and the two-dimensional model data about the learning target object (see "(4-1) Outline").

For example, the learning object recognition part 112 may translate, enlarge, reduce, and/or rotate the learning target object captured in the two-dimensional image indicated by the two-dimensional model data, such that a feature portion (e.g., at least one of a feature point and an edge) of the learning target object captured in the two-dimensional image indicated by the two-dimensional model data approaches (typically, matches) a feature portion of the learning target object captured in an image indicated by the monocular image data. The learning object recognition part 112 may calculate at least one of the position and posture of the learning target object captured in the image indicated by the monocular image, for example, by the processing as described above.

At this time, the learning object recognition part 112 may change one or more types of processing parameters in the 2D matching image such that at least one of the position and posture in the 2D imaging coordinate system of the learning target object captured in the image indicated by the monocular image data (at least one of the position and posture calculated by the learning object recognition part 112) approaches (typically, matches) at least one of the position and posture in the 2D imaging coordinate system of the learning target object indicated by the target position posture data (the position posture data generated by the data generation part 111) associated with the learning image data (e.g., the monocular image data). In other words, the learning object recognition part 112 may change one or more types of processing parameters in the 2D matching processing such that at least one of the position and posture in the 2D imaging coordinate system of the learning target object captured in the image indicated by the monocular image data (at least one of the position and posture calculated by the learning object recognition part 112) approaches (typically, matches) at least one of the position and posture in the 2D imaging coordinate system of the learning target object indicated by the associated target position posture data, and may perform the 2D matching processing by using the changed one or more types of processing parameters.

The learning object recognition part 112 may change one or more types of processing parameters in the preprocessing performed on the learning image data (e.g., the monocular image data) used in the 2D matching processing, in addition to or in place of one or more types of processing parameters relating to the 2D matching processing.

An initial value may be set for one or more types of processing parameters in the 2D matching processing. An initial value may not be set for one or more types of processing parameters in the 2D matching processing. An initial value may be set for one or more types of processing parameters in the preprocessing performed on the learning image data (e.g., the monocular image data) used in the 2D matching processing. An initial value may not be set for one or more types of processing parameters in the preprocessing performed on the learning image data (e.g., the monocular image data) used in the 2D matching processing.

"Changing the processing parameter" may include changing a value of the processing parameter (e.g., changing a threshold for edge detection as a 2D matching parameter), and changing a type of the processing parameter.

One or more types of processing parameters in the 2D matching processing changed by the learning object recognition part 112, may be used as the correct answer data for the teacher data used in the learning in the learning part 113, as described in "(4-1) Outline". Therefore, in the 2D matching processing performed by the learning object recognition part 112 using the learning image data, one or more types of processing parameters in the 2D matching processing changed by the learning object image unit 112, may be referred to as a "two-dimensional matching parameter for learning". In addition to or in place of one or more types of processing parameters in the 2D matching processing, the "two-dimensional matching parameter for learning" may include one or more types of processing parameters in the preprocessing performed on the learning image data (e.g., the monocular image data) used in the 2D matching processing, or the like.

The learning object recognition part 112 may output, as a result of performing the 2D matching processing using the learning image data, output data indicating one or more types of processing parameters in the 2D matching processing. In addition to or in place of one or more types of processing parameters in the 2D matching processing, the output data may include at least one of: one or more types of processing parameters in the preprocessing performed on the learning image data (e.g., the monocular image data) used in the 2D matching processing; a matching degree; and a time required for one time of the 2D matching processing.

The matching degree relating to the 2D matching processing may indicate a degree of matching between at least one of the position and posture in the 2D imaging coordinate system of the learning target object captured in the image indicated by the monocular image data, which is calculated by the learning object recognition part 112, and at least one of the position and posture of the learning target object in the 2D imaging coordinate system indicated by the target position posture data associated with the learning image data (e.g., the monocular image data). The matching degree may be referred to as a "difference" between at least one of the position and posture in the 2D imaging coordinate system of the learning target object calculated by the learning object recognition part 112 and at least one of the position and posture of the learning target object in the 2D imaging coordinate system indicated by the associated target position posture data. As the difference is smaller, at least one of the position and posture in the 2D imaging coordinate system of the learning target object calculated by the learning object recognition part 112 further approaches at least one of the position and posture of the learning target object in the 2D imaging coordinate system indicated by the associated target position posture data. Therefore, it can be said that as the difference is smaller, the matching degree relating to the 2D matching processing is higher.

As described in "(4-1) Outline", one or more types of processing parameters included in the output data (here, at least one of: one or more types of processing parameters in the 2D matching processing; and one or more types of processing parameters in the preprocessing performed on the learning image data (e.g., the monocular image data) used in the 2D matching processing), may be referred to as the correct answer data and may be referred to as the optimization parameter.

For example, the learning object recognition part 112 may perform the 2D matching processing more than once, i.e., a plurality of times, by using one piece of learning image data. In this instance, the learning object recognition part 112 may change the processing parameter in the 2D matching processing, for example, as follows. Here, the processing parameter is assumed to include parameters A, B and C. For example, the learning object recognition part 112 may change values of only the parameters A and B, of the parameters A, B, and C, in first 2D matching processing using one piece of learning image data. Then, the learning object recognition part 112 may take over and fix the changed value of the parameter A, and may change values of the parameters B and C, in second 2D matching processing using one piece of learning image data, for example. Alternatively, for example, the learning object recognition part 112 may perform the 2D matching processing, by using the parameter A with a value a1, the parameter B with a value b1, and the parameter C with a value c1, in the first 2D matching using one piece of learning image data. For example, the learning object recognition part 112 may perform the 2D matching processing, by using the parameter A with a value a2, the parameter B with a value b2, and the parameter C with a value c2, in the second 2D matching using one piece of learning image data. The learning object recognition part 112 may change all the parameters of the plurality of types of processing parameters in the 2D matching processing.

The learning object recognition part 112 may repeat the 2D matching processing using one piece of learning image data, until the number of times of the 2D matching processing using one piece of learning image data reaches a predetermined number. In this instance, the learning object recognition part 112 may output one piece of output data including one or more types of processing parameters, when the number of times of the 2D matching processing reaches the predetermined number. In this instance, the learning object recognition part 112 may output output data including one or more types of processing parameters calculated (changed) by repeating the 2D matching processing the predetermined number of times. The predetermined number may be set by the user of the robot system 1, for example. The learning object recognition part 112 may repeat the 2D matching processing using one piece of learning image data, until a difference between at least one of the position and posture in the 2D imaging coordinate system of the learning target object captured in the image indicated by the monocular image data included in one piece of learning image data (at least one of the position and posture calculated by the learning object recognition part 112) and at least one of the position and posture in the 2D imaging coordinate system of the learning target object indicated by the target position posture data associated with one piece of learning image data (e.g., monocular image data), is less than or equal to a predetermined value (in other words, until the difference is converged). In this instance, the learning object recognition part 112 may output the output data including one or more types of processing parameters calculated (changed) at a time point when the difference between at least one of the position and posture in the 2D imaging coordinate system of the learning target object captured in the image indicated by the monocular image data included in one piece of learning image data and at least one of the position and posture in the 2D imaging coordinate system of the learning target object indicated by the target position posture data associated with one piece of learning image data, is less than or equal to the predetermined value. The learning object recognition part 112 may repeat the 2D matching processing using one piece of learning image data, until the difference between at least one of the position and posture in the 2D imaging coordinate system of the learning target object captured in the image indicated by the monocular image data included in one piece of learning image data (at least one of the position and posture calculated by the learning object recognition part 112) and at least one of the position and posture in the 2D imaging coordinate system of the learning target object indicated by the target position posture data associated with one piece of learning image data (e.g., monocular image data), is less than or equal to the predetermined value, or until the number of times of the 2D matching processing using one piece of learning image data reaches the predetermined number. The learning object recognition part 112 may perform, only once, the 2D matching processing using one piece of learning image data.

**In** a case where the 2D matching processing using one piece of learning image data is performed more than once, i.e., a plurality of times, the learning object recognition part 112 may output a plurality of pieces of output data. The learning object recognition part 112 may output the output data at each time when the 2D matching processing using one piece of learning image data is performed. The learning object recognition part 112 may collectively output the plurality of pieces of output data, after the 2D matching processing using one piece of learning image data is performed more than once, i.e., a plurality of times.

In a case where the plurality of pieces of output data are outputted for one piece of learning image data, the learning object recognition part 112 may select one of the plurality of pieces of output data. In this instance, the learning object recognition part 112 may select one piece of output data, based on the matching degree included in each of the plurality of pieces of output data. At this time, the learning object recognition part 112 may select one piece of output data indicating the highest matching degree. Alternatively, the learning object recognition part 112 may select a piece of output data in which the matching degree is greater than or equal to a predetermined matching degree threshold. In this instance, in a case where there are a plurality of pieces of output data in which the matching degree is greater than or equal to the predetermined matching degree threshold, the learning object recognition part 112 may select the plurality of pieces of output data in which the matching degree is greater than or equal to the predetermined matching degree threshold. In this instance, the learning object recognition part 112 may associate the matching degree of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

As described above, by performing the 2D matching processing, the learning object recognition part 112 may select, as the correct answer data, one piece of output data (specifically, one or more types of processing parameters included in one piece of output data) in which at least one of the position and posture in the 2D imaging coordinate system of the learning target object captured in the image indicated by the monocular image data included in one piece of learning image data (at least one of the position and posture calculated by the learning object recognition part 112) approaches at least one of the position and posture in the 2D imaging coordinate system of the learning target object indicated by the target position posture data associated with one piece of learning image data (e.g., monocular image data), in other words, in which the matching degree is higher.

The learning object recognition part 112 may select one piece of output data, based on the time required for one time of the 2D matching processing included in each of the plurality of pieces of output data. At this time, the learning object recognition part 112 may select one piece of output data requiring the shortest time for processing. Alternatively, the learning object recognition part 112 may select a piece of output data in which the time required for processing is less than or equal to a predetermined time threshold. In this instance, in a case where there are a plurality of pieces of output data in which the time required for processing is less than or equal to the predetermined time threshold, the learning object recognition part 112 may select the plurality of pieces of output data in which the time required for processing is less than or equal to the predetermined time threshold. In this case, for example, the learning object recognition part 112 may associate the time required for processing of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

The learning object recognition part 112 may select one piece of output data, based on the matching degree and the time required for one time of the 2D matching processing included in each of the plurality of pieces of output data. At this time, the learning object recognition part 112 may select a piece of output data in which the matching degree is greater than or equal to the predetermined matching degree threshold and the time required for processing is less than or equal to the predetermined time threshold. In a case where there are a plurality of pieces of output data in which the matching degree is greater than or equal to the predetermined matching degree threshold and the time required for processing is less than or equal to the predetermined time threshold, the learning object recognition part 112 may select a piece of output data indicating the highest matching degree from the plurality of pieces of output data. Alternatively, in a case where there are a plurality of pieces of output data in which the matching degree is greater than or equal to the predetermined matching threshold and the time required for processing is less than or equal to the predetermined time threshold, the learning object recognition part 112 may associate the matching degree and the time required for processing in each of the plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

Alternatively, the learning object recognition part 112 may select one piece of output data, based on a score calculated by integrating the matching degree and an inverse of the time required for processing. The learning object recognition part 112 may select one piece of output data indicating the largest score. Alternatively, the learning object recognition part 112 may select a piece of output data in which the score is greater than or equal to a predetermined score threshold. In this instance, in a case where there are a plurality of pieces of output data in which the score is greater than or equal to the predetermined score threshold, the learning object recognition part 112 may select the plurality of pieces of output data in which the score is greater than or equal to the predetermined score threshold. In this instance, the learning object recognition part 112 may associate the score of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

As described above, by performing the 2D matching processing, the learning object recognition part 112 may select, as the correct answer data, one piece of output data (specifically, one or more types of processing parameters included in one piece of output data) in which at least one of the position and posture in the 2D imaging coordinate system of the learning target object captured in the image indicated by the monocular image data included in one piece of learning image data (at least one of the position and posture calculated by the learning object recognition part 112) approaches at least one of the position and posture in the 2D imaging coordinate system of the learning target object indicated by the target position posture data associated with one piece of learning image data (e.g., monocular image data), in other words, in which the matching degree is higher and the time required for one time of the 2D matching processing is reduced. That is, the learning object recognition part 112 may select the correct answer data, based on the matching degree and the time required for one time of the 2D matching processing.

The learning object recognition part 112 may output only one piece of output data even when the 2D matching processing using one piece of learning image data is performed more than once, i.e., a plurality of times. In this case, the outputted output data may be, for example, output data including one or more types of processing parameters in the 2D matching processing when the difference between at least one of the position and posture in the 2D imaging coordinate system of the learning target object captured in the image indicated by the monocular image data included in one piece of learning image data (at least one of the position and posture calculated by the learning object recognition part 112) and at least one of the position and posture in the 2D imaging coordinate system of the learning target object indicated by the target position posture data associated with one piece of learning image data (e.g., monocular image data), is less than or equal to the predetermined value.

One piece of learning image data and the output data outputted as a result of the 2D matching processing using the monocular image data included in the one piece of learning image data may be stored in the storage apparatus 120 in association with each other, for example. Here, in a case where the 2D matching processing using one piece of learning image data is performed more than once, i.e., a plurality of times, and a plurality of pieces of output data are outputted, the output data associated with one piece of learning image data may be one piece of output data selected from the plurality of pieces of output data based on the matching degree. The output data associated with one piece of learning image data may be one piece of output data selected from the plurality of pieces of output data based on the time required for one time of the 2D matching processing, in addition to or in place of the matching degree. The plurality of pieces of output data may be associated with one piece of learning image data, and may be stored in the storage apparatus 120.

One piece of teacher data may be generated from one piece of learning image data and one piece of output data associated with the one piece of learning image data. The teacher data may include one piece of learning image data (e.g., monocular image data) serving as input data (i.e., data inputted to the model 1131 that becomes the parameter determination model later), and one or more types of processing parameters in the 2D matching processing (in other words, the optimization parameter) included in one piece of output data serving as the correct answer data. In a case where a plurality of pieces of output data are associated with one piece of learning image data, a plurality of pieces of teacher data may be generated from one piece of learning image data and each of the plurality of pieces of output data.

The learning image data generated by the imaging unit 20 imaging the learning target object when the positional relation between the imaging unit 20 and the learning target object is the first position relation, may be referred to as the first learning image data. One or more types of processing parameters in the 2D matching processing included in one piece of output data associated with the first learning image data, may be the correct answer data for the teacher data. Therefore, one or more types of processing parameters in the 2D matching processing included in one piece of output data associated with the first learning image data, may be referred to as first correct answer data.

The learning image data generated by the imaging unit 20 imaging the learning target object when the positional relation between the imaging unit 20 and the learning target object is the second position relation, may be referred to as the second learning image data. One or more types of processing parameters in the 2D matching processing included in one piece of output data associated with the second learning image data, may be the correct answer data for the teacher data. Therefore, for example, one or more types of processing parameters in the 2D matching processing included in one piece of output data associated with the second learning image data, may be referred to as second correct answer data.

The first positional relation and the second positional relation are mentioned above, but there may be three or more positional relations, or only one positional relation.

In addition, the 2D matching processing using the learning image data by the learning object recognition part 112, may be performed by using not only the monocular image data generated by the single monocular camera serving as the imaging apparatus 21 provided in the imaging unit 20, imaging the learning target object, but also at least one of two images included in the stereo image data generated by the stereo camera serving as the imaging apparatus 22 provided in the imaging unit 20, imaging the learning target object.

The above-described stereo image data, however, are stereo image data generated by the learning target object on which the patterned light is not projected from the projection apparatus 23 provided in the imaging unit 20, being imaged by the stereo camera serving as the imaging apparatus 22. That is, the learning object recognition part 112 may perform the 2D matching processing by using at least one of the two images included in the stereo image data in which the projection pattern (e.g., the random dot pattern) is not captured/included.

The learning object recognition part 112 may perform the above-described 2D matching processing, by using, as the learning image data, the virtual data generated by the single virtual monocular camera corresponding to the imaging apparatus 21 provided in the imaging unit 20, virtually imaging the three-dimensional model of the learning target object disposed in the virtual space. The learning object recognition part 112 may perform the above-described 2D matching processing, by using, as the learning image data, at least one of two images included in the virtual data generated by the virtual stereo camera corresponding to the imaging apparatus 22 provided in the imaging unit 20, virtually imaging the three-dimensional model of the learning target object disposed in the virtual space.

### (4-4-2) Position Calculation Processing and Processing Parameter Optimization

A case where the learning object recognition part 112 performs the position calculation processing by using the learning image, will be described. The position calculation processing performed by the learning object recognition part 112 may be the same as the position calculation processing performed by the processing object processing object 115 (see "(2) Robot Control Processing"). The position calculation processing itself may be the same as the existing position calculation processing. Therefore, a detailed description of the position calculation processing will be omitted, but an outline thereof will be described below.

The learning object recognition part 112 may calculate a parallax by performing association, between parts (e.g., pixels) of images respectively indicated by two pieces of stereo image data included in the learning image data. Note that a well-known method such as, for example, SGBM and SAD, may be used for an association method between the parts of the images. The learning object recognition part 112 may calculate the three-dimensional position of each of the plurality of points of the object (e.g., the learning target object, or the learning target object and the stage ST) captured in the image indicated by the stereo image data, by a well-known method based on the principle of triangulation using the calculated parallax, for example. At this time, the learning object recognition part 112 may generate at least one of depth image data and point cloud data, for example.

At this time, the learning object recognition part 112 may change one or more types of processing parameters in the position calculation processing such that the three-dimensional position of each of the plurality of points of the learning target object calculated by the position calculation processing (the three-dimensional position of each of the plurality of points calculated by the learning object recognition part 112) approaches (typically, matches) the three-dimensional position of each of the plurality of points of the learning target object indicated by the target three-dimensional position data (the three-dimensional position data generated by the generation part 111) associated with the learning image data (e.g., the stereo image data). In other words, the learning object recognition part 112 may change one or more types of parameters in the position calculation processing such that the three-dimensional position of each of the plurality of points of the learning target object calculated by the position calculation processing (the three-dimensional position of each of the plurality of points calculated by the learning object recognition part 112) approaches (typically, matches) the three-dimensional position of each of the plurality of points of the learning target object indicated by the target three-dimensional position data, and may perform the position calculation processing by using the changed one or more types of processing parameters.

In addition to or in place of one or more types of processing parameters relating to the position calculation processing, the learning object recognition part 112 may change one or more types of processing parameters in the preprocessing performed on the learning image data (e.g., the stereo image data) used in the position calculation processing.

An initial value may be set for one or more types of processing parameters in the position calculation processing. An initial value may not be set for one or more types of processing parameters in the position calculation processing. An initial value may be set for one or more types of processing parameters in the preprocessing performed on the learning image data (e.g., the stereo image data) used in the position calculation processing. An initial value may not be set for one or more types of processing parameters in the preprocessing performed on the learning image data (e.g., the stereo image data) used in the position calculation processing. "Changing the processing parameter" may include changing the value of the processing parameter, and changing the type of the processing parameter.

One or more types of processing parameters in the position calculation processing changed by the learning object recognition part 112, may be used as the correct answer data for the teacher data used in the learning in the learning part 113, as described in "(4-1) Outline". Therefore, in the position calculation processing performed by the learning object recognition part 112 using the learning image data, one or more types of processing parameters in the position calculation processing changed by the learning object recognition part 112, may be referred to as a "position calculation parameter for learning." The "position calculation parameter for learning" may include one or more types of processing parameters in the preprocessing performed on the learning image data (e.g., the stereo image data) used in the position calculation processing, in addition to or in place of one or more types of processing parameters in the position calculation processing.

The learning object recognition part 112 may output, as a result of performing the position calculation processing using the learning image data, output data indicating one or more types of processing parameters in the position calculation processing. In addition to or in place of one or more types of processing parameters in the position calculation processing, the output data may include at least one of: one or more types of processing parameters in the preprocessing performed on the learning image data (e.g., the stereo image data) used in the position calculation processing; a matching degree; and a time required for one time of the position calculation processing.

The matching degree relating to the position calculation processing may indicate a degree of matching between the three-dimensional position of each of the plurality of points of the learning target object captured in the image indicated by the stereo image data, which is calculated by the learning object recognition part 112, and the three-dimensional position of each of the plurality of points of the learning target object indicated by the target three-dimensional position data associated with the learning image data (e.g., the stereo image data). The matching degree may be referred to as a "difference" between the three-dimensional position of each of the plurality of points of the learning target object calculated by the learning object recognition part 112 and the three-dimensional position of each of the plurality of points of the learning target object indicated by the associated target three-dimensional position data. As the difference is smaller, the three-dimensional position of each of the plurality of points of the learning target object calculated by the learning object recognition part 112 further approaches the three-dimensional position of each of the plurality of points of the learning target object indicated by the associated target three-dimensional position data. Therefore, it can be said that as the difference is smaller, the matching degree relating to the position calculation processing is higher.

As described in "(4-1) Outline", one or more types of processing parameters included in the output data (here, at least one of: one or more types of processing parameters in the position calculation processing; and one or more types of processing parameters in the preprocessing performed on the learning image data (e.g., the stereo image data)) used in the position calculation processing), may be referred to as the correct answer data and may be referred to as the optimization parameter.

The learning object recognition part 112 may perform the position calculation processing using one piece of learning image data, more than once, i.e., a plurality of times. In this instance, as in the 2D matching processing described above, the learning object recognition part 112 may change the type of the processing parameter to be changed at each of the plurality of times of the position calculation processing, in the position calculation processing. The learning object recognition part 112 may change all the parameters of the plurality of types of processing parameters in the position calculation processing.

The learning object recognition part 112 may repeat the position calculation processing using one piece of learning image data, until the number of times of the position calculation processing using one piece of learning image data reaches a predetermined number. In this instance, the learning object recognition part 112 may output one piece of output data including one or more types of processing parameters, when the number of times of the position calculation processing reaches the predetermined number. In this instance, the learning object recognition part 112 may output output data including one or more types of processing parameters calculated (changed) by repeating the position calculation processing the predetermined number of times. The predetermined number may be set by the user of the robot system 1, for example. The learning object recognition part 112 may repeat the position calculation processing using one piece of learning image data, until a difference between the three-dimensional position of each of the plurality of points of the learning target object captured in the image indicated by the stereo image data included in one pieces of learning image data (the three-dimensional position of each of the plurality of points calculated by the learning object recognition part 112) and the three-dimensional position of each of the plurality of points of the learning target object indicated by the target three-dimensional position data associated with one piece of learning image data (e.g., stereo image data), is less than or equal to a predetermined value (in other words, until the difference is converged). In this instance, the learning object recognition part 112 may output the output data including one or more types of processing parameters calculated (changed) at a time point when the difference between the three-dimensional position of each of the plurality of points of the learning target object captured in the image indicated by the stereo image data included in one pieces of learning image data and the three-dimensional position of each of the plurality of points of the learning target object indicated by the target three-dimensional position data associated with one piece of learning image data, is less than or equal to the predetermined value. The learning object recognition part 112 may repeat the position calculation processing using one piece of learning image data, until the difference between the three-dimensional position of each of the plurality of points of the learning target object captured in the image indicated by the stereo image data included in one pieces of learning image data (the three-dimensional position of each of the plurality of points calculated by the learning object recognition part 112) and the three-dimensional position of each of the plurality of points of the learning target object indicated by the target three-dimensional position data associated with one piece of learning image data, is less than or equal to the predetermined value, or until the number of times of the position calculation processing using one piece of learning image data reaches the predetermined number. The learning object recognition part 112 may perform, only once, the position calculation processing using one piece of learning image data.

In a case where the position calculation processing using one piece of learning image data is performed more than once, i.e., a plurality of times, the learning object recognition part 112 may output a plurality of pieces of output data. The learning object recognition part 112 may output the output data at each time when the position calculation processing using one piece of learning image data is performed. The learning object recognition part 112 may collectively output the plurality of pieces of output data, after the position calculation processing using one piece of learning image data is performed more than once, i.e., a plurality of times.

In a case where the plurality of pieces of output data are outputted for one piece of learning image data, the learning object recognition part 112 may select one of the plurality of pieces of output data. In this instance, the learning object recognition part 112 may select one piece of output data, based on the matching degree included in each of the plurality of pieces of output data. At this time, the learning object recognition part 112 may select one piece of output data indicating the highest matching degree. Alternatively, the learning object recognition part 112 may select a piece of output data in which the matching degree is greater than or equal to a predetermined matching degree threshold. In this instance, in a case where there are a plurality of pieces of output data in which the matching degree is greater than or equal to the predetermined matching degree threshold, the learning object recognition part 112 may select the plurality of pieces of output data in which the matching degree is greater than or equal to the predetermined matching degree threshold. In this instance, the learning object recognition part 112 may associate the matching degree of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

As described above, by performing the position calculation processing, the learning object recognition part 112 may select, as the correct answer data, one piece of output data (specifically, one or more types of processing parameters included in one piece of output data) in which the three-dimensional position of each of the plurality of points of the learning target object indicated by the stereo image data included in one piece of learning image data (the three-dimensional position of each of the plurality of points calculated by the learning object recognition part 112) approaches the three-dimensional position of each of the plurality of points of the learning target object indicated by the target three-dimensional position data associated with one piece of learning image data (e.g., stereo image data), in other words, in which the matching degree is higher.

The learning object recognition part 112 may select one piece of output data, based on the time required for one time of the position calculation processing included in each of the plurality of pieces of output data. At this time, the learning object recognition part 112 may select one piece of output data requiring the shortest time for processing. Alternatively, the learning object recognition part 112 may select a piece of output data in which the time required for processing is less than or equal to a predetermined time threshold. In this instance, in a case where there are a plurality of pieces of output data in which the time required for processing is less than or equal to the predetermined time threshold, the learning object recognition part 112 may select the plurality of pieces of output data in which the time required for processing is less than or equal to the predetermined time threshold. In this case, the learning object recognition part 112 may associate the time required for processing of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

The learning object recognition part 112 may select one piece of output data, based on the matching degree and the time required for one time of the position calculation processing included in each of the plurality of pieces of output data. At this time, the learning object recognition part 112 may select a piece of output data in which the matching degree is greater than or equal to the predetermined matching degree threshold and the time required for processing is less than or equal to the predetermined time threshold. In a case where there are a plurality of pieces of output data in which the matching degree is greater than or equal to the predetermined matching degree threshold and the time required for processing is less than or equal to the predetermined time threshold, the learning object recognition part 112 may select a piece of output data indicating the highest matching degree from the plurality of pieces of output data. Alternatively, in a case where there are a plurality of pieces of output data in which the matching degree is greater than or equal to the predetermined matching threshold and the time required for processing is less than or equal to the predetermined time threshold, the learning object recognition part 112 may associate the matching degree and the time required for processing in each of the plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

Alternatively, the learning object recognition part 112 may select one piece of output data, based on a score calculated by integrating the matching degree and an inverse of the time required for processing. The learning object recognition part 112 may select one piece of output data indicating the largest score. Alternatively, the learning object recognition part 112 may select a piece of output data in which the score is greater than or equal to a predetermined score threshold. In this instance, in a case where there are a plurality of pieces of output data in which the score is greater than or equal to the predetermined score threshold, the learning object recognition part 112 may select the plurality of pieces of output data in which the score is greater than or equal to the predetermined score threshold. In this instance, the learning object recognition part 112 may associate the score of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

As described above, by performing the position calculation processing, the learning object recognition part 112 may select, as the correct answer data, one piece of output data (specifically, one or more types of processing parameters included in one piece of output data) in which the three-dimensional position of each of the plurality of points indicated by the stereo image data included in one piece of learning image data (the three-dimensional position of each of the plurality of points calculated by the learning object recognition part 112) approaches the three-dimensional position of each of the plurality of points indicated by the target three-dimensional position data associated with one piece of learning image data (e.g., stereo image data), in other words, in which the matching degree is higher and the time required for one time of the position calculation processing is reduced. That is, the learning object recognition part 112 may select the correct answer data, based on the matching degree and the time required for one time of the position calculation processing.

The learning object recognition part 112 may output only one piece of output data even when the position calculation processing using one piece of learning image data is performed more than once, i.e., a plurality of times. In this case, the outputted output data may be, for example, output data including one or more types of processing parameters in the position calculation processing when the difference between the three-dimensional position of each of the plurality of points of the learning target object captured in the image indicated by the stereo image data included in one piece of learning image data (the three-dimensional position of each of the plurality of points calculated by the learning object recognition part 112) and the three-dimensional position of each of the plurality of points of the learning target object indicated by the target three-dimensional position data associated with one piece of learning image data (e.g., stereo image data), is less than or equal to the predetermined value.

One piece of learning image data and the output data outputted as a result of the position calculation processing using the stereo image data included in the one piece of learning image data may be stored in the storage apparatus 120 in association with each other, for example. Here, in a case where the position calculation processing using one piece of learning image data is performed more than once, i.e., a plurality of times, and a plurality of pieces of output data are outputted, the output data associated with one piece of learning image data may be one piece of output data selected from the plurality of pieces of output data based on the matching degree. The output data associated with one piece of learning image data may be one piece of output data selected from the plurality of pieces of output data based on the time required for one time of the position calculation processing, in addition to or in place of the matching degree. The plurality of pieces of output data may be associated with one piece of learning image data, and may be stored in the storage apparatus 120.

One piece of teacher data may be generated from one piece of learning image data and one piece of output data associated with the one piece of learning image data. One piece of teacher data may include one piece of learning image data (e.g., stereo image data) serving as input data (i.e., data inputted to the model 1131 that becomes the parameter determination model later), and one or more types of processing parameters in the position calculation processing included in one piece of output data serving as the correct answer data. In a case where a plurality of pieces of output data are associated with one piece of learning image data, a plurality of pieces of teacher data may be generated from one piece of learning image data and each of the plurality of pieces of output data.

The learning image data generated by the imaging unit 20 imaging the learning target object when the positional relation between the imaging unit 20 and the learning target object is the first positional relation, may be referred to as the first learning image data. One or more types of processing parameters in the position calculation processing included in one piece of output data associated with the first learning image data, may be the correct answer data for the teacher data. Therefore, one or more types of processing parameters in the position calculation processing included in one piece of output data associated with the first learning image data, may be referred to as the first correct answer data.

The learning image data generated by the imaging unit 20 imaging the learning target object when the positional relation between the imaging unit 20 and the learning target object is the second positional relation, may be referred to as the second learning image data. One or more types of processing parameters in the position calculation processing included in one piece of output data associated with the second learning image data, may be the correct answer data for the teacher data. Therefore, one or more types of processing parameters in the position calculation processing included in one piece of output data associated with the second learning image data, may be referred to as the second correct answer data.

The first positional relation and the second positional relation are mentioned above, but there may be three or more positional relations, or only one positional relation.

The learning object recognition part 112 may perform the position calculation processing described above, by using, as the learning image data, the virtual data generated by the virtual stereo camera corresponding to the imaging apparatus 22 provided in the imaging unit 20, virtually imaging the three-dimensional model of the learning target object disposed in the virtual space.

### (4-4-3) 3D Matching Processing and Processing Parameter Optimization

A case where the learning object recognition part 112 performs the 3D matching processing using the learning image data, will be described. The 3D matching processing performed by the learning object recognition part 112 may be the same as the 3D matching processing performed by the processing object recognition part 115 (see "(2-3) 3D Matching Processing"). The 3D matching processing itself may be the same as the existing matching processing. Therefore, a detailed description of the 3D matching processing will be omitted, but an outline thereof will be described below. In the following explanation, the position and posture in the 3D imaging coordinate system will be described as an example of the position and posture of the learning target object. The position and posture of the learning target object, however, may be a position and posture in the 2D imaging coordinate system, may be a position and posture in the global coordinate system, or may be a position and posture in a coordinate system differing from the 3D imaging coordinate system, the 2D imaging coordinate system, and the global coordinate system.

For example, the learning object recognition part 112 may perform the 3D matching processing using the stereo image data included in the learning image data and the three-dimensional model data about the learning target object (see "(4-1) Outline").

Here, the 3D matching processing using one piece of learning image data may be performed after the position calculation processing using the one piece of learning image data (see "(4-4-2) Position Calculation Processing and Processing Parameter Optimization"). In this case, one piece of learning image data may be associated with output data including one or more types of processing parameters in the position calculation processing. When performing the 3D matching processing using one piece of learning image data, the learning object recognition part 112 may use one or more types of processing parameters in the position calculation processing (e.g., one or more types of processing parameters in the position calculation processing, which may be referred to as the optimization parameter) included in the output data associated with the one piece of learning image data. In this case, the learning object recognition part 112 may perform the position calculation processing by using two pieces of image data included in the stereo image data included in one piece of learning image data and one or more types of processing parameters in the position calculation processing, thereby calculating the three-dimensional position of each of the plurality of points of the learning target object captured in the image indicated by the stereo image data. The learning object recognition part 112 may generate three-dimensional position data OSD indicating the calculated three-dimensional position of each of the plurality of points of the learning target object. The three-dimensional position data OSD may be, for example, data corresponding to the "three-dimensional position data WSD" described in "(2-3) 3D Matching Processing".

The learning object recognition part 112 may translate, enlarge, reduce, and/or rotate the learning target object indicated by the three-dimensional model data such that a feature portion of the learning target object indicated by the three-dimensional model data approaches (typically, matches) a feature portion of the three-dimensional position data OSD. For example, by the processing as described above, the learning object recognition part 112 may calculate at least one of the position and posture in the 3D imaging coordinate system of the learning target object captured in the image indicated by the stereo image data included in one piece of learning image data.

When performing the 3D matching processing using one piece of learning image data, the learning object recognition part 112 may not use one or more types of processing parameters in the position calculation processing included in the output data associated with the one piece of learning image data. Alternatively, even when the position calculation processing using one piece of learning image data is not performed, the learning object recognition part 112 may perform the 3D matching processing using the one piece of learning image data. In this instance, the learning object recognition part 112 may calculate the three-dimensional position of each of the plurality of points of the learning target object captured in the image indicated by the stereo image data, by performing the position calculation processing using the stereo image data included in one piece of learning image data. In this instance, the learning object recognition part 112 may arbitrarily set a value of one or more types of processing parameters in the position calculation processing. In addition to or in place of the value of one or more types of processing parameters in the position calculation processing, the learning object recognition part 112 may arbitrarily set a value of one or more types of processing parameters in the preprocessing performed on the stereo image used in the position calculation processing. The learning object recognition part 112 may generate the three-dimensional position data OSD indicating the calculated three-dimensional position of each of the plurality of points of the learning target object.

The learning object recognition part 112 may translate, enlarge, reduce, and/or rotate the learning target object indicated by the three-dimensional model data such that the feature portion of the learning target object indicated by the three-dimensional model data approaches (typically, matches) the feature portion of the three-dimensional position data OSD. For example, by the processing as described above, the learning object recognition part 112 may calculate at least one of the position and posture in the 3D imaging coordinate system of the learning target object captured in the image indicated by the stereo image data included in one piece of learning image data.

At this time, the learning object recognition part 112 may change one or more types of processing parameters in the 3D matching processing such that at least one of the position and posture in the 3D imaging coordinate system of the learning target object captured in the image indicated by the stereo image data (at least one of the position and posture calculated by the learning object recognition part 112) approaches (typically, matches) at least one of the position and posture in the 3D imaging coordinate system of the learning target object indicated by the target position posture data (the position posture data generated by the data generation part 111) associated with one piece of learning image data. In other words, the learning object recognition part 112 may change one or more types of processing parameters in the 3D matching processing such that at least one of the position and posture in the 3D imaging coordinate system of the learning target object captured in the image indicated by the stereo image data (at least one of the position and posture calculated by the learning object recognition part 112) approaches (typically, matches) at least one of the position and posture in the 3D imaging coordinate system of the learning target object indicated by the associated target position posture data, and may perform the 3D matching processing by using the changed one or more types of processing parameters.

In addition to or in place of one or more types of processing parameters relating to the 3D matching processing, the learning object recognition part 112 may change one or more types of processing parameters in the preprocessing performed on the stereo image data used in the 3D matching processing.

An initial value may be set for one or more types of processing parameters in the 3D matching processing. An initial value may not be set for one or more types of processing parameters in the 3D matching processing. An initial value may be set for one or more types of processing parameters in the preprocessing performed on the learning image data (e.g., the stereo image data) used in the 3D matching processing. An initial value may not be set for one or more types of processing parameters in the preprocessing performed on the learning image data (e.g., the stereo image data) used in the 3D matching processing. "Changing the processing parameter" may include changing the value of the processing parameter, and changing the type of the processing parameter.

One or more types of processing parameters in the 3D matching processing changed by the learning object recognition part 112, may be used as the correct answer data for the teacher data used in the learning in the learning part 113, as described in "(4-1) Outline". Therefore, in the 3D matching processing performed by the learning object recognition part 112 using the learning image data, one or more types of processing parameters in the 3D matching processing changed by the learning object image unit 112, may be referred to as a "three-dimensional matching parameter for learning". In addition to or in place of one or more types of processing parameters in the 3D matching processing, the "three-dimensional matching parameter for learning" may include one or more types of processing parameters in the preprocessing performed on the learning image data (e.g., the stereo image data) used in the 3D matching processing.

The learning object recognition part 112 may output, as a result of performing the 3D matching processing using one piece of learning image data, output data indicating one or more types of processing parameters in the 3D matching processing. In addition to or in place of one or more types of processing parameters in the 3D matching processing, the output data may include at least one of: one or more types of processing parameters in the preprocessing performed on the learning image data (e.g., the stereo image data) used in the 3D matching processing; a matching degree; and a time required for one time of the 3D matching processing.

The matching degree relating to the 3D matching processing may indicate a degree of matching between at least one of the position and posture in the 3D imaging coordinate system of the learning target object captured in the image indicated by the stereo image data, which is calculated by the learning object recognition part 112, and at least one of the position and posture of the learning target object in the 3D imaging coordinate system indicated by the target position posture data associated with the learning image data (e.g., the stereo image data). The matching degree may be referred to as a "difference" between at least one of the position and posture in the 3D imaging coordinate system of the learning target object calculated by the learning object recognition part 112 and at least one of the position and posture of the learning target object in the 3D imaging coordinate system indicated by the associated target position posture data. As the difference is smaller, at least one of the position and posture in the 3D imaging coordinate system of the learning target object calculated by the learning object recognition part 112 further approaches at least one of the position and posture of the learning target object in the 3D imaging coordinate system indicated by the associated target position posture data. Therefore, it can be said that as the difference is smaller, the matching degree relating to the 3D matching processing is higher.

As described in "(4-1) Outline", one or more types of processing parameters included in the output data (here, at least one of: one or more types of processing parameters in the 3D matching processing; and one or more types of processing parameters in the preprocessing performed on the learning image data (e.g., the stereo image data) used in the 3D matching processing), may be referred to as the correct answer data and may be referred to as the optimization parameter.

The learning object recognition part 112 may perform the 3D matching processing using one piece of learning image data, more than once, i.e., a plurality of times. In this instance, as in the 2D matching processing and the position calculation processing described above, the learning object recognition part 112 may change the type of the processing parameter to be changed at each of the plurality of times of the 3D matching processing, in the 3D matching processing. The learning object recognition part 112 may change all the parameters of the plurality of types of processing parameters in the 3D matching processing.

The learning object recognition part 112 may repeat the 3D matching processing using one piece of learning image data, until the number of times of the 3D matching processing using one piece of learning image data reaches a predetermined number. In this instance, the learning object recognition part 112 may output one piece of output data including one or more types of processing parameters, when the number of times of the 3D matching processing reaches the predetermined number. In this instance, the learning object recognition part 112 may output output data including one or more types of processing parameters calculated (changed) by repeating the 3D matching processing the predetermined number of times. The predetermined number may be set by the user of the robot system 1, for example. The learning object recognition part 112 may repeat the 3D matching processing using one piece of learning image data, until a difference between at least one of the position and posture in the 3D imaging coordinate system of the learning target object captured in the image indicated by the stereo image data included in one piece of learning image data (at least one of the position and posture calculated by the learning object recognition part 112) and at least one of the position and posture in the 3D imaging coordinate system of the learning target object indicated by the target position posture data associated with one piece of learning image data (e.g., stereo image data), is less than or equal to a predetermined value (in other words, until the difference is converged). **In** this instance, the learning object recognition part 112 may output the output data including one or more types of processing parameters calculated (changed) at a time point when the difference between at least one of the position and posture in the 3D imaging coordinate system of the learning target object captured in the image indicated by the stereo image data included in one piece of learning image data and at least one of the position and posture in the 3D imaging coordinate system of the learning target object indicated by the target position posture data associated with one piece of learning image data (e.g. stereo image data), is less than or equal to the predetermined value.

The learning object recognition part 112 may repeat the 3D matching processing using one piece of learning image data, until the difference between at least one of the position and posture in the 3D imaging coordinate system of the learning target object captured in the image indicated by the stereo image data included in one piece of learning image data (at least one of the position and posture calculated by the learning object recognition part 112) and at least one of the position and posture in the 3D imaging coordinate system of the learning target object indicated by the target position posture data associated with one piece of learning image data (e.g., stereo image data), is less than or equal to the predetermined value, or until the number of times of the 3D matching processing reaches the predetermined number. The learning object recognition part 112 may perform, only once, the 3D matching processing using one piece of learning image data.

In a case where the 3D matching processing using one piece of learning image data is performed more than once, i.e., a plurality of times, the learning object recognition part 112 may output a plurality of pieces of output data. The learning object recognition part 112 may output the output data at each time when the 3D matching processing using one piece of learning image data is performed. The learning object recognition part 112 may collectively output the plurality of pieces of output data, after the 3D matching processing using one piece of learning image data is performed more than once, i.e., a plurality of times.

In a case where the plurality of pieces of output data are outputted for one piece of learning image data, the learning object recognition part 112 may select one of the plurality of pieces of output data. In this instance, the learning object recognition part 112 may select one piece of output data, based on the matching degree included in each of the plurality of pieces of output data. At this time, the learning object recognition part 112 may select one piece of output data indicating the highest matching degree. Alternatively, the learning object recognition part 112 may select a piece of output data in which the matching degree is greater than or equal to a predetermined matching degree threshold. In this instance, in a case where there are a plurality of pieces of output data in which the matching degree is greater than or equal to the predetermined matching degree threshold, the learning object recognition part 112 may select the plurality of pieces of output data in which the matching degree is greater than or equal to the predetermined matching degree threshold. In this instance, the learning object recognition part 112 may associate the matching degree of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

As described above, by performing the 3D matching processing, the learning object recognition part 112 may select, as the correct answer data, one piece of output data (specifically, one or more types of processing parameters included in one piece of output data) in which at least one of the position and posture in the 3D imaging coordinate system of the learning target object captured in the image indicated by the stereo image data included in one piece of learning image data (at least one of the position and posture calculated by the learning object recognition part 112) approaches at least one of the position and posture in the 3D imaging coordinate system of the learning target object indicated by the target position posture data associated with one piece of learning image data (e.g., stereo image data), in other words, in which the matching degree is higher.

The learning object recognition part 112 may select one piece of output data, based on the time required for one time of the 3D matching processing included in each of the plurality of pieces of output data. At this time, the learning object recognition part 112 may select one piece of output data requiring the shortest time for processing. Alternatively, the learning object recognition part 112 may select a piece of output data in which the time required for processing is less than or equal to a predetermined time threshold. In this instance, in a case where there are a plurality of pieces of output data in which the time required for processing is less than or equal to the predetermined time threshold, the learning object recognition part 112 may select the plurality of pieces of output data in which the time required for processing is less than or equal to the predetermined time threshold. In this case, the learning object recognition part 112 may associate the time required for processing of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

The learning object recognition part 112 may select one piece of output data, based on the matching degree and the time required for one time of the 3D matching processing included in each of the plurality of pieces of output data. At this time, the learning object recognition part 112 may select a piece of output data in which the matching degree is greater than or equal to the predetermined matching degree threshold and the time required for processing is less than or equal to the predetermined time threshold. In a case where there are a plurality of pieces of output data in which the matching degree is greater than or equal to the predetermined matching degree threshold and the time required for processing is less than or equal to the predetermined time threshold, the learning object recognition part 112 may select a piece of output data indicating the highest matching degree from the plurality of pieces of output data. Alternatively, in a case where there are a plurality of pieces of output data in which the matching degree is greater than or equal to the predetermined matching threshold and the time required for processing is less than or equal to the predetermined time threshold, the learning object recognition part 112 may associate the matching degree and the time required for processing in each of the plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

Alternatively, the learning object recognition part 112 may select one piece of output data, based on a score calculated by integrating the matching degree and an inverse of the time required for processing. The learning object recognition part 112 may select one piece of output data indicating the largest score. Alternatively, the learning object recognition part 112 may select a piece of output data in which the score is greater than or equal to a predetermined score threshold. In this instance, in a case where there are a plurality of pieces of output data in which the score is greater than or equal to the predetermined score threshold, the learning object recognition part 112 may select the plurality of pieces of output data in which the score is greater than or equal to the predetermined score threshold. In this instance, the learning object recognition part 112 may associate the score of each of the selected plurality of pieces of output data, with one or more types of processing parameters, and may display them on the display serving as the output apparatus 150. The user of the robot system 1 may select one or more types of processing parameters included in one piece of output data displayed on the display, via the input apparatus 140.

As described above, by performing the 3D matching processing, the learning object recognition part 112 may select, as the correct answer data, one piece of output data (specifically, one or more types of processing parameters included in one piece of output data) in which at least one of the position and posture in the 3D imaging coordinate system of the learning target object captured in the image indicated by the stereo image data included in one piece of learning image data (at least one of the position and posture calculated by the learning object recognition part 112) approaches at least one of the position and posture in the 3D imaging coordinate system of the learning target object indicated by the target position posture data associated with one piece of learning image data (e.g., stereo image data), in other words, in which the matching degree is higher and the time required for one time of the 3D matching processing is reduced. That is, the learning object recognition part 112 may select the correct answer data, based on the matching degree and the time required for one time of the 3D matching processing.

The learning object recognition part 112 may output only one piece of output data even when the 3D matching processing using one piece of learning image data is performed more than once, i.e., a plurality of times. In this case, the outputted output data may be, for example, output data including one or more types of processing parameters in the 3D matching processing when the difference between at least one of the position and posture in the 3D imaging coordinate system of the learning target object captured in the image indicated by the stereo image data included in one piece of learning image data and at least one of the position and posture in the 3D imaging coordinate system of the learning target object indicated by the position posture data associated with one piece of learning image data (e.g., stereo image data), is less than or equal to the predetermined value.

One piece of learning image data and the output data outputted as a result of the 3D matching processing using the stereo image data included in the one piece of learning image data may be stored in the storage apparatus 120 in association with each other, for example. Here, in a case where the 3D matching processing using one piece of learning image data is performed more than once, i.e., a plurality of times, and a plurality of pieces of output data are outputted, the output data associated with one piece of learning image data may be one piece of output data selected from the plurality of pieces of output data based on the matching degree. The output data associated with one piece of learning image data may be one piece of output data selected from the plurality of pieces of output data based on the time required for one time of the 3D matching processing, in addition to or in place of the matching degree. The plurality of pieces of output data may be associated with one piece of learning image data, and may be stored in the storage apparatus 120.

One piece of teacher data may be generated from one piece of learning image data and one piece of output data associated with the one piece of learning image data. The teacher data may include one piece of learning image data (e.g., stereo image data) serving as input data (i.e., data inputted to the model 1131 that becomes the parameter determination model later), and one or more types of processing parameters in the 3D matching processing (in other words, the optimization parameter) included in one piece of output data serving as the correct answer data. In a case where a plurality of pieces of output data are associated with one piece of learning image data, a plurality of pieces of teacher data may be generated from one piece of learning image data and each of the plurality of pieces of output data.

The learning image data generated by the imaging unit 20 imaging the learning target object when the positional relation between the imaging unit 20 and the learning target object is the first position relation, may be referred to as the first learning image data. One or more types of processing parameters in the 3D matching processing included in one piece of output data associated with the first learning image data, may be the correct answer data for the teacher data. Therefore, one or more types of processing parameters in the 3D matching processing included in one piece of output data associated with the first learning image data, may be referred to as the first correct answer data.

The learning image data generated by the imaging unit 20 imaging the learning target object when the positional relation between the imaging unit 20 and the learning target object is the second position relation, may be referred to as the second learning image data. One or more types of processing parameters in the 3D matching processing included in one piece of output data associated with the second learning image data, may be the correct answer data for the teacher data. Therefore, for example, one or more types of processing parameters in the 3D matching processing included in one piece of output data associated with the second learning image data, may be referred to as the second correct answer data.

The first positional relation and the second positional relation are mentioned above, but there may be three or more positional relations, or only one positional relation.

The learning object recognition part 112 may perform the 3D matching processing described above, by using, as the learning image data, the virtual data generated by the virtual stereo camera corresponding to the imaging apparatus 22 provided in the imaging unit 20, virtually imaging the three-dimensional model of the learning target object disposed in the virtual space.

### (4-4-4) Others

The learning object recognition part 112 may perform the tracking processing (e.g., at least one of the 2D tracking processing and the 3D tracking processing) by using the learning image data. The tracking processing performed by the learning object recognition part 112 may be the same as the tracking processing performed by the processing object recognition part 115 (see "(2-4) 2D Tracking Processing" and "(2-5) 3D Tracking Processing"). The tracking processing (e.g., at least one of the 2D tracking processing and the 3D tracking processing) itself may be the same as the existing tracking processing.

In the following explanation of the 2D tracking processing, a change amount of at least one of the position and posture of the learning target object in the 2D imaging coordinate system is exemplified as the change amount of at least one of the position and posture of the learning target object. The change amount of at least one of the position and posture of the learning target object, however, may be a change amount of at least one of the position and posture of the learning target object in the 3D imaging coordinate system, may be a change amount of at least one of the position and posture of the learning target object in the global coordinate system, or may be a change amount of at least one of the position and posture of the learning target object in a coordinate system differing from the 2D imaging coordinate system, the 3D imaging coordinate system, and the global coordinate system. In the following explanation of the 3D tracking processing, the change amount of at least one of the position and posture of the learning target object in the 3D imaging coordinate system is exemplified as the change amount of at least one of the position and posture of the learning target object. The change amount of at least one of the position and posture of the learning target object, however, may be a change amount of at least one of the position and posture of the learning target object in the 2D imaging coordinate system, may be a change amount of at least one of the position and posture of the learning target object in the global coordinate system, or may be a change amount of at least one of the position and posture of the learning target object in the coordinate system differing from the 3D imaging coordinate system, the 2D imaging coordinate system, and the global coordinate system.

In a case where the learning object recognition part 112 performs the 2D tracking processing, the learning object recognition part 112 may track at least one feature portion that is the same as at least one feature portion (e.g., at least one of a feature point and an edge) of the learning target object captured in an image indicated by one piece of monocular image data included in one piece of learning image data, in an image indicated by another piece of monocular image data included in another piece of learning image data. That is, the learning object recognition part 112 may calculate the change amount of at least one of the position and posture of the learning target object in the 2D imaging coordinate system between one piece of monocular image data included in one piece of learning image data and another piece of monocular image data included in another piece of learning image data.

Here, in a case where a relative positional relation between the single monocular camera serving as the imaging apparatus 21 provided in in the imaging unit 20 and the learning target object is the first positional relation, one piece of monocular image data included in one piece of learning image data may be generated by the single monocular camera imaging the learning target object. Another piece of monocular image data included in another piece of learning image data may be generated by the single monocular camera imaging the learning target object in the second positional relation in which the learning target object is displaced with respect to the single monocular camera, after one piece of learning image data is generated. That is, one piece of monocular image data and another piece of monocular image data are monocular image data obtained at different times.

The learning object recognition part 112 may change one or more types of processing parameters in the 2D tracking processing such that the change amount of at least one of the position and posture of the learning target object in the 2D imaging coordinate system (the change amount calculated by the learning object recognition part 112) approaches (typically, matches) the change amount of at least one of the position and posture in the 2D imaging coordinate system of the learning target object indicated by the target displacement data about the 2D tracking processing (the displacement data generated by the data generation part 111) associated with one piece of learning image data and another piece of learning image data. In other words, the learning object recognition part 112 may change one or more types of processing parameters in the 2D tracking processing such that the change amount of at least one of the position and posture of the learning target object in the 2D imaging coordinate system (the change amount calculated by the learning object recognition part 112) approaches (typically, matches) the change amount of at least one of the position and posture in the 2D imaging coordinate system of the learning target object indicated by the target displacement data, and may perform the 2D tracking target by using the changed one or more types of processing parameters.

The learning object recognition part 112 may change one or more types of processing parameters in the preprocessing performed on the learning image data used in the 2D tracking processing (e.g., at least one of one piece of monocular image data and another piece of monocular image data), in addition to or in place of one or more types of processing parameters in the 2D tracking processing.

An initial value may be set for one or more types of processing parameters in the 2D tracking processing. An initial value may not be set for one or more types of processing parameters in the 2D tracking processing. An initial value may be set for one or more types of processing parameters in the preprocessing performed on the learning image data used in the 2D tracking processing (e.g., at least one of one piece of monocular image data and another piece of monocular image data). An initial value may not be set for one or more types of processing parameters in the preprocessing performed on the learning image data used in the 2D tracking processing (e.g., at least one of one piece of monocular image data and another piece of monocular image data). "Changing the processing parameter" may include changing the value of the processing parameter, and changing the type of the processing parameter.

The learning object recognition part 112 may output, as a result of performing the 2D tracking processing using one piece of learning image data and another piece of learning image data, output data including one or more types of processing parameters in the 2D tracking processing. In addition to or in place of one or more types of processing parameters in the 2D tracking processing, the output data may include at least one of: one or more types of processing parameters in the preprocessing performed on the learning image data used in the 2D tracking processing (e.g., at least one of one piece of monocular image data and another piece of monocular image data); a matching degree; and a time required for one time of the 2D tracking processing. One piece of learning image data and another piece of learning image data, and the outputted output data may be stored in the storage apparatus 120 in association with each other, for example. The teacher data may be generated from one piece of learning image data and another piece of learning image data, and from the output data associated with the one piece of learning image data and the other piece of learning image data.

As described in "(4-1) Outline", one or more types of processing parameters included in the output data (here, at least one of: one or more types of processing parameters in the 2D tracking processing; and one or more types of processing parameters in the preprocessing performed on the learning image data used in the 2D tracking processing (e.g., at least one of one piece of monocular image data and another piece of monocular image data)) may be referred to as the correct answer data and may be referred to as the optimization parameter.

In a case where the learning object recognition part 112 performs the 3D tracking processing, the learning object recognition part 112 may perform the 3D tracking processing, for example, by using three-dimensional position data OSD#1 indicating the three-dimensional position of each of the plurality of points of the learning target object captured in an image indicated by one piece of stereo image data included in one piece of learning image data, and three-dimensional position data OSD#2 indicating the three-dimensional position of each of the plurality of points of the learning target object captured in an image indicated by another piece of stereo image data included in another piece of learning image data. The three-dimensional position data OSD#1 may be generated by the position calculation processing using one piece of stereo image data included in one piece of learning image data. The three-dimensional position data OSD#2 may be generated by the position calculation processing using another piece of stereo image data included in another piece of learning image data.

Here, one piece of stereo image data included in one piece of learning image data may be generated by the stereo camera imaging the learning target object in a case where the relative positional relation between the stereo camera serving as the imaging apparatus 22 provided in the imaging unit 20 and the learning target object is the first positional relation. Another piece of stereo image data included in another piece of learning image data may be generated by the stereo camera imaging the learning target object in the second positional relation in which the learning target object is displaced with respect to the stereo camera, after one piece of learning image data is generated. That is, one piece of stereo image data and another piece of stereo image data are stereo image data obtained at different times.

The learning object recognition part 112 may track, in the three-dimensional position data OSD#2, at least one feature portion that is the same as at least one feature portion of the learning target object indicated by the three-dimensional position data OSD#1. That is, the learning object recognition part 112 may track at least one feature portion that is the same as at least one feature portion of the learning target object captured in the image indicated by one piece of stereo image data included in one piece of learning image data, in the image indicated by another piece of stereo image data included in piece of learning image data. Thereafter, the learning object recognition part 112 may calculate the change amount of at least one of the position and posture of the learning target object in the 3D imaging coordinate system between the three-dimensional position data OSD#1 and the three-dimensional position data OSD#2.

The learning object recognition part 112 may change one or more types of processing parameters in the 3D tracking processing such that the change amount of at least one of the position and posture of the learning target object in the 3D imaging coordinate system (the change amount calculated by the learning object recognition part 112) approaches (typically, matches) the change amount of at least one of the position and posture in the 3D imaging coordinate system of the learning target object indicated by the target displacement data about the 3D tracking processing (the displacement data generated by the data generation part 111) associated with one piece of learning image data and another piece of learning image data. In other words, the learning object recognition part 112 may change one or more types of processing parameters in the 3D tracking processing such that the change amount of at least one of the position and posture of the learning target object in the 3D imaging coordinate system (the change amount calculated by the learning object recognition part 112) approaches (typically, matches) the change amount of at least one of the position and posture in the 3D imaging coordinate system of the learning target object indicated by the target displacement data, and may perform the 3D tracking processing by using the changed one or more types of processing parameters.

In addition to or in place of one or more types of processing parameters in the 3D tracking processing, the learning object recognition part 112 may change one or more types of processing parameters in the preprocessing performed on learning image data used in the 3D tracking processing (e.g., at least one of one piece of stereo image data and another piece of stereo image data).

An initial value may be set for one or more types of processing parameters in the 3D tracking processing. An initial value may not be set for one or more types of processing parameters in the 3D tracking processing. An initial value may be set for one or more types of processing parameters in the preprocessing performed on the learning image data used in the 3D tracking processing (e.g., at least one of one piece of stereo image data and another piece of stereo image data). An initial value may not be set for one or more types of processing parameters in the preprocessing performed on the learning image data used in the 3D tracking processing (e.g., at least one of one piece of stereo image data and another piece of stereo image data). "Changing the processing parameter" may include changing the value of the processing parameter, and changing the type of the processing parameter.

The learning object recognition part 112 may output, as a result of performing the 3D tracking processing using one piece of learning image data and another piece of learning image data, output data including one or more types of processing parameters in the 3D tracking processing. In addition to or in place of one or more types of processing parameters in the 3D tracking processing, the output data may include at least one of: one or more types of processing parameters in the preprocessing performed on the learning image data used in the 3D tracking processing (e.g., at least one of one piece of stereo image data and another piece of stereo image data); a matching degree; and a time required for one time of the 3D tracking processing. One piece of learning image data and another piece of learning image data, and the outputted output data may be stored in the storage apparatus 120 in association with each other, for example. The teacher data may be generated from one piece of learning image data and another piece of learning image data, and from the output data associated with the one piece of learning image data and the other piece of learning image data.

As described in "(4-1) Outline", one or more types of processing parameters included in the output data (here, at least one of: one or more types of processing parameters in the 3D tracking processing; and one or more types of processing parameters in the preprocessing performed on the learning image data used in the 3D tracking processing (e.g., at least one of one piece of stereo image data and another piece of stereo image data)) may be referred to as the correct answer data and may be referred to as the optimization parameter.

### (4-5) Teacher Data

As described above, the output data outputted from the learning object recognition part 112 as a result of the learning object recognition part 112 performing the 2D matching processing by using one piece of learning image data, may be associated with the one piece of learning image data. The output data outputted from the learning object recognition part 112 as a result of the learning object recognition part 112 performing the 3D matching processing by using one piece of learning image data, may be associated with the one piece of learning image data. The output data outputted from the learning object recognition part 112 as a result of the learning object recognition part 112 performing the position calculation processing by using one piece of learning image data, may be associated with the one piece of learning image data. Therefore, one piece of learning image data may be associated with, for example, the output data outputted from the learning object recognition part 112 as a result of the learning object recognition part 112 performing the 2D matching processing, the output data outputted from the learning object recognition part 112 as a result of the learning object 112 performing the 3D matching processing, and the output data outputted from the learning object recognition part 112 as a result of the learning object 112 performing the position calculation processing

Therefore, the teacher data generated from one piece of learning image data and the output data associated with the one piece of learning image data learning image data, may include, as the correct answer data, at least one of: one or more types of processing parameters in the 2D matching processing; one or more types of processing parameters in the 3D matching processing; and one or more types of processing parameters in the position calculation processing.

In addition to or in place of at least one of: one or more types of processing parameters in the 2D matching processing; one or more types of processing parameters in the 3D matching processing; and one or more types of processing parameters in the position calculation processing, serving as the correct answer data, the teacher data may include at least one of: one or more types of processing parameters in the 2D tracking processing; one or more types of processing parameters in the 3D tracking processing; and one or more types of processing parameters in the preprocessing performed on the learning image data used in the 2D matching processing, the 3D matching processing, the position calculation processing, the 2D tracking processing, and the 3D tracking processing.

In a case where the teacher data include, as the correct answer data, one or more types of processing parameters in the 2D matching processing, the teacher data may include the monocular image data used in the 2D matching processing serving as the learning image data.

In a case where the teacher data include, as the correct answer data, at least one of: one or more types of processing parameters in the 3D matching processing; and one or more types of processing parameters in the position calculation processing, the teacher data may include, as the learning image data, the stereo image data used in at least one of the 3D matching processing and the position calculation processing.

In a case where the teacher data include, as the correct answer data, at least one of: one or more types of processing parameters in the 2D matching processing; one or more types of processing parameters in the 3D matching processing; and one or more types of processing parameters in the position calculation processing, the teacher data may include, as the learning image data, the monocular image data used in the 2D matching processing, and the stereo image data used in at least one of the 3D matching processing and the position calculation processing.

The luminance value of a background of the image (i.e., a part other than the learning target object captured in the image) indicated by the learning image data (e.g., at least one of the monocular image data and the stereo learning image data) included in the teacher data, may be transformed into a single luminance value (e.g., a luminance value corresponding to a black color).

Here, for example, the marker M provided on the stage ST is not captured in the image indicated by the processing target image data (i.e., the image data generated by the imaging unit 20 imaging the object (e.g., the workpiece W) serving as the target on which the end effector 13 performs the predetermined processing) inputted to the parameter determination model generated by the learning part 113 based on the learning of the model 1131 (i.e., the model 1131 that becomes the parameter determination model later) using the teacher data. In this instance, the marker M provided on the stage ST is not captured in the image in an actual operation of the robot system 1 after the parameter determination model is generated. Incidentally, "in the actual operation" indicates a time when the control apparatus 100 performs the robot control processing for controlling at least one of the robot 10 and the end effector 13 such that the end effector 13 performs the predetermined processing on the processing target object (e.g., the workpiece W).

In a case where the learning of the model 1131 is performed by using the teacher data including the learning image data including the marker M provided on the stage ST, which is not included in the actual operation of the robot system 1, one or more types of processing parameters determined based on the processing target image data by the parameter determination model generated by the learning, may deviate from a true value. That is, the object that is not captured in the image in the actual operation of the robot system 1, such as the marker M provided on the stage ST, may become a factor (noises) that hinders an improvement in the accuracy of the parameter determination model.

Therefore, for example, by transforming the luminance value of the background of the image into a single luminance value, the image of the object that is not captured in the image in the actual operation of the robot system 1, such as the marker M provided in the stage ST, is removed from the image indicated by the learning image data. Consequently, it is possible to prevent/reduce the noise of the learning of the parameter determination model.

The learning target object captured in the image indicated by the monocular image data included in the learning image data, and the part other than the learning target object (i.e., the background) are identifiable from at least one of the position and posture in the 2D imaging coordinate system of the learning target object, which is calculated by the learning object recognition 112 performing the 2D matching processing using the monocular image data, for example. The learning target object captured in the image indicated by the stereo image data included in the learning image data, and the part other than the learning target object (i.e., the background) are identifiable from at least one of the position and posture in the 3D imaging coordinate system of the learning target object, which is calculated by the learning object recognition 112 performing the 3D matching processing using the stereo image data, for example.

For example, as described in "(4-1) Outline", the learning part 113 may perform the learning of the model 1131 (i.e., the model 1131 that becomes the parameter determination model later) by using the teacher data. The learning object recognition part 112 may perform at least one of the matching processing (e.g., at least one of the 2D matching processing and the 3D matching processing) and the position calculation processing by using the learning image data, thereby outputting output data including one or more types of processing parameters serving as the correct answer data for the teacher data used in the learning performed by the learning part 113. In a case where the learning object recognition part 112 performs the 2D matching processing using the learning image data and outputs the output data including the one or more types of processing parameters, the data generation part 111 may generate the position posture data indicating at least one of the position and posture in the 2D imaging coordinate system of the learning target object, which serve as a target/goal that the learning object recognition part 112 allows at least one of the position and posture in the 2D imaging coordinate system of the learning target object calculated from the learning image data (e.g., the monocular image data), to approach (typically, match). Furthermore, the signal generation part 116 may generate the control signal for controlling the robot 10 and the imaging unit 20 (e.g., the robot control signal and the imaging control signal) such that the learning target object is imaged in the predetermined positional relation and the learning image data is generated.

Thus, in addition to the learning part 113, at least one of the data generation part 111, the learning object recognition part 112, and the signal generation part 116 can be said to be an element relating to the learning of the model 1131. Therefore, not only the learning part 113, but also at least one of the learning part 113, the data generating part 111, the learning object recognition part 112, and the signal generating part 116 may be included and referred to as the learning part. The arithmetic apparatus 110 including: the learning part 113; and at least one of the data generation part 111, the learning object recognition part 112, and the signal generation part 116, may also be referred to as the learning part.

As described above, the arithmetic apparatus 110 may be referred to as the control part. Therefore, the processing associated with the learning of the model 1131 in the arithmetic apparatus 110, may be interpreted as being performed in the control part. The processing performed by the learning object recognition part 112 included in the arithmetic apparatus 110 that may be referred to as the control part, may be interpreted as being performed by the control part. For example, it can be said that the control part may perform the matching processing (e.g., at least one of the 2D matching processing and the 3D matching processing) using the learning image data, and may calculate at least one of the position and posture in the imaging coordinate system (e.g., the 2D imaging coordinate system or the 3D imaging coordinate system) of the learning target object captured in the image indicated by the learning image data (e.g., at least one of the monocular image data and the stereo image data). For example, it can be said that the control part may perform the position calculation processing using the learning image data, and may calculate the three-dimensional position of each of the plurality of points of the learning target object captured in the image indicated by the learning image data (e.g., the stereo image data).

The learning object recognition part 112 and the processing object recognition part 115 have in common that both performs at least one of the matching processing (e.g., at least one of the 2D matching processing and the 3D matching processing) and the position calculation processing, or similar processing, by using the image data, for example. Therefore, at least a part of the processing performed by the learning object recognition part 112 may be performed by the processing object recognition part 115. In this instance, the processing object recognition part 115 may not perform at least one of the matching processing and the position calculation processing, or similar processing, based on one or more types of processing parameters determined by the determination part 114. For example, at least one of the matching processing and the position calculation processing, or similar processing, based on one or more types of processing parameters determined by the determination part 114 (e.g., see "(3) Processing Parameter Determination"), may be performed by a functional block differing from the processing object recognition part 115.

Alternatively, the arithmetic apparatus 110 may include, for example, one functional block that performs both the processing performed by the learning object recognition part 112 and the processing performed by the processing object recognition part 115. That is, the learning object recognition part 112 and the processing object recognition part 115 may be realized by the same functional block. In this instance, the same functional block may be referred to as an object recognition part.

On the other hand, since the arithmetic apparatus 110 may be referred to as the learning part, the determination of one or more types of processing parameters performed, for example, by the determination part 114 included in the arithmetic apparatus 110 using the parameter determination model, may be interpreted as being performed by the learning part.

### (5) Technical Effect

As described above, there may be one or more types of settable or variable processing parameters in each of the plurality of types of arithmetic processing such as, for example, the matching processing, the position calculation processing, the tracking processing, and the preprocessing. A change in the value of one or more types of processing parameters changes, may change a position in the image of an edge detected from the image indicated by the image, for example. For example, as described above, the edge may be the feature portion in a case of matching the object (e.g., the workpiece W) captured in the image indicated by the image data and the model data (e.g., the two-dimensional model data IMG_2M, the three-dimensional model data 3M) in the matching processing. Therefore, if the edge detected from the image indicated by the image data deviates from, for example, an outer edge of the object captured in the image indicated by the image data (in other words, the detected edge deviates from a true value), for example, at least one of the position and posture of the object calculated by the matching processing also deviates from a true value. That is, the calculation accuracy of at least one of the position and posture of the object calculated by the matching processing is relatively low.

As described above, since there are one or more types of processing parameters in each of the plurality of types pf arithmetic processing, it is extremely hard for the user of the robot system 1 to individually adjust and properly set (determine) each of many types of processing parameters of the arithmetic processing, in order to achieve a desired calculation accuracy of the position and posture of the object (e.g., the workpiece W).

In contrast, in the control apparatus 100 (e.g., the arithmetic apparatus 110), the processing object recognition part 115 of the arithmetic apparatus 110 determines, by using the parameter determination model, one or more types of processing parameters in the arithmetic processing (e.g., at least one of the matching processing, the position calculation processing, the tracking processing, and the preprocessing, etc.) performed by using the image data including the object (e.g., the workpiece W) on which the end effector 13 performs the predetermined processing.

Here, the parameter determination model may be generated by the learning using the teacher data including: the learning image data; and one or more types of processing parameters serving as the correct answer data, as described above. For example, as described in "(4-4) Processing of Learning Object Recognition Part," it can be said that one or more types of processing parameters serving as the correct answer data are processing parameters that are or are as close as possible to a true value. Therefore, one or more types of processing parameters determined by the parameter determination model generated by the learning using the teacher data, are expectedly as close as possible to or are expectedly a true value of one or more types of processing parameters in the arithmetic processing performed by the processing object recognition part 115 using the image data.

Consequently, at least one of the position and posture of the object (e.g., the workpiece W) calculated by the arithmetic processing performed by the processing object recognition part 115 using one or more types of processing parameters determined by the parameter determination model, are also expectedly as close as possible to or are expectedly a true value. Therefore, according to the control apparatus 100, it is possible to improve the accuracy of at least one of the position and posture of the object (e.g., the workpiece W) calculated by the processing object recognition part 115. In addition, according to the control apparatus 100, since one or more types of processing parameters are automatically determined, it is possible to reduce a burden on the user of the robot system 1, for example.

In the storage apparatus 120 of the control apparatus 100, one or more programs for realizing the function of the arithmetic apparatus 110 described above may be stored. The function of the arithmetic apparatus 110 described above may be realized by the arithmetic apparatus 110 executing at least one of the one or more programs stored in the storage apparatus 120.

### (6) First Modification

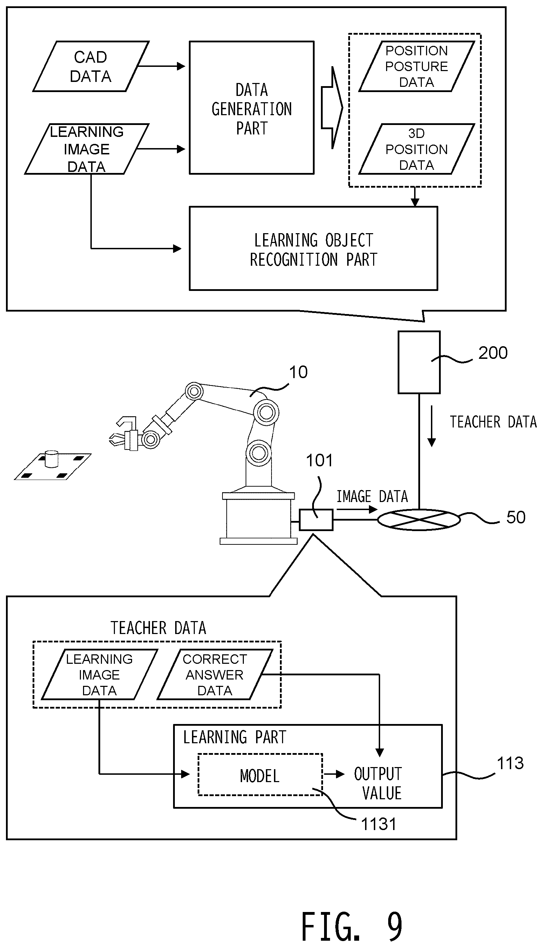

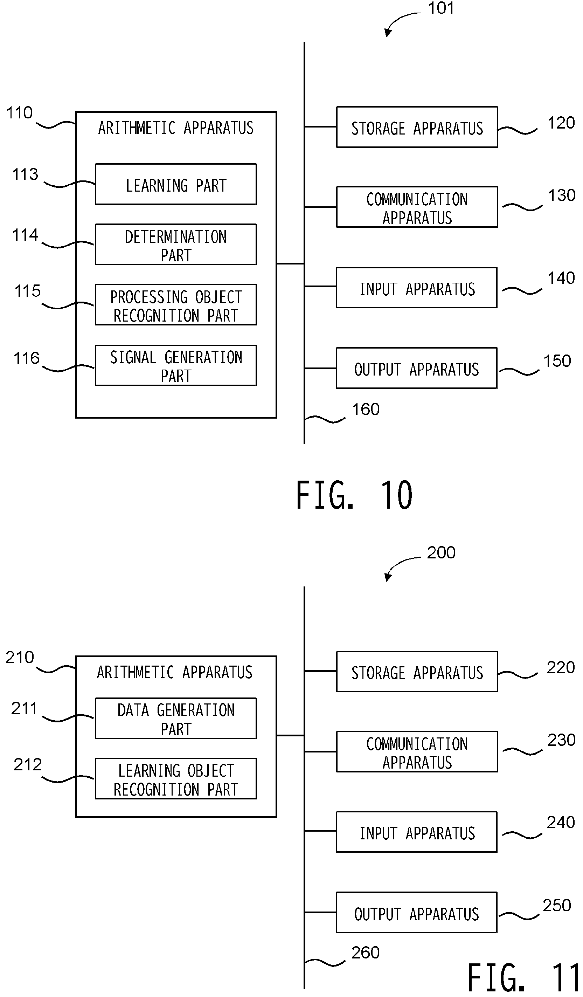

A first modification of the first example embodiment will be described with reference to FIG. 9 to FIG. 11. FIG. 9 is a diagram illustrating an outline of a robot system according to a first modification of the first example embodiment. FIG. 10 is a block diagram illustrating a configuration of a control apparatus according to the first modification of the first example embodiment. FIG. 11 is a block diagram illustrating a configuration of another apparatus according to the first modification of the first example embodiment.

In FIG. 9, a control apparatus 101 corresponding to the control apparatus 100 described above is configured to communicate with another apparatus 200 via a network 50. The other apparatus 200 may be, for example, another control apparatus corresponding to the control apparatus 100 described above, or may be a server apparatus (e.g., a cloud server).

In FIG. 10, the control apparatus 101 includes the arithmetic apparatus 110, the storage apparatus 120, and the communication apparatus 130. The control apparatus 101 may also include the input apparatus 140 and the output apparatus 150. The control apparatus 101, however, may not include at least one of the input apparatus 140 and the output apparatus 150. The arithmetic apparatus 110, the storage apparatus 120, the communication apparatus 130, the input apparatus 140, and the output apparatus 150 may be connected via the data bus 160.

The arithmetic apparatus 110 may include, for example, the learning part 113, the determination part 114, the processing object recognition part 115, and the signal generation part 116, as functional blocks that are logically realized. That is, the control apparatus 101 differs from the control apparatus 100 described above in that the arithmetic apparatus 110 does not include the data generation part 111 and the learning object recognition part 112.

In FIG. 11, the other apparatus 200 includes an arithmetic apparatus 210, a storage apparatus 220, and a communications apparatus 230. The other apparatus 200 may include an input apparatus 240 and an output apparatus 250. The other apparatus 200, however, may not include at least one of the input apparatus 240 and the output apparatus 250. The arithmetic apparatus 210, the storage apparatus 220, the communication apparatus 230, the input apparatus 240, and the output apparatus 250 may be connected via a data bus 260. The other apparatus 200 may be referred to as a data processing apparatus.

The arithmetic apparatus 210, the storage apparatus 220, the communication apparatus 230, the input apparatus 240, and the output apparatus 250 may be configured similarly to the arithmetic apparatus 110, the storage apparatus 120, the communication apparatus 130, the input apparatus 140, and the output apparatus 150 of the control apparatus 100, respectively.

The arithmetic apparatus 210 may include a data generation part 211 and a learning object recognition part 212, as functional blocks that are logically realized, for example. Such functional blocks may be realized by the arithmetic apparatus 210 executing a computer program.

In the first modification of the first example embodiment, processing that is the same as or similar to the processing described in "(4-3) Processing of Generating Target Data" and the processing described in "(4-4) Processing of Learning Object Recognition Part", may be performed in the arithmetic apparatus 210 of the other apparatus 200. In other words, the processing described in "(4-3) Processing of Generating Target Data" and the processing described in "(4-4) Processing of Learning Object Recognition Part" may not be performed in the arithmetic apparatus 110 of the control apparatus 101.

In the first modification according to the first example embodiment, the control apparatus 101 may transmit, to the other apparatus 200, the learning image data acquired by processing that is the same as or similar to the processing described in "(4-2) Processing of Acquiring Learning Image Data", by using the communication apparatus 130. In addition to or in place of the image data generated by the imaging unit 20 imaging the learning target object, the learning image data may include the virtual data generated by the virtual imaging unit virtually imaging the three-dimensional model corresponding to the learning target object disposed in the virtual space, for example.

The data generation part 211 of the arithmetic apparatus 210 of the other apparatus 200 may generate at least one of the target position posture data and the target three-dimensional position data, by using the learning image data, by the processing that is the same as or similar to the processing described in "(4-3) Processing of Generating Target Data". The data generation part 211 may generate the target displacement data about the tracking processing by using the learning image data. The learning object recognition part 212 of the arithmetic apparatus 210 may change one or more types of processing parameters in at least one of the matching processing and the position calculation processing, by using the learning image data and at least one of the target position posture data and the target three-dimensional position data associated with the learning image data, by the processing that is the same as or similar to the processing described in "(4-4) Processing of Learning Object Recognition Part".

The learning object recognition part 212 may change (in other words, optimize) one or more types of processing parameters in the matching processing such that at least one of the position and posture in the imaging coordinate system (e.g., at least one of the 2D imaging coordinate system and the 3D imaging coordinate system) of the learning target object captured in the image indicated by the learning image data calculated by performing the matching processing (e.g., at least one of the 2D matching processing and the 3D matching processing) using the learning image data (at least one of the position and posture calculated by the learning object recognition part 212) approaches (typically, matches) at least one of the position and posture in the imaging coordinate system of the learning target object indicated by the target position posture data. In addition to or in place of one or more types of processing parameters in the matching processing, the learning object recognition part 212 may change (in other words, optimize) one or more types of processing parameters in the preprocessing performed on the learning image data used in the matching processing.

The learning object recognition part 212 may change (in other words, optimize) one or more types of processing parameters in the position calculation processing such that the three-dimensional position of each of the plurality of points of the learning target object captured in the image indicated by the learning image data calculated by performing the position calculation processing using the learning image data (the three-dimensional position of each of the plurality of points calculated by the learning object recognition part 212) approaches (typically, matches) the three-dimensional position of each of the plurality of points of the learning target object indicated by the target three-dimensional position data. In addition to or in place of one or more types of processing parameters in the position calculation processing, the learning object recognition part 212 may change (in other words, optimize) one or more types of processing parameters in the preprocessing performed on the learning image data used in the position calculation processing.

The learning object recognition part 212 may change (in other words, optimize) one or more types of processing parameters in the tracking processing such that the change amount of at least one of the position and posture in the imaging coordinate system (e.g., at least one of the 2D imaging coordinate system and the 3D imaging coordinate system) of the learning target object captured in the images indicated by the learning image data calculated by performing the tracking processing (e.g., at least one of the 2D tracking processing and the 3D tracking processing) using the plurality of pieces of learning image data obtained at different times (the change amount calculated by the learning object recognition part 212) approaches (typically, matches) the change amount of at least one of the position and posture in the imaging coordinate system of the learning target object indicated by the target displacement data about the tracking processing. In addition to or in place of one or more types of processing parameters in the tracking processing, the learning object recognition part 212 may change (in other words, optimize) one or more types of processing parameters in the preprocessing performed on the learning image data used in the tracking processing.

The learning object recognition part 212 may generate output data including one or more types of processing parameters changed (in other words, optimized) in the above-described processing. One or more types of processing parameters included in the output data may be referred to as the optimization parameter. The generated output data may be stored in the storage apparatus 220 in association with the learning image data, for example.

The other apparatus 200 may generate the teacher data from the learning image data and one or more types of processing parameters included in the output data (i.e., the optimization parameter) associated with the learning image data. The other apparatus 200 may transmit the generated teacher data to the control apparatus 101 by using the communication apparatus 230.

In place of the teacher data, the other apparatus 200 may transmit the output data associated with the learning image data, to the control apparatus 101 by using the communication apparatus 230, for example. In this instance, the teacher data may be generated in the control apparatus 101.

The learning part 113 of the arithmetic apparatus 110 of the control apparatus 101 may generate the parameter determination model by performing learning using the teacher data. The determination part 114 of the arithmetic apparatus 110 may determine one or more types of processing parameters in the arithmetic processing (e.g., at least one of the 2D matching processing, the 3D matching processing, the position calculation processing, the 2D tracking processing, the 3D tracking processing, and the preprocessing), by inputting, to the parameter determination model, the image data (e.g., the image data IMG_2D and/or IMG_3D) generated by the imaging unit 20 imaging the object (e.g., the workpiece W) on which the end effector 13 performs the predetermined processing. The processing object recognition part 115 of the arithmetic apparatus 110 may calculate at least one of the position and posture of the object (e.g., the workpiece W), by performing the arithmetic processing using the image data (e.g., the image data IMG_2D and/or IMG_3D) with one or more types of processing parameters determined by the determination part 114.

### (7) Second Modification

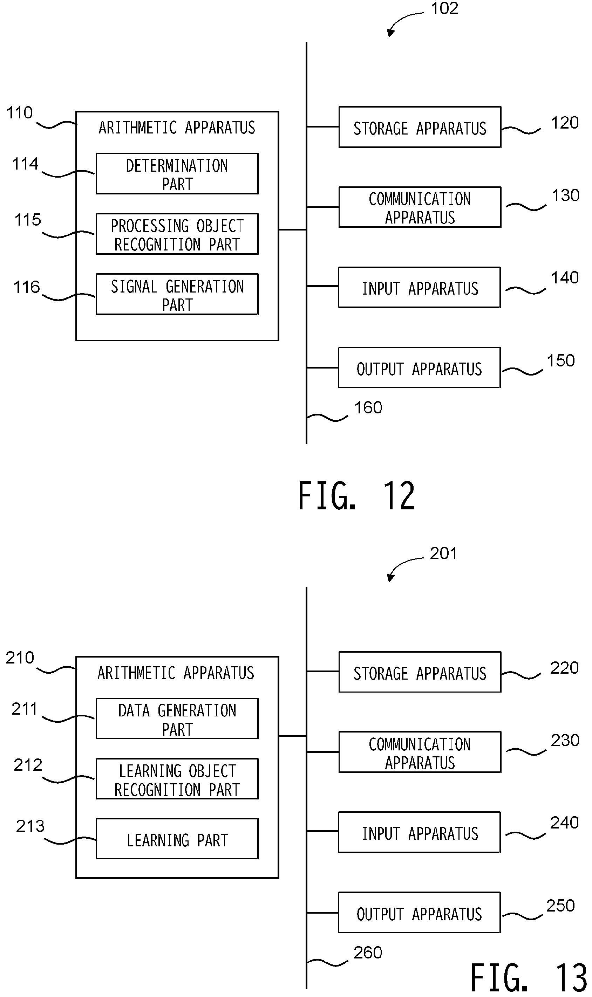

A second modification of the first example embodiment will be described with reference to FIG. 12 and FIG. 13. FIG. 12 is a block diagram illustrating a configuration of a control apparatus according to a second modification of the first example embodiment. FIG. 13 is a block diagram illustrating a configuration of another apparatus according to the second modification of the first example embodiment.

A control apparatus 102 corresponding to the control apparatus 100 described above is configured to communicate with another apparatus 201 via the network 50 (see FIG. 9). The other apparatus 201 may be, for example, another control apparatus corresponding to the control apparatus 100 described above, or may be a server apparatus (e.g., a cloud server).

In FIG. 12, the control apparatus 102 includes the arithmetic apparatus 110, the storage apparatus 120, and the communication apparatus 130. The control apparatus 102 may include the input apparatus 140 and the output apparatus 150. The control apparatus 102, however, may not include at least one of the input apparatus 140 and the output apparatus 150. The arithmetic apparatus 110, the storage apparatus 120, the communication apparatus 130, the input apparatus 140, and the output apparatus 150 may be connected via the data bus 160.

The arithmetic apparatus 110 may include, for example, the learning part 113, the determination part 114, the processing object recognition part 115, and the signal generation part 116, as functional blocks that are logically realized. That is, the control apparatus 101 differs from the control apparatus 100 described above in that the arithmetic apparatus 110 does not include the data generation part 111, the learning object recognition part 112, and the learning part 113.

In FIG. 13, the other apparatus 201 includes the arithmetic apparatus 210, the storage apparatus 220, and the communications apparatus 230. The other apparatus 201 may include the input apparatus 240 and the output apparatus 250. The other apparatus 201, however, may not include at least one of the input apparatus 240 and the output apparatus 250. The arithmetic apparatus 210, the storage apparatus 220, the communication apparatus 230, the input apparatus 240, and the output apparatus 250 may be connected via the data bus 260. The other apparatus 201 may be referred to as the data processing apparatus.

The arithmetic apparatus 210, the storage apparatus 220, the communication apparatus 230, the input apparatus 240, and the output apparatus 250 may be configured similarly to the arithmetic apparatus 110, the storage apparatus 120, the communication apparatus 130, the input apparatus 140, and the output apparatus 150 of the control apparatus 100, respectively.

The arithmetic apparatus 210 may include the data generation part 211, the learning object recognition part 212, and a learning part 213, as functional blocks that are logically realized, for example. Such functional blocks may be realized by the arithmetic apparatus 210 executing a computer program.

In the second modification of the first example embodiment, the processing that is the same as or similar to the processing described in "(4-3) Processing of Generating Target Data" and the processing described in "(4-4) Processing of Learning Object Recognition Part", as well as processing relating to the learning using the teacher data (i.e., processing relating to the learning for generating the parameter determination model), may be performed in the arithmetic apparatus 210 of the other apparatus 201. In other words, the processing described in "(4-3) Processing of Generating Target Data", the processing described in "(4-4) Processing of Learning Object Recognition Part", and the processing relating to the learning using the teacher data, may not be performed in the arithmetic apparatus 110 of the control apparatus 102.

In the second modification according to the first example embodiment, the control apparatus 102 may transmit, to the other apparatus 201, the learning image data acquired by the processing that is the same as or similar to the processing described in "(4-2) Processing of Acquiring Learning Image Data", by using the communication apparatus 130. The learning image data may include not only the image data generated by the imaging unit 20 imaging the learning target object, but also the virtual data generated by the virtual imaging unit virtually imaging the three-dimensional model corresponding to the learning target object disposed in the virtual space, for example.

The data generation part 211 of the arithmetic apparatus 210 of the other apparatus 201 may generate at least one of the target position posture data and the target three-dimensional position data, by using the learning image data, by the processing that is the same as or similar to the processing described in "(4-3) Processing of Generating Target Data". The data generation part 211 may generate the target displacement data about the tracking processing by using the learning image data. The learning object recognition part 212 of the arithmetic apparatus 210 may change one or more types of processing parameters in at least one of the matching processing and the position calculation processing, by using the learning image data and at least one of the target position posture data and the target three-dimensional position data associated with the learning image data, by the processing that is the same as or similar to the processing described in "(4-4) Processing of Learning Object Recognition Part".

The learning object recognition part 212 may change (in other words, optimize) one or more types of processing parameters in the matching processing such that at least one of the position and posture in the imaging coordinate system (e.g., at least one of the 2D imaging coordinate system and the 3D imaging coordinate system) of the learning target object captured in the image indicated by the learning image data calculated by performing the matching processing (e.g., at least one of the 2D matching processing and the 3D matching processing) using the learning image data (at least one of the position and posture calculated by the learning object recognition part 212) approaches (typically, matches) at least one of the position and posture in the imaging coordinate system of the learning target object indicated by the target position posture data. In addition to or in place of one or more types of processing parameters in the matching processing, the learning object recognition part 212 may change (in other words, optimize) one or more types of processing parameters in the preprocessing performed on the learning image data used in the matching processing.

The learning object recognition part 212 may change (in other words, optimize) one or more types of processing parameters in the position calculation processing such that the three-dimensional position of each of the plurality of points of the learning target object captured in the image indicated by the learning image data calculated by performing the position calculation processing using the learning image data (the three-dimensional position of each of the plurality of points calculated by the learning object recognition part 212) approaches (typically, matches) the three-dimensional position of each of the plurality of points of the learning target object indicated by the target three-dimensional position data. In addition to or in place of one or more types of processing parameters in the position calculation processing, the learning object recognition part 212 may change (in other words, optimize) one or more types of processing parameters in the preprocessing performed on the learning image data used in the position calculation processing.

The learning object recognition part 212 may change (in other words, optimize) one or more types of processing parameters in the tracking processing such that the change amount of at least one of the position and posture in the imaging coordinate system (e.g., at least one of the 2D imaging coordinate system and the 3D imaging coordinate system) of the learning target object captured in the images indicated by the learning image data calculated by performing the tracking processing (e.g., at least one of the 2D tracking processing and the 3D tracking processing) using the plurality of pieces of learning image data obtained at different times (the change amount calculated by the learning object recognition part 212) approaches (typically, matches) the change amount of at least one of the position and posture in the imaging coordinate system of the learning target object indicated by the target displacement data about the tracking processing. In addition to or in place of one or more types of processing parameters in the tracking processing, the learning object recognition part 212 may change (in other words, optimize) one or more types of processing parameters in the preprocessing performed on the learning image data used in the tracking processing.

The learning object recognition part 212 may generate output data including one or more types of processing parameters changed (in other words, optimized) in the above-described processing. One or more types of processing parameters included in the output data may be referred to as the optimization parameter. The generated output data may be stored in the storage apparatus 220 in association with the learning image data, for example.

The learning part 213 of the arithmetic apparatus 210 may generate the parameter determination model, by performing the learning using the teacher data generated from the learning image data and one or more types of processing parameters included in the output data (i.e., the optimization parameter) associated with the learning image data. The other apparatus 201 may transmit the generated parameter determination model to the control apparatus 102 by using the communication apparatus 230. In this instance, the parameter determination model transmitted to the control apparatus 102 may be stored in the storage apparatus 120 of the control apparatus 102, or may be stored in the determination part 114, for example.

The determination part 114 of the arithmetic apparatus 110 of the control apparatus 102 may determine one or more types of processing parameters in the arithmetic processing (e.g., at least one of the 2D matching processing, the 3D matching processing, the position calculation processing, the 2D tracking processing, the 3D tracking processing, and the preprocessing), by inputting, to the parameter determination model generated by the other apparatus 201, the image data (e.g., the image data IMG_2D and/or IMG_3D) generated by the imaging unit 20 imaging the object (e.g., the workpiece W) on which the end effector 13 performs the predetermined processing. The processing object recognition part 115 of the arithmetic apparatus 110 may calculate at least one of the position and posture of the object (e.g., the workpiece W), by performing the arithmetic processing using the image data (e.g., the image data IMG_2D and/or IMG_3D) with one or more types of processing parameters determined by the determination part 114.

The other apparatus 201 may not transmit the generated parameter determination model to the control apparatus 102. In this instance, the generated parameter determination model may be stored in the storage apparatus 220 of the other apparatus 201. In this instance, when determining one or more types of processing parameters, the determination part 114 of the control apparatus 102 may read the parameter determination model from the storage apparatus 220 of the other apparatus 201. The determination part 114 may determine one or more types of processing parameters, by inputting the image data (e.g., the image data IMG_2D and/or IMG_3D) to the read parameter determination model.

Alternatively, in this instance, the arithmetic apparatus 210 of the other apparatus 201 may include a determination part corresponding to the determination part 114. The determination part of the arithmetic apparatus 210 may determine one or more types of processing parameters, by inputting the image data IMG_2D and/or IMG_3D acquired from the control apparatus 102, to the parameter determination model. The other apparatus 201 may transmit data indicating the determined one or more types of processing parameters, to the control apparatus 102 by using the communication apparatus 230.

In a case where the arithmetic apparatus 210 of the other apparatus 201 includes the determination part corresponding to the determination part 114, the determination part of the arithmetic apparatus 210 may determine one or more types of processing parameters, by inputting, to the parameter determination model, image data acquired from another control apparatus that differs from the control apparatus 102 and that controls another robot different from the robot 10 (e.g., image data generated by the imaging unit of another robot imaging the object). The other apparatus 201 may transmit data indicating the determined one or more types of processing parameters, to a control apparatus that controls another robot different from the robot 10 (i.e., another control apparatus that differs from the control apparatus 102), by using the communication apparatus 230. In another control apparatus, at least one of the position and posture of the object may be calculated by performing the arithmetic processing using the determined one or more types of processing parameters determined above. In another control apparatus, a robot control signal for controlling another robot may be generated based on the calculated at least one of the position and posture of the object.

In a case where the parameter determination model generated in the other apparatus 201 by using the learning image data transmitted from the control apparatus 102 to the other apparatus 201 is stored in the storage apparatus 220 of the other apparatus 201, another control apparatus that differs from the control apparatus 102 and that controls another robot different from the robot 10 may read the parameter determination model from the storage image 220 of the other processing 201 in the determination of one or more types of processing parameters. This another control apparatus may determine one or more types of processing parameters, by inputting the image data generated by the imaging unit of another robot imaging the object, to the read parameter determination model.

### <Second Example Embodiment>

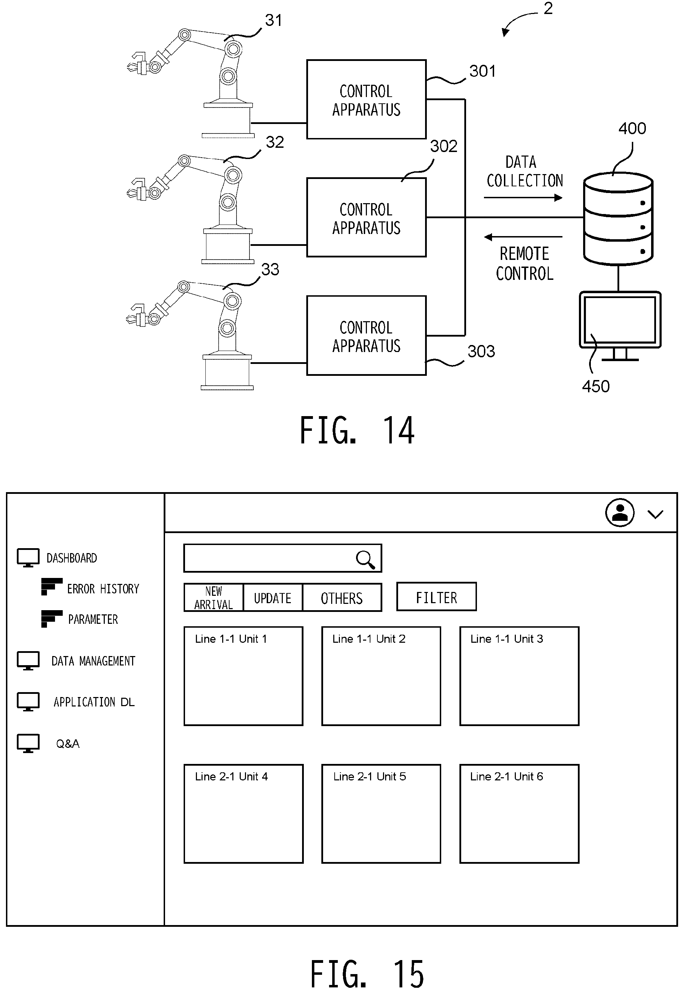

A second example embodiment will be described with reference to FIG. 14 to FIG. 19. FIG. 14 is a conceptual diagram of a robot system 2 according to the second example embodiment. In FIG. 14, the robot system 2 includes robots 31, 32, and 33, control apparatuses 301, 302, and 303, and a management apparatus 400. The robots 31, 32 and 33 may be robots corresponding to the robot 10 in the first example embodiment described above. The control apparatuses 301, 302 and 303 may be apparatuses corresponding to the control apparatus 100 in the first example embodiment described above. The robots 31, 32 and 33 are assumed to be installed/disposed, for example, in a factory production line or the like.

Each of the control apparatuses 301, 302, and 303 is communicable with the management apparatus 400 via a network. The management apparatus 400 may be a host computer installed/disposed in the factory, or may be a cloud server constructed on a wide area network such as the Internet. The management apparatus 400 includes a display 450 as an output apparatus.

The control apparatuses 301, 302, and 303 may perform the arithmetic processing (e.g., at least one of the 2D matching processing, the 3D matching processing, the position calculation processing, the 2D tracking processing, the 3D tracking processing, and the preprocessing) by using the processing target image data indicating the image in which the processing target object (e.g., the workpiece W) is captured, and may calculate at least one of position and posture of the processing target object. The control apparatuses 301, 302, and 303 may output control signals for driving the robots 31, 32, and 33 in order to process the processing target object in end effectors respectively provided in the corresponding robots 31, 32, and 33, based on the calculated at least one of the position and posture of the processing target object. Based on the control signals, the operation of the robot arms of the robots 31, 32, and 33 or the operation of the end effectors is controlled, and as a consequence, the end effectors may perform the predetermined processing on the processing target object.

In operation of the robots 31, 32, and 33, there may be problems (e.g., abnormal recognition of the processing target object) due to some reason. If the problem arises, at least one of the robots 31, 32, and 33 may stop. At this time, in order to prioritize early production restart, the stopped robot may be restarted or the control apparatus corresponding to the stopped robot may be reset without clarifying the cause of the problem that arises. This may result in a loss of log data about the problem that arises, likely causing the same problem again.

In the robot system 2, the management apparatus 400 sequentially collects data automatically from the control apparatuses 301, 302, and 303. The data collected by the management apparatus 400 may include at least one of the image data captured by the imaging unit disposed in each of the robots 31, 32, and 33, and the log data about the problem that arises. The data collected by the control apparatus 400 is not limited to the above.

The data collected by the management apparatus 400 may be stored in a storage apparatus (not illustrated) provided in the management apparatus 400. A user of the robot system 2 can view/browse the data collected by the management apparatus 400 via the display 450 of the management apparatus 400. In addition, the user can remotely control the control apparatuses 301, 302, and 303, by inputting information via an input apparatus (not illustrated) provided in the control apparatus 400.

Hereinafter, the function of the management apparatus 400 will be described, with a specific example of a window/screen displayed as a user interface on the display 450 illustrated.

In the window illustrated in FIG. 15, control apparatuses (e.g., the control apparatuses 301, 302, and 303, etc.) registered in the control apparatus 400 are displayed. Identification information such as "Line1-1 Unit1" may be added to the registered control apparatuses. In the window illustrated in FIG. 15, information indicating whether or not to be connected to the management apparatus 400, whether or not the control apparatus is operating, or the like, may be displayed for each registered control apparatus. In this way, the user can grasp a state of each of the plurality of control apparatuses, with reference to the information displayed on the window illustrated in FIG. 15.

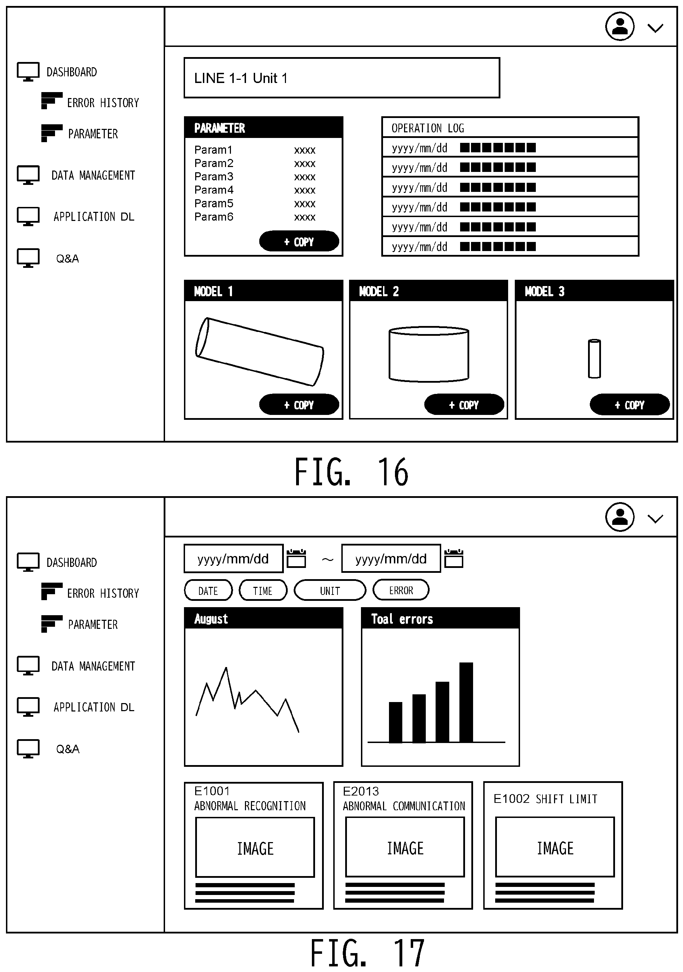

When one of the plurality of control apparatuses displayed on the window illustrated in FIG. 15 is selected, a window illustrated in FIG. 16 is displayed on the display 450. The window illustrated in FIG. 16 may show, for the selected one control apparatus, at least one of: information indicating a parameter relating to the control apparatus (which may be a parameter corresponding to one or more types of processing parameters according to the first example embodiment); operation log data, and the three-dimensional model used in the control apparatus. In the window illustrated in FIG. 16, when the user selects (e.g., clicks) a "+Copy" button displayed in a lower part of a frame illustrating the parameter, it is possible to copy the value of the parameter relating to one control apparatus (in this case, "Line1-1 Unit1") to the value of the parameter relating to another control apparatus.

The robots 31, 32 and 33 installed/disposed in the factory production line or the like, are of the same model in many cases. Similarly, the control apparatuses 301, 302, and 303 are of the same model in many cases. Therefore, the values of the parameters of the control apparatuses 301, 302, and 303 are often similar to each other. The control apparatuses may not have the same value of the parameters, as there are individual differences even in the same model. Since it is possible to copy the value of the parameter relating to one control apparatus to the value of the parameter relating to another control apparatus in the managing apparatus 400, it is possible to reduce a workload of the user, as compared with a case where the user individually sets the values of the parameters relating to the plurality of control apparatus.

In the window illustrated in FIG. 16, when the user selects (e.g., clicks) the "+copy" button displayed in the lower part of the frame indicating the model (e.g., a model 1, a model 2, and a model 3), it is possible to copy the CAD data indicating the three-dimensional model used in one of the control apparatuses, to another control apparatus.

A window illustrated in FIG. 17 shows an error history. In the window illustrated in FIG. 17, the error history of all the control apparatuses registered in the control apparatus 400 may be displayed. The error history may be sorted or searched by items such as "date", "time", "unit", and "error type". The error history may include information corresponding to "warning", in addition to information indicating "abnormality".

In a middle part of the window illustrated in FIG. 17, a transition of the number of errors of a month (here, August) and a transition of a total number of errors may be displayed. In a lower part of the window illustrated in FIG. 17, detailed information about an individual error may be displayed. The detailed information about the error may include at least one of the error type, the image indicated by the processing target image data when the error occurs, and a common phrase of a countermeasure plan associated with the error type.

The management apparatus 400 automatically collects the data from the control apparatuses 301, 302, and 303 and stores the collected data in the storage apparatus. Therefore, even if the robot that has a problem, or the like, is restarted or reset (e.g., the log data about the problem is erased from the control apparatus), the user can view/browse information about the error stored in the management apparatus 400. Therefore, it is possible for the user to analyze the cause of the problem that arises, or to take measures to prevent recurrence, from the information about the error stored in the management apparatus 400.

The control apparatus 400 may notify the user (e.g., may send an email) when newly collecting the log data about the problem (in other words, the information about the error). The management apparatus 400 may determine one or more types of processing parameters in the arithmetic processing of the control apparatuses 301, 302, and 303, by inputting the processing target image data when the error occurs, to the parameter determination model in the above-described first example embodiment. The user may simulate the arithmetic processing performed in at least one of the control apparatuses 301, 302, and 303, by using the processing target image when the error occurs, with the determined one or more types of processing parameters. In view of a result of the simulation, the user may change (adjust) one or more types of processing parameters in the arithmetic processing of the control apparatuses 301, 302, and 303. By inputting one or more types of processing parameters changed in the window illustrated in FIG. 16, the user may change one or more types of processing parameters in the arithmetic processing of the control apparatuses 301, 302, and 303, without stopping the operation of the robots 31, 32, and 33.

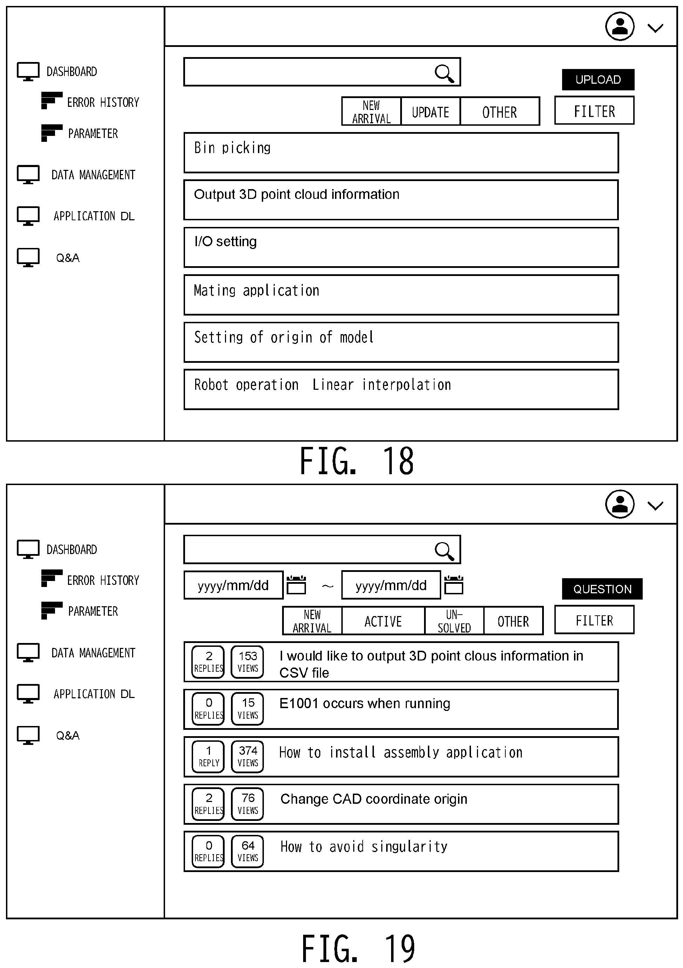

A window illustrated in FIG. 18 shows a list of program samples that are usable by the robots 31, 32, and 33, and API (Application Programming Interface) disclosed by a supplier of the robot or the control apparatus, or the like, for example. The displayed programs or the like may be sorted or searched by items such as "new arrival", "update", and "other".

The user may select (e.g., click) the item corresponding to a program or the like that the user desires to use, thereby checking the details of the program or the like, or downloading the program or the like. The user may input a keyword or the like into a frame (a frame with a magnifying glass mark displayed) displayed in an upper part of the window illustrated in FIG. 18, thereby searching for the program or the like associated with the inputted keyword or the like. The user may select (e.g., click) "filter" displayed on the window illustrated in FIG. 18, thereby narrowing down the program or the like displayed on the window. The user may select (e.g., click) "UPLOAD" displayed on the window illustrated in FIG. 18, thereby registering, in the control apparatus 400, a program or the like created by the user.

A window illustrated in FIG. 19 shows information about so-called Q&A. The displayed information may be sorted or searched by the items such as "date", "new arrival", "active", "unresolved", and "other". The user may select (e.g., click) the item of interest, thereby checking the details of the item or answering a question described in the item. The user may input a keyword or the like in a frame (a frame with a magnifying glass mark displayed) displayed in an upper part of the window illustrated in FIG. 19, thereby searching for the item associated with the inputted keyword or the like. The user may select (e.g., click) "filter" displayed on the window illustrated in FIG. 19, thereby narrowing down the information displayed on the window. The user may select (e.g., click) "question" displayed on the window illustrated in FIG. 19, thereby registering a new question in the control apparatus 400.

### <Supplementary Notes>

With respect to the example embodiment described above, the following Supplementary Notes are further disclosed.

### [Supplementary Note 1]

An arithmetic apparatus including:
a control part that controls at least an imaging part, wherein
the control part:
   outputs a first control signal for driving at least one of a movable apparatus including the imaging part, and a stage on which a learning target object is disposed, such that the imaging part and the learning target object have a predetermined positional relation, and for allowing the imaging part to image the learning target object in the predetermined positional relation; and
   performs arithmetic processing by using a parameter of the arithmetic processing determined by a model generated by learning using learning image data generated by the imaging part imaging the learning target object in the predetermined positional relation, by control based on the first control signal, and by using processing target image data generated by the imaging part imaging a processing target object having substantially a same shape as that of the learning target object, and calculates at least one of a position and posture of the processing target object.

### [Supplementary Note 2]

The arithmetic apparatus according to Supplementary Note 1, wherein
the predetermined positional relation is a plurality of mutually different positional relation between the imaging part and the learning target object,
the first control signal is a signal for driving at least one of the movable apparatus and the stage such that the predetermined positional relation is changed to each of the plurality of positional relations, and for allowing the imaging part to image the learning target object at each time of a change to each of the plurality of positional relations, and
the model is generated, by learning using a plurality of pieces of learning image data generated by the imaging part imaging the learning target object in each of the plurality of positional relations, by control based on the first control signal.

### [Supplementary Note 3]

The arithmetic apparatus according to Supplementary Note 1 or 2, wherein the parameter used in the arithmetic processing for calculating at least one of the position and posture of the processing target object is determined, by using processing target image data generated by the imaging part imaging the processing target object and the model generated by the learning using the learning image data.

### [Supplementary Note 4]

The arithmetic apparatus according to any one of Supplementary Notes 1 to 3, wherein the positional relation includes a relative posture of the learning target object and the imaging part.

### [Supplementary Note 5]

The arithmetic apparatus according to Supplementary Note 4, wherein the posture is a posture around at least one of a first axis along an optical axis of an optical system of the imaging part, a second axis perpendicular to the first axis, and a third axis perpendicular to the first and second axes, in a coordinate system of the learning target object defined by the first axis, the second axis, and the third axis.

### [Supplementary Note 6]

The arithmetic apparatus according to any one of Supplementary Notes 1 to 5, wherein the positional relation includes a distance between the learning target object and the imaging part.

### [Supplementary Note 7]

The arithmetic apparatus according to Supplementary Note 6, wherein the distance is a distance from the learning target to the imaging part in a first axis along an optical axis of an optical system of the imaging part, in a coordinate system of the learning target object defined by the first axis, a second axis perpendicular to the first axis, and a third axis perpendicular to the first and second axes.

### [Supplementary Note 8]

The arithmetic apparatus according to any one of Supplementary Notes 1 to 7, wherein
the control part:
receives an input of a range in which the position relation is changed, and
determines the predetermined positional relation in the range, based on the inputted range.

### [Supplementary Note 9]

The arithmetic apparatus according to any one of Supplementary Notes 1 to 8, wherein
the movable apparatus further includes a processing apparatus that performs processing on the processing target object, and
the control part:
   outputs a second control signal for driving the movable apparatus in order to process the processing target object in the processing apparatus, based on the calculated at least one of the position and posture of the processing target object.

### [Supplementary Note 10]

The arithmetic apparatus according to Supplementary Note 9, wherein
the control part controls the processing apparatus, and
the second control signal is a signal for controlling driving of the movable apparatus and processing of the processing apparatus for the processing target object, in order to process the processing target object in the processing apparatus.

### [Supplementary Note 11]

The arithmetic apparatus according to any one of Supplementary Notes 2 to 10, wherein
first learning image data of the plurality of pieces of learning image data are generated by the imaging part imaging the learning target object in a first relation of the plurality of positional relations,
second learning image data of the plurality of pieces of learning image data are generated by the imaging part imaging the learning target object in a second relation differing from the first relation, of the plurality of positional relations,
at least one of a first learning object position and a first learning object posture of the learning target object is calculated, based on the first learning image,
first correct answer data serving as the parameter used in the arithmetic processing, in the first relation, are generated, by using at least one of the first learning object position and the first learning object posture;
at least one of a second learning object position and a second learning object posture of the learning target object is calculated, based on the second learning image,
second correct answer data serving as the parameter used in the arithmetic processing, in the second relation, are generated by using at least one of the second learning object position and the second learning object posture, and
the model is generated, by learning using the first learning image data, the second learning image data, the first correct answer data, and the second correct answer data.

### [Supplementary Note 12]

The arithmetic apparatus according to Supplementary Note 11, wherein
the learning target object is disposed on a stage on which at least one marker is provided,
the first learning image data are generated by the imaging part in the first relation imaging at least one of the at least one marker, together with the learning target object, and
the second learning image data are generated by the imaging part in the second relation imaging at least one of the at least one marker, together with the learning target object.

### [Supplementary Note 13]

The arithmetic apparatus according to Supplementary Note 12, wherein
the at least one marker is a plurality of markers,
the first learning image data are generated by the imaging part in the first relation imaging at least one of the plurality of markers, together with the learning target object, and
the second learning image data are generated by the imaging part in the second relation imaging at least one of the plurality of markers, together with the learning target object.

### [Supplementary Note 14]

The arithmetic apparatus according to Supplementary Note 12, wherein
the at least one marker is one marker, and
the first and second learning image data are generated by the imaging part imaging the one marker, together with the learning target object in each of the first and second relations.

### [Supplementary Note 15]

The arithmetic apparatus according to Supplementary Note 12, wherein the marker is an AR marker.

### [Supplementary Note 16]

The arithmetic apparatus according to any one of Supplementary Notes 11 to 15, wherein
the imaging part includes a monocular camera,
the processing target image data are generated by the monocular camera imaging the processing target object,
the arithmetic processing includes two-dimensional matching processing using the processing target image data generated by the monocular camera, and two-dimensional model data about the processing target object,
the parameter of the arithmetic processing is a two-dimensional matching parameter of the two-dimensional matching processing,
the first learning image data are first monocular image data generated by the monocular camera in the first relation,
the second learning image data are second monocular image data generated by the monocular camera in the second relation,
at least one of the position and posture of the learning target object is calculated by two-dimensional matching processing with a first two-dimensional matching parameter for learning, using the first monocular image data and two-dimensional model data about the learning target object,
the first correct answer data are calculated, based on a first matching degree between at least one of the position and posture of the learning target object calculated by the two-dimensional matching processing with the first two-dimensional matching parameter for learning and at least one of the first learning object position and the first learning object posture,
at least one of the position and posture of the learning target object is calculated by two-dimensional matching processing with a second two-dimensional matching parameter for learning, using the second monocular image data and the two-dimensional model data about the learning target object,
the second correct answer data are calculated, based on a second matching degree between at least one of the position and posture of the learning target object calculated by the two-dimensional matching processing with the second two-dimensional matching parameter for learning and at least one of the second learning object position and the second learning object posture, and
the model is generated, by learning using the first monocular image data, the second monocular image data, the first correct answer data, and the second correct answer data.

### [Supplementary Note 17]

The arithmetic apparatus according to Supplementary Note 16, wherein
the first two-dimensional matching parameter for learning, in which at least one of the position and posture of the learning target object calculated by the two-dimensional matching processing with the first two-dimensional matching parameter for learning approaches at least one of the first learning object position and the first learning object posture, is calculated as the first correct answer data, and
the second two-dimensional matching parameter for learning, in which at least one of the position and posture of the learning target object calculated by the two-dimensional matching processing with the second two-dimensional matching parameter for learning approaches at least one of the second learning object position and the second learning object posture, is calculated as the second correct answer data.

### [Supplementary Note 18]

The arithmetic apparatus according to Supplementary Note 16 or 17, wherein
the first correct answer data are calculated, based on the first matching degree and a time required for the two-dimensional matching processing with the first two-dimensional matching parameter for learning, and
the second correct answer data are calculated, based on the second matching degree and a time required for the two-dimensional matching processing with the second two-dimensional matching parameter for learning.

### [Supplementary Note 19]

The arithmetic apparatus according to Supplementary Note 18, wherein
the first two-dimensional matching parameter for learning, in which at least one of the position and posture of the learning target object calculated by the two-dimensional matching processing with the first two-dimensional matching parameter for learning approaches at least one of the first learning object position and the first learning object posture, and in which the time required for the two-dimensional matching processing with the first two-dimensional matching parameter for learning is reduced, is calculated as the first correct answer data, and
the second two-dimensional matching parameter for learning, in which at least one of the position and posture of the learning target object calculated by the two-dimensional matching processing with the second two-dimensional matching parameter for learning approaches at least one of the second learning object position and the second learning object posture, and in which the time required for the two-dimensional matching processing with the second two-dimensional matching parameter for learning is reduced, is calculated as the second correct answer data.

### [Supplementary Note 20]

The arithmetic apparatus according to any one of Supplementary Notes 12 to 19, wherein
at least one of the first learning object position and the first learning object posture of the learning target object is calculated, by using the first learning image data and model data about the learning target object,
at least one of a first stage position and a first stage posture of the stage is calculated, based on at least one piece of image data about the marker included in the first learning image data,
at least one of a relative position and a relative posture of the learning target object and the stage is calculated, by using at least one of the first learning object position and the first learning object posture and at least one of the first stage position and the first stage posture,
at least one of a second stage position and a second stage posture of the stage is calculated, based on at least one piece of image data about the marker included in the second learning image data, and
at least one of the second learning object position and the second learning object posture is calculated, by using at least one of the relative position and the relative posture and at least one of the second stage position and the second stage posture.

### [Supplementary Note 21]

The arithmetic apparatus according to any one of Supplementary Notes 11 to 19, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes position calculation processing using the processing target image data generated by the stereo camera,
the parameter of the arithmetic processing is a position calculation processing parameter of the position calculation processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object,
the position of the learning target object is calculated by position calculation processing with a first position calculation parameter for learning, using the first stereo image data,
the first correct answer data are calculated, based on a third matching degree between the first learning object position and the position of the learning target object calculated by the position calculation processing with the first position calculation parameter for learning,
the position of the learning target object is calculated by position calculation processing with a second position calculation parameter for learning, using the second stereo image data,
the second correct answer data are calculated, based on a fourth matching degree between the second learning object position and the position of the learning target object calculated by the position calculation processing with the second position calculation parameter for learning, and
the model is generated, by using the first stereo image data, the second stereo image data, the first correct answer data, and the second correct answer data.

### [Supplementary Note 22]

The arithmetic apparatus according to Supplementary Note 21, wherein
the first position calculation parameter for learning, in which the position of the learning target object calculated by the position calculation processing with the first position calculation parameter for the learning approaches the first learning object position, is calculated as the first correct answer data, and
the second position calculation parameter for learning, in which the position of the learning target object calculated by the position calculation processing with the second position calculation parameter for the learning approaches the second learning object position, is calculated as the second correct answer data.

### [Supplementary Note 23]

The arithmetic apparatus according to Supplementary Note 21 or 22, wherein
the first correct answer data are calculated, based on the third matching degree and a time required for the position calculation processing with the first position calculation parameter for learning, and
the second correct answer data are calculated, based on the fourth matching degree and a time required for the position calculation processing with the second position calculation parameter for learning.

### [Supplementary Note 24]

The arithmetic apparatus according to Supplementary Note 23, wherein
the first position calculation parameter for learning, in which the position of the learning target object calculated by the position calculation processing with the first position calculation parameter for learning approaches the first learning object position, and in which the time required for the position calculation processing with the first position calculation parameter for learning is reduced, is calculates as the first correct answer data, and
the second position calculation parameter for learning, in which the position of the learning target object calculated by the position calculation processing with the second position calculation parameter for learning approaches the second learning object position, and in which the time required for the position calculation processing with the second position calculation parameter for learning is reduced, is calculates as the second correct answer data.

### [Supplementary Note 25]

The arithmetic apparatus according to any one of Supplementary Notes 12 to 19 and 21 to 24, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the first learning image data are transformed into first transformation image data indicating an image obtained by the stereo camera imaging the learning target object,
the first learning object position of the learning target object is calculated, by using the first transformation image data and model data about the learning target object,
the second learning image data are transformed into second transformation image data indicating an image obtained by the stereo camera imaging the learning target object, and
the second learning object position of the learning target object is calculated, by using the second transformation image data and the model data about the learning target object.

### [Supplementary Note 26]

The arithmetic apparatus according to any one of Supplementary Notes 11 to 19 and 21 to 24, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes three-dimensional matching processing using: position data about the processing target object generated from the processing target image data generated by the stereo camera; and three-dimensional model data about the processing target object,
the parameter of the arithmetic processing is a three-dimensional matching parameter of the three-dimensional matching processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object,
at least one of the position and posture of the learning target object is calculated by three-dimensional matching processing with a first three-dimensional matching parameter for learning, using position data about the learning target object generated from the first stereo image data and three-dimensional model data about the learning target object,
the first correct answer data are calculated, based on a fifth matching degree between at least one of the position and posture of the learning target object calculated by the three-dimensional matching processing with the first three-dimensional matching parameter for learning and at least one of the first learning object position and the first learning object posture,
at least one of the position and posture of the learning target object is calculated by three-dimensional matching processing with a second three-dimensional matching parameter for learning, using position data about the learning target object generated from the second stereo image data and the three-dimensional model data about the learning target object,
the second correct answer data are calculated, based on a sixth matching degree between at least one of the position and posture of the learning target object calculated by the three-dimensional matching processing with the second three-dimensional matching parameter for learning and at least one of the second learning object position and the second learning object posture, and
the model is learned, by using the first stereo image data, the second stereo image data, the first correct answer data, and the second correct answer data.

### [Supplementary Note 27]

The arithmetic apparatus according to Supplementary Note 26, wherein
the first three-dimensional matching parameter for learning, in which at least one of the position and posture of the learning target object calculated by the three-dimensional matching processing with the first three-dimensional matching parameter for learning approaches at least one of the first learning object position and the first learning object posture, is calculated as the first correct answer data, and
the second three-dimensional matching parameter for learning, in which at least one of the position and posture of the learning target object calculated by the three-dimensional matching processing with the second three-dimensional matching parameter for learning approaches at least one of the second learning object position and the second learning object posture, is calculated as the second correct answer data.

### [Supplementary Note 28]

The arithmetic apparatus according to Supplementary Note 26 or 27, wherein
the first correct answer data are calculated, data based on the fifth matching degree and a time required for the three-dimensional matching processing with the first three-dimensional matching parameter for learning, and
the second correct answer data are calculated, based on the sixth matching degree and a time required for the three-dimensional matching processing with the second three-dimensional matching parameter for learning.

### [Supplementary Note 29]

The arithmetic apparatus according to Supplementary Note 28, wherein
the first three-dimensional matching parameter for learning, in which at least one of the position and posture of the learning target object calculated by the three-dimensional matching processing with the first three-dimensional matching parameter for learning approaches at least one of the first learning object position and the first learning object posture, and in which the time required for the three-dimensional matching processing with the first three-dimensional matching parameter for learning is reduced, is calculated as the first correct answer data, and
the second three-dimensional matching parameter for learning, in which at least one of the position and posture of the learning target object calculated by the three-dimensional matching processing with the second three-dimensional matching parameter for learning approaches at least one of the second learning object position and the second learning object posture, and in which the time required for the three-dimensional matching processing with the second three-dimensional matching parameter for learning is reduced, is calculated as the second correct answer data.

### [Supplementary Note 30]

The arithmetic apparatus according to any one of Supplementary Notes 12 to 19 and 21 to 24 and 26 to 28, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
at least one of a first position and a first posture of the learning target object in a coordinate system of the monocular camera is calculated, by using the first learning image data and model data about the learning target object,
at least one of a first stage position and a first stage posture of the stage in the coordinate system of the monocular camera is calculated, based on at least one piece of image data about the marker included in the first learning image data,
at least one of a relative position and a relative posture of the learning target object and the stage is calculated, by using at least one of the position and posture of the learning target object in the coordinate system of the monocular camera and at least one of the first stage position and the first stage posture of the stage in the coordinate system of the monocular camera,
at least one of a second stage position and a second stage posture of the stage is calculated, based on at least one piece of image data about the marker included in the second learning image data,
at least one of the second position and the second posture of the learning target object in the coordinate system of the monocular camera is calculated, by using at least one of the relative position and the relative posture and at least one of the second stage position and the second stage posture,
at least one of the first learning object position and the first learning object posture of the learning target object is calculated, by transforming at least one of the first position and the first posture of the learning target object in the coordinate system of the monocular camera, into a coordinate system of the stereo camera, and
at least one of the second learning object position and the second learning object posture of the learning target object is calculated, by transforming at least one of the second position and the second posture of the learning target object in the coordinate system of the monocular camera, into the coordinate system of the stereo camera.

### [Supplementary Note 31]

The arithmetic apparatus according to any one of Supplementary Notes 22 to 30, wherein
the movable apparatus includes a light projection apparatus that projects patterned light,
the processing target image data are generated by the stereo camera imaging the processing target object on which the patterned light is projected from the light projection apparatus,
the first stereo image data are data that the stereo camera in the first relation imaging the learning target object on which the patterned light is projected from the light projection apparatus, and
the second stereo image data are data generated by the stereo camera in the second relation imaging the learning target object on which the patterned light is projected from the light projection apparatus.

### [Supplementary Note 32]

The arithmetic apparatus according to any one of Supplementary Notes 1 to 31, wherein the imaging part includes a monocular camera and a stereo camera having two monocular cameras differing from the monocular camera.

### [Supplementary Note 33]

The arithmetic apparatus according to any one of Supplementary Notes 1 to 32, wherein the movable apparatus includes at least one of a robot, an automated/automatic guided vehicle and an unmanned aerial vehicle.

### [Supplementary Note 34]

The arithmetic apparatus according to Supplementary Note 33, wherein the movable apparatus is a robot.

### [Supplementary Note 35]

The arithmetic apparatus according to Supplementary Note 33, wherein the movable apparatus is a robot mounted on an automated/automatic guided vehicle.

### [Supplementary Note 36]

The arithmetic apparatus according to any one of Supplementary Notes 1 to 35, wherein the control part determines the parameter used in the arithmetic processing for calculating at least one of the position and posture of the processing target object, by using processing target image data generated by the imaging part imaging the processing target object and the model generated by the learning using the learning image data.

### [Supplementary Note 37]

The arithmetic apparatus according to any one of Supplementary Notes 1 to 36, wherein the first control signal is a signal for driving the movable apparatus and the stage so as to be in the predetermined positional relation, and for allowing the imaging part to image the learning target object in the predetermined positional relation.

### [Supplementary Note 38]

The arithmetic apparatus according to any one of Supplementary Notes 1 to 36, wherein the first control signal is a signal for driving the movable apparatus so as to be in the predetermined positional relation, and for allowing the imaging part to image the learning target object in the predetermined positional relation.

### [Supplementary Note 39]

The arithmetic apparatus according to any one of Supplementary Notes 1 to 36, wherein the first control signal is a signal for driving the stage so as to be in the predetermined positional relation, and for allowing the imaging part to image the learning target object in the predetermined positional relation.

### [Supplementary Note 40]

The arithmetic apparatus according to any one of Supplementary Notes 1 to 39, further including a learning part that generates the model, by learning using the learning image data generated by the imaging part imaging the learning target object in the predetermined positional relation, by control based on the first control signal.

### [Supplementary Note 41]

The arithmetic apparatus according to Supplementary Note 40, wherein
the predetermined positional relation is a plurality of mutually different positional relation between the learning target object and the imaging part,
the first control signal is a signal for driving at least one of the movable apparatus and the stage in the plurality of positional relations such that the predetermined positional relation is changed to each of the plurality of positional relations, and for allowing the imaging part to image the learning target object at each time of a change to each of the plurality of positional relations,
the learning part:
   generates the model, by learning using a plurality of pieces of learning image data generated by the imaging part imaging the learning target object in each of the plurality of positional relations, by the control based on the first control signal.

### [Supplementary Note 42]

The arithmetic apparatus according to Supplementary Note 41, wherein
first learning image data of the plurality of pieces of learning image data are generated by the imaging part imaging the learning target object in a first relation of the plurality of positional relations,
second learning image data of the plurality of pieces of learning image data are generated by the imaging part imaging the learning target object in a second relation differing from the first relation, of the plurality of positional relations, and
the learning part:
   calculates at least one of a first learning object position and a first learning object posture of the learning target object, based on the first learning image;
   generates first correct answer data serving as the parameter used in the arithmetic processing, in the first relation, by using at least one of the first learning object position and the first learning object posture;
   calculates at least one of a second learning object position and a second learning object posture of the learning target object, based on the second learning image;
   generates second correct answer data serving as the parameter used in the arithmetic processing, in the second relation, by using at least one of the second learning object position and the second learning object posture; and
   generates the model, by learning using the first learning image data, the second learning image data, the first correct answer data, and the second correct answer data.

### [Supplementary Note 43]

The arithmetic apparatus according to Supplementary Note 42, wherein
the learning target object is disposed on a stage on which at least one marker is provided,
the first learning image data are generated by the imaging part in the first relation imaging at least one of the at least one marker, together with the learning target object, and
the second learning image data are generated by the imaging part in the second relation imaging at least one of the at least one marker, together with the learning target object.

### [Supplementary Note 44]

The arithmetic apparatus according to Supplementary Note 43, wherein
the at least one marker is a plurality of markers,
the first learning image data are generated by the imaging part in the first relation imaging at least one of the plurality of markers, together with the learning target object, and
the second learning image data are generated by the imaging part in the second relation imaging at least one of the plurality of markers, together with the learning target object.

### [Supplementary Note 45]

The arithmetic apparatus according to Supplementary Note 43, wherein
the at least one marker is one marker, and
the first and second learning image data are generated by the imaging part imaging the one marker, together with the learning target object in each of the first and second relations.

### [Supplementary Note 46]

The arithmetic apparatus according to any one of Supplementary Notes 43 to 45, wherein the marker is an AR (Augmented Reality) marker.

### [Supplementary Note 47]

The arithmetic apparatus according to any one of Supplementary Notes 42 to 46, wherein
the imaging part includes a monocular camera,
the processing target image data are generated by the monocular camera imaging the processing target object,
the arithmetic processing includes two-dimensional matching processing using the processing target image data generated by the monocular camera, and two-dimensional model data about the processing target object,
the parameter of the arithmetic processing is a two-dimensional matching parameter of the two-dimensional matching processing,
the first learning image data are first monocular image data generated by the monocular camera in the first relation,
the second learning image data are second monocular image data generated by the monocular camera in the second relation, and
the learning part:
   calculates at least one of the position and posture of the learning target object by two-dimensional matching processing with a first two-dimensional matching parameter for learning, using the first monocular image data and two-dimensional model data about the learning target object;
   calculates the first correct answer data, based on a first matching degree between at least one of the position and posture of the learning target object calculated by the two-dimensional matching processing with the first two-dimensional matching parameter for learning and at least one of the first learning object position and the first learning object posture;
   calculates at least one of the position and posture of the learning target object by two-dimensional matching processing with a second two-dimensional matching parameter for learning, using the second monocular image data and the two-dimensional model data about the learning target object;
   calculates the second correct answer data, based on a second matching degree between at least one of the position and posture of the learning target object calculated by the two-dimensional matching processing with the second two-dimensional matching parameter for learning and at least one of the second learning object position and the second learning object posture; and
   generates the model, by learning using the first monocular image data, the second monocular image data, the first correct answer data, and the second correct answer data.

### [Supplementary Note 48]

The arithmetic apparatus according to Supplementary Note 47, wherein
the learning part:
calculates, as the first correct answer data, the first two-dimensional matching parameter for learning, in which at least one of the position and posture of the learning target object calculated by the two-dimensional matching processing with the first two-dimensional matching parameter for learning approaches at least one of the first learning object position and the first learning object posture, and
calculates, as the second correct answer data, the second two-dimensional matching parameter for learning, in which at least one of the position and posture of the learning target object calculated by the two-dimensional matching processing with the second two-dimensional matching parameter for learning approaches at least one of the second learning object position and the second learning object posture.

### [Supplementary Note 49]

The arithmetic apparatus according to Supplementary Note 47 or 48, wherein
the learning part:
calculates the first correct answer data, based on the first matching degree and a time required for the two-dimensional matching processing with the first two-dimensional matching parameter for learning, and
calculates the second correct answer data, based on the second matching degree and a time required for the two-dimensional matching processing with the second two-dimensional matching parameter for learning.

### [Supplementary Note 50]

The arithmetic apparatus according to Supplementary Note 49, wherein
the learning part:
calculates, as the first correct answer data, the first two-dimensional matching parameter for learning, in which at least one of the position and posture of the learning target object calculated by the two-dimensional matching processing with the first two-dimensional matching parameter for learning approaches at least one of the first learning object position and the first learning object posture, and in which the time required for the two-dimensional matching processing with the first two-dimensional matching parameter for learning is reduced, and
calculates, as the second correct answer data, the second two-dimensional matching parameter for learning, in which at least one of the position and posture of the learning target object calculated by the two-dimensional matching processing with the second two-dimensional matching parameter for learning approaches at least one of the second learning object position and the second learning object posture, and in which the time required for the two-dimensional matching processing with the second two-dimensional matching parameter for learning is reduced.

### [Supplementary Note 51]

The arithmetic apparatus according to any one of Supplementary Notes 43 to 50
the learning part:
calculates at least one of the first learning object position and the first learning object posture of the learning target object, by using the first learning image data and model data about the learning target object,
calculates at least one of a first stage position and a first stage posture of the stage, based on at least one piece of image data about the marker included in the first learning image data,
calculates at least one of a relative position and a relative posture of the learning target object and the stage, by using at least one of the first learning object position and the first learning object posture and at least one of the first stage position and the first stage posture,
calculates at least one of a second stage position and a second stage posture of the stage, based on at least one piece of image data about the marker included in the second learning image data, and
calculates at least one of the second learning object position and the second learning object posture, by using at least one of the relative position and the relative posture and at least one of the second stage position and the second stage posture.

### [Supplementary Note 52]

The arithmetic apparatus according to any one of Supplementary Notes 42 to 50, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes position calculation processing using the processing target image data generated by the stereo camera,
the parameter of the arithmetic processing is a position calculation processing parameter of the position calculation processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object, and
the learning part:
   calculates the position of the learning target object by position calculation processing with a first position calculation parameter for learning, using the first stereo image data;
   calculates the first correct answer data, based on a third matching degree between the first learning object position and the position of the learning target object calculated by the position calculation processing with the first position calculation parameter for learning;
   calculates the position of the learning target object by position calculation processing with a second position calculation parameter for learning, using the second stereo image data;
   calculates the second correct answer data, based on a fourth matching degree between the second learning object position and the position of the learning target object calculated by the position calculation processing with the second position calculation parameter for learning; and
   learns the model, by using the first stereo image data, the second stereo image data, the first correct answer data, and the second correct answer data.

### [Supplementary Note 53]

The arithmetic apparatus according to Supplementary Note 52, wherein
the learning part:
calculates, as the first correct answer data, the first position calculation parameter for learning, in which the position of the learning target object calculated by the position calculation processing with the first position calculation parameter for the learning approaches the first learning object position, and
calculates, as the second correct answer data, the second position calculation parameter for learning, in which the position of the learning target object calculated by the position calculation processing with the second position calculation parameter for the learning approaches the second learning object position.

### [Supplementary Note 54]

The arithmetic apparatus according to Supplementary Note 52 or 53, wherein
the learning part:
calculates the first correct answer data, based on the third matching degree and a time required for the position calculation processing with the first position calculation parameter for learning, and
calculates the second correct answer data, based on the fourth matching degree and a time required for the position calculation processing with the second position calculation parameter for learning.

### [Supplementary Note 55]

The arithmetic apparatus according to Supplementary Note 54, wherein
the learning part:
calculates, as the first correct answer data, the first position calculation parameter for learning, in which the position of the learning target object calculated by the position calculation processing with the first position calculation parameter for learning approaches the first learning object position, and in which the time required for the position calculation processing with the first position calculation parameter for learning is reduced, and
calculates, as the second correct answer data, the second position calculation parameter for learning, in which the position of the learning target object calculated by the position calculation processing with the second position calculation parameter for learning approaches the second learning object position, and in which the time required for the position calculation processing with the second position calculation parameter for learning is reduced.

### [Supplementary Note 56]

The arithmetic apparatus according to any one of Supplementary Notes 43 to 50 and 52 to 55, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation, and
the learning part:
   transforms the first learning image data into first transformation image data indicating an image obtained by the stereo camera imaging the learning target object;
   calculates the first learning object position of the learning target object, by using the first transformation image data and model data about the learning target object;
   transforms the second learning image data into second transformation image data indicating an image obtained by the stereo camera imaging the learning target object; and
   calculates the second learning object position of the learning target object, by using the second transformation image data and the model data about the learning target object.

### [Supplementary Note 57]

The arithmetic apparatus according to any one of Supplementary Notes 42 to 50 and 52 to 55, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes three-dimensional matching processing using: position data about the processing target object generated from the processing target image data generated by the stereo camera; and three-dimensional model data about the processing target object,
the parameter of the arithmetic processing is a three-dimensional matching parameter of the three-dimensional matching processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object, and
the learning part:
   calculates at least one of the position and posture of the learning target object by three-dimensional matching processing with a first three-dimensional matching parameter for learning, using position data about the learning target object generated from the first stereo image data and three-dimensional model data about the learning target object;
   calculates the first correct answer data, based on a fifth matching degree between at least one of the position and posture of the learning target object calculated by the three-dimensional matching processing with the first three-dimensional matching parameter for learning and at least one of the first learning object position and the first learning object posture;
   calculates at least one of the position and posture of the learning target object by three-dimensional matching processing with a second three-dimensional matching parameter for learning, using position data about the learning target object generated from the second stereo image data and the three-dimensional model data about the learning target object;
   calculates the second correct answer data, based on a sixth matching degree between at least one of the position and posture of the learning target object calculated by the three-dimensional matching processing with the second three-dimensional matching parameter for learning and at least one of the second learning object position and the second learning object posture; and
   learns the model, by using the first stereo image data, the second stereo image data, the first correct answer data, and the second correct answer data.

### [Supplementary Note 58]

The arithmetic apparatus according to Supplementary Note 57, wherein
the learning part:
calculates, as the first correct answer data, the first three-dimensional matching parameter for learning, in which at least one of the position and posture of the learning target object calculated by the three-dimensional matching processing with the first three-dimensional matching parameter for learning approaches at least one of the first learning object position and the first learning object posture, and
calculates, as the second correct answer data, the second three-dimensional matching parameter for learning, in which at least one of the position and posture of the learning target object calculated by the three-dimensional matching processing with the second three-dimensional matching parameter for learning approaches at least one of the second learning object position and the second learning object posture.

### [Supplementary Note 59]

The arithmetic apparatus according to Supplementary Note 57 or 58, wherein
the learning part:
calculates the first correct answer data, data based on the fifth matching degree and a time required for the three-dimensional matching processing with the first three-dimensional matching parameter for learning, and
calculates the second correct answer data, based on the sixth matching degree and a time required for the three-dimensional matching processing with the second three-dimensional matching parameter for learning.

### [Supplementary Note 60]

The arithmetic apparatus according to Supplementary Note 59, wherein
the learning part:
calculates, as the first correct answer data, the first three-dimensional matching parameter for learning, in which at least one of the position and posture of the learning target object calculated by the three-dimensional matching processing with the first three-dimensional matching parameter for learning approaches at least one of the first learning object position and the first learning object posture, and in which the time required for the three-dimensional matching processing with the first three-dimensional matching parameter for learning is reduced, and
calculates, as the second correct answer data, the second three-dimensional matching parameter for learning, in which at least one of the position and posture of the learning target object calculated by the three-dimensional matching processing with the second three-dimensional matching parameter for learning approaches at least one of the second learning object position and the second learning object posture, and in which the time required for the three-dimensional matching processing with the second three-dimensional matching parameter for learning is reduced.

### [Supplementary Note 61]

The arithmetic apparatus according to any one of Supplementary Notes 43 to 50 and 52 to 55 and 57 to 59, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation, and
the learning part:
   calculates at least one of a first position and a first posture of the learning target object in a coordinate system of the monocular camera, by using the first learning image data and model data about the learning target object;
   calculates at least one of a first stage position and a first stage posture of the stage in the coordinate system of the monocular camera, based on at least one piece of image data about the marker included in the first learning image data;
   calculates at least one of a relative position and a relative posture of the learning target object and the stage, by using at least one of the position and posture of the learning target object in the coordinate system of the monocular camera and at least one of the first stage position and the first stage posture of the stage in the coordinate system of the monocular camera;
   calculates at least one of a second stage position and a second stage posture of the stage, based on at least one piece of image data about the marker included in the second learning image data;
   calculates at least one of the second position and the second posture of the learning target object in the coordinate system of the monocular camera, by using at least one of the relative position and the relative posture and at least one of the second stage position and the second stage posture;
   calculates at least one of the first learning object position and the first learning object posture of the learning target object, by transforming at least one of the first position and the first posture of the learning target object in the coordinate system of the monocular camera, into a coordinate system of the stereo camera; and
   calculates at least one of the second learning object position and the second learning object posture of the learning target object, by transforming at least one of the second position and the second posture of the learning target object in the coordinate system of the monocular camera, into the coordinate system of the stereo camera.

### [Supplementary Note 62]

An arithmetic system comprising:
the arithmetic apparatus according to any one of Supplementary Notes 1 to 61; and
the imaging unit.

### [Supplementary Note 63]

The arithmetic system according to Supplementary Note 62, further including a light projection apparatus that is provided in the movable apparatus and that projects patterned light.

### [Supplementary Note 64]

A movable system including:
the arithmetic apparatus according to any one of Supplementary Notes 1 to 61;
the imaging unit; and
the movable apparatus.

### [Supplementary Note 65]

The movable system according to Supplementary Note 64, further including a processing apparatus that processes a processing target.

### [Supplementary Note 66]

An arithmetic method including:
outputting a first control signal for driving at least one of a movable apparatus including an imaging part, and a stage on which a learning target object is disposed, such that the imaging part and the learning target object have a predetermined positional relation, and for allowing the imaging part to image the learning target object in the predetermined positional relation; and
performing arithmetic processing by using a parameter of the arithmetic processing determined by a model generated by learning using learning image data generated by the imaging part imaging the learning target object in the predetermined positional relation, by control based on the first control signal, and by using processing target image data generated by the imaging part imaging a processing target object having substantially a same shape as that of the learning target object, and calculating at least one of a position and posture of the processing target object.

### [Supplementary Note 67]

The arithmetic method according to Supplementary Note 66, wherein
the predetermined positional relation is a plurality of mutually different positional relation between the imaging part and the learning target object,
the first control signal is a signal for driving at least one of the movable apparatus and the stage such that the predetermined positional relation is changed to each of the plurality of positional relations, and for allowing the imaging part to image the learning target object at each time of a change to each of the plurality of positional relations, and
the model is generated, by learning using a plurality of pieces of learning image data generated by the imaging part imaging the learning target object in each of the plurality of positional relations, by control based on the first control signal.

### [Supplementary Note 68]

The arithmetic method according to Supplementary Note 66 or 67, wherein the parameter used in the arithmetic processing for calculating at least one of the position and posture of the processing target object is determined, by using processing target image data generated by the imaging part imaging the processing target object and the model generated by the learning using the learning image data.

### [Supplementary Note 69]

The arithmetic method according to any one of Supplementary Notes 66 to 68, wherein the positional relation includes a relative posture of the learning target object and the imaging part.

### [Supplementary Note 70]

The arithmetic method according to Supplementary Note 69, wherein the posture is a posture around at least one of a first axis along an optical axis of an optical system of the imaging part, a second axis perpendicular to the first axis, and a third axis perpendicular to the first and second axes, in a coordinate system of the learning target object defined by the first axis, the second axis, and the third axis.

### [Supplementary Note 71]

The arithmetic method according to any one of Supplementary Notes 66 to 70, wherein the positional relation includes a distance between the learning target object and the imaging part.

### [Supplementary Note 72]

The arithmetic method according to Supplementary Note 71, wherein the distance is a distance from the learning target to the imaging part in a first axis along an optical axis of an optical system of the imaging part, in a coordinate system of the learning target object defined by the first axis, a second axis perpendicular to the first axis, and a third axis perpendicular to the first and second axes.

### [Supplementary Note 73]

The arithmetic method according to any one of Supplementary Notes 66 to 72, including
receiving an input of a range in which the position relation is changed, and
determining the predetermined positional relation in the range, based on the inputted range.

### [Supplementary Note 74]

The arithmetic method according to any one of Supplementary Notes 66 to 73, wherein
the movable apparatus further includes a processing apparatus that performs processing on the processing target object, and
the arithmetic method includes
outputting a second control signal for driving the movable apparatus in order to process the processing target object in the processing apparatus, based on the calculated at least one of the position and posture of the processing target object.

### [Supplementary Note 75]

The arithmetic method according to Supplementary Note 74, wherein
the arithmetic method includes controlling the processing apparatus, and
the second control signal is a signal for controlling driving of the movable apparatus and processing of the processing apparatus for the processing target object, in order to process the processing target object in the processing apparatus.

### [Supplementary Note 76]

The arithmetic method according to any one of Supplementary Notes 67 to 75, wherein
first learning image data of the plurality of pieces of learning image data are generated by the imaging part imaging the learning target object in a first relation of the plurality of positional relations,
second learning image data of the plurality of pieces of learning image data are generated by the imaging part imaging the learning target object in a second relation differing from the first relation, of the plurality of positional relations,
at least one of a first learning object position and a first learning object posture of the learning target object is calculated, based on the first learning image,
first correct answer data serving as the parameter used in the arithmetic processing, in the first relation, are generated, by using at least one of the first learning object position and the first learning object posture;
at least one of a second learning object position and a second learning object posture of the learning target object is calculated, based on the second learning image,
second correct answer data serving as the parameter used in the arithmetic processing, in the second relation, are generated by using at least one of the second learning object position and the second learning object posture, and
the model is generated, by learning using the first learning image data, the second learning image data, the first correct answer data, and the second correct answer data.

### [Supplementary Note 77]

The arithmetic method according to Supplementary Note 76, wherein
the learning target object is disposed on a stage on which at least one marker is provided,
the first learning image data are generated by the imaging part in the first relation imaging at least one of the at least one marker, together with the learning target object, and
the second learning image data are generated by the imaging part in the second relation imaging at least one of the at least one marker, together with the learning target object.

### [Supplementary Note 78]

The arithmetic method according to Supplementary Note 77, wherein
the at least one marker is a plurality of markers,
the first learning image data are generated by the imaging part in the first relation imaging at least one of the plurality of markers, together with the learning target object, and
the second learning image data are generated by the imaging part in the second relation imaging at least one of the plurality of markers, together with the learning target object.

### [Supplementary Note 79]

The arithmetic method according to Supplementary Note 77, wherein
the at least one marker is one marker, and
the first and second learning image data are generated by the imaging part imaging the one marker, together with the learning target object in each of the first and second relations.

### [Supplementary Note 80]

The arithmetic method according to any one of Supplementary Notes 77 to 79, wherein the marker is an AR marker.

### [Supplementary Note 81]

The arithmetic method according to any one of Supplementary Notes 76 to 80, wherein
the imaging part includes a monocular camera,
the processing target image data are generated by the monocular camera imaging the processing target object,
the arithmetic processing includes two-dimensional matching processing using the processing target image data generated by the monocular camera, and two-dimensional model data about the processing target object,
the parameter of the arithmetic processing is a two-dimensional matching parameter of the two-dimensional matching processing,
the first learning image data are first monocular image data generated by the monocular camera in the first relation,
the second learning image data are second monocular image data generated by the monocular camera in the second relation,
at least one of the position and posture of the learning target object is calculated by two-dimensional matching processing with a first two-dimensional matching parameter for learning, using the first monocular image data and two-dimensional model data about the learning target object,
the first correct answer data are calculated, based on a first matching degree between at least one of the position and posture of the learning target object calculated by the two-dimensional matching processing with the first two-dimensional matching parameter for learning and at least one of the first learning object position and the first learning object posture,
at least one of the position and posture of the learning target object is calculated by two-dimensional matching processing with a second two-dimensional matching parameter for learning, using the second monocular image data and the two-dimensional model data about the learning target object,
the second correct answer data are calculated, based on a second matching degree between at least one of the position and posture of the learning target object calculated by the two-dimensional matching processing with the second two-dimensional matching parameter for learning and at least one of the second learning object position and the second learning object posture, and
the model is generated, by learning using the first monocular image data, the second monocular image data, the first correct answer data, and the second correct answer data.

### [Supplementary Note 82]

The arithmetic method according to Supplementary Note 81, wherein
the first two-dimensional matching parameter for learning, in which at least one of the position and posture of the learning target object calculated by the two-dimensional matching processing with the first two-dimensional matching parameter for learning approaches at least one of the first learning object position and the first learning object posture, is calculated as the first correct answer data, and
the second two-dimensional matching parameter for learning, in which at least one of the position and posture of the learning target object calculated by the two-dimensional matching processing with the second two-dimensional matching parameter for learning approaches at least one of the second learning object position and the second learning object posture, is calculated as the second correct answer data.

### [Supplementary Note 83]

The arithmetic method according to Supplementary Note 81 or 82, wherein
the first correct answer data are calculated, based on the first matching degree and a time required for the two-dimensional matching processing with the first two-dimensional matching parameter for learning, and
the second correct answer data are calculated, based on the second matching degree and a time required for the two-dimensional matching processing with the second two-dimensional matching parameter for learning.

### [Supplementary Note 84]

The arithmetic method according to Supplementary Note 83, wherein
the first two-dimensional matching parameter for learning, in which at least one of the position and posture of the learning target object calculated by the two-dimensional matching processing with the first two-dimensional matching parameter for learning approaches at least one of the first learning object position and the first learning object posture, and in which the time required for the two-dimensional matching processing with the first two-dimensional matching parameter for learning is reduced, is calculated as the first correct answer data, and
the second two-dimensional matching parameter for learning, in which at least one of the position and posture of the learning target object calculated by the two-dimensional matching processing with the second two-dimensional matching parameter for learning approaches at least one of the second learning object position and the second learning object posture, and in which the time required for the two-dimensional matching processing with the second two-dimensional matching parameter for learning is reduced, is calculated as the second correct answer data.

### [Supplementary Note 85]

The arithmetic method according to any one of Supplementary Notes 77 to 84, wherein
at least one of the first learning object position and the first learning object posture of the learning target object is calculated, by using the first learning image data and model data about the learning target object,
at least one of a first stage position and a first stage posture of the stage is calculated, based on at least one piece of image data about the marker included in the first learning image data,
at least one of a relative position and a relative posture of the learning target object and the stage is calculated, by using at least one of the first learning object position and the first learning object posture and at least one of the first stage position and the first stage posture,
at least one of a second stage position and a second stage posture of the stage is calculated, based on at least one piece of image data about the marker included in the second learning image data, and
at least one of the second learning object position and the second learning object posture is calculated, by using at least one of the relative position and the relative posture and at least one of the second stage position and the second stage posture.

### [Supplementary Note 86]

The arithmetic method according to any one of Supplementary Notes 76 to 84, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes position calculation processing using the processing target image data generated by the stereo camera,
the parameter of the arithmetic processing is a position calculation processing parameter of the position calculation processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object,
the position of the learning target object is calculated by position calculation processing with a first position calculation parameter for learning, using the first stereo image data,
the first correct answer data are calculated, based on a third matching degree between the first learning object position and the position of the learning target object calculated by the position calculation processing with the first position calculation parameter for learning,
the position of the learning target object is calculated by position calculation processing with a second position calculation parameter for learning, using the second stereo image data,
the second correct answer data are calculated, based on a fourth matching degree between the second learning object position and the position of the learning target object calculated by the position calculation processing with the second position calculation parameter for learning, and
the model is generated, by using the first stereo image data, the second stereo image data, the first correct answer data, and the second correct answer data.

### [Supplementary Note 87]

The arithmetic method according to Supplementary Note 86, wherein
the first position calculation parameter for learning, in which the position of the learning target object calculated by the position calculation processing with the first position calculation parameter for the learning approaches the first learning object position, is calculated as the first correct answer data, and
the second position calculation parameter for learning, in which the position of the learning target object calculated by the position calculation processing with the second position calculation parameter for the learning approaches the second learning object position, is calculated as the second correct answer data.

### [Supplementary Note 88]

The arithmetic method according to Supplementary Note 86 or 87, wherein
the first correct answer data are calculated, based on the third matching degree and a time required for the position calculation processing with the first position calculation parameter for learning, and
the second correct answer data are calculated, based on the fourth matching degree and a time required for the position calculation processing with the second position calculation parameter for learning.

### [Supplementary Note 89]

The arithmetic method according to Supplementary Note 88, wherein
the first position calculation parameter for learning, in which the position of the learning target object calculated by the position calculation processing with the first position calculation parameter for learning approaches the first learning object position, and in which the time required for the position calculation processing with the first position calculation parameter for learning is reduced, is calculates as the first correct answer data, and
the second position calculation parameter for learning, in which the position of the learning target object calculated by the position calculation processing with the second position calculation parameter for learning approaches the second learning object position, and in which the time required for the position calculation processing with the second position calculation parameter for learning is reduced, is calculates as the second correct answer data.

### [Supplementary Note 90]

The arithmetic method according to any one of Supplementary Notes 77 to 84 and 86 to 89, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the first learning image data are transformed into first transformation image data indicating an image obtained by the stereo camera imaging the learning target object,
the first learning object position of the learning target object is calculated, by using the first transformation image data and model data about the learning target object,
the second learning image data are transformed into second transformation image data indicating an image obtained by the stereo camera imaging the learning target object, and
the second learning object position of the learning target object is calculated, by using the second transformation image data and the model data about the learning target object.

### [Supplementary Note 91]

The arithmetic method according to any one of Supplementary Notes 76 to 84 and 86 to 89, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes three-dimensional matching processing using: position data about the processing target object generated from the processing target image data generated by the stereo camera; and three-dimensional model data about the processing target object,
the parameter of the arithmetic processing is a three-dimensional matching parameter of the three-dimensional matching processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object,
at least one of the position and posture of the learning target object is calculated by three-dimensional matching processing with a first three-dimensional matching parameter for learning, using position data about the learning target object generated from the first stereo image data and three-dimensional model data about the learning target object,
the first correct answer data are calculated, based on a fifth matching degree between at least one of the position and posture of the learning target object calculated by the three-dimensional matching processing with the first three-dimensional matching parameter for learning and at least one of the first learning object position and the first learning object posture,
at least one of the position and posture of the learning target object is calculated by three-dimensional matching processing with a second three-dimensional matching parameter for learning, using position data about the learning target object generated from the second stereo image data and the three-dimensional model data about the learning target object,
the second correct answer data are calculated, based on a sixth matching degree between at least one of the position and posture of the learning target object calculated by the three-dimensional matching processing with the second three-dimensional matching parameter for learning and at least one of the second learning object position and the second learning object posture, and
the model is learned, by using the first stereo image data, the second stereo image data, the first correct answer data, and the second correct answer data.

### [Supplementary Note 92]

The arithmetic method according to Supplementary Note 91, wherein
the first three-dimensional matching parameter for learning, in which at least one of the position and posture of the learning target object calculated by the three-dimensional matching processing with the first three-dimensional matching parameter for learning approaches at least one of the first learning object position and the first learning object posture, is calculated as the first correct answer data, and
the second three-dimensional matching parameter for learning, in which at least one of the position and posture of the learning target object calculated by the three-dimensional matching processing with the second three-dimensional matching parameter for learning approaches at least one of the second learning object position and the second learning object posture, is calculated as the second correct answer data.

### [Supplementary Note 93]

The arithmetic method according to Supplementary Note 91 or 92, wherein
the first correct answer data are calculated, data based on the fifth matching degree and a time required for the three-dimensional matching processing with the first three-dimensional matching parameter for learning, and
the second correct answer data are calculated, based on the sixth matching degree and a time required for the three-dimensional matching processing with the second three-dimensional matching parameter for learning.

### [Supplementary Note 94]

The arithmetic method according to Supplementary Note 93, wherein
the first three-dimensional matching parameter for learning, in which at least one of the position and posture of the learning target object calculated by the three-dimensional matching processing with the first three-dimensional matching parameter for learning approaches at least one of the first learning object position and the first learning object posture, and in which the time required for the three-dimensional matching processing with the first three-dimensional matching parameter for learning is reduced, is calculated as the first correct answer data, and
the second three-dimensional matching parameter for learning, in which at least one of the position and posture of the learning target object calculated by the three-dimensional matching processing with the second three-dimensional matching parameter for learning approaches at least one of the second learning object position and the second learning object posture, and in which the time required for the three-dimensional matching processing with the second three-dimensional matching parameter for learning is reduced, is calculated as the second correct answer data.

### [Supplementary Note 95]

The arithmetic method according to any one of Supplementary Notes 77 to 84 and 86 to 89 and 91 to 93, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
at least one of a first position and a first posture of the learning target object in a coordinate system of the monocular camera is calculated, by using the first learning image data and model data about the learning target object,
at least one of a first stage position and a first stage posture of the stage in the coordinate system of the monocular camera is calculated, based on at least one piece of image data about the marker included in the first learning image data,
at least one of a relative position and a relative posture of the learning target object and the stage is calculated, by using at least one of the position and posture of the learning target object in the coordinate system of the monocular camera and at least one of the first stage position and the first stage posture of the stage in the coordinate system of the monocular camera,
at least one of a second stage position and a second stage posture of the stage is calculated, based on at least one piece of image data about the marker included in the second learning image data,
at least one of the second position and the second posture of the learning target object in the coordinate system of the monocular camera is calculated, by using at least one of the relative position and the relative posture and at least one of the second stage position and the second stage posture,
at least one of the first learning object position and the first learning object posture of the learning target object is calculated, by transforming at least one of the first position and the first posture of the learning target object in the coordinate system of the monocular camera, into a coordinate system of the stereo camera, and
at least one of the second learning object position and the second learning object posture of the learning target object is calculated, by transforming at least one of the second position and the second posture of the learning target object in the coordinate system of the monocular camera, into the coordinate system of the stereo camera.

### [Supplementary Note 96]

The arithmetic method according to any one of Supplementary Notes 87 to 95, wherein
the movable apparatus includes a light projection apparatus that projects patterned light,
the processing target image data are generated by the stereo camera imaging the processing target object on which the patterned light is projected from the light projection apparatus,
the first stereo image data are data that the stereo camera in the first relation imaging the learning target object on which the patterned light is projected from the light projection apparatus, and
the second stereo image data are data generated by the stereo camera in the second relation imaging the learning target object on which the patterned light is projected from the light projection apparatus.

### [Supplementary Note 97]

The arithmetic method according to any one of Supplementary Notes 66 to 96, wherein the imaging part includes a monocular camera and a stereo camera having two monocular cameras differing from the monocular camera.

### [Supplementary Note 98]

The arithmetic method according to any one of Supplementary Notes 66 to 97, wherein the movable apparatus includes at least one of a robot, an automated/automatic guided vehicle and an unmanned aerial vehicle.

### [Supplementary Note 99]

The arithmetic method according to Supplementary Note 98, wherein the movable apparatus is a robot.

### [Supplementary Note 100]

The arithmetic method according to Supplementary Note 98, wherein the movable apparatus is a robot mounted on an automated/automatic guided vehicle.

### [Supplementary Note 101]

The arithmetic method according to any one of Supplementary Notes 66 to 100, including determining the parameter used in the arithmetic processing for calculating at least one of the position and posture of the processing target object, by using processing target image data generated by the imaging part imaging the processing target object and the model generated by the learning using the learning image data.

### [Supplementary Note 102]

The arithmetic method according to any one of Supplementary Notes 66 to 101, wherein the first control signal is a signal for driving the movable apparatus and the stage so as to be in the predetermined positional relation, and for allowing the imaging part to image the learning target object in the predetermined positional relation.

### [Supplementary Note 103]

The arithmetic method according to any one of Supplementary Notes 66 to 101, wherein the first control signal is a signal for driving the movable apparatus so as to be in the predetermined positional relation, and for allowing the imaging part to image the learning target object in the predetermined positional relation.

### [Supplementary Note 104]

The arithmetic method according to any one of Supplementary Notes 66 to 101, wherein the first control signal is a signal for driving the stage so as to be in the predetermined positional relation, and for allowing the imaging part to image the learning target object in the predetermined positional relation.

### [Supplementary Note 105]

The arithmetic method according to any one of Supplementary Notes 66 to 104, including generating the model, by learning using the learning image data generated by the imaging part imaging the learning target object in the predetermined positional relation, by control based on the first control signal.

### [Supplementary Note 106]

The arithmetic method according to Supplementary Note 105, wherein
the predetermined positional relation is a plurality of mutually different positional relation between the learning target object and the imaging part,
the first control signal is a signal for driving at least one of the movable apparatus and the stage in the plurality of positional relations such that the predetermined positional relation is changed to each of the plurality of positional relations, and for allowing the imaging part to image the learning target object at each time of a change to each of the plurality of positional relations,
the arithmetic method includes
generating the model, by learning using a plurality of pieces of learning image data generated by the imaging part imaging the learning target object in each of the plurality of positional relations, by the control based on the first control signal.

### [Supplementary Note 107]

The arithmetic method according to Supplementary Note 106, wherein
first learning image data of the plurality of pieces of learning image data are generated by the imaging part imaging the learning target object in a first relation of the plurality of positional relations,
second learning image data of the plurality of pieces of learning image data are generated by the imaging part imaging the learning target object in a second relation differing from the first relation, of the plurality of positional relations, and
the arithmetic method includes:
   calculating at least one of a first learning object position and a first learning object posture of the learning target object, based on the first learning image;
   generating first correct answer data serving as the parameter used in the arithmetic processing, in the first relation, by using at least one of the first learning object position and the first learning object posture;
   calculating at least one of a second learning object position and a second learning object posture of the learning target object, based on the second learning image;
   generating second correct answer data serving as the parameter used in the arithmetic processing, in the second relation, by using at least one of the second learning object position and the second learning object posture; and
   generating the model, by learning using the first learning image data, the second learning image data, the first correct answer data, and the second correct answer data.

### [Supplementary Note 108]

The arithmetic method according to Supplementary Note 107, wherein
the learning target object is disposed on a stage on which at least one marker is provided,
the first learning image data are generated by the imaging part in the first relation imaging at least one of the at least one marker, together with the learning target object, and
the second learning image data are generated by the imaging part in the second relation imaging at least one of the at least one marker, together with the learning target object.

### [Supplementary Note 109]

The arithmetic method according to Supplementary Note 108, wherein
the at least one marker is a plurality of markers,
the first learning image data are generated by the imaging part in the first relation imaging at least one of the plurality of markers, together with the learning target object, and
the second learning image data are generated by the imaging part in the second relation imaging at least one of the plurality of markers, together with the learning target object.

### [Supplementary Note 110]

The arithmetic method according to Supplementary Note 108, wherein
the at least one marker is one marker, and
the first and second learning image data are generated by the imaging part imaging the one marker, together with the learning target object in each of the first and second relations.

### [Supplementary Note 111]

The arithmetic method according to any one of Supplementary Notes 108 to 110, wherein the marker is an AR (Augmented Reality) marker.

### [Supplementary Note 112]

The arithmetic method according to any one of Supplementary Notes 107 to 111, wherein
the imaging part includes a monocular camera,
the processing target image data are generated by the monocular camera imaging the processing target object,
the arithmetic processing includes two-dimensional matching processing using the processing target image data generated by the monocular camera, and two-dimensional model data about the processing target object,
the parameter of the arithmetic processing is a two-dimensional matching parameter of the two-dimensional matching processing,
the first learning image data are first monocular image data generated by the monocular camera in the first relation,
the second learning image data are second monocular image data generated by the monocular camera in the second relation, and
the arithmetic method includes:
   calculating at least one of the position and posture of the learning target object by two-dimensional matching processing with a first two-dimensional matching parameter for learning, using the first monocular image data and two-dimensional model data about the learning target object;
   calculating the first correct answer data, based on a first matching degree between at least one of the position and posture of the learning target object calculated by the two-dimensional matching processing with the first two-dimensional matching parameter for learning and at least one of the first learning object position and the first learning object posture;
   calculating at least one of the position and posture of the learning target object by two-dimensional matching processing with a second two-dimensional matching parameter for learning, using the second monocular image data and the two-dimensional model data about the learning target object;
   calculating the second correct answer data, based on a second matching degree between at least one of the position and posture of the learning target object calculated by the two-dimensional matching processing with the second two-dimensional matching parameter for learning and at least one of the second learning object position and the second learning object posture; and
   generating the model, by learning using the first monocular image data, the second monocular image data, the first correct answer data, and the second correct answer data.

### [Supplementary Note 113]

The arithmetic method according to Supplementary Note 112, including:
calculating, as the first correct answer data, the first two-dimensional matching parameter for learning, in which at least one of the position and posture of the learning target object calculated by the two-dimensional matching processing with the first two-dimensional matching parameter for learning approaches at least one of the first learning object position and the first learning object posture; and
calculating, as the second correct answer data, the second two-dimensional matching parameter for learning, in which at least one of the position and posture of the learning target object calculated by the two-dimensional matching processing with the second two-dimensional matching parameter for learning approaches at least one of the second learning object position and the second learning object posture.

### [Supplementary Note 114]

The arithmetic method according to Supplementary Note 112 or 113, including:
calculating the first correct answer data, based on the first matching degree and a time required for the two-dimensional matching processing with the first two-dimensional matching parameter for learning; and
calculating the second correct answer data, based on the second matching degree and a time required for the two-dimensional matching processing with the second two-dimensional matching parameter for learning.

### [Supplementary Note 115]

The arithmetic method according to Supplementary Note 114, including:
calculating, as the first correct answer data, the first two-dimensional matching parameter for learning, in which at least one of the position and posture of the learning target object calculated by the two-dimensional matching processing with the first two-dimensional matching parameter for learning approaches at least one of the first learning object position and the first learning object posture, and in which the time required for the two-dimensional matching processing with the first two-dimensional matching parameter for learning is reduced; and
calculating, as the second correct answer data, the second two-dimensional matching parameter for learning, in which at least one of the position and posture of the learning target object calculated by the two-dimensional matching processing with the second two-dimensional matching parameter for learning approaches at least one of the second learning object position and the second learning object posture, and in which the time required for the two-dimensional matching processing with the second two-dimensional matching parameter for learning is reduced.

### [Supplementary Note 116]

The arithmetic method according to any one of Supplementary Notes 108 to 115, including:
calculating at least one of the first learning object position and the first learning object posture of the learning target object, by using the first learning image data and model data about the learning target object;
calculating at least one of a first stage position and a first stage posture of the stage, based on at least one piece of image data about the marker included in the first learning image data;
calculating at least one of a relative position and a relative posture of the learning target object and the stage, by using at least one of the first learning object position and the first learning object posture and at least one of the first stage position and the first stage posture;
calculating at least one of a second stage position and a second stage posture of the stage, based on at least one piece of image data about the marker included in the second learning image data; and
calculating at least one of the second learning object position and the second learning object posture, by using at least one of the relative position and the relative posture and at least one of the second stage position and the second stage posture.

### [Supplementary Note 117]

The arithmetic method according to any one of Supplementary Notes 107 to 115, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes position calculation processing using the processing target image data generated by the stereo camera,
the parameter of the arithmetic processing is a position calculation processing parameter of the position calculation processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object, and
the arithmetic method includes:
   calculating the position of the learning target object by position calculation processing with a first position calculation parameter for learning, using the first stereo image data;
   calculating the first correct answer data, based on a third matching degree between the first learning object position and the position of the learning target object calculated by the position calculation processing with the first position calculation parameter for learning;
   calculating the position of the learning target object by position calculation processing with a second position calculation parameter for learning, using the second stereo image data;
   calculating the second correct answer data, based on a fourth matching degree between the second learning object position and the position of the learning target object calculated by the position calculation processing with the second position calculation parameter for learning; and
   learning the model, by using the first stereo image data, the second stereo image data, the first correct answer data, and the second correct answer data.

### [Supplementary Note 118]

The arithmetic method according to Supplementary Note 117, including:
calculating, as the first correct answer data, the first position calculation parameter for learning, in which the position of the learning target object calculated by the position calculation processing with the first position calculation parameter for the learning approaches the first learning object position; and
calculating, as the second correct answer data, the second position calculation parameter for learning, in which the position of the learning target object calculated by the position calculation processing with the second position calculation parameter for the learning approaches the second learning object position.

### [Supplementary Note 119]

The arithmetic method according to Supplementary Note 117 or 118, including:
calculating the first correct answer data, based on the third matching degree and a time required for the position calculation processing with the first position calculation parameter for learning; and
calculating the second correct answer data, based on the fourth matching degree and a time required for the position calculation processing with the second position calculation parameter for learning.

### [Supplementary Note 120]

The arithmetic method according to Supplementary Note 119, including:
calculating, as the first correct answer data, the first position calculation parameter for learning, in which the position of the learning target object calculated by the position calculation processing with the first position calculation parameter for learning approaches the first learning object position, and in which the time required for the position calculation processing with the first position calculation parameter for learning is reduced; and
calculating, as the second correct answer data, the second position calculation parameter for learning, in which the position of the learning target object calculated by the position calculation processing with the second position calculation parameter for learning approaches the second learning object position, and in which the time required for the position calculation processing with the second position calculation parameter for learning is reduced.

### [Supplementary Note 121]

The arithmetic method according to any one of Supplementary Notes 108 to 115 and 117 to 120, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation, and
the arithmetic method includes:
   transforming the first learning image data into first transformation image data indicating an image obtained by the stereo camera imaging the learning target object;
   calculating the first learning object position of the learning target object, by using the first transformation image data and model data about the learning target object;
   calculating the second learning image data into second transformation image data indicating an image obtained by the stereo camera imaging the learning target object; and
   calculating the second learning object position of the learning target object, by using the second transformation image data and the model data about the learning target object.

### [Supplementary Note 122]

The arithmetic method according to any one of Supplementary Notes 107 to 115 and 117 to 120, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes three-dimensional matching processing using: position data about the processing target object generated from the processing target image data generated by the stereo camera; and three-dimensional model data about the processing target object,
the parameter of the arithmetic processing is a three-dimensional matching parameter of the three-dimensional matching processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object, and
the arithmetic method includes:
   calculating at least one of the position and posture of the learning target object by three-dimensional matching processing with a first three-dimensional matching parameter for learning, using position data about the learning target object generated from the first stereo image data and three-dimensional model data about the learning target object;
   calculating the first correct answer data, based on a fifth matching degree between at least one of the position and posture of the learning target object calculated by the three-dimensional matching processing with the first three-dimensional matching parameter for learning and at least one of the first learning object position and the first learning object posture;
   calculating at least one of the position and posture of the learning target object by three-dimensional matching processing with a second three-dimensional matching parameter for learning, using position data about the learning target object generated from the second stereo image data and the three-dimensional model data about the learning target object;
   calculating the second correct answer data, based on a sixth matching degree between at least one of the position and posture of the learning target object calculated by the three-dimensional matching processing with the second three-dimensional matching parameter for learning and at least one of the second learning object position and the second learning object posture; and
   learning the model, by using the first stereo image data, the second stereo image data, the first correct answer data, and the second correct answer data.

### [Supplementary Note 123]

The arithmetic method according to Supplementary Note 122, including:
calculating, as the first correct answer data, the first three-dimensional matching parameter for learning, in which at least one of the position and posture of the learning target object calculated by the three-dimensional matching processing with the first three-dimensional matching parameter for learning approaches at least one of the first learning object position and the first learning object posture; and
calculating, as the second correct answer data, the second three-dimensional matching parameter for learning, in which at least one of the position and posture of the learning target object calculated by the three-dimensional matching processing with the second three-dimensional matching parameter for learning approaches at least one of the second learning object position and the second learning object posture.

### [Supplementary Note 124]

The arithmetic method according to Supplementary Note 122 or 123, including:
calculating the first correct answer data, data based on the fifth matching degree and a time required for the three-dimensional matching processing with the first three-dimensional matching parameter for learning; and
calculating the second correct answer data, based on the sixth matching degree and a time required for the three-dimensional matching processing with the second three-dimensional matching parameter for learning.

### [Supplementary Note 125]

The arithmetic method according to Supplementary Note 124, including:
calculating, as the first correct answer data, the first three-dimensional matching parameter for learning, in which at least one of the position and posture of the learning target object calculated by the three-dimensional matching processing with the first three-dimensional matching parameter for learning approaches at least one of the first learning object position and the first learning object posture, and in which the time required for the three-dimensional matching processing with the first three-dimensional matching parameter for learning is reduced; and
calculating, as the second correct answer data, the second three-dimensional matching parameter for learning, in which at least one of the position and posture of the learning target object calculated by the three-dimensional matching processing with the second three-dimensional matching parameter for learning approaches at least one of the second learning object position and the second learning object posture, and in which the time required for the three-dimensional matching processing with the second three-dimensional matching parameter for learning is reduced.

### [Supplementary Note 126]

The arithmetic method according to any one of Supplementary Notes 108 to 115 and 117 to 120 and 122 to 124, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation, and
the arithmetic method includes:
   calculating at least one of a first position and a first posture of the learning target object in a coordinate system of the monocular camera, by using the first learning image data and model data about the learning target object;
   calculating at least one of a first stage position and a first stage posture of the stage in the coordinate system of the monocular camera, based on at least one piece of image data about the marker included in the first learning image data;
   calculating at least one of a relative position and a relative posture of the learning target object and the stage, by using at least one of the position and posture of the learning target object in the coordinate system of the monocular camera and at least one of the first stage position and the first stage posture of the stage in the coordinate system of the monocular camera;
   calculating at least one of a second stage position and a second stage posture of the stage, based on at least one piece of image data about the marker included in the second learning image data;
   calculating at least one of the second position and the second posture of the learning target object in the coordinate system of the monocular camera, by using at least one of the relative position and the relative posture and at least one of the second stage position and the second stage posture;
   calculating at least one of the first learning object position and the first learning object posture of the learning target object, by transforming at least one of the first position and the first posture of the learning target object in the coordinate system of the monocular camera, into a coordinate system of the stereo camera; and
   calculating at least one of the second learning object position and the second learning object posture of the learning target object, by transforming at least one of the second position and the second posture of the learning target object in the coordinate system of the monocular camera, into the coordinate system of the stereo camera.

### [Supplementary Note 127]

A computer program that allows a computer to execute the arithmetic method according to any one of Supplementary Notes 66 to 126.

### [Supplementary Note 128]

An arithmetic apparatus comprising a recording medium on which the computer program according to Supplementary Note 127 is recorded, and being configured to execute the computer program.

### [Supplementary Note 129]

A control apparatus that controls at least an imaging part, wherein
the control apparatus generates a first control signal for driving at least one of a movable apparatus including an imaging part, and a stage on which a learning target object is disposed, such that the imaging part and the learning target object have a predetermined positional relation, and for allowing the imaging part to image the learning target object in the predetermined positional relation, in order to generate learning image data used in learning for generating a model for determining a parameters of arithmetic processing in the control apparatus.

### [Supplementary Note 130]

The control apparatus according to Supplementary Note 129, wherein
the predetermined positional relation is a plurality of mutually different positional relation between the imaging part and the learning target object,
the first control signal is a signal for driving at least one of the movable apparatus and the stage such that the predetermined positional relation is changed to each of the plurality of positional relations, and for allowing the imaging part to image the learning target object at each time of a change to each of the plurality of positional relations.

### [Supplementary Note 131]

The control apparatus according to Supplementary Note 130, wherein
the model is generated, by learning using a plurality of pieces of learning image data generated by the imaging part imaging the learning target object in each of the plurality of positional relations, by control based on the first control signal.

### [Supplementary Note 132]

The control apparatus according to any one of Supplementary Notes 129 to 131, wherein the positional relation includes a relative posture of the learning target object and the imaging part.

### [Supplementary Note 133]

The control apparatus according to any one of Supplementary Notes 129 to 132, wherein the positional relation includes a distance between the learning target object and the imaging part.

### [Supplementary Note 134]

The control apparatus according to any one of Supplementary Notes 129 to 133, wherein
the control apparatus:
receives an input of a range in which the position relation is changed, and
determines the predetermined positional relation in the range, based on the inputted range.

### [Supplementary Note 135]

A control method including:
outputting a first control signal for driving at least one of a movable apparatus including an imaging part, and a stage on which a learning target object is disposed, such that the imaging part and the learning target object have a predetermined positional relation, and for allowing the imaging part to image the learning target object in the predetermined positional relation, in order to generate learning image data used in learning for generating a model for determining a parameters of arithmetic processing.

### [Supplementary Note 136]

The control method according to Supplementary Note 135, wherein
the predetermined positional relation is a plurality of mutually different positional relation between the imaging part and the learning target object,
the first control signal is a signal for driving at least one of the movable apparatus and the stage such that the predetermined positional relation is changed to each of the plurality of positional relations, and for allowing the imaging part to image the learning target object at each time of a change to each of the plurality of positional relations.

### [Supplementary Note 137]

The control method according to Supplementary Note 136, wherein
the model is generated, by learning using a plurality of pieces of learning image data generated by the imaging part imaging the learning target object in each of the plurality of positional relations, by control based on the first control signal.

### [Supplementary Note 138]

The control method according to any one of Supplementary Notes 135 to 137, wherein the positional relation includes a relative posture of the learning target object and the imaging part.

### [Supplementary Note 139]

The control method according to any one of Supplementary Notes 135 to 138, wherein the positional relation includes a distance between the learning target object and the imaging part.

### [Supplementary Note 140]

The control method according to any one of Supplementary Notes 135 to 139, including:
receiving an input of a range in which the position relation is changed, and
determining the predetermined positional relation in the range, based on the inputted range.

### [Supplementary Note 141]

A computer program that allows a computer to execute the control method according to any one of Supplementary Notes 135 to 140.

### [Supplementary Note 142]

A control apparatus comprising a recording medium on which the computer program according to Supplementary Note 141 is recorded, and being configured to execute the computer program.

The present invention is not limited to the example embodiments described above and is allowed to be changed, if desired, without departing from the essence or spirit of the invention which can be read from the claims and the entire specification. An arithmetic apparatus, an arithmetic system, a robot system, an arithmetic method, and a computer program with such changes, are also intended to be within the technical scope of the present invention.

### Description of Reference Codes

1, 2 ... robot system, 10, 31, 32, 33 ... robot, 12 ... robot arm, 13 ... end effector, 14 ... robot control apparatus, 20 ... imaging unit, 21, 22 ... imaging apparatus, 100, 101, 102, 301, 302, 303 ... control apparatus, 110 ... arithmetic apparatus, 111, 211 ... data generation part, 112, 212 ... learning object recognition part, 113, 213 ... learning part, 114 ... determination part, 115 ... processing object recognition part, 116 ... signal generation unit, 120, 220 ... storage apparatus, 130, 230 ... communication apparatus, 140, 240 ... input apparatus, 150, 250 ... output apparatus, 160, 260 ... data bus, 40 ... management apparatus, 450 ... display

## Claims

1. An arithmetic apparatus comprising:
a control part that outputs a control signal for controlling an imaging part and a robot equipped with the imaging part; and
a learning part that generates a model for determining a parameter of arithmetic processing in the control part, by learning using an imaging result of a learning target object by the imaging part, wherein
the control part outputs a first control signal for driving the robot such that the imaging part has a predetermined positional relation with the learning target object, and for allowing the imaging part to image the learning target object in the predetermined positional relation,
the learning part generates the model, by learning using learning image data generated by the imaging part imaging the learning target object in the predetermined positional relation, by control based on the first control signal, and
the control part performs the arithmetic processing, by using the parameter determined by the model and processing target image data generated by the imaging part imaging a processing target object having substantially a same shape as that of the learning target object, and calculates at least one of a position and posture of the processing target object.

2. The arithmetic apparatus according to claim 1, wherein
the predetermined positional relation is a plurality of mutually different positional relation of the imaging part with respect to the learning target object,
the first control signal is a signal for driving the robot in the plurality of positional relations such that the predetermined positional relation is changed to each of the plurality of positional relations, and for allowing the imaging part to image the learning target object at each time of a change to each of the plurality of positional relations,
the learning part:
generates the model, by learning using a plurality of pieces of learning image data generated by the imaging part imaging the learning target object in each of the plurality of positional relations, by the control based on the first control signal.

3. The arithmetic apparatus according to claim 1 or 2, wherein
the control part:
determines the parameter used in the arithmetic processing for calculating at least one of the position and posture of the processing target object, by using processing target image data generated by the imaging part imaging the processing target object and the model generated by the learning using the learning image data.

4. The arithmetic apparatus according to any one of claims 1 to 3, wherein the positional relation includes a posture of the imaging part with respect to the learning target object.

5. The arithmetic apparatus according to claim 4, wherein the posture is a posture around at least one of a first axis along an optical axis of an optical system of the imaging part, a second axis perpendicular to the first axis, and a third axis perpendicular to the first and second axes, in a coordinate system of the learning target object defined by the first axis, the second axis, and the third axis.

6. The arithmetic apparatus according to any one of claims 1 to 5, wherein the positional relation includes a distance from the learning target object to the imaging part.

7. The arithmetic apparatus according to claim 6, wherein the distance is a distance from the learning target to the imaging part in a first axis along an optical axis of an optical system of the imaging part, in a coordinate system of the learning target object defined by the first axis, a second axis perpendicular to the first axis, and a third axis perpendicular to the first and second axes.

8. The arithmetic apparatus according to any one of claims 1 to 7, wherein
the control part:
receives an input of a range in which the position relation is changed, and
determines the predetermined positional relation in the range, based on the inputted range.

9. The arithmetic apparatus according to any one of claims 1 to 8, wherein
the robot further includes a processing apparatus that performs processing on the processing target object, and
the control part:
outputs a second control signal for driving the robot in order to process the processing target object in the processing apparatus, based on the calculated at least one of the position and posture of the processing target object.

10. The arithmetic apparatus according to claim 9, wherein
the control part controls the processing apparatus, and
the second control signal is a signal for controlling driving of the robot and processing of the processing apparatus for the processing target object, in order to process the processing target object in the processing apparatus.

11. The arithmetic apparatus according to any one of claims 2 to 10, wherein
first learning image data of the plurality of pieces of learning image data are generated by the imaging part imaging the learning target object in a first relation of the plurality of positional relations,
second learning image data of the plurality of pieces of learning image data are generated by the imaging part imaging the learning target object in a second relation differing from the first relation, of the plurality of positional relations, and
the learning part:
calculates at least one of a first learning object position and a first learning object posture of the learning target object, based on the first learning image;
generates first correct answer data serving as the parameter used in the arithmetic processing, in the first relation, by using at least one of the first learning object position and the first learning object posture;
calculates at least one of a second learning object position and a second learning object posture of the learning target object, based on the second learning image;
generates second correct answer data serving as the parameter used in the arithmetic processing, in the second relation, by using at least one of the second learning object position and the second learning object posture; and
generates the model, by learning using the first learning image data, the second learning image data, the first correct answer data, and the second correct answer data.

12. The arithmetic apparatus according to claim 11, wherein
the learning target object is disposed on a stage on which at least one marker is provided,
the first learning image data are generated by the imaging part in the first relation imaging at least one of the at least one marker, together with the learning target object, and
the second learning image data are generated by the imaging part in the second relation imaging at least one of the at least one marker, together with the learning target object.

13. The arithmetic apparatus according to claim 12, wherein
the at least one marker is a plurality of markers,
the first learning image data are generated by the imaging part in the first relation imaging at least one of the plurality of markers, together with the learning target object, and
the second learning image data are generated by the imaging part in the second relation imaging at least one of the plurality of markers, together with the learning target object.

14. The arithmetic apparatus according to claim 12, wherein
the at least one marker is one marker, and
the first and second learning image data are generated by the imaging part imaging the one marker, together with the learning target object in each of the first and second relations.

15. The arithmetic apparatus according to one of claims 12 to 14, wherein the marker is an AR marker.

16. The arithmetic apparatus according to one of claims 11 to 15, wherein
the imaging part includes a monocular camera,
the processing target image data are generated by the monocular camera imaging the processing target object,
the arithmetic processing includes two-dimensional matching processing using the processing target image data generated by the monocular camera, and two-dimensional model data about the processing target object,
the parameter of the arithmetic processing is a two-dimensional matching parameter of the two-dimensional matching processing,
the first learning image data are first monocular image data generated by the monocular camera in the first relation,
the second learning image data are second monocular image data generated by the monocular camera in the second relation,
the control part:
calculates at least one of the position and posture of the learning target object by two-dimensional matching processing with a first two-dimensional matching parameter for learning, using the first monocular image data and two-dimensional model data about the learning target object; and
calculates at least one of the position and posture of the learning target object by two-dimensional matching processing with a second two-dimensional matching parameter for learning, using the second monocular image data and the two-dimensional model data about the learning target object, and
the learning part:
calculates the first correct answer data, based on a first matching degree between at least one of the position and posture of the learning target object calculated by the two-dimensional matching processing with the first two-dimensional matching parameter for learning and at least one of the first learning object position and the first learning object posture;
calculates the second correct answer data, based on a second matching degree between at least one of the position and posture of the learning target object calculated by the two-dimensional matching processing with the second two-dimensional matching parameter for learning and at least one of the second learning object position and the second learning object posture; and
generates the model, by learning using the first monocular image data, the second monocular image data, the first correct answer data, and the second correct answer data.

17. The arithmetic apparatus according to claim 16, wherein
the learning part:
calculates, as the first correct answer data, the first two-dimensional matching parameter for learning, in which at least one of the position and posture of the learning target object calculated by the two-dimensional matching processing with the first two-dimensional matching parameter for learning approaches at least one of the first learning object position and the first learning object posture, and
calculates, as the second correct answer data, the second two-dimensional matching parameter for learning, in which at least one of the position and posture of the learning target object calculated by the two-dimensional matching processing with the second two-dimensional matching parameter for learning approaches at least one of the second learning object position and the second learning object posture.

18. The arithmetic apparatus according to claim 16 or 17, wherein
the learning part:
calculates the first correct answer data, based on the first matching degree and a time required for the two-dimensional matching processing with the first two-dimensional matching parameter for learning, and
calculates the second correct answer data, based on the second matching degree and a time required for the two-dimensional matching processing with the second two-dimensional matching parameter for learning.

19. The arithmetic apparatus according to claim 18, wherein
the learning part:
calculates, as the first correct answer data, the first two-dimensional matching parameter for learning, in which at least one of the position and posture of the learning target object calculated by the two-dimensional matching processing with the first two-dimensional matching parameter for learning approaches at least one of the first learning object position and the first learning object posture, and in which the time required for the two-dimensional matching processing with the first two-dimensional matching parameter for learning is reduced, and
calculates, as the second correct answer data, the second two-dimensional matching parameter for learning, in which at least one of the position and posture of the learning target object calculated by the two-dimensional matching processing with the second two-dimensional matching parameter for learning approaches at least one of the second learning object position and the second learning object posture, and in which the time required for the two-dimensional matching processing with the second two-dimensional matching parameter for learning is reduced.

20. The arithmetic apparatus according to any one claims 12 to 19, wherein
the learning part:
calculates at least one of the first learning object position and the first learning object posture of the learning target object, by using the first learning image data and model data about the learning target object,
calculates at least one of a first stage position and a first stage posture of the stage, based on at least one piece of image data about the marker included in the first learning image data,
calculates at least one of a relative position and a relative posture of the learning target object and the stage, by using at least one of the first learning object position and the first learning object posture and at least one of the first stage position and the first stage posture,
calculates at least one of a second stage position and a second stage posture of the stage, based on at least one piece of image data about the marker included in the second learning image data, and
calculates at least one of the second learning object position and the second learning object posture, by using at least one of the relative position and the relative posture and at least one of the second stage position and the second stage posture.

21. The arithmetic apparatus according to any one of claims 11 to 19, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes position calculation processing using the processing target image data generated by the stereo camera,
the parameter of the arithmetic processing is a position calculation processing parameter of the position calculation processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object,
the control part:
calculates the position of the learning target object by position calculation processing with a first position calculation parameter for learning, using the first stereo image data; and
calculates the position of the learning target object by position calculation processing with a second position calculation parameter for learning, using the second stereo image data, and
the learning part:
calculates the first correct answer data, based on a third matching degree between the first learning object position and the position of the learning target object calculated by the position calculation processing with the first position calculation parameter for learning;
calculates the second correct answer data, based on a fourth matching degree between the second learning object position and the position of the learning target object calculated by the position calculation processing with the second position calculation parameter for learning; and
learns the model, by using the first stereo image data, the second stereo image data, the first correct answer data, and the second correct answer data.

22. The arithmetic apparatus according to claim 21, wherein
the learning part:
calculates, as the first correct answer data, the first position calculation parameter for learning, in which the position of the learning target object calculated by the position calculation processing with the first position calculation parameter for the learning approaches the first learning object position, and
calculates, as the second correct answer data, the second position calculation parameter for learning, in which the position of the learning target object calculated by the position calculation processing with the second position calculation parameter for the learning approaches the second learning object position.

23. The arithmetic apparatus according to claim 21 or 22, wherein
the learning part:
calculates the first correct answer data, based on the third matching degree and a time required for the position calculation processing with the first position calculation parameter for learning, and
calculates the second correct answer data, based on the fourth matching degree and a time required for the position calculation processing with the second position calculation parameter for learning.

24. The arithmetic apparatus according to claim 23, wherein
the learning part:
calculates, as the first correct answer data, the first position calculation parameter for learning, in which the position of the learning target object calculated by the position calculation processing with the first position calculation parameter for learning approaches the first learning object position, and in which the time required for the position calculation processing with the first position calculation parameter for learning is reduced, and
calculates, as the second correct answer data, the second position calculation parameter for learning, in which the position of the learning target object calculated by the position calculation processing with the second position calculation parameter for learning approaches the second learning object position, and in which the time required for the position calculation processing with the second position calculation parameter for learning is reduced.

25. The arithmetic apparatus according to any one of claims 12 to 19 and 21 to 24, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation, and
the learning part:
transforms the first learning image data into first transformation image data indicating an image obtained by the stereo camera imaging the learning target object;
calculates the first learning object position of the learning target object, by using the first transformation image data and model data about the learning target object;
transforms the second learning image data into second transformation image data indicating an image obtained by the stereo camera imaging the learning target object; and
calculates the second learning object position of the learning target object, by using the second transformation image data and the model data about the learning target object.

26. The arithmetic apparatus according to any one of claims 11 to 19 and 21 to 24, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation,
the processing target image data are generated by the stereo camera imaging the processing target object,
the arithmetic processing includes three-dimensional matching processing using: position data about the processing target object generated from the processing target image data generated by the stereo camera; and three-dimensional model data about the processing target object,
the parameter of the arithmetic processing is a three-dimensional matching parameter of the three-dimensional matching processing,
third learning image data in the plurality of pieces of learning image data are first stereo image data generated by the stereo camera in the first relation imaging the learning target object,
fourth learning image data in the plurality of pieces of learning image data are second stereo image data generated by the stereo camera in the second relation imaging the learning target object,
the control part:
calculates at least one of the position and posture of the learning target object by three-dimensional matching processing with a first three-dimensional matching parameter for learning, using position data about the learning target object generated from the first stereo image data and three-dimensional model data about the learning target object; and
calculates at least one of the position and posture of the learning target object by three-dimensional matching processing with a second three-dimensional matching parameter for learning, using position data about the learning target object generated from the second stereo image data and the three-dimensional model data about the learning target object, and
the learning part:
calculates the first correct answer data, based on a fifth matching degree between at least one of the position and posture of the learning target object calculated by the three-dimensional matching processing with the first three-dimensional matching parameter for learning and at least one of the first learning object position and the first learning object posture;
calculates the second correct answer data, based on a sixth matching degree between at least one of the position and posture of the learning target object calculated by the three-dimensional matching processing with the second three-dimensional matching parameter for learning and at least one of the second learning object position and the second learning object posture; and
learns the model, by using the first stereo image data, the second stereo image data, the first correct answer data, and the second correct answer data.

27. The arithmetic apparatus according to claim 26, wherein
the learning part:
calculates, as the first correct answer data, the first three-dimensional matching parameter for learning, in which at least one of the position and posture of the learning target object calculated by the three-dimensional matching processing with the first three-dimensional matching parameter for learning approaches at least one of the first learning object position and the first learning object posture, and
calculates, as the second correct answer data, the second three-dimensional matching parameter for learning, in which at least one of the position and posture of the learning target object calculated by the three-dimensional matching processing with the second three-dimensional matching parameter for learning approaches at least one of the second learning object position and the second learning object posture.

28. The arithmetic apparatus according to claim 26 or 27, wherein
the learning part:
calculates the first correct answer data, data based on the fifth matching degree and a time required for the three-dimensional matching processing with the first three-dimensional matching parameter for learning, and
calculates the second correct answer data, based on the sixth matching degree and a time required for the three-dimensional matching processing with the second three-dimensional matching parameter for learning.

29. The arithmetic apparatus according to claim 28, wherein
the learning part:
calculates, as the first correct answer data, the first three-dimensional matching parameter for learning, in which at least one of the position and posture of the learning target object calculated by the three-dimensional matching processing with the first three-dimensional matching parameter for learning approaches at least one of the first learning object position and the first learning object posture, and in which the time required for the three-dimensional matching processing with the first three-dimensional matching parameter for learning is reduced, and
calculates, as the second correct answer data, the second three-dimensional matching parameter for learning, in which at least one of the position and posture of the learning target object calculated by the three-dimensional matching processing with the second three-dimensional matching parameter for learning approaches at least one of the second learning object position and the second learning object posture, and in which the time required for the three-dimensional matching processing with the second three-dimensional matching parameter for learning is reduced.

30. The arithmetic apparatus according to any one of claims 12 to 19, 21 to 24, and 26 to 28, wherein
the imaging part includes a monocular camera and a stereo camera having two monocular cameras differing from the monocular camera,
the first learning image data are first monocular image data generated by the monocular camera in the first relation,
the second learning image data are second monocular image data generated by the monocular camera in the second relation, and
the learning part:
calculates at least one of a first position and a first posture of the learning target object in a coordinate system of the monocular camera, by using the first learning image data and model data about the learning target object;
calculates at least one of a first stage position and a first stage posture of the stage in the coordinate system of the monocular camera, based on at least one piece of image data about the marker included in the first learning image data;
calculates at least one of a relative position and a relative posture of the learning target object and the stage, by using at least one of the position and posture of the learning target object in the coordinate system of the monocular camera and at least one of the first stage position and the first stage posture of the stage in the coordinate system of the monocular camera;
calculates at least one of a second stage position and a second stage posture of the stage, based on at least one piece of image data about the marker included in the second learning image data;
calculates at least one of the second position and the second posture of the learning target object in the coordinate system of the monocular camera, by using at least one of the relative position and the relative posture and at least one of the second stage position and the second stage posture;
calculates at least one of the first learning object position and the first learning object posture of the learning target object, by transforming at least one of the first position and the first posture of the learning target object in the coordinate system of the monocular camera, into a coordinate system of the stereo camera; and
calculates at least one of the second learning object position and the second learning object posture of the learning target object, by transforming at least one of the second position and the second posture of the learning target object in the coordinate system of the monocular camera, into the coordinate system of the stereo camera.

31. The arithmetic apparatus according to any one of claims 22 to 30, wherein
the robot includes a light projection apparatus that projects patterned light,
the processing target image data are generated by the stereo camera imaging the processing target object on which the patterned light is projected from the light projection apparatus,
the first stereo image data are data that the stereo camera in the first relation imaging the learning target object on which the patterned light is projected from the light projection apparatus, and
the second stereo image data are data generated by the stereo camera in the second relation imaging the learning target object on which the patterned light is projected from the light projection apparatus.

32. The arithmetic apparatus according to any one of claims 1 to 31, wherein the imaging part includes a monocular camera and a stereo camera having two monocular cameras differing from the monocular camera.

33. An arithmetic system comprising:
the arithmetic apparatus according to any one of claims 1 to 32; and
the imaging part.

34. A robot system comprising:
the arithmetic apparatus according to any one of claims 1 to 32;
the imaging part; and
the robot.

35. The robot system according to claim 34, further comprising a processing apparatus that process a processing target object.

36. An arithmetic method comprising:
outputting a first control signal for driving a robot equipped with an imaging part such that the imaging part has a predetermined positional relation with a learning target object, and for allowing the imaging part to image the learning target object in the predetermined positional relation;
generating a model for determining a parameter of arithmetic processing, by learning using learning image data generated by the imaging part imaging the learning target object in the predetermined positional relation, by control based on the first control signal; and
performing the arithmetic processing, by using the parameter determined by the model and processing target image data generated by the imaging part imaging a processing target object having substantially a same shape as that of the learning target object, and calculating at least one of a position and posture of the processing target object.

37. A computer program that allows a computer to execute the arithmetic method according to claim 36.

38. An arithmetic apparatus comprising a recording medium on which the computer program according to claim 37 is recorded, and being configured to execute the computer program.
